(19) Europäisches Patentamt
European Patent Office
Office européen des brevets

(11) EP 4 560 269 A1

(12) **EUROPEAN PATENT APPLICATION**
published in accordance with Art. 153(4) EPC

(43) Date of publication:
**28.05.2025 Bulletin 2025/22**

(21) Application number: **23842973.2**

(22) Date of filing: **18.07.2023**

(51) International Patent Classification (IPC):
***G01D 5/20*** (2006.01) ***G01B 7/30*** (2006.01)

(52) Cooperative Patent Classification (CPC):
**G01D 5/2053; G01B 7/30; G01D 3/08; G01D 5/20**

(86) International application number:
**PCT/JP2023/026265**

(87) International publication number:
**WO 2024/019050 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2022 JP 2022115865**
**26.08.2022 JP 2022135104**
**25.11.2022 JP 2022188429**

(71) Applicant: **DENSO CORPORATION**
**Kariya-city, Aichi 448-8661 (JP)**

(72) Inventors:
- **KITAURA, Yasuhiro**
  **Kariya-city, Aichi 4488661 (JP)**
- **ONODA, Nagisa**
  **Kariya-city, Aichi 4488661 (JP)**
- **MAKITA, Michihiro**
  **Kariya-city, Aichi 4488661 (JP)**
- **OHMI, Tetsuya**
  **Kariya-city, Aichi 4488661 (JP)**
- **KIMPARA, Takamasa**
  **Kariya-city, Aichi 4488661 (JP)**
- **HARADA, Tomoyuki**
  **Kariya-city, Aichi 4488661 (JP)**
- **YOSHINO, Kazuhiro**
  **Kariya-city, Aichi 4488661 (JP)**
- **SUGIMOTO, Naohiro**
  **Kariya-city, Aichi 4488661 (JP)**
- **WATANABE, Kazuaki**
  **Kariya-city, Aichi 4488661 (JP)**
- **ESAKA, Takuma**
  **Kariya-city, Aichi 4488661 (JP)**
- **KAWAKAMI, Koki**
  **Kariya-city, Aichi 4488661 (JP)**
- **KOBAYASHI, Atsushi**
  **Kariya-city, Aichi 4488661 (JP)**
- **WATANABE, Hidekazu**
  **Kariya-city, Aichi 4488661 (JP)**
- **ITO, Takeshi**
  **Kariya-city, Aichi 4488661 (JP)**
- **MATSUMOTO, Koichiro**
  **Kariya-city, Aichi 4488661 (JP)**
- **KONO, Tsukasa**
  **Kariya-city, Aichi 4488661 (JP)**
- **MURAYAMA, Ryosuke**
  **Kariya-city, Aichi 4488661 (JP)**

(74) Representative: **Kuhnen & Wacker**
**Patent- und Rechtsanwaltsbüro PartG mbB**
**Prinz-Ludwig-Straße 40A**
**85354 Freising (DE)**

# (54) POSITION DETECTION DEVICE

(57) A position detection device includes a substrate (100) disposed to face a displaceable detection object, a transmitting coil (110) provided in the substrate (100), a first receiving coil (120) and a second receiving coil (130) which are disposed inside the transmitting coil (110) in a normal direction with respect to a surface direction of the substrate (100), and a signal processing unit (210) that derives a displacement amount of the detection object (30) in view of a gap between the detection object and the substrate (100), based on a first characteristic value of the first receiving coil (120) and a second characteristic value of the second receiving coil (130).

EP 4 560 269 A1

FIG. 1

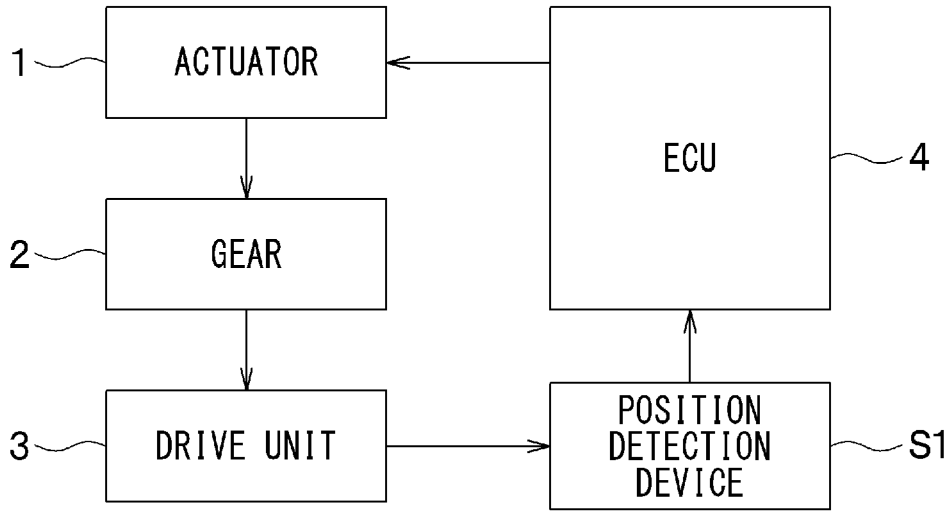
1
ACTUATOR
2
GEAR
3
DRIVE UNIT
ECU
4
POSITION DETECTION DEVICE
S1

## Description

CROSS-REFERENCE TO RELATED APPLICATIONS

This application is based on Japanese Patent Application No. 2022-115865 filed on July 20, 2022, Japanese Patent Application No. 2022-135104 filed on August 26, 2022, and Japanese Patent Application No. 2022-188429 filed on November 25, 2022, the contents of which are incorporated herein by reference.

TECHNICAL FIELD

The present disclosure relates to a position detection device.

BACKGROUND ART

In a related art, a position detection device for detecting a position of a detection object has been proposed (for example, refer to Patent Literature 1). Specifically, the position detection device includes a detection unit that detects a displacement of the detection object, and a detection unit that detects a distortion. The position detection device performs various processes, based on a detection signal detected by each detection unit.

PRIOR ART LITERATURE

PATENT LITERATURE

Patent Literature 1: JP2011-126476A

SUMMARY OF INVENTION

However, in the above-described position detection device, each detection unit is separately provided. Therefore, the number of members in the above-described position detection device is likely to increase.

An object of the present disclosure is to provide a position detection device that can reduce the number of members.

According to one aspect of the present disclosure, there is provided a position detection device including a substrate disposed to face a displaceable detection object, a transmitting coil provided in the substrate, a first receiving coil and a second receiving coil which are disposed inside the transmitting coil in a normal direction with respect to a surface direction of the substrate, and a signal processing unit that derives a displacement amount of the detection object in view of a gap between the detection object and the substrate, based on a first characteristic value of the first receiving coil and a second characteristic value of the second receiving coil.

According to this configuration, the displacement amount is calculated by using the transmitting coil, the first receiving coil, and the second receiving coil in view of the gap of the detection object. That is, in the position detection device, members for detecting a requirement for the gap between the detection object and the substrate and a requirement for the displacement amount are used in common. Therefore, the number of members can be reduced.

According to another aspect of the present disclosure, there is provided a position detection device including a substrate disposed to face a displaceable detection object, a transmitting coil provided in the substrate, a first receiving coil and a second receiving coil which are disposed inside the transmitting coil in a normal direction with respect to a surface direction of the substrate, and a signal processing unit that derives a displacement amount of the detection object in view of a gap between the detection object and the substrate, based on a characteristic value of the transmitting coil.

According to this configuration, the displacement amount is calculated by using the transmitting coil, the first receiving coil, and the second receiving coil in view of the gap of the detection object. That is, in the position detection device, members for detecting a requirement for the gap between the detection object and the substrate and a requirement for the displacement amount are used in common. Therefore, the number of members can be reduced.

Reference numerals in parentheses attached to components or the like indicate an example of a correspondence relationship between the components or the like and specific components or the like described in embodiments to be described later.

BRIEF DESCRIPTION OF DRAWINGS

FIG. 1 is a block diagram of an electrification system formed by using a position detection device of a first embodiment.
FIG. 2 is a diagram showing a relationship between the position detection device and a drive unit.
FIG. 3 is a top view of a rotating flat plate and the position detection device.
FIG. 4 is a perspective view of the position detection device.
FIG. 5 is a cross-sectional view of the position detection device taken along line V-V in FIG. 4.
FIG. 6 is a schematic diagram showing shapes of a transmitting coil, a first receiving coil, and a second receiving coil.
FIG. 7 is a block diagram of the position detection device.
FIG. 8A is a diagram showing a first voltage value generated in the first receiving coil.
FIG. 8B is a diagram showing a second voltage value generated in the second receiving coil.
FIG. 9 is a diagram showing a relationship among a gap, a rotation angle, a first voltage value, and a second voltage value.
FIG. 10 is a diagram showing a relationship among the gap, the rotation angle, and a gap comparison term.
FIG. 11 is a diagram showing a relationship between the gap and the gap comparison term.
FIG. 12 is a diagram showing a relationship between a rotation angle for a gain and a linearity error.
FIG. 13 is a diagram showing a relationship between a rotation angle for offset and the linearity error.
FIG. 14 is a diagram showing a relationship between a rotation angle for a phase and the linearity error.
FIG. 15 is a diagram showing a relationship between a gap comparison term for the first voltage value and a gain correction term.
FIG. 16 is a diagram showing a relationship between the gap comparison term for the second voltage value and the gain correction term.
FIG. 17 is a diagram showing a relationship between the gap comparison term for the first voltage value and an offset correction term.
FIG. 18 is a diagram showing a relationship between the gap comparison term for the second voltage value and the offset correction term.
FIG. 19 is a diagram showing a relationship between the gap comparison term and a phase correction term.
FIG. 20 is a diagram showing a relationship between the rotation angle and the correction rotation angle.
FIG. 21 is a diagram for describing a first adjustment signal and a second adjustment signal.
FIG. 22 is a diagram showing a relationship between the rotation angle and the linearity error when gap correction is not performed.
FIG. 23 is a diagram showing a relationship between the rotation angle and the linearity error when the gap correction is performed.
FIG. 24 is a diagram showing a relationship between the gap and accuracy.
FIG. 25 is a diagram showing a relationship between a gap and a frequency of a transmitting coil in a second embodiment.
FIG. 26 is a block diagram of a position detection device according to the second embodiment.
FIG. 27 is a diagram for describing a first adjustment signal and a second adjustment signal.
FIG. 28 is a block diagram of a position detection device in a third embodiment.
FIG. 29 is a diagram for describing a first adjustment signal and a second adjustment signal in a fourth embodiment.
FIG. 30 is a diagram for describing the first adjustment signal and the second adjustment signal in the fourth embodiment.
FIG. 31 is a perspective view of a rotating flat plate in a fifth embodiment.
FIG. 32 is a diagram showing a relationship between a position detection device and a linear motion flat plate in a sixth embodiment.
FIG. 33 is a diagram for describing a magnetic field in a seventh embodiment.
FIG. 34 is a schematic diagram showing shapes of a transmitting coil, a first receiving coil, and a second receiving coil in the seventh embodiment.
FIG. 35 is a diagram showing a relationship between the rotation angle and the linearity error when a metal piece is not provided.
FIG. 36 is a diagram showing a relationship between the rotation angle and the linearity error when the metal piece is provided.
FIG. 37 is a cross-sectional view of a printed circuit board in an eighth embodiment.
FIG. 38 is a schematic diagram showing shapes of the transmitting coil, the first receiving coil, and the second receiving coil.
FIG. 39A is a top view of a fourth wiring layer.
FIG. 39B is a top view of a third wiring layer.
FIG. 39C is a top view of a second wiring layer.
FIG. 39D is a top view of a first wiring layer.
FIG. 40 is a schematic diagram showing shapes of a transmitting coil, a first receiving coil, and a second receiving coil in a ninth embodiment.

FIG. 41A is a top view showing the fourth wiring layer.

FIG. 41B is a top view showing the third wiring layer.

FIG. 41C is a top view showing the second wiring layer.

FIG. 41D is a top view showing the first wiring layer.

FIG. 42 is an enlarged view of a vicinity of a terminal of a position detection device in a tenth embodiment.

FIG. 43 is a cross-sectional view of a position detection device in an eleventh embodiment.

FIG. 44A is a front view of a connector portion in a twelfth embodiment.

FIG. 44B is a side view of the connector portion in the twelfth embodiment.

FIG. 45A is a schematic diagram when a printed circuit board having a connector portion is disposed in a mold.

FIG. 45B is a diagram showing a location where a pressure is applied from the mold to the printed circuit board.

FIG. 45C is a diagram showing a location where a pressure is applied from a mold to a printed circuit board in a modification example.

FIG. 46A is a diagram showing a location where a pressure is applied from a mold to a printed circuit board in a thirteenth embodiment.

FIG. 46B is a diagram showing a location where a pressure is applied from a mold to a printed circuit board in a modification example.

FIG. 47 is an enlarged view of the vicinity of a terminal of a position detection device in a fourteenth embodiment.

FIG. 48 is an enlarged view of the vicinity of a terminal of a position detection device in a fifteenth embodiment.

FIG. 49A is a schematic diagram showing a state where the position detection device of the fifteenth embodiment is disposed to detect a rotation angle of a rotating flat plate disposed inside oil.

FIG. 49B is a cross-sectional view taken along line XLIXB-XLIXB in FIG. 49A.

FIG. 50 is a schematic diagram showing a state where a position detection device of a comparative example is disposed to detect a rotation angle of a rotating flat plate disposed inside oil.

FIG. 51A is a cross-sectional view showing a manufacturing process of a position detection device in a sixteenth embodiment.

FIG. 51B is a cross-sectional view showing a manufacturing process of the position detection device subsequent to FIG. 51A.

FIG. 51C is a cross-sectional view showing a manufacturing process of the position detection device subsequent to FIG. 51B.

FIG. 52 is a cross-sectional view of a position detection device in a seventeenth embodiment.

FIG. 53 is a cross-sectional view of a position detection device in an eighteenth embodiment.

FIG. 54 is a cross-sectional view of a position detection device in a modification example of the eighteenth embodiment.

FIG. 55 is a cross-sectional view of a position detection device in a nineteenth embodiment.

FIG. 56 is a cross-sectional view of a position detection device in a twentieth embodiment.

FIG. 57 is a cross-sectional view of a position detection device in a modification example of the twentieth embodiment.

FIG. 58 is a top view of a position detection device in a twenty-first embodiment.

FIG. 59 is a top view showing a printed circuit board configuration plate for forming a printed circuit board of the position detection device in the twenty-first embodiment.

FIG. 60 is a top view showing a printed circuit board configuration plate for forming a printed circuit board of a position detection device in a comparative example.

FIG. 61 is a cross-sectional view of a position detection device system in a twenty-second embodiment.

FIG. 62 is a perspective view of the position detection device system in the twenty-second embodiment.

FIG. 63 is a perspective view of a position detection device in a twenty-third embodiment.

FIG. 64 is a top view of the position detection device in the twenty-third embodiment.

FIG. 65 is a top view of a position detection device in a modification example of the twenty-third embodiment.

FIG. 66 is a top view of a position detection device in a modification example of the twenty-third embodiment.

FIG. 67 is a diagram for describing a problem in a twenty-fourth embodiment.

FIG. 68 is a diagram for describing a problem in the twenty-fourth embodiment.

FIG. 69 is a top view of a position detection device in the twenty-fourth embodiment.

FIG. 70 is a top view for describing a configuration of a second receiving coil shown in FIG. 69.

FIG. 71 is a top view of a position detection device in a modification example of the twenty-fourth embodiment.

FIG. 72 is a top view for describing a configuration of a first receiving coil shown in FIG. 71.

FIG. 73 is a top view of a printed circuit board in a twenty-fifth embodiment.

FIG. 74 is a diagram showing a relationship between a second receiving coil provided in a rectangular printed circuit board and a virtual second receiving coil having an arc shape.

FIG. 75A is a diagram for describing shapes of a first receiving coil and a second receiving coil which are provided in the rectangular printed circuit board.
FIG. 75B is a diagram for describing shapes of the first receiving coil and the second receiving coil which are provided when the printed circuit board is changed.
FIG. 76 is a cross-sectional view of a printed circuit board in a twenty-sixth embodiment.
FIG. 77 is a schematic diagram showing examples of shapes of a transmitting coil, a first receiving coil, and a second receiving coil in a twenty-seventh embodiment.
FIG. 78 is a perspective view of a position detection device in the twenty-seventh embodiment.
FIG. 79 is a top view of a rotating flat plate and the position detection device in the twenty-seventh embodiment.
FIG. 80 is a diagram showing a relationship between the position detection device and a drive unit in the twenty-seventh embodiment.
FIG. 81 is a cross-sectional view of the position detection device taken along line LXXXI-LXXXI in FIG. 78.
FIG. 82 is a block diagram of the position detection device in the twenty-seventh embodiment.
FIG. 83 is a schematic diagram showing a configuration of a transmitting coil and a receiving coil in a comparative example.
FIG. 84 is a graph showing an amplitude of a detection signal of the receiving coil in the comparative example and the twenty-seventh embodiment.
FIG. 85 is a schematic diagram showing an example of a shape of a receiving coil in a modification example of the twenty-seventh embodiment.

DESCRIPTION OF EMBODIMENTS

Hereinafter, embodiments of the present disclosure will be described with reference to the drawings. In the following embodiments, the same reference numerals will be assigned to elements which are the same as or equivalent to each other for description.

(First Embodiment)

A first embodiment will be described with reference to the drawings. In the present embodiment, as a position detection device, a position detection device that detects rotation of a detection object will be described as an example. In the present embodiment, an example in which the position detection device is applied to an electrification system mounted on a vehicle will be described.

As shown in FIG. 1, the electrification system includes an actuator 1, a gear 2, a drive unit 3, an ECU (abbreviation for an Electronic Control Unit) 4, and a position detection device S1. The electrification system is operated as follows. That is, the actuator 1 is controlled by the ECU 4, and rotates the gear 2 under the control of the ECU 4. The drive unit 3 includes a detection object (to be described later), and includes components operated by the rotation of the gear 2. The position detection device S1 detects a displacement of the detection object provided in the drive unit 3, and outputs a detection signal to the ECU 4. In the present embodiment, as will be described later, the detection object includes a rotating flat plate 30, and a rotation angle of the rotating flat plate 30 is output to the ECU 4. The ECU 4 controls the actuator 1 in view of the detection signal from the position detection device S1.

Next, a configuration of the drive unit 3 in which the position detection device S1 is disposed will be described. In the present embodiment, an example in which the position detection device S1 is disposed in a motor such as a main motor and an in-wheel motor will be described.

It is assumed that the drive unit 3 is a motor rotor or the like, and as shown in FIG. 2, the drive unit 3 includes a hub bearing 10 serving as a rotary shaft, the rotating flat plate 30, a fixing base 40, and the like. The members 10, 30, and 40 are coaxially disposed while an axial direction Da of the hub bearing 10 is set as a center. Hereinafter, the axial direction Da of the hub bearing 10 will be simply referred to as the axial direction Da.

For example, the hub bearing 10 is a drive shaft, and includes a columnar member. The hub bearing 10 is disposed so that a tire is provided on one end portion side and the other end portion side opposite to the one end portion side is a vehicle body side. For example, in FIG. 2, an upper side of the paper surface corresponds to one end portion side of the hub bearing 10, and a lower side of the paper surface corresponds to the other end portion side of the hub bearing 10. Although details of the hub bearing 10 are omitted, the hub bearing 10 includes a turning wheel, a bearing member, and the like, and the turning wheel is supported by the bearing member in a rotatable state.

The rotating flat plate 30 is made of metal, and has an annular plate shape having a through-hole 30a. As shown in FIG. 3, the rotating flat plate 30 of the present embodiment has multiple depression portions 31 provided in an outer edge thereof at an equal interval in a circumferential direction. In other words, the rotating flat plate 30 has a configuration in which multiple protrusion portions 32 are disposed along the circumferential direction in the outer edge portion. That is, in the rotating flat plate 30, an uneven structure 33 having the depression portions 31 and the protrusion portions 32 is provided along the circumferential direction in the outer edge portion.

As shown in FIG. 2, the rotating flat plate 30 is fixed to the hub bearing 10 in a state where one end portion side of the hub bearing 10 is inserted into the through-hole 30a so that the rotating flat plate 30 is rotated in conjunction with the rotation of the hub bearing 10. In the present embodiment, the rotating flat plate 30 corresponds to the detection object.

The fixing base 40 has a plate shape having a through-hole 40a. The other end portion side of the hub bearing 10 is inserted into the through-hole 40a of the fixing base 40, and a turning wheel is disposed in a rotatable state. The fixing base 40 includes the position detection device S1 to face the protrusion portion 32 of the rotating flat plate 30 in the axial direction Da. The position detection device S1 is disposed to have a predetermined gap (that is, an interval) d with the rotating flat plate 30.

Next, a configuration of the position detection device S1 of the present embodiment will be described.

As shown in FIGS. 4 and 5, the position detection device S1 of the present embodiment includes a printed circuit board 100 having one surface 100a and the other surface 100b. In the position detection device S1, a circuit board 200 and a terminal 400 are disposed on one surface 100a side of the printed circuit board 100, and these are integrally sealed by a sealing member 500. Hereinafter, a normal direction with respect to a surface direction of the printed circuit board 100 will be simply referred to as the normal direction. When the position detection device S1 is provided in the fixing base 40, the normal direction of the printed circuit board 100 coincides with the axial direction Da. Although not particularly shown, various electronic components such as capacitors and resistors are appropriately disposed in the printed circuit board 100.

The printed circuit board 100 of the present embodiment has an arc plate shape. Specifically, the printed circuit board 100 is configured to coincide with an arc of a virtual circle formed around the hub bearing 10. That is, the printed circuit board 100 has a shape in which a virtual circle having the printed circuit board 100 as an arc coincides with a circle formed around the hub bearing 10.

As shown in FIG. 6, a transmitting coil 110, a first receiving coil 120, and a second receiving coil 130 are provided in the printed circuit board 100. As shown in FIG. 7, the printed circuit board 100 is provided with a connection wire 150 that connects the circuit board 200 to each of the coils 110, 120, and 130. In FIG. 5, the coils 110, 120, and 130 are shown in a simplified manner.

Specifically, the printed circuit board 100 of the present embodiment is a multi-layer board in which an insulating film and a wiring layer are alternately laminated. As shown in FIG. 6, the wiring layers provided in respective layers are appropriately connected through a via 140 to provide the respective coils 110 to 130, and the connection wire 150 that connects with the respective coils 110 to 130 is provided. Hereinafter, configurations of the transmitting coil 110, the first receiving coil 120, and the second receiving coil 130 of the present embodiment will be described with reference to FIG. 6.

The transmitting coil 110 is wound multiple times in the normal direction, and is formed into an arc frame shape while one direction (that is, the circumferential direction of the printed circuit board 100) is set as a longitudinal direction.

The first receiving coil 120 and the second receiving coil 130 are disposed inside the transmitting coil 110 in the normal direction. In the first receiving coil 120 and the second receiving coil 130, different wiring layers are appropriately connected through the via 140 not to interfere with each other (that is, not to overlap each other). In the present embodiment, the transmitting coil 110, the first receiving coil 120, and the second receiving coil 130 are configured so that two adjacent wiring layers in sequentially laminated wiring layers are connected by the via 140. More specifically, in the present embodiment, the transmitting coil 110, the first receiving coil 120, and the second receiving coil 130 are provided by connecting the wiring layer of an outermost layer located on the one surface 100a side in the printed circuit board 100 to the wiring layer as a layer next to the outermost layer. In FIG. 6, the wiring layer provided in the outermost layer in the printed circuit board 100 is shown by a solid line, the wiring layer provided in the layer next to the outermost layer is shown by a dotted line, and the wiring layer of a layer different from the wiring layers provided in the outermost layer and the next layer is shown by a one-dot chain line. The transmitting coil 110 is configured by connecting the outermost wiring layer and the wiring layer next to the outermost wiring layer. Meanwhile, in FIG. 6, all of these are shown by solid lines. In actuality, the transmitting coil 110 has a unicursal shape.

The first receiving coil 120 of the present embodiment is provided to have a closed-loop sine wave shape in the normal direction. The second receiving coil 130 of the present embodiment is provided to have a closed-loop cosine wave shape in the normal direction. As described above, the first receiving coil 120 and the second receiving coil 130 are configured so that the different wiring layers are appropriately connected through the via 140 not to interfere with each other.

The printed circuit board 100 has multiple pad portions (not shown). As shown in FIG. 5, one end portion of the rod-shaped terminal 400 is connected to the printed circuit board 100 to be connected to the pad portion. In the present embodiment, three terminals 400 are provided. In the respective terminals 400, one is used for power supply, one is used for ground, and one is used for an output. The number of the terminals 400 is not particularly limited. For example, four terminals 400 may be provided, and two terminals 400 may be used for the output. In this case, for example, in two output terminals 400, one terminal 400 is used for the output in which a correction rotation angle $\theta a$ output from a section correction unit 280 (to be described later) is output as it is. In the two output terminals 400, the other terminal 400 is used for the output in which a sign of the correction rotation angle $\theta a$ output from the section correction unit 280 is inverted and output. For example, the two output terminals 400 are connected to the different ECUs 4, and are used to output the correction rotation angle θa to each of the ECUs 4. An example in which the correction rotation angle θa in the present embodiment is a digital signal will be described. Meanwhile, the correction rotation angle θa may be an analog signal.

The circuit board 200 is disposed via a joining member (not shown) in a portion of the printed circuit board 100 which is different from portions having the transmitting coil 110, the first receiving coil 120, and the second receiving coil 130. The circuit board 200 is connected to the transmitting coil 110, the first receiving coil 120, and the second receiving coil 130 via the connection wire 150 provided in the printed circuit board 100.

The circuit board 200 includes a microcomputer including a CPU and storage units such as a ROM, a RAM, and a non-volatile RAM, or the like, and is connected to the transmitting coil 110, the first receiving coil 120, and the second receiving coil 130. The circuit board 200 realizes various control operations by the CPU reading and executing programs from the ROM or the non-volatile RAM. The ROM or the non-volatile RAM stores in advance various data (for example, initial values, look-up tables, maps, and the like) used when the programs are executed. A storage medium such as the ROM is a non-transient tangible storage medium. The CPU is an abbreviation for a Central Processing Unit, the ROM is an abbreviation for a Read Only Memory, and the RAM is an abbreviation for a Random Access Memory.

Specifically, as shown in FIG. 7, the circuit board 200 includes a signal processing unit 210 connected to the transmitting coil 110, the first receiving coil 120, and the second receiving coil 130 to perform predetermined processing. The signal processing unit 210 includes an oscillation unit 220, a demodulation unit 230, an AD conversion unit 240, a gap calculation unit 250, a gain-offset-phase correction unit 260, an angle calculation unit 270, the section correction unit 280, an output unit 290, a diagnosis unit 300, and a power supply unit 310. An operation of the signal processing unit 210 will be described later. Hereinafter, the gain-offset-phase correction unit 260 will be simply referred to as a GOP correction unit 260. Hereinafter, an example of processing with a digital signal will be described. Meanwhile, in the case of processing with an analog signal, the AD conversion unit 240 or the like do not need to be provided. In the present embodiment, the diagnosis unit 300 will be described. Meanwhile, the diagnosis unit 300 may be a test circuit unit or the like. In the present embodiment, the diagnosis unit 300 or the test circuit unit corresponds to a confirmation unit.

As shown in FIGS. 4 and 5, the sealing member 500 is disposed to integrally seal the printed circuit board 100, the circuit board 200, and the terminal 400, so that one end portion connected to the printed circuit board 100 in the terminal 400 and the other end portion on an opposite side are exposed. Hereinafter, an example will be described as follows. In the sealing member 500, a portion having an arc plate shape along a shape of the printed circuit board 100 is defined as a main portion 510, and a portion to be connected to an external connector, which is a portion for sealing the terminal 400, is defined as a connector portion 520. The main portion 510 is provided along the shape of the printed circuit board 100, and in the present embodiment, at least an inner edge portion is provided to coincide an arc of a virtual circle formed around the hub bearing 10. The connector portion 520 of the present embodiment has a substantially cylindrical shape extending along the normal direction, and is provided to expose the other end portion of the terminal 400. Therefore, in the connector portion 520, an opening portion 520a through which the other end portion of the terminal 400 is exposed is provided on a side opposite to the main portion 510. The sealing member 500 of the present embodiment is made of a thermosetting resin or a thermoplastic resin.

In the sealing member 500, a collar portion 530 into which a fastening member for being fixed to the fixing base 40 is inserted is provided in a stepped portion in both end portions in the circumferential direction of the main portion 510 having an arc plate shape. The collar portion 530 is configured by disposing a metallic collar 532 in a through-hole 531 penetrating through the main portion 510 in the thickness direction. It is not necessary to provide the stepped portion in both end portions in the circumferential direction of the main portion 510, and shapes of both end portions of the main portion 510 can be appropriately changed to match a shape of side to be fixed.

The above-described configuration is the configuration of the position detection device S1 in the present embodiment. As shown in FIG. 2, the position detection device S1 is disposed in the fixing base 40 to face the rotating flat plate 30 in the axial direction Da. Specifically, as shown in FIGS. 2 and 3, the position detection device S1 is disposed as follows. When the rotating flat plate 30 is rotated, a state where the respective coils 110, 120, and 130 and the protrusion portion 32 of the rotating flat plate 30 face each other in the axial direction Da and a state where both of these do not face each other are alternately repeated. The position detection device S1 is disposed in the fixing base 40 so that a predetermined gap d is formed with the rotating flat plate 30.

Next, a first voltage value V1 of the first receiving coil 120 and a second voltage value V2 of the second receiving coil 130 when the rotating flat plate 30 is rotated will be described.

First, although details will be described later, an alternating current of a predetermined frequency is applied from the oscillation unit 220 to the transmitting coil 110. In this manner, a magnetic field in the axial direction Da which passes through a region surrounded by the first receiving coil 120 and a region surrounded by the second receiving coil 130 is generated. The magnetic field is changed due to the alternating current. Therefore, the first voltage value V1 generated in the first receiving coil 120 and the second voltage value V2 generated in the second receiving coil 130 are changed due to electromagnetic induction.

When the protrusion portion 32 of the rotating flat plate 30 faces each of the coils 110, 120, and 130, an eddy current is generated in the protrusion portion 32, and a magnetic field caused by the eddy current is generated. Therefore, in the magnetic fields in the axial direction Da which pass through the region surrounded by the first receiving coil 120 and the region surrounded by the second receiving coil 130, the magnetic field which passes through a portion facing the protrusion portion 32 is offset by the magnetic field caused by the eddy current.

As described above, multiple protrusion portions 32 are aligned at an interval in the circumferential direction, and the depression portion 31 is provided between the adjacent protrusion portions 32. In this manner, an area facing the protrusion portion 32 is changed in conjunction with the rotation of the rotating flat plate 30, and a size of a portion facing the protrusion portion 32 in the magnetic fields in the axial direction Da which pass through the region surrounded by the first receiving coil 120 and the region surrounded by the second receiving coil 130 is periodically changed. Therefore, the first voltage value V1 generated in the first receiving coil 120 and the second voltage value V2 generated in the second receiving coil 130 in conjunction with the rotation of the rotating flat plate 30 are periodically changed. In the present embodiment, the first receiving coil 120 is formed in a sine wave shape. Therefore, the first voltage value V1 generated in the first receiving coil 120 has the sine wave shape as shown in FIG. 8A. The second receiving coil 130 is formed in a cosine wave shape. Therefore, the second voltage value V2 generated in the second receiving coil 130 has the cosine wave shape as shown in FIG. 8B.

Next, an operation of the signal processing unit 210 in the above-described circuit board 200 will be described.

As shown in FIG. 7, the oscillation unit 220 is connected to both ends of the transmitting coil 110, and applies an alternating current of a predetermined frequency. Two capacitors 161 and 162 are connected in series between both ends of the transmitting coil 110 and the oscillation unit 220, and a portion connecting the capacitors 161 and 162 to each other is connected to ground. The transmitting coil 110 generates the magnetic field in the axial direction Da which passes through the region surrounded by the first receiving coil 120 and the region surrounded by the second receiving coil 130. However, a method for connecting the transmitting coil 110 and the oscillation unit 220 can be appropriately changed. For example, one capacitor may be disposed between both ends of the transmitting coil 110 and the oscillation unit 220.

The demodulation unit 230 is connected to both ends of the first receiving coil 120 and both ends of the second receiving coil 130. The demodulation unit 230 generates a first demodulation signal in which the first voltage value V1 of the first receiving coil 120 is demodulated, and generates a second demodulation signal in which the second voltage value V2 of the second receiving coil 130 is demodulated.

The AD conversion unit 240 is connected to the demodulation unit 230, the gap calculation unit 250, and the GOP correction unit 260. The AD conversion unit 240 outputs a first conversion signal S obtained by performing AD conversion on the first demodulation signal and a second conversion signal C obtained by performing AD conversion on the second demodulation signal, to the gap calculation unit 250 and the GOP correction unit 260.

The gap calculation unit 250 uses the first conversion signal S and the second conversion signal C to calculate a gap comparison term $\delta$ for the gap d. That is, in the first voltage value V1 of the first receiving coil 120 and the second voltage value V2 of the second receiving coil 130, as shown in FIG. 9, a magnetic flux passing the coils is changed, based on the gap d between the rotating flat plate 30 and the position detection device S1. Therefore, an amplitude is changed. Specifically, in the first voltage value V1 of the first receiving coil 120 and the second voltage value V2 of the second receiving coil 130, the amplitude decreases as the gap d is longer, and the amplitude increases as the gap d is shorter. Therefore, in the present embodiment, first, the gap calculation unit 250 derives the gap comparison term $\delta$ for the gap d. In the present embodiment, the first voltage value V1 corresponds to a first characteristic value, and the second voltage value V2 corresponds to a second characteristic value.

In the present embodiment, the gap comparison term $\delta$ is calculated by using a relationship of $\sin^2\theta + \cos^2\theta = 1$, based on the sum of squares of the first conversion signal S and the second conversion signal C. More specifically, the gap calculation unit 250 calculates the gap comparison term $\delta$ by using Equation 1 below.

(Math. 1)

$$\delta = (S - S0)^2 + (C - C0)^2 \ldots \text{(Equation 1)}$$

S0 and C0 in Equation 1 are offset values caused by shift when each of the coils 110, 120, and 130 is provided in the printed circuit board 100, stress when the printed circuit board 100 is sealed with the sealing member 500, or the like, and are known values.

The gap calculation unit 250 may be configured to derive the gap d from the gap comparison term $\delta$, when necessary. In this case, in the present embodiment, the gap d is derived as follows. That is, when the gap d is derived based on the gap comparison term $\delta$, gap correction data is derived in advance by an experiment or the like. For example, through the experiment or the like, a value of the gap comparison term $\delta$ for each gap d is derived from an average value as shown in FIG. 10, and the gap correction data indicating a relationship between the gap d and the gap comparison term $\delta$ is derived in advance as shown in FIG. 11. When the gap d is derived, the gap calculation unit 250 compares the calculated gap comparison term $\delta$ with the gap correction data to derive the gap d.

The GOP correction unit 260 derives correction terms of a gain (G), an offset (O), and a phase (P) which are used when an angle is calculated by using the first conversion signal S and the second conversion signal C. Although details will be described later, when the angle is calculated, a rotation angle θ is calculated by calculating an arctangent function using the first voltage value V1 and the second voltage value V2. In this case, as shown in FIGS. 12 to 14, when the gap d is changed, the gain, the offset, and the phase are changed.

Therefore, the GOP correction unit 260 uses the correction term data and the calculated gap comparison term δ to derive the correction term to be used when the angle calculation unit 270 (to be described later) performs calculation. In the present embodiment, as the correction terms, the correction terms of the gain, the offset, and the phase are derived. The correction term data in the present embodiment is data for a gain correction term, an offset correction term, and a phase correction term, and is derived in advance by an experiment or the like in relation to the gap comparison term δ. In the present embodiment, as shown in FIG. 15, a relationship between a sine wave gain correction term A1 and the gap comparison term δ is derived in advance. As shown in FIG. 16, a relationship between a cosine wave gain correction term A2 and the gap comparison term δ is derived in advance. As shown in FIG. 17, a relationship between a sine wave offset correction term B1 and the gap comparison term δ is derived in advance. As shown in FIG. 18, a relationship between a cosine wave offset correction term B2 and the gap comparison term δ is derived in advance. As shown in FIG. 19, a relationship between a phase correction term C and the gap comparison term δ is derived in advance. The GOP correction unit 260 compares the gap comparison term δ with each correction term data, and derives the gain correction terms A1 and A2, the offset correction terms B1 and B2, and the phase correction term C which are used when the angle calculation unit 270 (to be described later) performs the calculation. Each equation shown in FIG. 15 to FIG. 19 is an equation in which the correction term is represented as y and the gap comparison term δ is represented as x.

When a confirmation signal is input from the diagnosis unit 300, the GOP correction unit 260 outputs a first adjustment signal Sa obtained by adjusting the first conversion signal S, based on the gap comparison term δ and a second adjustment signal Ca obtained by adjusting the second conversion signal C, based on the gap comparison term δ, to the diagnosis unit 300. The first adjustment signal Sa and the second adjustment signal Ca will be described later.

The angle calculation unit 270 calculates the arctangent function using the first conversion signal S and the second conversion signal C to calculate the rotation angle θ of the rotating flat plate 30. In this case, as described above, the gain, the offset, and the phase are shifted due to the gap d. Therefore, in the present embodiment, in order to restrict each shift, the rotation angle θ is calculated by calculating the arctangent function using Equation 2 below.

(Math. 2)

$$\theta = C\{(A1\sin\theta + B1) - (A2\cos\theta + B2)\}/\{(A1\sin\theta + B1) + (A2\cos\theta + B2)\} \ldots \text{(Equation 2)}$$

In Equation 2 above, A1 is a gain correction term for the first voltage value V1, and A2 is a gain correction term for the second voltage value V2. B1 is an offset correction term for the first voltage value V1, and B2 is an offset correction term for the second voltage value V2. C is a phase correction term. In the present embodiment, the rotation angle θ corresponds to an arctangent signal.

The section correction unit 280 is connected to the angle calculation unit 270, and outputs a correction rotation angle θa in which the rotation angle θ calculated by the angle calculation unit 270 is corrected. In the present embodiment, the correction rotation angle θa corresponds to a correction arctangent signal.

That is, in the present embodiment, as described above, the gain, the offset, and the phase are corrected. In actuality, an error caused by the magnetic field of the transmitting coil 110 may occur. Specifically, the magnetic field caused by the transmitting coil 110 is formed in accordance with a current flowing through the transmitting coil 110. The transmitting coil 110 has a shape in which one direction in the normal direction is set as a longitudinal direction, and in both end portions in the longitudinal direction, a wiring layer provided on an inner edge side in the printed circuit board 100 and a wiring layer provided on an outer edge side are connected. Therefore, inside the transmitting coil 110, the magnetic field generated in both end portions in the longitudinal direction is likely to increase, compared to a center side. Influence of the magnetic field is also changed due to the gap d. Therefore, the section correction unit 280 performs correction for correcting the error.

In the present embodiment, the section correction unit 280 uses section correction data and the calculated rotation angle θ to perform section correction, and calculates the correction rotation angle θa. As shown in FIG. 20, the section correction data of the present embodiment is correction data for causing the correction rotation angle θa calculated based on the calculated rotation angle θ to approximate a substantially straight line. In the section correction data of the present embodiment, a tilt correction value and an offset correction value are derived in advance by an experiment or the like for each of multiple sections (that is, rotation angle ranges). In an example in FIG. 20, the rotation angle is divided into five sections, and the tilt correction value and the offset correction value are derived for each section. In the example in FIG. 20, a solid line indicates the calculated rotation angle θ, and a dotted line indicates the correction rotation angle θa after correction.

In the present embodiment, the section correction data is derived in advance for each gap comparison term δ (that is, for each gap d). First, the section correction unit 280 selects the section correction data to be applied in accordance with the gap comparison term $\delta$. The section correction unit 280 sets an output (that is, the correction rotation angle $\theta a$) to y, sets the calculated rotation angle $\theta$ to x, sets the tilt correction value to a, and sets the offset correction value to b. In this manner, the section correction unit 280 calculates the correction rotation angle $\theta a$ in which the rotation angle $\theta$ is corrected by calculating Equation 3 below.
(Math. 3)

$$y = aX + b \ldots \text{(Equation 3)}$$

Equation 3 above is merely an example, and the correction rotation angle $\theta a$ may be calculated by using a higher-order equation of a second order or higher.

The output unit 290 is connected to the section correction unit 280 and the diagnosis unit 300, and outputs the correction rotation angle $\theta a$ corrected by the section correction unit 280 and a diagnosis result of the diagnosis unit 300.

The diagnosis unit 300 is connected to the GOP correction unit 260, and outputs a confirmation signal to the GOP correction unit 260 at a predetermined timing. The diagnosis unit 300 performs diagnosis, based on the first adjustment signal Sa and the second adjustment signal Ca which are input from the GOP correction unit 260.

As shown in FIG. 21, in order to facilitate understanding, the demodulation unit 230, the AD conversion unit 240, the gap calculation unit 250, the GOP correction unit 260, and the like will be collectively referred to as an ASIC unit 320. It is also assumed that the first and second voltage values V1 and V2 are input to the ASIC unit 320 from the first and second receiving coils 120 and 130. It is assumed that the gap d is closer at time T1, and the first voltage value V1 increases. In actuality, when the gap d is closer at time T1, the second voltage value V2 also increases. Meanwhile, in order to facilitate understanding, an example will be described on an assumption that the second voltage value V2 is constant even when the gap d is closer.

In this case, the first voltage value V1 increases at time T1. Therefore, the gap comparison term $\delta$ increases at time T1. When the confirmation signal is input, the ASIC unit 320 inputs the first adjustment signal Sa and the second adjustment signal Ca based on the first voltage value V1 and the second voltage value V2 in which the influence of the gap d is reduced, to the diagnosis unit 300. In an example in FIG. 21, since the gap d is close at time T1, the first adjustment signal Sa and the second adjustment signal Ca in which the gain correction term is reduced are output to the diagnosis unit 300. In this manner, the first adjustment signal Sa and the second adjustment signal Ca become signals whose amplitudes are smaller than the first voltage value V1 and the second voltage value V2 after time T1. In the present embodiment, the gap comparison term $\delta$ is calculated and corrected as described above. Therefore, the same gain correction term is applied to the first adjustment signal Sa and the second adjustment signal Ca. Therefore, in the example in FIG. 21, the second adjustment signal Ca has a smaller amplitude after time T1 than before time T1.

The diagnosis unit 300 determines whether the first adjustment signal Sa and the second adjustment signal Ca exist within a predetermined range, thereby determining whether an abnormality occurs in the ASIC unit 320. The predetermined range here is derived in advance, based on a range of the gap d that can be assumed depending on usage conditions, or the like.

The power supply unit 310 is connected to each of the units 220 to 300 of the signal processing unit 210, and supplies power to each of the units 220 to 300.

The above-described configuration is the configuration of the position detection device S1 in the present embodiment.

Next, an operation of the above-described position detection device S1 will be described.

As described above, the position detection device S1 is provided in the fixing base 40 to face the protrusion portion 32 of the rotating flat plate 30 in the axial direction Da. When the rotating flat plate 30 is rotated in a state where the alternating current is applied to the transmitting coil 110, the first voltage value V1 of the first receiving coil 120 and the second voltage value V2 of the second receiving coil 130 are periodically changed. Therefore, the position detection device S1 calculates the gap comparison term $\delta$ in the gap calculation unit 250, and derives each correction term in the GOP correction unit 260, based on the gap comparison term $\delta$. The position detection device S1 calculates the rotation angle $\theta$ in the angle calculation unit 270 by using each correction term, and outputs the correction rotation angle $\theta a$ in which the calculated rotation angle $\theta$ is corrected by the section correction unit 280. That is, the position detection device S1 outputs the correction rotation angle $\theta a$ in view of the gap d between the rotating flat plate 30 and the position detection device S1. In other words, the position detection device S1 outputs the correction rotation angle $\theta a$ in view of the gap d between the rotating flat plate 30 and the position detection device S1. In other words, the position detection device S1 outputs the correction rotation angle $\theta a$ in which the influence of the gap d between the rotating flat plate 30 and the position detection device S1 is reflected.

According to study of the present inventors, when correction for the gap d is not performed, the present inventors confirm that a relationship between the rotation angle and a linearity error is as shown in FIG. 22. On the other hand, when correction for the gap d is performed as in the present embodiment, the present inventors confirm that the relationship between the rotation angle and the linearity error is as shown in FIG. 23. When half a difference between a maximum value Pa and a minimum value Pb of the linearity error is defined as accuracy, as shown in FIG. 24, the present inventors confirm that the accuracy can be improved as a whole in the present embodiment.

According to the present embodiment described above, the transmitting coil 110, the first receiving coil 120, and the second receiving coil 130 are used to calculate the rotation angle θ and the correction rotation angle θa of the rotating flat plate 30. According to the present embodiment, the transmitting coil 110, the first receiving coil 120, and the second receiving coil 130 are used to derive the correction term for calculating the rotation angle θ and the correction rotation angle θa. That is, according to the present embodiment, a requirement for calculating the rotation angle θ and the correction rotation angle θa and a requirement for deriving the correction term are configured to use common members. Therefore, the number of members can be reduced.

(1) In the present embodiment, the rotation angle θ is calculated by using the gap comparison term δ. Therefore, it is possible to calculate the rotation angle θ in which the influence of the gap d is reduced, and detection accuracy can be improved.

(2) In the present embodiment, the correction rotation angle θa is calculated by using the gap comparison term δ. Therefore, it is possible to calculate the correction rotation angle θa in which the influence of the gap d and the transmitting coil 110 is reduced, and the detection accuracy can be improved.

(3) In the present embodiment, the gap comparison term δ is calculated, based on the first voltage value of the first receiving coil 120 and the second voltage value of the second receiving coil 130. Therefore, it is not necessary to newly dispose a separate member to calculate the gap comparison term δ, and the number of members can be reduced.

(4) In the present embodiment, the rotating flat plate 30 is disposed in the hub bearing 10, and the position detection device S1 is disposed to face the rotating flat plate 30. Therefore, for example, compared to when the position detection device S1 is disposed to face the hub bearing 10 without disposing the rotating flat plate 30, a displacement amount (that is, a rotation amount) increases, and detection accuracy can be improved.

(Modification Example of First Embodiment)

A modification example of the above-described first embodiment will be described. In the above-described first embodiment, the GOP correction unit 260 does not need to be provided, and the angle calculation unit 270 may calculate the rotation angle θ, based on the first conversion signal S and the second conversion signal C, and the correction using the gap comparison term δ may be performed only by the section correction unit 280. In the above-described first embodiment, the section correction unit 280 does not need to be provided, and the correction using the gap comparison term δ may be performed only by the angle calculation unit 270. When the section correction unit 280 is not provided, the rotation angle θ is output.

(Second Embodiment)

A second embodiment will be described. In the present embodiment, a method of deriving the gap comparison term δ in the gap calculation unit 250 is changed, compared to the first embodiment. Other configurations are the same as those in the first embodiment, and thus, description thereof will be omitted here.

First, the magnetic flux caused by the transmitting coil 110 is calculated by a product of inductance and the current applied to the transmitting coil 110. The magnetic flux is changed in conjunction with a change in the gap d between the rotating flat plate 30 and the position detection device S1. Specifically, when the gap d between the rotating flat plate 30 and the position detection device S1 is changed, in a case where the current applied to the transmitting coil 110 is constant, the inductance is changed, and the frequency of the transmitting coil 110 is changed as shown in FIG. 25. Specifically, the frequency of the transmitting coil 110 becomes lower as the gap d is longer, and becomes higher as the gap d is shorter. Therefore, in the present embodiment, the gap d is derived, based on the frequency of the transmitting coil 110.

Specifically, in the signal processing unit 210 of the present embodiment, as shown in FIG. 26, the gap calculation unit 250 is also connected to the oscillation unit 220. The frequency of the transmitting coil 110 is changed depending on the gap d. Therefore, the gap calculation unit 250 derives the gap comparison term δ as 1/τ, when the frequency of the transmitting coil 110 is defined as τ.

When the gap d is derived, the gap calculation unit 250 compares the gap comparison term δ represented by 1/τ with the gap correction data, and derives the gap d. The gap correction data of the present embodiment is data for the gap comparison term δ depending on the frequency τ and the gap d, and is derived in advance by an experiment or the like.

The GOP correction unit 260 and the section correction unit 280 of the present embodiment perform each correction using the gap comparison term δ depending on the frequency τ. Although details are omitted, the GOP correction unit 260 derives each correction term by referring to the correction term data depending on the frequency $\tau$. The section correction unit 280 derives each correction value by referring to the section correction data depending on the frequency $\tau$.

The diagnosis unit 300 of the present embodiment performs diagnosis based on the frequency $\tau$ of the transmitting coil 110. As shown in FIG. 27, as in the above-described first embodiment, in order to facilitate understanding, the oscillation unit 220, the demodulation unit 230, the AD conversion unit 240, the gap calculation unit 250, the GOP correction unit 260, and the like will be collectively referred to the ASIC unit 320. It is assumed that the gap d is closer at time T1, the frequency $\tau$ becomes higher, and the first voltage value V1 increases. In actuality, when the gap d is closer at time T1, the second voltage value V2 also increases. Meanwhile, in order to facilitate understanding, an example will be described on an assumption that the second voltage value V2 is constant even when the gap d is closer.

In this case, the frequency $\tau$ becomes higher at time T1. Therefore, the gap comparison term $\delta$ increases at time T1. When the confirmation signal is input, the ASIC unit 320 inputs the first adjustment signal Sa and the second adjustment signal Ca based on the first voltage value V1 and the second voltage value V2 in which the influence of the gap d is reduced, to the diagnosis unit 300. In an example in FIG. 27, the gap d is closer at time T1. Therefore, the first adjustment signal Sa and the second adjustment signal Ca in which the gain correction term reduced are output to the diagnosis unit 300. In this manner, the first adjustment signal Sa and the second adjustment signal Ca become signals whose amplitudes are smaller than the first voltage value V1 and the second voltage value V2 after time T1. In the present embodiment, the gap comparison term $\delta$ is calculated and corrected as described above. Therefore, the same gain correction term is applied to the first adjustment signal Sa and the second adjustment signal Ca. Therefore, in the example in FIG. 27, the second adjustment signal Ca has a smaller amplitude after time T1 than before time T1.

As in the first embodiment, the diagnosis unit 300 determines whether an abnormality occurs in the ASIC unit 320, based on the first adjustment signal Sa and the second adjustment signal Ca.

As in the present embodiment described above, even when each correction is performed based on the frequency $\tau$ of the transmitting coil 110, the same advantageous effects as those in the first embodiment can be obtained.

(Third Embodiment)

A third embodiment will be described. In the present embodiment, a third receiving coil is added to the first embodiment. Other configurations are the same as those in the first embodiment, and thus, description thereof will be omitted here.

In the present embodiment, as shown in FIG. 28, in addition to the first receiving coil 120 and the second receiving coil 130, a third receiving coil 170 is provided in the printed circuit board 100. The demodulation unit 230 is also connected to the third receiving coil 170 in addition to the first receiving coil 120 and the second receiving coil 130. In the present embodiment, the first to third receiving coils 120, 130, and 170 are formed in a state where the first receiving coil 120 is formed in a sine wave shape and the first to third receiving coils 120, 130, and 170 are phase-shifted by 120° each.

The demodulation unit 230 generates first to third demodulation signals from the voltage values of the first to third receiving coils 120, 130, and 170, and outputs the signals to the AD conversion unit 240. In the present embodiment, a third voltage value output from the third receiving coil 170 corresponds to a third characteristic value.

The AD conversion unit 240 generates first to third conversion signals S1 to S3 from the first to third demodulation signals.

The gap calculation unit 250 derives the gap comparison term $\delta$, based on the first to third conversion signals S1 to S3. In the present embodiment, the first receiving coil 120 is formed in a sine wave shape, and the first to third receiving coils 120, 130, 170 are formed in a state of being phase-shifted by 120° each. Therefore, S in Equation 1 above is expressed by Equation 4 below, and C is expressed by Equation 5 below.

(Math. 4)

$$S = (S1 - CM)^{1/2} \ldots \text{(Equation 4)}$$

(Math. 5)

$$C = S2 - S3 \ldots \text{(Equation 5)}$$

CM is expressed by Equation 6 below.

(Math. 6)

$$CM = (S1 + S2 + S3)/3 \ldots \text{(Equation 6)}$$

S and C derived from Equation 4 and Equation 5 above are substituted into Equation 1 above to derive the gap comparison term δ. Thereafter, as in the first embodiment, each correction using the gap comparison term δ is performed.
As in the present embodiment described above, even when each correction or the like is performed by using the first to third receiving coils 120, 130, and 170, the same advantageous effects as those in the first embodiment can be obtained.

(Fourth Embodiment)

A fourth embodiment will be described. In the present embodiment, a process of the gap calculation unit 250 is changed from that in the first embodiment. Other configurations are the same as those in the first embodiment, and thus, description thereof will be omitted here.
As in the first embodiment, the gap calculation unit 250 of the present embodiment derives the gap comparison term δ by using the first conversion signal S and the second conversion signal C. Meanwhile, the gap calculation unit 250 of the present embodiment determines a minimum peak value and a maximum peak value from the first conversion signal S and the second conversion signal C. The gap calculation unit 250 determines a difference between the minimum peak value and the maximum peak value of the first conversion signal S, as a first gap comparison term δ1. The gap calculation unit 250 determines a difference between the minimum peak value and the maximum peak value of the second conversion signal C, as a second gap comparison term δ2. That is, the gap calculation unit 250 of the present embodiment calculates the first gap comparison term δ1 and the second gap comparison term δ2, as the gap comparison term δ.
Thereafter, as in the first embodiment, each correction is performed by using the gap comparison terms δ1 and δ2. In the present embodiment, two gap comparison terms δ1 and δ2 are calculated. Therefore, gap correction data, correction term correction data, and section correction data are prepared in advance to correspond to the gap comparison terms δ1 and δ2. That is, in the present embodiment, each correction is performed on the first conversion signal S and the second conversion signal C by using different gap comparison terms δ1 and δ2.
The diagnosis unit 300 of the present embodiment performs diagnosis based on the minimum peak value and the maximum peak value of the first conversion signal S and the second conversion signal C. As shown in FIG. 29, as in the first embodiment, in order to facilitate understanding, the demodulation unit 230, the AD conversion unit 240, the gap calculation unit 250, the GOP correction unit 260, and the like will be collectively referred to as the ASIC unit 320. It is also assumed that the first and second voltage values V1 and V2 are input to the ASIC unit 320 from the first and second receiving coils 120 and 130. It is assumed that the gap d is closer at time T1, and the first voltage value V1 increases. In actuality, when the gap d is closer at time T1, the second voltage value V2 also increases. Meanwhile, in order to facilitate understanding, an example will be described on an assumption that the second voltage value V2 is constant even when the gap d is closer.
In this case, the first gap comparison term δ1 increases at time T1, but the second gap comparison term δ2 is constant. That is, in the present embodiment, the first gap comparison term δ1 and the second gap comparison term δ2 are separately derived. Therefore, both of these may have different values.
When the confirmation signal is input, the ASIC unit 320 inputs the first adjustment signal Sa and the second adjustment signal Ca based on the first voltage value V1 and the second voltage value V2 in which the influence of the gap d is reduced, to the diagnosis unit 300. In an example in FIG. 29, the gap d is close at time T1. In this case, in the present embodiment, the first gap comparison term δ1 and the second gap comparison term δ2 are separately derived, and the gains added to the first adjustment signal Sa and the second adjustment signal Ca can be separately adjusted. Therefore, the ASIC unit 320 outputs the first adjustment signal Sa in which the gain correction term is reduced, to the diagnosis unit 300. The example in FIG. 29 shows an example in which the second voltage value V2 is not changed before and after time T1. Therefore, the ASIC unit 320 outputs the second adjustment signal Ca calculated without changing the gain correction term to the diagnosis unit 300.
As in the first embodiment, the diagnosis unit 300 determines whether an abnormality occurs in the ASIC unit 320, based on the first adjustment signal Sa and the second adjustment signal Ca.
When the position detection device S1 is disposed in the fixing base 40 as described above, a case is assumed where the gap d is changed in a state where the rotating flat plate 30 is not rotated. In this case, for example, as shown in FIG. 30, it is assumed that the gap d is closer at time T2, and the amplitudes of the first voltage value V1 and the second voltage value V2 increase. However, the rotating flat plate 30 is not rotated. Therefore, a waveform of the first voltage value V1 has a linear shape without having a sine wave shape, and a waveform of the second voltage value V2 has a linear shape without having a cosine wave shape. That is, when the rotating flat plate 30 is not rotated, it is difficult to properly detect the minimum peak value and the maximum peak value.
When a confirmation signal is input, the ASIC unit 320 inputs the first adjustment signal Sa and the second adjustment signal Ca, in which the influence of the gap d is reduced, to the diagnosis unit 300. However, in an example in FIG. 30, even when the gap d is close at time T2 and the amplitudes of the first voltage value V1 and the second voltage value V2 increase, there is a possibility that it cannot be determined whether a difference between the minimum peak value and the maximum peak value is a change due to the waveform or a change due to the gap d. Therefore, in the position detection device S1 of the present embodiment, as shown in FIG. 30, even when the gap d is close at time T2, there is a possibility that a first gain correction term added to the first adjustment signal Sa and a second gain correction term added to the second adjustment signal Ca are constant. Therefore, in the position detection device S1 of the present embodiment, when the rotating flat plate 30 is not rotated, there is a possibility that detection accuracy is degraded.

As in the present embodiment described above, even when each correction is performed based on the minimum peak value and the maximum peak value, when the rotating flat plate 30 is rotated, the same advantageous effect as those in the first embodiment can be obtained.

(1) In the present embodiment, each correction is performed based on the two gap comparison terms $\delta 1$ and $\delta 2$. Therefore, optimal correction can be performed on each of the first voltage value V1 and the second voltage value V2, and when the rotating flat plate 30 is rotated, detection accuracy can be further improved.

(Fifth Embodiment)

A fifth embodiment will be described. In the present embodiment, a configuration of the rotating flat plate 30 is changed from that in the first embodiment. Other configurations are the same as those in the first embodiment, and thus, description thereof will be omitted here.

In the present embodiment, as shown in FIG. 31, when the rotating flat plate 30 is rotated, an uneven structure 34 turning around in the circumferential direction is formed at a position facing the transmitting coil 110, the first receiving coil 120, and the second receiving coil 130 of the printed circuit board 100. However, in the present embodiment, in the uneven structure 34, depression portions 36 recessed in the thickness direction of the rotating flat plate 30 are periodically formed along the circumferential direction, and a portion located between the depression portions 36 is formed as a protrusion portion 35.

When this rotating flat plate 30 is used, an eddy current is generated in the protrusion portion 32, and a magnetic field caused by the eddy current is generated. When the rotating flat plate 30 is rotated, the magnetic field passing through the portion facing the protrusion portion 32 in the magnetic fields in the axial direction Da which pass through the region surrounded by the first receiving coil 120 and the region surrounded by the second receiving coil 130 is offset by the magnetic field caused by the eddy current. Therefore, as in the first embodiment, the rotation angle $\theta$ and the correction rotation angle $\theta a$ of the rotating flat plate 30 are calculated.

As in the present embodiment described above, the uneven structure 34 may be formed by the depression portion 36 recessed in the thickness direction of the rotating flat plate 30. According to this position detection device S1, since the coils 110 to 130 and the signal processing unit 210 are provided, the same advantageous effects as those in the first embodiment can be obtained.

(Sixth Embodiment)

A sixth embodiment will be described. In the present embodiment, a configuration of the detection object is changed from that in the first embodiment. Other configurations are the same as those in the first embodiment, and thus, description thereof will be omitted here.

In the present embodiment, as shown in FIG. 32, the detection object is a linear motion flat plate 37. The linear motion flat plate 37 is displaced to move straight or reciprocate in a direction of an arrow in FIG. 32.

The position detection device S1 includes the printed circuit board 100 having a rectangular plate shape in which a displacement direction of the linear motion flat plate 37 is the longitudinal direction. The position detection device S1 is disposed to face the linear motion flat plate 37 in the normal direction. Although the position detection device S1 is shown in a simplified manner in FIG. 32, in actuality, the terminal 400 is disposed, and the position detection device S1 is sealed with a sealing member.

When the linear motion flat plate 37 and the position detection device S1 are disposed in this way, facing positions of the linear motion flat plate 37, the first receiving coil 120, and the second receiving coil 130 are changed as the linear motion flat plate 37 is displaced. As in the first embodiment described above, the first receiving coil 120 and the second receiving coil 130 output the first voltage value V1 and the second voltage value V2 in accordance with a displacement amount (that is, a stroke amount) of the linear motion flat plate 37. Therefore, in the present embodiment, as in the first embodiment described above, the gap comparison term $\delta$ is derived based on the first voltage value V1 and the second voltage value V2, and each correction using the gap comparison term $\delta$ is performed to calculate the displacement amount of the linear motion flat plate 37.

In the signal processing unit 210 of the present embodiment, the angle calculation unit 270 serves as a displacement amount calculation unit, although not particularly shown in the drawing. The displacement amount calculation unit calculates a displacement amount of the linear motion flat plate 37 by calculating an arctangent function using the first conversion signal S and the second conversion signal C. The section correction unit 280 performs section correction on the calculated displacement amount to calculate a corrected displacement amount. However, the section correction unit 280 uses correction data for bringing the calculated displacement amount closer to a substantially straight line, as section data.

As in the present embodiment described above, according to the position detection device S1 that detects the displacement amount of the linear motion flat plate 37, the same advantageous effects as those in the first embodiment can be obtained.

(Seventh Embodiment)

A seventh embodiment will be described. In the present embodiment, a metal piece is disposed in an end portion of the transmitting coil 110, compared to the first embodiment. Other configurations are the same as those in the first embodiment, and thus, description thereof will be omitted here.

First, in the related art, JP5226694B2 proposes a position detection device in which a coil is disposed on a substrate and a position of a detection object is detected, based on a change in the magnetic flux passing through the coil.

Incidentally, in the position detection device using the above-described coil, the present inventors have studied the following position detection device. That is, the present inventors have studied a position detection device in which a transmitting coil, and the first receiving coil and the second receiving coil which are disposed inside the transmitting coil in a normal direction with respect to a surface direction of a substrate are provided in the substrate, and a displacement of a detection object is detected by using a change in a magnetic flux passing through the first receiving coil and the second receiving coil. The transmitting coil has a spiral shape whose one direction is the longitudinal direction in the normal direction with respect to the surface direction of the substrate. The first receiving coil is formed in a sine wave shape, and the second receiving coil is formed in a cosine wave shape.

When the position detection device is used to detect the position of the detection object, the detection object is disposed to face the first receiving coil and the second receiving coil, and when the detection object is displaced, a facing area of the detection object, the first receiving coil, and the second receiving coil is changed. In this manner, the magnetic field passing through the first receiving coil and the second receiving coil are offset by the eddy current generated in the detection object. Therefore, the offset magnetic field is changed by the position of the detection object. Therefore, the position of the detection object can be detected, based on a voltage value of the first receiving coil and a voltage value of the second receiving coil.

However, in this position detection device, the magnetic field tends to concentrate on both end portions in the longitudinal direction in the transmitting coil. Therefore, inside the transmitting coil, the magnetic field tends to increase in both end portions in the longitudinal direction, compared to the center side. For example, in a portion along line XXXIII-XXXIII in FIG. 6, as shown in FIG. 33, the magnetic field of a portion located in both end portions in the longitudinal direction tends to increase, compared to the magnetic field on the center side. Therefore, the first voltage value from the first receiving coil and the second voltage value from the second receiving coil tend to include an offset error.

In this case, it is possible to conceive a configuration in which the first receiving coil and the second receiving coil are disposed to be largely separated from both end portions in the longitudinal direction of the transmitting coil. However, in this configuration, a size of the transmitting coil needs to increase. Consequently, a size of the substrate tends to increase.

Therefore, in the present embodiment, it is possible to provide the position detection device which can reduce detection errors while an increase in the size of the substrate is restricted.

Specifically, in the present embodiment, as shown in FIG. 34, metal pieces 180 are disposed in both end portions in the longitudinal direction of the transmitting coil 110 to overlap the transmitting coil 110 in the normal direction.

The metal piece 180 is not disposed to be connected to the transmitting coil 110. That is, the printed circuit board 100 of the present embodiment is a multi-layer board. Therefore, the metal piece 180 is disposed on a layer different from a layer on which the transmitting coil 110 is formed. In the present embodiment, an example has been described in which the metal piece 180 is disposed to overlap both end portions in the longitudinal direction of the transmitting coil 110 in the normal direction. However, the metal piece 180 may be disposed to overlap one end portion in the longitudinal direction of the transmitting coil 110.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the metal piece 180 is disposed to overlap both end portions of the transmitting coil 110 in the normal direction. Therefore, the eddy current is generated inside the metal piece 180 by the magnetic field generated in both end portions of the transmitting coil 110, and the magnetic field generated in both end portions of the transmitting coil 110 is offset by the magnetic field caused by the eddy current. That is, the magnetic field in the portion where the magnetic field tends to increase is offset by the transmitting coil 110. Therefore, degradation of detection accuracy can be restricted. Specifically, when the metal piece 180 is not disposed, a linearity error occurs as shown in FIG. 35. Meanwhile, since the metal piece 180 is disposed as in the present embodiment, the linearity error can be reduced as shown in FIG. 36. In FIGS. 35 and 36, the linearity error when the gap d is narrow is shown by a solid line, and the linearity error when the gap is wide is shown by a dashed line. In FIGS. 35 and 36, when the gap d is narrow, the gap d is set to mutually the same gap d, and when the gap d is wide, the gap d is set to mutually the same gap d.

(Summary of Seventh Embodiment)

The seventh embodiment is configured as described above. Therefore, in summary, the following aspects are provided.

(Aspect 1)

The position detection device includes the substrate (100) disposed to face the displaceable detection object (30, 37), the transmitting coil (110) provided in the substrate, and the receiving coil (120, 130) disposed inside the transmitting coil in the normal direction with respect to the surface direction of the substrate. The transmitting coil has the spiral shape whose one direction is the longitudinal direction in the normal direction with respect to the surface direction of the substrate. The metal piece (180) is disposed at the position overlapping the end portion in the longitudinal direction in the transmitting coil in the normal direction.

(Eighth Embodiment)

An eighth embodiment will be described. In the present embodiment, configurations of the first receiving coil 120 and the second receiving coil 130 are specified, compared to the first embodiment. Other configurations are the same as those in the first embodiment, and thus, description thereof will be omitted here.

First, in the related art, JP5226694B2 proposes a position detection device in which a coil is disposed on a substrate and a position of a detection object is detected, based on a change in the magnetic flux passing through the coil.

Incidentally, in the position detection device using the above-described coil, the present inventors have studied the following position detection device. That is, the present inventors have studied the position detection device in which the transmitting coil, and the first receiving coil and the second receiving coil which are disposed inside the transmitting coil in the normal direction with respect to the surface direction of the substrate are provided in the substrate. The transmitting coil has a spiral shape whose one direction is the longitudinal direction in the normal direction with respect to the surface direction of the substrate. The first receiving coil is formed in a sine wave shape, and the second receiving coil is formed in a cosine wave shape.

When the position detection device is used to detect the position of the detection object, the detection object is disposed to face the first receiving coil and the second receiving coil, and when the detection object is displaced, a facing area of the detection object, the first receiving coil, and the second receiving coil is changed. **In** this manner, the magnetic field passing through the first receiving coil and the second receiving coil are offset by the eddy current generated in the detection object. Therefore, the offset magnetic field is changed by the position of the detection object. Therefore, the position of the detection object can be detected, based on a voltage value of the first receiving coil and a voltage value of the second receiving coil.

**In** this position detection device, it is desirable to improve detection accuracy. For example, in the first embodiment, an example has been described in which the first receiving coil 120 and the second receiving coil 130 are disposed as shown in FIG. 6. However, in this configuration, bulge portions for avoiding the first receiving coil 120 are particularly provided in portions located in both end portions in the longitudinal direction of the printed circuit board 100 in the second receiving coil 130. Therefore, in the above-described configuration, it becomes difficult to configure the second receiving coil 130 to have an ideal cosine wave shape, and, thus, there is a possibility that the detection accuracy is degraded.

Therefore, in the present embodiment, it is possible to provide the position detection device that can restrict degradation of the detection accuracy.

Specifically, in the present embodiment, as shown in FIG. 37, the printed circuit board 100 is configured so that first to fourth insulating films 101a to 101d and first to fourth wiring layers 102a to 102d are alternately laminated.

As shown in FIGS. 38 and 39A to 39D, the wiring layers 102a to 102d are appropriately patterned to form the coils 110 to 130, and are connected through the via 140. In FIG. 38, the fourth wiring layer 102d is indicated by a solid line, the third wiring layer 102c is indicated by a dotted line, the second wiring layer 102b is indicated by a one-dot chain line, and the first wiring layer 102a is indicated by a two-dot chain line. However, the transmitting coil 110 and the connection wire 150 connected to the transmitting coil 110 are all shown by solid lines to facilitate understanding.

Specifically, as shown in FIG. 39A, the fourth wiring layer 102d is provided to include the connection wire 150 connected to a portion of the transmitting coil 110, a portion of the first receiving coil 120, a portion of the second receiving coil 130, and one end portion of the transmitting coil 110. As shown in FIG. 39B, the third wiring layer 102c is provided to include the connection wire 150 connected to the portion of the transmitting coil 110, the portion of the first receiving coil 120, the portion of the second receiving coil 130, and the other end portion of the transmitting coil 110. As shown in FIG. 39C, the second wiring layer 102b is provided to include the connection wire 150 connected to one end portion of the first receiving coil 120 and one end portion of the second receiving coil 130. The first wiring layer 102a is provided to include the connection wire 150 connected to the other end portion of the first receiving coil 120 and the other end portion of the second receiving coil 130. The first wiring layer 102a is provided to include a closed wire 131 for causing the second receiving coil 130 to have a cosine wave having a closed-loop shape. The closed wire 131 is a wire connected to an end portion in the cosine wave in a single period in the normal direction.

As shown in FIGS. 39A and 39B, an extraction wire 121 is provided between the first receiving coil 120 and the via 140 for connecting the connection wire 150 thereto. The via 140 for connecting the first receiving coil 120 and the connection wire 150 is provided outside a region surrounded by the sine wave. Similarly, an extraction wire 132 is provided between the second receiving coil 130 and the via 140 for connecting the connection wire 150 thereto. The via 140 for connecting the second receiving coil 130 and the connection wire 150 is provided outside a region surrounded by the cosine wave.

In the present embodiment, each via 140 which is not connected to the connection wire 150 is provided outside the region surrounded by the sine wave and the region surrounded by the cosine wave.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, in the first receiving coil 120 and the second receiving coil 130, the via 140 connected to the connection wire 150 is disposed outside the region surrounded by the first receiving coil 120 and the region surrounded by the second receiving coil 130. Therefore, the first receiving coil 120 can be easily formed into an ideal sine wave shape, and the second receiving coil 130 can be easily formed into an ideal cosine wave shape. Therefore, it is possible to restrict variations in the magnetic flux passing through the region surrounded by the first receiving coil 120 and the magnetic flux passing through the region surrounded by the second receiving coil 130, and degradation of the detection accuracy can be restricted.

(2) In the present embodiment, the via 140 that connects the wiring layers 102a to 104d is also disposed outside the region surrounded by the first receiving coil 120 and the second receiving coil 130. Therefore, the first receiving coil 120 can be more easily formed into the ideal sine wave shape, and the second receiving coil 130 can be more easily formed into the ideal cosine wave shape. Therefore, degradation of the detection accuracy can be restricted.

(Ninth Embodiment)

A ninth embodiment will be described. In the present embodiment, configurations of the first receiving coil 120 and the second receiving coil 130 are specified, compared to the eighth embodiment. Other configurations are the same as those in the eighth embodiment, and thus, description thereof will be omitted here.

In the present embodiment, as shown in FIGS. 40 and 41A to 41D, the transmitting coil 110, the first receiving coil 120, and the second receiving coil 130 are provided. In FIG. 40, the fourth wiring layer 102d is indicated by a solid line, the third wiring layer 102c is indicated by a dotted line, the second wiring layer 102b is indicated by a one-dot chain line, and the first wiring layer 102a is indicated by a two-dot chain line. However, the transmitting coil 110 and the connection wire 150 connected to the transmitting coil 110 are all shown by solid lines to facilitate understanding.

Specifically, as shown in FIG. 41A, the fourth wiring layer 102d is provided to include the connection wire 150 connected to a portion of the transmitting coil 110, a portion of the first receiving coil 120, a portion of the second receiving coil 130, and one end portion of the transmitting coil 110. The third wiring layer 102c is provided to include the connection wire 150 connected to the portion of the transmitting coil 110, the portion of the first receiving coil 120, the portion of the second receiving coil 130, and the other end portion of the transmitting coil 110. The second wiring layer 102b is provided to include the connection wire 150 connected to one end portion of the first receiving coil 120 and one end portion of the second receiving coil 130. The first wiring layer 102a is provided to include the connection wire 150 connected to the other end portion of the first receiving coil 120 and the other end portion of the second receiving coil 130. The first wiring layer 102a is provided to include the closed wire 131 for causing the second receiving coil 130 to have a cosine wave having a closed-loop shape.

As shown in FIGS. 41A and 41B, the extraction wire 121 is provided between the first receiving coil 120 and the via 140 for connecting the connection wire 150 thereto. The via 140 for connecting the first receiving coil 120 and the connection wire 150 is provided outside a region surrounded by the sine wave.

In the present embodiment, the position of the via 140 for configuring the first receiving coil 120 is adjusted so that the closed wire 131 and the via 140 do not overlap each other. Specifically, in an end portion on a side opposite to a side connected to the connection wire 150 in the first receiving coil 120, the extraction wire 121 connected to the first receiving coil 120 is provided, and the via 140 for connecting the wiring layers 102a to 120d is provided outside the region surrounded by the second receiving coil 130.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, in the first receiving coil 120 and the second receiving coil 130, at least a portion of the via 140 connected to the connection wire 150 is disposed outside the region surrounded by the first receiving coil 120 and the region surrounded by the second receiving coil 130. Therefore, the same advantageous effects as those in the eighth embodiment can be obtained.

(Summary of Eighth and Ninth Embodiments)

The eighth and ninth embodiments are configured as described above. Therefore, in summary, the following aspects are provided in the eighth and ninth embodiments.

(Aspect 1)

The position detection device includes the substrate (100) disposed to face the displaceable detection object (30, 37), the transmitting coil (110) provided in the substrate, and the first receiving coil (120) and the second receiving coil (130) which are disposed inside the transmitting coil in the normal direction with respect to the surface direction of the substrate. The substrate is configured so that the multiple insulating films (101a to 101d) and the multiple wiring layers (102a to 102d) are laminated. In the first receiving coil, the multiple wiring layers are connected through the via (140), and the first receiving coil is formed in the sine wave shape having the closed-loop in the normal direction with respect to the surface direction of the substrate. In the second receiving coil, the multiple wiring layers are connected through the via (140), the second receiving coil is formed in the cosine wave shape having the closed-loop in the normal direction, and is disposed to overlap a portion of the first receiving coil. At least one of the via connecting the first receiving coil and the connection wire (150) provided in the substrate and the via connecting the second receiving coil and the connection wire (150) provided in the substrate are disposed outside the region surrounded by the first receiving coil and the region surrounded by the second receiving coil in the normal direction.

(Aspect 2)

In the position detection device according to Aspect 1, the via connecting the multiple wiring layers so that the first receiving coil has the sine wave shape, and the via connecting the multiple wiring layers so that the second receiving coil has the cosine wave shape are disposed outside the region surrounded by the first receiving coil and the region surrounded by the second receiving coil.

(Tenth Embodiment)

A tenth embodiment will be described. In the present embodiment, a depression portion is provided in the terminal 400, compared to the first embodiment. Other configurations are the same as those in the first embodiment, and thus, description thereof will be omitted here.

First, JP5226694B2 proposes an electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

Incidentally, in the electronic device as described above, it is desirable to prevent the substrate from being damaged when the substrate is sealed with the sealing member. Therefore, for example, the sealing member is made of a thermosetting resin that can be formed at a lower temperature, compared to a thermoplastic resin. However, the thermosetting resin has low viscosity. Therefore, there is a possibility that burrs occur in an interface between the terminal and the sealing member. When the burrs occur, there is a possibility of a connection failure between the connector portion of the electronic device and the external connector portion.

Therefore, in the present embodiment, it is possible to provide the electronic device which can restrict occurrence of the connection failure.

Specifically, the electronic device of the present embodiment configures position detection device S1, and basic configurations are the same as those in the first embodiment. In the present embodiment, as shown in FIG. 42, the terminal 400 has a depression portion 400a provided in a portion exposed from the sealing member 500. In the present embodiment, the depression portion 400a is provided to turn around the terminal 400 in the circumferential direction. The depression portion 400a is a portion exposed from the sealing member 500 in the terminal 400, and is provided on the sealing member 500 (that is, the opening portion 520a) side. For example, here, the sealing member 500 side is a portion exposed from the sealing member 500 in the terminal 400, and is a portion located on the sealing member 500 side with respect to the central portion in the longitudinal direction of the exposed portion.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the terminal 400 has the depression portion 400a provided in the portion exposed from the sealing member 500 which is the portion located on the sealing member 500 side. Therefore, even when the burrs occur in the interface between the terminal 400 and the sealing member 500, progression of the burrs is inhibited by the depression portion 400a. Therefore, it is possible to restrict the connection failure between the connector portion 520 of the position detection device S1 and the external connector portion.

(Modification Example of Tenth Embodiment)

In the tenth embodiment, the depression portion 400a does not need to be provided to turn around the terminal 400 in the circumferential direction. According to this configuration as well, the progression of the burrs is restricted in the portion having the depression portion 400a. Therefore, the connection failure with the external connector portion can be restricted, compared to when the depression portion 400a is not provided.

In the tenth embodiment, an example has been described in which the depression portion 400a is provided in the terminal 400. However, even when a configuration is adopted in which a protrusion portion is provided in the terminal 400, a configuration the same as that of the tenth embodiment can be obtained.

(Summary of Tenth Embodiment)

The tenth embodiment is configured as described above. The configuration of the above-described tenth embodiment is a useful configuration when the printed circuit board 100 on which the transmitting coil 110, the first receiving coil 120, and the second receiving coil 130 are not disposed is sealed with the sealing member 500. Therefore, in summary, the following aspects are provided in the tenth embodiment.

(Aspect 1)

The electronic device includes the substrate (100), the rod-shaped terminal (400) whose one end portion is electrically connected to the substrate, and the sealing member (500) that seals the substrate in a state where the one end portion and the other end portion on the opposite side in the terminal are exposed. The terminal has the depression portion or the protrusion portion provided in the portion exposed from the sealing member.

(Aspect 2)

In the electronic device according to Aspect 1, the depression portion or the protrusion portion is provided to turn around the terminal in the circumferential direction.

(Aspect 3)

In the electronic device according to Aspect 1 or 2, the depression portion or the protrusion portion is disposed on the sealing member side with respect to the central portion in the longitudinal direction in the exposed portion, in the portion exposed from the sealing member in the terminal.

(Eleventh Embodiment)

An eleventh embodiment will be described. In the present embodiment, the connector portion 520 is made of a thermoplastic resin, compared to the tenth embodiment. Other configurations are the same as those in the tenth embodiment, and thus, description thereof will be omitted here.

First, JP5226694B2 proposes an electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

Incidentally, in the electronic device as described above, it is desirable to prevent the substrate from being damaged when the substrate is sealed with the sealing member. Therefore, for example, the sealing member is made of a thermosetting resin that can be formed at a lower temperature, compared to a thermoplastic resin. However, the thermosetting resin has low viscosity. Therefore, there is a possibility that burrs occur in an interface between the terminal and the sealing member. When the burrs occur, there is a possibility of a connection failure between the connector portion of the electronic device and the external connector portion.

Therefore, in the present embodiment, it is possible to provide the electronic device which can restrict the occurrence of the connection failure.

Specifically, the electronic device of the present embodiment configures position detection device S1, and basic configurations are the same as those in the first embodiment. In the present embodiment, as shown in FIG. 43, the connector portion 520 is made of a thermoplastic resin so that one end portion and the other end portion of the terminal 400 are exposed. The position detection device S1 is configured as follows. One end portion of the terminal 400 is connected to the printed circuit board 100, and thereafter the main portion 510 is made of a thermosetting resin to integrally seal the printed circuit board 100, the circuit board 200, and the connector portion 520. That is, in the sealing member 500 of the present embodiment, the main portion 510 that seals the printed circuit board 100 is made of the thermosetting resin, and the connector portion 520 is made of the thermoplastic resin.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the connector portion 520 is made of the thermoplastic resin. Therefore, the thermoplastic resin has a higher viscosity than the thermosetting resin. Therefore, it is possible to restrict occurrence of the burrs in the interface between the terminal 400 and the thermoplastic resin. Therefore, it is possible to restrict the connection failure between the connector portion 520 of the position detection device S1 and the external connector portion.

(Summary of Eleventh Embodiment)

The eleventh embodiment is configured as described above. The configuration of the above-described eleventh embodiment is a useful configuration when the printed circuit board 100 on which the transmitting coil 110, the first receiving coil 120, and the second receiving coil 130 are not disposed is sealed with the sealing member 500. Therefore, in summary, the following aspects are provided in the eleventh embodiment.

(Aspect 1)

The electronic device includes the substrate (100), the rod-shaped terminal (400) whose one end portion is electrically connected to the substrate, and the sealing member (500) that seals the substrate in a state where the one end portion and the other end portion on the opposite side in the terminal are exposed. The sealing member includes the connector portion (520) that is a portion sealing the terminal and that is made of the thermoplastic resin, and the main portion (510) that is a portion integrally sealing the substrate and the connector portion and that is made of the thermosetting resin.

(Twelfth Embodiment)

A twelfth embodiment will be described. In the present embodiment, a method for manufacturing the sealing member 500 is specified, compared to the eleventh embodiment. Other configurations are the same as those in the eleventh embodiment, and description thereof will be omitted here.

First, as described in the eleventh embodiment, JP5226694B2 proposes the electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

Incidentally, in the electronic device as described above, it is desirable to prevent the substrate from being damaged when the substrate is sealed with the sealing member. Therefore, for example, the sealing member is made of a thermosetting resin that can be formed at a lower temperature, compared to a thermoplastic resin. However, the thermosetting resin has low viscosity. Therefore, there is a possibility that burrs occur in an interface between the terminal and the sealing member. When the burrs occur, there is a possibility of a connection failure between the connector portion of the electronic device and the external connector portion.

Therefore, the present inventors have studied that the connector portion is made of the thermoplastic resin and the main portion is made of the thermosetting resin, as in the eleventh embodiment. In this case, the electronic device is manufactured as follows. That is, first, the connector portion in which both end portions of the terminal are exposed is prepared. Next, one end portion of the terminal is connected to the substrate. A mold internally having a cavity is prepared by fitting a first mold and a second mold to each other. Thereafter, these are disposed inside the cavity of the mold, and molten resin is poured into the cavity to provide the main portion. In this manner, the above-described electronic device is manufactured.

Depending on a mounting environment, as in the first embodiment, it may be desirable to dispose the connector portion along the normal direction of the substrate, in some cases. In this case, the main portion is prepared while the connector portion is pressed by the first mold. When the connector portion is pressed by the first mold, the substrate may be bent (that is, warped).

Therefore, in the present embodiment, it is possible to provide the method for manufacturing the electronic device which can restrict bending of the substrate.

Specifically, in the present embodiment, the position detection device is manufactured as follows.

First, as shown in FIGS. 44A and 44B, the connector portion 520 having the terminal 400 and a peg 410 is prepared. In the present embodiment, a portion that seals the terminals 400 and the pegs 410 in the connector portion 520 will be described as a resin portion 521.

The resin portion 521 has a substantially columnar shape provided with the terminal 400 and the peg 410, and has one end portion 521a and the other end portion 521b. The opening portion 520a is provided on the other end portion 521b side. In the present embodiment, the resin portion 521 is provided with a stepped portion 522 which narrows the other end portion 521b side between the one end portion 521a and the other end portion 521b, and the stepped portion 522 is provided with an annular rib part 523.

As in the first embodiment, the terminal 400 is disposed so that one end portion and the other end portion are exposed from the resin portion 521. A bent portion 401 in which the portion exposed from the resin portion 521 is bent is provided on one end portion side of the terminal 400. The bent portion 401 is disposed to be located below the one end portion 521a of the resin portion 521.

The peg 410 is made of metal or the like, and has a plate shape. Two pegs 410 are provided to pinch each terminal 400 therebetween. In the present embodiment, the pegs 410 are disposed to pinch the terminal 400 therebetween in an array direction of the terminals 400. The peg 410 is disposed in the resin portion 521 to be exposed from the one end portion 521a of the resin portion 521, and the exposed portion is bent to form a bent portion 411. The bent portion 411 is disposed to be located below the one end portion 521a of the resin portion 521. The peg 410 may be provided in the resin portion 521 by insert molding, or may be provided in the resin portion 521 by outsert molding.

The terminal 400 and the peg 410 of the present embodiment are disposed in the resin portion 521 so that the bent portion 411 of the peg 410 is separated from the one end portion 521a of the resin portion 521 with respect to the bent portion 401 of the terminal 400. In other words, the terminal 400 and the peg 410 are disposed so that the terminal 400 is less likely to press the printed circuit board 100 when the connector portion 520 is pressed by a mold 600. Specifically, when the connector portion 520 of the terminal 400 is pressed by the mold 600, the position of the bent portion 401 is adjusted so that the position of the bent portion 401 is maintained at a position raised by the thickness of a land 1002 and a joining member 1012 (to be described later).

Next, as shown in FIG. 45A, the connector portion 520 is disposed on the printed circuit board 100, and thereafter, both are disposed inside the mold 600. In FIG. 45A, the mold 600 is shown in a cross-sectional view, and the connector portion 520 is shown in a side view.

Specifically, first, the bent portion 411 of the peg 410 is joined to a land 1001 of the printed circuit board 100 via a joining member 1011 such as solder, and the bent portion 401 of the terminal 400 is joined to the land 1002 of the printed circuit board 100 via the joining member 1012 such as solder. In this case, the portion exposed from the resin portion 521 in the terminal 400 is lengthened. In this manner, spring characteristics of the terminal 400 are reduced, and a repulsive force against the land 1002 is weakened. The portion exposed from the resin portion 521 in the terminal 400 is lengthened. In this manner, contact between the bent portion 401 of the terminal 400 and the land 1002 can be improved, and a contact area can be easily increased. Therefore, it is preferable that the length of the portion exposed from the resin portion 521 in the terminal 400 is lengthened within a design range.

Next, the mold 600 in which a cavity 600a is provided by fitting a first mold 610 and a second mold 620 to each other is prepared, and the printed circuit board 100 on which the connector portion 520 is disposed is disposed inside the cavity 600a. In this case, the first mold 610 in which a depression portion 611a that matches the shape of the connector portion 520 is provided in a base portion 611 is prepared. As will be described later, in the present embodiment, the connector portion 520 is disposed in and pressed by the depression portion 611a. Therefore, the depression portion 611a corresponds to a pressing portion of the first mold 610.

The second mold 620 in which a pressing portion 621 is provided in a base portion 622 is prepared. Specifically, a pressing force is applied to the one surface 100a of the printed circuit board 100 in such a manner that the connector portion 520 is pressed from the first mold 610. Therefore, in order to offset this pressing force, the second mold 620 has a configuration having the pressing portion 621 which can press a portion facing the connector portion 520 on the other surface 100b of the printed circuit board 100.

More specifically, in the present embodiment, the connector portion 520 is configured as described above, and the bent portion 411 of the peg 410 is located below the bent portion 401 of the terminal 400. Therefore, when the first mold 610 presses the connector portion 520, the one surface 100a of the printed circuit board 100 is pressed mainly by the bent portion 411 of the peg 410. As shown in FIGS. 45A and 45B, the pressing portion 621 of the second mold 620 in the present embodiment includes four rod-shaped members. The pressing portion 621 is provided to press a portion between portions directly pressed by the connector portion 520 (that is, portions pressed by the peg 410) on the other surface 100b of the printed circuit board 100 in the normal direction. In other words, the pressing portion 621 of the second mold 620 is configured to have scattered portions in contact with the portion between the portions directly pressed by the connector portion 520 on the other surface 100b of the printed circuit board 100.

When the printed circuit board 100 on which the connector portion 520 is disposed is disposed inside the cavity 600a, the configuration is as follows. That is, the printed circuit board 100 is disposed inside the cavity 600a so that the pressing portion 621 of the second mold 620 presses the other surface 100b of the printed circuit board 100 while the first mold 610 presses the connector portion 520.

Thereafter, although not particularly shown, a molten resin is poured into the mold 600, and is solidified to form the main portion 510 that integrally seals the printed circuit board 100 and the connector portion 520. In this manner, the sealing member 500 is provided. In this case, in the present embodiment, the pressing portion 621 of the second mold 620 presses the portion between the portions pressed by the connector portion 520 on the other surface 100b of the printed circuit board 100. Therefore, it is possible to restrict bending of the printed circuit board 100. In the present embodiment, the pressing portion 621 includes four rod-shaped members, and in the portion facing the connector portion 520 on the other surface 100b of the printed circuit board 100, a portion pressed by the pressing portion 621 and a portion which is not pressed by the pressing portion 621 exist. The molten resin flows into the portion which is not pressed by the pressing portion 621 to provide the main portion 510. Therefore, for example, compared to when the pressing portion 621 presses all of the portions facing the connector portion 520 on the other surface 100b of the printed circuit board 100, the portion exposed from the main portion 510 (that is, the sealing member 500) of the printed circuit board 100 can be reduced, and degradation of environmental resistance can be restricted.

In the present embodiment, an example has been described in which the pressing portion 621 is provided to press the portion between the portions pressed by the connector portion 520 on the other surface 100b of the printed circuit board 100. However, as shown in FIG. 45C, the pressing portion 621 may be provided to press the portion pressed by the connector portion 520 on the other surface 100b of the printed circuit board 100. The two pegs 410 may be disposed to pinch each terminal 400 therebetween in a direction intersecting the array direction of the terminals 400.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, when the main portion 510 is provided, while the first mold 610 presses the connector portion 520 toward the one surface 100a side of the printed circuit board 100, the second mold 620 presses the portion facing the connector portion 520 in the printed circuit board 100. Therefore, when the main portion 510 is provided, warping of the printed circuit board 100 can be restricted.

(2) In the present embodiment, the second mold 620 in which the pressing portion 621 includes a rod-shaped member is prepared. Therefore, in the portion of the other surface 100b facing the connector portion 520 in the printed circuit board 100, a portion pressed by the pressing portion 621 and a portion which is not pressed by the pressing portion 621 exist. Therefore, when the main portion 510 is provided, for example, compared to when the pressing portion 621 presses all of the portions facing the connector portion 520 on the other surface 100b of the printed circuit board 100, the portion exposed from the main portion 510 of the printed circuit board 100 can be reduced, and degradation of environmental resistance can be restricted.

(Thirteenth Embodiment)

A thirteenth embodiment will be described. In the present embodiment, a shape of the pressing portion 621 provided in the second mold 620 is changed, compared to the twelfth embodiment. Other configurations are the same as those in the twelfth embodiment, and description thereof will be omitted here.

In the present embodiment, as shown in FIG. 46A, when the mold 600 is prepared, the pressing portion 621 of the second mold 620 having a substantially C-shape in a top view which is partially broken while a portion in contact with the other surface 100b of the printed circuit board 100 has a frame shape is prepared. In other words, the pressing portion 621 of the second mold 620 is prepared in such a manner that a cutout portion 621b is provided in a frame-shaped frame portion 621a. However, as in the twelfth embodiment described above, the pressing portion 621 is provided to press the portion between the portions directly pressed by the connector portion 520 on the other surface 100b of the printed circuit board 100 in the normal direction.

Thereafter, as in the twelfth embodiment, the molten resin is poured into the mold 600, and is solidified to provide the main portion 510 that integrally seals the printed circuit board 100 and the connector portion 520. In this manner, the sealing member 500 is provided. In this case, in the present embodiment, the pressing portion 621 has a shape in which the cutout portion 621b is provided in the frame portion 621a, and in the portion facing the connector portion 520 on the other surface 100b of the printed circuit board 100, a portion pressed by the pressing portion 621 and a portion which is not pressed by the pressing portion 621 exist. The molten resin flows into the portion which is not pressed by the pressing portion 621 to provide the main portion 510. Therefore, as in the twelfth embodiment, the portion exposed from the main portion 510 of the printed circuit board 100 can be reduced, and degradation of environmental resistance can be restricted.

In the present embodiment, an example has been described in which the pressing portion 621 is provided to press the portion between the portions pressed by the connector portion 520 on the other surface 100b of the printed circuit board 100. However, as shown in FIG. 46B, the pressing portion 621 may be provided to press the portion pressed by the connector portion 520 on the other surface 100b of the printed circuit board 100.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the second mold 620 in which the pressing portion 621 is configured so that the cutout portion 621b is provided in the frame-shaped frame portion 621a is prepared. Therefore, in the portion of the other surface 100b facing the connector portion 520 in the printed circuit board 100, a portion pressed by the pressing portion 621 and a portion which is not pressed by the pressing portion 621 exist. Therefore, the same advantageous effects as those in the twelfth embodiment can be obtained.

(Summary of Twelfth and Thirteenth Embodiments)

The twelfth and thirteenth embodiments are configured as described above. Manufacturing methods as in the twelfth and thirteenth embodiments described above have useful configurations when the printed circuit board 100 on which the transmitting coil 110, the first receiving coil 120, and the second receiving coil 130 are not disposed is sealed with the sealing member 500. In the twelfth and thirteenth embodiments, the pressing portion 621 may be disposed to press all of the portions pressed by the connector portion 520 on the other surface 100b of the printed circuit board 100. Even when this pressing portion 621 is provided, the pressing portion 621 of the second mold 620 presses the portion facing the connector portion 520 on the other surface 100b of the printed circuit board 100. Therefore, warping of the printed circuit board 100 can be restricted when the main portion 510 is provided. The connector portion 520 does not need to include the peg 410, and may be configured so that the one end portion 521a of the resin portion 521 presses the one surface 100a of the printed circuit board 100 when the main portion 510 is provided. Therefore, in summary, the following aspects are provided in the twelfth and thirteenth embodiments.

(Aspect 1)

The method for manufacturing the electronic device includes preparing the mold (600) in which the first mold (610) and the second mold (620) are fitted to each other to provide the cavity (600a), preparing the connector portion (520) provided in a state where both end portions of the terminal (400) are exposed, preparing the substrate (100) having the one surface (100a) and the other surface (100b) on the side opposite the one surface, disposing the connector portion on the one surface of the substrate, disposing the substrate in which the connector portion is disposed inside the cavity, and providing the main portion (510) that seals the substrate and the connector portion by pouring the molten resin into the cavity and solidifying the molten resin. Preparing the mold includes preparing the first mold having the pressing portion (611a) that presses the connector portion toward one surface side of the substrate, and the second mold having the pressing portion (621) that presses the portion facing the connector portion on the other surface of the substrate. Providing the main portion includes providing the main portion in such a manner that the other surface side of the substrate is pressed by the pressing portion of the second mold while the connector portion is pressed toward one surface side of the substrate by the pressing portion of the first mold.

(Aspect 2)

**In** the method for manufacturing the electronic device described in Aspect 1, preparing the mold includes preparing the second mold having the pressing portion that presses a part of the portion facing the connector portion when the main portion is provided.

(Aspect 3)

**In** the method for manufacturing the electronic device according to Aspect 2, preparing the mold includes preparing the second mold having the pressing portion including the multiple rod-shaped members.

(Aspect 4)

**In** the method for manufacturing the electronic device according to Aspect 2, preparing the mold includes preparing the second mold having the pressing portion in which the cutout portion (621b) is provided in the frame portion (621a).

(Aspect 5)

In the method for manufacturing the electronic device described in any one of Aspects 1 to 4, preparing the connector portion includes preparing the connector portion in which two separated locations on one surface of the substrate are pressed by the first mold, when the main portion is provided. Preparing the mold includes preparing the second mold having the pressing portion that presses the portion facing the two separated locations on the other surface of the substrate or a portion located between the two separated locations, when the main portion is prepared.

(Fourteenth Embodiment)

A fourteenth embodiment will be described. In the present embodiment, a stress relief layer is disposed in the interface between the main portion 510 and the connector portion 520, compared to the eleventh embodiment. Other configurations are the same as those in the eleventh embodiment, and description thereof will be omitted here.

First, as described in the eleventh embodiment, JP5226694B2 proposes the electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

Incidentally, in the electronic device as described above, it is desirable to prevent the substrate from being damaged when the substrate is sealed with the sealing member. Therefore, for example, the sealing member is made of a thermosetting resin that can be formed at a lower temperature, compared to a thermoplastic resin. However, the thermosetting resin has low viscosity. Therefore, there is a possibility that burrs occur in an interface between the terminal and the sealing member. When the burrs occur, there is a possibility of a connection failure between the connector portion of the electronic device and the external connector portion.

Therefore, the present inventors have studied that the connector portion is made of the thermoplastic resin and the main portion is made of the thermosetting resin, as in the eleventh embodiment. However, when the connector portion is made of the thermoplastic resin and the main portion is made of the thermosetting resin as in the eleventh embodiment, there is a possibility that the following phenomenon occurs. That is, linear expansion coefficients of thermoplastic resin and thermosetting resin are different from each other. Therefore, when the temperature of the usage environment is changed, there is a possibility that separation occurs in the interface between the connector portion and the main portion.

Therefore, in the present embodiment, it is possible to provide the electronic device which can restrict occurrence of the separation between the connector portion and the main portion.

Specifically, the electronic device of the present embodiment forms the position detection device S1, and basic configurations are the same as those in the eleventh embodiment. In the present embodiment, as shown in FIG. 47, a stress relief layer 540 made of a low-elasticity resin is disposed between the connector portion 520 made of the thermoplastic resin and the main portion 510 made of the thermosetting resin. The stress relief layer 540 is made of a material having a lower elastic modulus than the resin forming the main portion 510 and the connector portion 520.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the stress relief layer 540 made of the low-elasticity resin is disposed between the connector portion 520 made of the thermoplastic resin and the main portion 510 made of the thermosetting resin. Therefore, even when different stress is generated between the main portion 510 and the connector portion 520 due to the usage environment, the stress can be relieved by the stress relief layer 540. Therefore, occurrence of separation or damage can be restricted in the interface between the main portion 510 and the connector portion 520, and it is possible to restrict a possibility that foreign matter such as moisture enters the inside of the device through the interface between the main portion 510 and the connector portion 520 can be restricted.

(Summary of Fourteenth Embodiment)

The fourteenth embodiment is configured as described above. The electronic device as in the fourteenth embodiment described above also has a useful configuration when the printed circuit board 100 on which the transmitting coil 110, the first receiving coil 120, and the second receiving coil 130 are not disposed is sealed with the sealing member 500. Therefore, in summary, the following aspects are provided in the fourteenth embodiment.

(Aspect 1)

The electronic device includes the substrate (100), the rod-shaped terminal (400) whose one end portion is electrically connected to the substrate, and the sealing member (500) that seals the substrate in a state where the one end portion and the other end portion on the opposite side in the terminal are exposed. The sealing member includes the connector portion (520) made of the thermoplastic resin which is a portion that seals the terminal, and the main portion (510) made of a thermosetting resin which is a portion that integrally seals the substrate and the connector portion. The stress relief layer (540) having a lower elastic modulus than the connector portion and the main portion is disposed between the connector portion and the main portion.

(Fifteenth Embodiment)

A fifteenth embodiment will be described. In the present embodiment, a protective member is disposed between the connector portion 520 and the terminal 400, compared to the eleventh embodiment. Other configurations are the same as those in the eleventh embodiment, and description thereof will be omitted here.

First, as described in the eleventh embodiment, JP5226694B2 proposes the electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

Incidentally, when the electronic device described above is disposed in a place that requires environmental resistance, such as a place in a liquid, it is desirable to prevent foreign matter from entering through the interface between the connector portion and the terminal.

Therefore, in the present embodiment, it is possible to provide the electronic device which can restrict a possibility that foreign matter enters through the interface between the connector portion and the terminal.

Specifically, the electronic device of the present embodiment forms the position detection device S1, and basic configurations are the same as those in the eleventh embodiment. In the present embodiment, as shown in FIG. 48, a protective member 550 having higher environmental resistance, such as chemical resistance, than the connector portion 520 is disposed in the interface between the portion exposed from the connector portion 520 in the terminal 400 and the connector portion 520. In other words, the protective member 550 is disposed on a bottom surface of the opening portion 520a. The protective member 550 is made of a silicone resin, for example.

In this manner, for example, as shown in FIGS. 49A and 49B, the position detection device S1 of the present embodiment can be disposed as it is on a box-shaped fixing base 40 provided to be filled with oil 41 such as an automatic transmission fluid. Specifically, when the rotating flat plate 30 is disposed inside the fixing base 40 filled with the oil 41, the position detection device S1 of the present embodiment is fixed as it is at a position facing the rotating flat plate 30 via a fastening member 42. Although not shown in detail, in actuality, an assembly member that seals the inside of the fixing base 40 while detaching the wire connected to the connector portion 520 is disposed in the fixing base 40. The position detection device S1 disposed inside the fixing base 40 is connected to an external circuit via the assembly member.

On the other hand, when the position detection device in which the protective member 550 is not disposed is defined as a position detection device J1 in a comparative example, the interface between the terminal 400 and the connector portion 520 is exposed in the position detection device J1 in the comparative example. Therefore, when the rotating flat plate 30 is disposed in a place filled with the oil 41 and the position detection device J1 in the comparative example is disposed to detect a rotation angle of the rotating flat plate 30, the position detection device J1 is disposed as shown in FIG. 50.

That is, as shown in FIG. 50, a through-hole 43 is provided in the fixing base 40. The position detection device J1 includes a base portion J500 made of a resin and having a depression portion J501 which can be inserted into the through-hole 43, and is configured so that the printed circuit board 100 including the connector portion 520 is disposed inside the depression portion J501 of the base portion J500. In the position detection device J1, a potting material J503 is disposed in a bottom of the depression portion J501, and the printed circuit board 100 is fixed thereto.

When the position detection device J1 is disposed in the fixing base 40, while the depression portion J501 is inserted into the through-hole 43, and the base portion J500 is fixed to the fixing base 40 by a fastening member J505 while a sealing member J504 such as an O-ring is disposed between the fixing base 40 and the base portion J500. Therefore, in the position detection device J1 in the comparative example, it is necessary to provide the depression portion J501 in the base portion J500. Therefore, a size of the position detection device J1 tends to increase. Therefore, according to the position detection device S1 of the present embodiment, it is possible to reduce the size.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the protective member 550 is disposed in the interface between the terminal 400 and the connector portion 520. Therefore, it is possible to restrict a possibility that foreign matter enter the device through the interface between the terminal 400 and the connector portion 520. Since the protective member 550 is disposed, a disposition place can be more flexibly selected, and an increase in the size can be restricted.

(Modification Example of Fifteenth Embodiment)

In the fifteenth embodiment, an example has been described in which the main portion 510 is made of the thermosetting resin, and the connector portion 520 is made of the thermoplastic resin. However, as in the first embodiment, the sealing member 500 may be made of the thermosetting resin as a whole.

(Summary of Fifteenth Embodiment)

The fifteenth embodiment is configured as described above. The electronic device as in the fifteenth embodiment described above also has a useful configuration when the printed circuit board 100 on which the transmitting coil 110, the first receiving coil 120, and the second receiving coil 130 are not disposed is sealed with the sealing member 500. Therefore, in summary, the following aspects are provided in the fifteenth embodiment.

(Aspect 1)

The electronic device includes the substrate (100), the rod-shaped terminal (400) whose one end portion is electrically connected to the substrate, and the sealing member (500) that seals the substrate in a state where the one end portion and the other end portion on the opposite side in the terminal are exposed. The protective member (550) having higher environmental resistance than the sealing member is disposed in the interface between the portion exposed from the sealing member in the terminal and the sealing member.

(Sixteenth Embodiment)

A sixteenth embodiment will be described. In the present embodiment, a method for manufacturing the position detection device S1 is specified, compared to the eleventh embodiment. Other configurations are the same as those in the eleventh embodiment, and description thereof will be omitted here.
First, JP5226694B2 proposes an electronic device in which various electronic components are mounted on the substrate. In this electronic device, the substrate is usually sealed with the sealing member.
However, in the electronic device described above, there is a possibility that the substrate is bent when the substrate is sealed with the sealing member.
Therefore, in the present embodiment, it is possible to provide the electronic device which can restrict bending of the substrate when the substrate is sealed with the sealing member.
Specifically, the electronic device of the present embodiment forms the position detection device S1, and basic configurations are the same as those in the eleventh embodiment. In the present embodiment, when the position detection device S1 is manufactured, steps in FIGS. 51A to 51C are performed. In FIGS. 51A to 51C, the coils 110 to 130, the circuit board 200, and the like are omitted.
First, as shown in FIG. 51A, the mold 600 in which the cavity 600a is provided by fitting the first mold 610 and the second mold 620 to each other is prepared, and the printed circuit board 100 on which the connector portion 520 is disposed is disposed inside the cavity 600a. Specifically, in the present embodiment, first, the mold 600 in which a first mold force pin 612 is provided in the base portion 611 of the first mold 610 and a second mold force pin 623 is provided in the base portion 622 of the second mold 620 is prepared. The first mold force pin 612 is provided to be slidable on the base portion 611, and the second mold force pin 623 is provided to be slidable on the base portion 622. The printed circuit board 100 is disposed inside the mold 600 in a state of being pinched between the first mold force pin 612 and the second mold force pin 623.
Thereafter, as shown in FIG. 51B, the molten resin is poured into the mold 600, and is solidified to provide the sealing member 500 for sealing the printed circuit board 100 and the like. In this case, in the present embodiment, the printed circuit board 100 is pinched between the first mold force pin 612 and the second mold force pin 623. Therefore, bending of the position detection device S1 can be restricted when the sealing member 500 is provided.
Thereafter, as shown in FIG. 51C, the position detection device S1 is detached from the mold 600. In this case, in the present embodiment, the portion in contact with the first mold force pin 612 and the second mold force pin 623 in the printed circuit board 100 is brought into an exposed state from the sealing member 500. That is, the sealing member 500 is in a state where a depression portion 560 that exposes the printed circuit board 100 is provided. The depression portion 560 is provided at a position different from each wiring layer provided in the printed circuit board 100 in the normal direction. In other words, the depression portion 560 is provided at a position which does not overlap each wiring layer provided in the printed circuit board 100 in the normal direction. In this case, in order that the wiring layer does not corrode, it is preferable that a distance between the depression portion 560 and each wiring layer is adjusted in view of an environment in which the position detection device S1 is used or a material of the resin to be used. As in the fifteenth embodiment, the protective member 550 may be disposed in the depression portion 560.
According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.
(1) In the present embodiment, the sealing member 500 is provided while the printed circuit board 100 is pinched between the first mold force pin 612 and the second mold force pin 623. Therefore, it is possible to restrict bending of the position detection device S1 during manufacturing. Therefore, when the position detection device S1 is disposed to face the rotating flat plate 30, it is possible to restrict a possibility that the gap d between the position detection device S1 and the rotating flat plate 30 varies in each portion. In particular, as the size of the position detection device S1 (that is, the printed circuit board 100) increases, flatness is less likely to be maintained. However, according to the manufacturing method of the present embodiment, bending of the position detection device S1 is forcibly restricted.

Therefore, it is possible to easily cope with a size increase in the position detection device S1.

(Modification Example of Sixteenth Embodiment)

In the sixteenth embodiment, an example has been described in which the main portion 510 is made of the thermosetting resin, and the connector portion 520 is made of the thermoplastic resin. However, as in the first embodiment, the sealing member 500 may be made of the thermosetting resin as a whole.

(Summary of Sixteenth Embodiment)

The sixteenth embodiment is configured as described above. The electronic device as in the sixteenth embodiment described above also has a useful configuration when the printed circuit board 100 on which the transmitting coil 110, the first receiving coil 120, and the second receiving coil 130 are not disposed is sealed with the sealing member 500. Therefore, in summary, the following aspects are provided in the sixteenth embodiment.

(Aspect 1)

The method for manufacturing the electronic device includes preparing the mold (600) in which the first mold (610) and the second mold (620) are fitted to each other to provide the cavity (600a), disposing the substrate (10) in the cavity, and providing the sealing member (500) that seals the substrate by pouring the molten resin into the cavity and solidifying the molten resin. Preparing the mold includes providing the force pins (612 and 623) which can come into contact with the substrate in the first mold and the second mold. Providing the sealing member includes providing the sealing member while the substrate is pinched between the force pins of the first mold and the second mold.

(Seventeenth Embodiment)

A seventeenth embodiment will be described. In the present embodiment, the thickness of the main portion 510 of the position detection device S1 is specified, compared to the eleventh embodiment. Other configurations are the same as those in the eleventh embodiment, and description thereof will be omitted here.

First, JP5226694B2 proposes an electronic device in which various electronic components are mounted on the substrate. In this electronic device, one end portion of a rod-shaped terminal is usually connected to the substrate. The electronic device is used while the substrate and the terminal are sealed with a sealing member so that the other end portion of the terminal is exposed. In this case, the sealing member has a connector portion provided in a portion that seals the terminal to be connected to an external connector portion.

However, there is a possibility that the above-described electronic device is bent when a usage environment is changed.

Therefore, the present embodiment provides the electronic device which can restrict bending of the substrate when in use.

Specifically, the electronic device of the present embodiment forms the position detection device S1, and basic configurations are the same as those in the eleventh embodiment. In the present embodiment, as shown in FIG. 52, the main portion 510 is configured to have a portion in which a thickness d1 of a portion disposed on the one surface 100a side of the printed circuit board 100 is equal to a thickness d2 of a portion disposed on the other surface 100b side of the printed circuit board 100. FIG. 52 corresponds to a cross section taken along line V-V in FIG. 4. In the present embodiment, a relationship between the thickness d1 and the thickness d2 corresponds to a restriction structure. In the present embodiment, having the portion where the thickness d1 and the thickness d2 are equal includes a case of a slight error which may occur during manufacturing, in addition to a case where both are completely equal to each other.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the sealing member 500 is configured to have the portion where the thickness d1 of the portion disposed on the one surface 100a side of the printed circuit board 100 is equal to the thickness d2 of the portion disposed on the other surface 100b side of the printed circuit board 100. Therefore, the position detection device S1 can restrict a possibility that both end portions located in the longitudinal direction is bent to the one surface 100a side or the other surface 100b side of the printed circuit board 100 while the virtual line extending in the radial direction is set as the axis.

(Eighteenth Embodiment)

An eighteenth embodiment will be described. In the present embodiment, the thickness of the main portion 510 of the position detection device S1 is specified, compared to the seventeenth embodiment. Other configurations are the same as those in the seventeenth embodiment, and thus, description thereof will be omitted here.
As in the seventeenth embodiment, the present embodiment can provide the electronic device which can restrict bending of the substrate when in use.
Specifically, the electronic device of the present embodiment forms the position detection device S1, and basic configurations are the same as those in the eleventh embodiment. Therefore, the main portion 510 has an arc plate shape formed along the shape of the printed circuit board 100. In the present embodiment, as shown in FIG. 53, in the main portion 510 of the sealing member 500, a thickness d1a of an inner edge region RI on an inner edge side is thicker than a thickness d1b of an outer edge region RO on an outer edge side. That is, the main portion 510 is configured so that a difference in the amount of the resin between the portion on the inner edge region RI side and the portion on the outer edge region RO side decreases. The main portion 510 of the present embodiment is configured so that the thickness is gradually thinned from the inner edge region RI toward the outer edge region RO. FIG. 53 corresponds to a cross section taken along line LIII-LIII in FIG. 4. In the present embodiment, a relationship between the thickness d1a and the thickness d1b corresponds to a restriction structure.
In this configuration, as shown in FIG. 54, a stepped portion 511 may be provided so that the thickness is thinned in stages from the inner edge region RI toward the outer edge region RO. FIGS. 53 and 54 show an example in which the thickness of the portion located on the one surface 100a side of the printed circuit board 100 in the main portion 510 is adjusted. However, in this configuration, the thickness of the portion located on the other surface 100b side of the printed circuit board 100 in the main portion 510 may be adjusted, or the thicknesses of the portions located on the one surface 100a side and the other surface 100b side of the printed circuit board 100 in the main portion 510 may be respectively adjusted.
According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.
(1) In the present embodiment, the thickness d1a of the sealing member 500 on the inner edge region RI side is thicker than the thickness d1b of the outer edge region RO on the outer edge side. That is, the sealing member 500 is configured so that the difference in the amount of the resin between the portion on the inner edge region RI side and the portion on the outer edge region RO side decreases. Therefore, the position detection device S1 can restrict a possibility that the inner edge region RI and the outer edge region RO are bent to the one surface 100a side or the other surface 100b side of the printed circuit board 100 while the virtual line extending in the circumferential direction is set as the axis.

(Nineteenth Embodiment)

A nineteenth embodiment will be described. In the present embodiment, the thickness of the main portion 510 of the position detection device S1 is specified, compared to the seventeenth embodiment. Other configurations are the same as those in the seventeenth embodiment, and thus, description thereof will be omitted here.
As in the seventeenth embodiment, the present embodiment can provide the electronic device which can restrict bending of the substrate when in use.
Specifically, the electronic device of the present embodiment forms the position detection device S1, and basic configurations are the same as those in the eleventh embodiment. In the present embodiment, as shown in FIG. 55, in the portion located on the one surface 100a side of the printed circuit board 100 in the main portion 510, the thickness d1d of the portion located around the connector portion 520 is thinner than the thickness d1c of the other portion. That is, in the sealing member 500, in the portion where the connector portion 520 is disposed to increase the amount of the resin, a depression portion 512 that decreases the amount of the resin in the portion located around the connector portion 520 is provided in the portion located on the one surface 100a side of the printed circuit board 100 in the main portion 510. In the present embodiment, the depression portion 512 corresponds to a restriction structure.
According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.
(1) In the present embodiment, in the portion located on the one surface 100a side of the printed circuit board 100 in the main portion 510, the thickness d1d of the portion located around the connector portion 520 is thinner than the thickness d1c of the other portion. Therefore, the position detection device S1 can restrict a possibility that both end portions located in the longitudinal direction is bent to the one surface 100a side or the other surface 100b side of the printed circuit board 100 while the virtual line extending in the radial direction is set as the axis.

(Twentieth Embodiment)

A twentieth embodiment will be described. In the present embodiment, the thickness of the main portion 510 of the position detection device S1 is specified, compared to the seventeenth embodiment. Other configurations are the same as those in the seventeenth embodiment, and thus, description thereof will be omitted here.
As in the seventeenth embodiment, the present embodiment can provide the electronic device which can restrict bending of the substrate when in use.
Specifically, in the position detection device S1 of the present embodiment, as shown in FIG. 56, in the portion located on the other surface 100b side of the printed circuit board 100 in the main portion 510, a thickness d2b of the portion located around the connector portion 520 is thinner than a thickness d2a of the other portion. That is, in the sealing member 500, in the portion where the connector portion 520 is disposed to increase the amount of the resin, a depression portion 513 that decreases the amount of the resin in the portion located around the connector portion 520 is provided in the portion located on the other surface 100b side of the printed circuit board 100 in the main portion 510. In the present embodiment, the depression portion 513 corresponds to a restriction structure.
In this case, as shown in FIG. 57, the depression portion 513 may be provided to reach the printed circuit board 100. In the nineteenth embodiment, the depression portion 512 may be provided to reach the printed circuit board 100.
According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.
(1) In the present embodiment, in the portion located on the other surface 100b side of the printed circuit board 100 in the main portion 510, the thickness d2b of the portion located around the connector portion 520 is thinner than the thickness d2a of the other portion. Therefore, the position detection device S1 can restrict a possibility that both end portions located in the longitudinal direction is bent to the one surface 100a side or the other surface 100b side of the printed circuit board 100 while the virtual line extending in the radial direction is set as the axis.

(Modification Example of Seventeenth to Twentieth Embodiments)

In the seventeenth to twentieth embodiments described above, an example has been described in which the main portion 510 is made of the thermosetting resin and the connector portion 520 is made of the thermoplastic resin. However, as in the first embodiment, the sealing member 500 may be made of the thermosetting resin as a whole.

(Summary of Seventeenth to Twentieth Embodiments)

The seventeenth to twentieth embodiments are configured as described above. The electronic devices as in the seventeenth to twentieth embodiments described above also have a useful configuration when the printed circuit board 100 on which the transmitting coil 110, the first receiving coil 120, and the second receiving coil 130 are not disposed is sealed with the sealing member 500. The seventeenth to twentieth embodiments can be combined as appropriate. Therefore, in summary, the following aspects are provided in the seventeenth to twentieth embodiments.

(Aspect 1)

The electronic device includes the substrate (100) having the one surface (100a) and the other surface (100b) opposite to the one surface, and the sealing member (500) that seals the substrate. The sealing member has a restriction structure for restricting bending of the substrate when one direction in the surface direction is set as the axis.

(Aspect 2)

In the electronic device according to Aspect 1, the sealing member has a portion where the thicknesses (d1 and d2) of a portion disposed on one surface side of the substrate and a portion disposed on the other surface side of the substrate are equal to each other.

(Aspect 3)

In the electronic device according to Aspect 1 or 2, the substrate has an arc plate shape, and the sealing member has an arc plate shape disposed along the substrate. The thickness (d1a) of the portion located in the inner edge region (RI) on the inner edge side is thicker than a thickness (R1b) of the portion located in the outer edge region (RO) on the outer edge side.

(Aspect 4)

In the electronic device according to any one of Aspects 1 to 3, the electronic device includes the rod-shaped terminal (400) in which one end portion is electrically connected to the substrate. The sealing member includes the connector portion (520) that seals the terminal in a state where the one end portion and the other end portion on the opposite side are exposed, and the main portion (510) that integrally seals the substrate and the connector portion. The main portion has the depression portion (512, 513) provided around the connector portion.

(Twenty-First Embodiment)

A twenty-first embodiment will be described. In the present embodiment, the shape of the printed circuit board 100 is changed, compared to the first embodiment. Other configurations are the same as those in the first embodiment, and thus, description thereof will be omitted here.

First, JP5226694B2 proposes the position detection device serving as the electronic device in which the coil is disposed on the substrate and the position of the detection object is detected, based on a change in the magnetic flux passing through the coil. The substrate in the position detection device is formed in a substantially C-shape. In the position detection device, when the substrate is disposed around a rotary shaft, the substrate is formed in the substantially C-shape. In this manner, it is possible to easily cancel misalignment between the rotary shaft and the substrate.

For example, this substrate is provided as follows. That is, a rectangular substrate configuration plate is prepared. Then, the substrate having the substantially C-shape is cut out from this substrate configuration plate to prepare the substrate.

However, when the substrate having the substantially C-shape is cut out as it is from the substrate configuration plate, unnecessary portions tend to increase.

Therefore, in the present embodiment, it is possible to provide the electronic device which can reduce waste of members.

Specifically, the electronic device of the present embodiment forms the position detection device S1, and basic configurations are the same as those in the eleventh embodiment. However, in the position detection device S1 of the present embodiment, as shown in FIG. 58, the printed circuit board 100 has a substantially circular shape (that is, a substantially annular shape) in the normal direction. In the present embodiment, arc-shaped printed circuit boards 181 to 184 are aligned in a substantially circular shape, and the respective printed circuit boards 181 to 184 are electrically connected by connection members 191 to 194 such as bonding wires. In this manner, a single printed circuit board 100 is provided. In the present embodiment, each of the printed circuit boards 181 to 184 corresponds to a configuration substrate.

Although omitted in FIG. 58, the position detection device S1 is configured so that the respective printed circuit boards 181 to 184 are integrally sealed with the sealing member 500. However, the position detection device S1 may be integrated in such a manner that the printed circuit boards 181 to 184 are sealed with the respectively separate sealing members 500 and thereafter, are mechanically fixed to each other. Although omitted in FIG. 58, in actuality, the terminal 400 or the like is provided in the printed circuit board 100 as appropriate.

As shown in FIG. 59, this printed circuit board 100 is configured in such a manner that a printed circuit board configuration plate 1000 is prepared and each of the printed circuit boards 181 to 184 is detached from the printed circuit board configuration plate 1000. In this case, for example, when the printed circuit board having a substantially O-shape is detached from the printed circuit board configuration plate 1000, the printed circuit board is detached as shown in FIG. 60. Therefore, unnecessary portions increase. However, in the present embodiment, as shown in FIG. 59, each of the printed circuit boards 181 to 184 is cut out. Therefore, a space between the printed circuit boards 181 to 184 can be narrowed, and wasted portions of the printed circuit board configuration plate 1000 can be reduced.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the printed circuit board 100 has an annular shape in which multiple printed circuit boards 181 to 184 are connected. Therefore, unnecessary portions of the printed circuit board configuration plate 1000 used for cutting out the printed circuit boards 181 to 184 can be reduced, and waste of members can be reduced.
(2) In the present embodiment, the printed circuit board 100 has a circular shape. Therefore, warping can be more easily restricted, compared to when the printed circuit board 100 has an arc shape.
(3) In the present embodiment, the printed circuit board 100 has a circular shape. Therefore, when the position detection device S1 is provided, it is possible to easily cancel misalignment with the rotating flat plate 30 (that is, the hub bearing 10), and detection accuracy can be improved.

(Modification Example of Twenty-First Embodiment)

In the twenty-first embodiment, the printed circuit board 100 does not need to have a complete circular shape, and for example, may have a substantially C-shape in which a portion is broken. In the twenty-first embodiment, an example has been described in which one printed circuit board 100 includes four printed circuit boards 181 to 184. Meanwhile, one printed circuit board 100 may include three or less printed circuit boards, or one printed circuit board 100 may include five or more printed circuit boards.

(Summary of Twenty-First Embodiment)

The twenty-first embodiment is configured as described above. The electronic device as in the twenty-first embodiment also has a useful configuration when the printed circuit board 100 on which the transmitting coil 110, the first receiving coil 120, and the second receiving coil 130 are not disposed is sealed with the sealing member 500. Therefore, in summary, the following aspects are provided in the twenty-first embodiment.

(Aspect 1)

The electronic device includes the substrate (100), and the sealing member (500) that seals the substrate. The substrate is configured by connecting multiple arc-shaped configuration substrates (181 to 184).

(Aspect 2)

In the electronic device according to Aspect 1, the substrate has a circular shape by connecting the multiple configuration substrates.

(Twenty-Second Embodiment)

A twenty-second embodiment will be described. In the present embodiment, a place for disposing the position detection device S1 is changed, compared to the first embodiment. Other configurations are the same as those in the first embodiment, and thus, description thereof will be omitted here.
First, JP5226694B2 proposes the position detection device in which the coil is disposed on the substrate and the position of the detection object is detected, based on a change in the magnetic flux passing through the coil. Specifically, the position detection device includes the substrate having a substantially C-shape which is an arc shape. The position detection device is fixed to the fixing base disposed around the rotary shaft via a fastening member such as a screw to face the rotary shaft.
However, when the position detection device is disposed via the fastening member, a hole portion formed in the fixing base is formed to be slightly larger than the fastening member to facilitate assembly. Therefore, the rotary shaft and the axis of the position detection device are misaligned, thereby causing a possibility that detection accuracy is degraded. The axis of the position detection device refers to a central axis of a circle that includes the arc of the substrate as a part.
Therefore, in the present embodiment, it is possible to provide a rotation detection device system which can restrict axial misalignment between the rotary shaft and the axis of the position detection device.
Specifically, in the present embodiment, as shown in FIGS. 61 and 62, a support portion 44 is provided in the fixing base 40. Specifically, the support portion 44 in the present embodiment is configured so that a depression portion formed around the hub bearing 10 (that is, the through-hole 40a) as the center is formed in a circular shape, and has a side surface that coincides with a circle formed around the hub bearing 10 as the center. The support portion 44 may include a protrusion portion in which a separate member is disposed in the fixing base 40. The support portion 44 is used when the position detection device S1 is disposed as described later. Therefore, the support portion 44 may be provided only in the portion where the position detection device S1 is disposed, or may be formed in an arc shape.

The position detection device S1 has the same configuration as the first embodiment described above, and is configured so that a side surface on an inner edge side of the main portion 510 coincides with an arc of a virtual circle formed around the hub bearing 10 as the center. That is, the side surface on the inner edge side of the main portion 510 has a shape corresponding to a side surface of the support portion 44. The position detection device S1 of the present embodiment is provided in the fixing base 40 as follows. In a state where the side surface on the inner edge side of the main portion 510 is pressed against the support portion 44, a fastening member (not shown) is inserted into the collar portion 530. In this case, the collar portion 530 is formed to be larger than the fastening member. Therefore, there is a possibility that the position detection device S1 is misaligned when attached to the fixing base 40. However, in the present embodiment, the position detection device S1 (that is, the main portion 510) is fixed in a state where the side surface on the inner edge side is pressed against the support portion 44. Therefore, when the position detection device S1 is disposed in the fixing base 40, there is a possibility that misalignment occurs along the circumferential direction, but a positional relationship between the axis of the position detection device S1 and the axis of the hub bearing 10 is unlikely to be misaligned. Therefore, degradation of detection accuracy can be restricted.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the fixing base 40 is provided with the support portion 44 having the side surface that coincides with the circle formed around the hub bearing 10 as the center. The position detection device S1 is provided in the fixing base 40 in a state where the side surface on the inner edge side is pressed against the support portion 44. Therefore, when the position detection device S1 is disposed in the fixing base 40, there is a possibility that misalignment occurs along the circumferential direction, but a positional relationship between the axis of the position detection device S1 and the axis of the hub bearing 10 is unlikely to be misaligned. Therefore, degradation of detection accuracy can be restricted.

When the position detection device S1 is provided in the fixing base 40 in a state of being pressed against the support portion 44 as in the present embodiment, there is a possibility that the position detection device S1 is misaligned in the circumferential direction. In this case, the first voltage value V1 generated in the first receiving coil 120 and the second voltage value V2 generated in the second receiving coil 130 are mainly phase-shifted. Therefore, since the phase shift caused by the axial misalignment in the circumferential direction in the signal processing unit 210 is corrected, it is possible to further restrict degradation of the detection accuracy. In this case, in the signal processing unit 210, the axial misalignment in the circumferential direction is corrected only for the phase shift. Therefore, for example, a process for the correction can be simplified, compared to when the misalignment between the axis of the hub bearing 10 and the axis of the position detection device S1 is corrected.

(Modification Example of Twenty-Second Embodiment)

In the twenty-second embodiment, an example has been described in which the side surface on the inner edge side of the position detection device S1 is pressed against the support portion 44. However, although not particularly shown, the fixing base 40 may include the support portion 44 against which the side surface on the outer edge side of the position detection device S1 is pressed. The position detection device S1 may be provided in the fixing base 40 in a state where the side surface on the outer edge side is pressed against the support portion 44.

(Summary of Twenty-Second Embodiment)

The twenty-second embodiment is configured as described above. Therefore, in summary, the following aspects are provided in the twenty-second embodiment.

(Aspect 1)

The position detection device system includes the position detection device (S1) including the substrate (100) disposed to face the displaceable detection object (30), the transmitting coil (110) provided in the substrate, the receiving coil (120, 130) disposed inside the transmitting coil in the normal direction with respect to the surface direction of the substrate, and the arc plate-shaped sealing member (500) that seals the substrate, the fixing base (40) in which the position detection device is disposed, and the rotary shaft (10) provided with the detection object and disposed in the fixing base in a rotatable state. The fixing base has the support portion (44) having the side surface that coincides with the circle formed around the rotary shaft as the center. The sealing member of the position detection device has the arc plate shaped-portion having the side surface along the support portion, and is fixed to the fixing base in a state where the side surface is pressed against the support portion.

(Twenty-Third Embodiment)

A twenty-third embodiment will be described. In the present embodiment, a member is added to the position detection device S1, compared to the first embodiment. Other configurations are the same as those in the first embodiment, and thus, description thereof will be omitted here.

First, in the related art, JP5226694B2 proposes a position detection device in which a coil is disposed on a substrate and a position of a detection object is detected, based on a change in the magnetic flux passing through the coil.

Incidentally, the present inventors have studied that a space on the substrate is effectively used in the position detection device described above.

Therefore, in the present embodiment, it is possible to provide the position detection device which can effectively use the space of the substrate.

Specifically, in the present embodiment, as shown in FIGS. 63 and 64, a collar portion 530a is also provided in the central portion in the circumferential direction of the position detection device S1. As in the collar portions 530 provided in both end portions in the circumferential direction, the collar portion 530a is configured so that a collar 532a made of metal is disposed in a through-hole 531a, and a fastening member is inserted into the through-hole 531a. Hereinafter, the collar portion 530a provided in the central portion in the circumferential direction of the position detection device S1 will also be referred to as a central collar portion 530a. In the present embodiment, the central collar portion 530a corresponds to a component portion.

The central collar portion 530a is disposed inside a region surrounded by the first receiving coil 120 and the second receiving coil 130. The portion surrounding the central collar portion 530a in the first receiving coil 120 and the second receiving coil 130 has a shape widened to a side opposite to the central collar portion 530a with respect to an ideal waveform. FIG. 64 corresponds to FIG. 6, and the transmitting coil 110, the first receiving coil 120, and the second receiving coil 130 are all indicated by solid lines. In FIG. 64, the ideal waveform corresponding to the widened portion of the first receiving coil 120 and the second receiving coil 130 is indicated by a dotted line.

The signal processing unit 210 performs a correction process to correct the shift of the waveform of the first voltage value V1 and the second voltage value V2 which is caused by widening the first receiving coil 120 and the second receiving coil 130. For example, the correction process is performed by deriving in advance the gain, the offset, and the phase shift which are caused by widening the first receiving coil 120 and the second receiving coil 130, and the correction is performed using the respective terms. For example, the correction process is performed by deriving in advance a difference from an ideal output which is caused by widening the first receiving coil 120 and the second receiving coil 130 as a tilt correction value and an offset correction value, and the correction is performed using the tilt correction value and the offset value. For example, the correction process is performed by performing multi-point correction on the obtained output in accordance with the difference from the ideal output.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the central collar portion 530a is provided at a position different from the positions of the coils 110, 120, and 130 in the printed circuit board 100. Therefore, for example, compared to when a protrusion portion is provided in an outer edge portion of the printed circuit board 100 and the central collar portion 530a is disposed in the protrusion portion, an increase in the size of the printed circuit board 100 can be restricted, and the space of the printed circuit board 100 can be effectively used.

(2) In the present embodiment, the central collar portion 530a having the collar 532a made of metal is provided at the position different from the positions of the coils 110, 120, and 130 in the printed circuit board 100. Therefore, the central collar portion 530a functions as a restriction structure that restricts bending of the position detection device S1 when the position detection device S1 is prepared, when in use, or the like, and the central collar portion 530a can restrict bending of the position detection device S1. Therefore, degradation of detection accuracy can be restricted.

(3) In the present embodiment, the portion surrounding the central collar portion 530a in the first receiving coil 120 and the second receiving coil 130 has the shape widened to the side opposite the central collar portion 530a with respect to the ideal waveform. Therefore, the size of the central collar portion 530a can be easily changed to an increasing side, and a degree of freedom in design can be improved. It is possible to restrict a possibility that disposition locations of the metallic collar 532, the first receiving coil 120, and the second receiving coil 130 are too close to each other, and thus, it is possible to reduce the influence of metal (that is, noise) on the first receiving coil 120 and the second receiving coil 130.

(4) In the present embodiment, the signal processing unit 210 performs the correction process to correct the shift of the waveform of the first voltage value V1 and the second voltage value V2 which is caused by widening the first receiving coil 120 and the second receiving coil 130. Therefore, degradation of the detection accuracy can be restricted.

(Modification Example of Twenty-Third Embodiment)

A modification example of the twenty-third embodiment will be described. In the twenty-third embodiment, an example has been described in which the central collar portion 530a is provided. However, as shown in FIG. 65, in the position detection device S1, an electronic component 533 such as a capacitor may be disposed in the region surrounded by the first receiving coil 120 and the second receiving coil 130. According to this configuration, it is possible to eliminate a mounting member or a mounting space required when the electronic component 533 is disposed in another place, and thus, the space of the printed circuit board 100 can be effectively used. In this configuration, the electronic component 533 corresponds to the component portion.

As shown in FIG. 66, in the position detection device S1, a connection via 141 for connecting the wiring layers in the respective layers of the printed circuit board 100 may be disposed in the region surrounded by the first receiving coil 120 and the second receiving coil 130. According to this configuration, an increase in the size of the printed circuit board 100 can be restricted, compared to when the connection via 141 is disposed in a region other than the region surrounded by the first receiving coil 120 and the second receiving coil 130, and thus, the space of the printed circuit board 100 can be effectively used. In this configuration, the connection via 141 corresponds to the component portion. Only the through-hole 531a may be provided in the position detection device S1, and the central collar portion 530a may be provided on the fixing base 40 side to which the position detection device S1 is attached. In this configuration, the through-hole 531a corresponds to the component portion.

(Summary of Twenty-Third Embodiment)

The twenty-third embodiment is configured as described above. Therefore, in summary, the following aspects are provided.

(Aspect 1)

The position detection device includes the substrate (100) disposed to face the displaceable detection object (30, 37), the transmitting coil (110) provided in the substrate, and the first receiving coil (120) and the second receiving coil (130) which are disposed inside the transmitting coil in the normal direction with respect to the surface direction of the substrate. The component portion (141, 530a, 531a, 533) is disposed in the region surrounded by the first receiving coil and the second receiving coil in the normal direction with respect to the surface direction of the substrate. The portion surrounding the component portion in the first receiving coil and the second receiving coil is widened to the side opposite to the component portion.

(Aspect 2)

In the position detection device according to Aspect 1, the component portion includes the through-hole (531a) into which the fastening member is inserted.

(Aspect 3)

The position detection device according to Aspect 1 or 2 includes the signal processing unit (210) that performs a predetermined process, based on the first characteristic value of the first receiving coil and the second characteristic value of the second receiving coil. The signal processing unit performs the correction caused by widening the first receiving coil and the second receiving coil.

(Twenty-Fourth Embodiment)

A twenty-fourth embodiment will be described. In the present embodiment, the shapes of the first receiving coil 120 and the second receiving coil 130 are changed, compared to the first embodiment. Other configurations are the same as those in the first embodiment, and thus, description thereof will be omitted here.

First, in the related art, JP5226694B2 proposes a position detection device in which a coil is disposed on a substrate and a position of a detection object is detected, based on a change in the magnetic flux passing through the coil.

Incidentally, in the position detection device using the above-described coil, the present inventors have studied the following position detection device. That is, the present inventors have studied a position detection device in which a transmitting coil, and the first receiving coil and the second receiving coil which are disposed inside the transmitting coil in a normal direction with respect to a surface direction of a substrate are provided in the substrate, and a displacement of a detection object is detected by using a change in a magnetic flux passing through the first receiving coil and the second receiving coil. The transmitting coil has a spiral shape whose one direction is the longitudinal direction in the normal direction with respect to the surface direction of the substrate. The first receiving coil is formed in a sine wave shape, and the second receiving coil is formed in a cosine wave shape.

When the position detection device is used to detect the position of the detection object, the detection object is disposed to face the first receiving coil and the second receiving coil, and when the detection object is displaced, a facing area of the detection object, the first receiving coil, and the second receiving coil is changed. In this manner, the magnetic field passing through the first receiving coil and the second receiving coil are offset by the eddy current generated in the detection object. Therefore, the offset magnetic field is changed by the position of the detection object. Therefore, the position of the detection object can be detected, based on a voltage value of the first receiving coil and a voltage value of the second receiving coil.

However, in this position detection device, when the first receiving coil and the second receiving coil are disposed close to the transmitting coil, there is a possibility that the first receiving coil and the second receiving coil are not equally affected by the magnetic field of the transmitting coil. In other words, there is a possibility that specific locations of the first receiving coil and the second receiving coil are more greatly affected by the magnetic field of the transmitting coil than other locations. Specifically, the magnetic field of the transmitting coil tends to concentrate in both end portions in the longitudinal direction of the transmitting coil. Therefore, there is a possibility that the first receiving coil and the second receiving coil which are disposed close to both end portions in the longitudinal direction of the transmitting coil are greatly affected by the magnetic field of the transmitting coil. In this case, when the first receiving coil is provided to have a sine wave shape of an ideal closed-loop and the second receiving coil is provided to have cosine wave shape of an ideal closed-loop, there is a possibility that the first receiving coil and the second receiving coil are greatly differently affected by the transmitting coil. Therefore, in this position detection device, there is a possibility that the detection accuracy is degraded.

Therefore, in the present embodiment, it is possible to provide the position detection device that can restrict degradation of the detection accuracy.

First, the reason that the detection accuracy is degraded will be described in detail with reference to FIGS. 67 and 68. FIG. 67 is a diagram corresponding to FIG. 6, in which the first receiving coils 120 are all indicated by solid lines, and the via 140 connected to the wiring layer configuring the first receiving coil 120, the connection wire 150, the second receiving coil 130, and the like are omitted. FIG. 68 corresponds to FIG. 6, in which the second receiving coils 130 are all indicated by solid lines, and the via 140 connected to the wiring layer configuring the second receiving coil 130, the connection wire 150, and the first receiving coil 120 are omitted.

As shown in FIG. 67, when the first receiving coil 120 is provided to have a sine wave shape of an ideal closed-loop, two regions are formed. Hereinafter, one of the regions will be referred to as a first region 120Ra, and the other region will be referred to as a second region 120Rb. In this case, the currents generated in the first receiving coil 120 by the magnetic field caused by the transmitting coil 110 flow in opposite directions in a portion constituting the first region 120Ra and a portion constituting the second region 120Rb. In FIG. 67, in order to facilitate understanding of the directions of the currents, the first region 120Ra is indicated by a + symbol, and the second region 120Rb is indicated by a - symbol. As described above, the magnetic field of the transmitting coil 110 tends to concentrate in both end portions in the longitudinal direction of the transmitting coil 110. Therefore, a region that is easily affected by concentration of the magnetic field in the transmitting coil 110 is defined as a change region HR. In other words, a region which includes an end portion in the longitudinal direction of the transmitting coil 110 and whose magnetic field is stronger than the center on the inner side of the transmitting coil 110 is defined as the change region HR. In the subsequent drawing corresponding to FIG. 67, a region that is easily affected by the concentration of the magnetic field in the transmitting coil 110 is indicated as the change region HR.

In this case, in the first region 120Ra and the second region 120Rb, ranges overlapping the change region HR are substantially the same as each other. The directions of the currents generated in the first receiving coil 120 are opposite to each other in the portion constituting the first region 120Ra and the portion constituting the second region 120Rb. Therefore, in the first receiving coil 120, the influence of the change region HR is easily offset.

On the other hand, as shown in FIG. 68, when the second receiving coil 130 is provided to have a cosine wave shape of an ideal closed-loop, three regions are formed. Hereinafter, a region located in an end of the three regions will be referred to as a third region 130Ra, a region adjacent to the third region 130Ra will be referred to as a fourth region 130Rb, and a region located on a side opposite to the third region 130Ra across the fourth region 130Rb will be referred to as a fifth region 130Rc. In this case, the direction of the current generated in the second receiving coil 130 by the magnetic field caused by the transmitting coil 110 is the same direction in the portion constituting the third region 130Ra and the portion constituting the fifth region 130Rc, and is the opposite direction in the portion constituting the fourth region 130Rb. In FIG. 68, in order to facilitate understanding of the direction of the current, the third region 130Ra and the fifth region 130Rc are indicated by a + symbol, and the fourth region 130Rb is indicated by a - symbol.

In this case, the third region 130Ra and the fifth region 130Rc have portions overlapping the change region HR, but the fourth region 130Rb has no portion overlapping the change region HR. That is, the third region 130Ra and the fifth region 130Rc in which the current flows in the same direction are affected by the change region HR, and the fourth region 130Rb in which the current flows in the direction opposite to the direction in the third region 130Ra and the fifth region 130Rc is not affected by the change region HR. Therefore, in the second receiving coil 130, the influence of the change region HR is less likely to be offset, and the second receiving coil 130 is significantly affected by the magnetic field of the transmitting coil 110. Therefore, when the first receiving coil 120 has an ideal sine wave shape and the second receiving coil 130 has an ideal cosine wave shape, the influence of the change region HR on the second receiving coil 130 is extremely greater than the influence of the change region HR on the first receiving coil 120, thereby causing a possibility that detection accuracy is degraded.

Therefore, the present embodiment has the following configuration. First, the first receiving coil 120 has the sine wave shape of the ideal closed-loop as shown in FIG. 69, and is less affected by the change region HR as described above.

On the other hand, as shown in FIGS. 69 and 70, in the second receiving coil 130 of the present embodiment, the fourth region 130Rb in addition to the third region 130Ra and fifth region 130Rc is also affected by the change region HR. Specifically, the second receiving coil 130 has a waveform which is phase-shifted from the ideal sine wave by a predetermined amount (however, smaller than 90°). That is, the second receiving coil 130 is provided so that at least two regions in which the currents flow in opposite directions overlap the change region HR. The current generated in the second receiving coil 130 flows in the same direction in the third region 130Ra and the fifth region 130Rc, and flows in the opposite direction in the fourth region 130Rb. Therefore, the influence of the change region HR on the second receiving coil 130 is easily offset, and degradation of detection accuracy can be restricted.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the first receiving coil 120 and the second receiving coil 130 are provided so that at least two regions in which the current flow in the opposite directions in the normal direction overlap the change region HR. Therefore, the influence of the magnetic field of the change region HR on the first receiving coil 120 and the second receiving coil 130 can be reduced, and degradation of detection accuracy can be restricted.

(2) In the present embodiment, the first receiving coil 120 has the sine wave shape, and the second receiving coil 130 has the waveform which is phase-shifted from the sine wave by the predetermined amount (however, smaller than 90°). Therefore, design in the related art can be easily reused by simply changing the shape of the second receiving coil 130.

(Modification Example of Twenty-Fourth Embodiment)

A modification example of the twenty-fourth embodiment will be described. In the twenty-fourth embodiment, an example has been described in which the first receiving coil 120 has the ideal sine wave shape, and the second receiving coil 130 has a wave shape which is phase-shifted from the ideal sine wave by the predetermined amount. In this case, as shown in FIGS. 71 and 72, the first receiving coil 120 may have a wave shape shifted from the ideal sine wave in the positive direction by a predetermined amount, and the second receiving coil 130 may have a wave shape shifted from the ideal sine wave in the negative direction by a predetermined amount. According to this configuration, it is possible to reduce a difference in the magnitude of the influence of the change region HR between the first receiving coil 120 and the second receiving coil 130. Therefore, for example, the processing side can be easily designed when it is desired to improve accuracy when the rotating flat plate 30 is rotated by a predetermined angle, that is, when it is desired to improve detection accuracy for a specific angle of the rotating flat plate 30. In this configuration, the positive direction is the first direction, and the negative direction is the second direction.

(Summary of Twenty-Fourth Embodiment)

The twenty-fourth embodiment is configured as described above. Therefore, in summary, the following aspects are provided.

(Aspect 1)

The position detection device includes the substrate (100) disposed to face the displaceable detection object (30, 37), the transmitting coil (110) provided in the substrate, and the first receiving coil (120) and the second receiving coil (130) which are disposed inside the transmitting coil in the normal direction with respect to the surface direction of the substrate. The transmitting coil has a spiral shape whose one direction is the longitudinal direction in the normal direction with respect to the surface direction of the substrate. When the region including an end portion in the longitudinal direction in the transmitting coil and having the magnetic field stronger than the center on the inner side of the transmitting coil is defined as the change region (HR), the first receiving coil and the second receiving coil have a closed-loop waveform having at least two regions in which the currents generated by the influence of the magnetic field of the transmitting coil flow in the opposite directions and having phases shifted from each other, and furthermore, are provided so that at least two regions in which the currents flow in the opposite directions in the normal direction with respect to the surface direction of the substrate overlap the change region.

(Aspect 2)

In the position detection device described in Aspect 1, the first receiving coil has the sine wave shape of the closed-loop, and the second receiving coil has a waveform in which the first receiving coil is shifted by a predetermined phase amount within a range smaller than 90°.

(Aspect 3)

In the position detection device described in Aspect 1, the first receiving coil has a waveform in which the sine wave of the closed-loop is shifted in the first direction by a predetermined phase amount within a range smaller than 90°, and the second receiving coil has a waveform in which the sine wave of the closed-loop is shifted in the second direction opposite to the first direction by a predetermined phase amount within a range smaller than 90°.

(Twenty-Fifth Embodiment)

A twenty-fifth embodiment will be described. In the present embodiment, the shape of the printed circuit board 100 is changed, compared to the first embodiment. Other configurations are the same as those in the first embodiment, and thus, description thereof will be omitted here.

First, JP2019-507348A proposes a position detection device in which a coil is disposed in a substrate, and a position of a detection object is detected, based on a change in a magnetic flux passing through the coil. The substrate in the position detection device is formed in a circular shape having an arc.

Incidentally, it is desirable for this position detection device (that is, the substrate) to have a shape that matches a disposing space.

When the shape of the position detection device is changed, it is desirable to change the shape of the coil in accordance with the shape of the position detection device (that is, the substrate).

In the present embodiment, it is possible to provide a position detection device that can improve a degree of freedom in disposition.

Specifically, in the position detection device S1 of the present embodiment, as shown in FIG. 73, the printed circuit board 100 has a rectangular shape in a top view. Since the printed circuit board 100 has the rectangular shape in a top view in this way, for example, when a portion constituting the printed circuit board 100 is cut out from the substrate configuration plate having the rectangular shape, an increase in unnecessary portions can be restricted, and waste of members can be reduced.

In the present embodiment, when the printed circuit board 100 has the rectangular shape, the shapes of the first receiving coil 120 and the second receiving coil 130 are adjusted so that detection accuracy which is the same as that when the printed circuit board 100 has the arc shape (that is, a substantially C-shape) can be obtained. That is, even when the printed circuit board 100 has the rectangular shape, an area surrounded by the first receiving coil 120 and the second receiving coil 130 is not reduced.

For example, when the second receiving coil 130 provided in the arc-shaped printed circuit board 100 is provided in the rectangular printed circuit board 100, a relationship as shown in FIG. 74 is established. In FIG. 74, the central axis of the rotating flat plate 30 is defined as a reference C, and the second receiving coil 130 provided along the circumferential direction of a virtual circle having a radius r formed around the reference C as the center is defined as a virtual second receiving coil J130. FIG. 74 shows a relationship between the virtual second receiving coil J130 and the second receiving coil 130 provided in the rectangular printed circuit board 100.

First, a position of the virtual second receiving coil J130 from the reference C is expressed by Equations 7 and 8 below. In the following equation, the horizontal axis in FIG. 74 is defined as an x-axis direction, the vertical axis is defined as a y-axis direction, an angle in the circumferential direction is defined as $\theta$, and an amplitude is defined as w, as will be described below.
(Math. 7)

$$xcos = (r + w \times \cos\theta) \times \cos\theta \ldots \text{(Equation 7)}$$

(Math. 8)

$$ycos = (r + w \times \cos\theta) \times \sin\theta \ldots \text{(Equation 8)}$$

Although not particularly shown, if the first receiving coil 120 formed along the circumferential direction of a virtual circle of radius r centered on reference C is taken as the virtual first receiving coil, the position of the virtual first receiving coil from reference C is expressed by Equations 9 and 10 below.
(Math. 9)

$$xsin = (r + w \times \sin\theta) \times \cos\theta \ldots \text{(Equation 9)}$$

(Math. 10)

$$ysin = (r + w \times \sin\theta) \times \sin\theta \ldots \text{(Equation 10)}$$

When the length from the reference C to the center of the waveform of the first receiving coil 120 and the second receiving coil 130 provided in the rectangular printed circuit board 100 is defined as R, as shown in FIG. 75A, Equation 11 below may be satisfied to form the arc-shaped virtual first receiving coil and the arc-shaped second receiving coil 130 into the rectangular shape.
(Math. 11)

$$r(\theta) \times \cos\theta = R \ldots \text{(Equation 11)}$$

When an infinitesimal area where the rotating flat plate 30 overlaps the first receiving coil 120 and the second receiving coil 130 is defined as ds, and the amplitude along a virtual line K extending in the radial direction from the reference C of the first receiving coil 120 and the second receiving coil 130 is defined as w, the infinitesimal area ds is expressed by Equation 12 below.
(Math. 12)

$$ds = \{(r + w) \times d\theta + (r - w) \times ds\} \times (2W/2) \ldots \text{(Equation 12)}$$

When this equation is calculated, Equation 13 below is obtained.
(Math. 13)

$$ds = 2wrd\theta \ldots \text{(Equation 13)}$$

Based on Equation 13 above, it is confirmed that the infinitesimal area ds is proportional to r. Equation 14 below may be satisfied so that an area of an overlapping region between the rotating flat plate 30, the first receiving coil 120, and the second receiving coil 130 is constant regardless of the angle.
(Math. 14)

$$w(\theta) \propto 1/r \ldots \text{(Equation 14)}$$

Therefore, the first receiving coil 120 and the second receiving coil 130 in the present embodiment are configured as follows to have the area the same as the area surrounded by the virtual first receiving coil and the virtual second receiving coil J130 provided along the arc of the virtual circle having the radius r using the central axis of the rotating flat plate 30 as the reference C. That is, in the first receiving coil 120 and the second receiving coil 130, the amplitude of the portion intersecting the virtual line K extending in the radial direction from the reference C has a value that is inversely proportional to the radius r.

According to the present embodiment described above, the transmitting coil 110, the first receiving coil 120, and the second receiving coil 130 are used to perform correction based on the gap comparison term δ, and the rotation angle θ and the correction rotation angle θa are calculated. Therefore, the same advantageous effects as those in the first embodiment can be obtained.

(1) In the present embodiment, the printed circuit board 100 has the rectangular shape. Therefore, for example, when a rectangular plate is prepared as the printed circuit board configuration plate constituting the printed circuit board 100, and the rectangular printed circuit board 100 is cut out from the printed circuit board configuration plate, unnecessary portions can be reduced. Therefore, waste of members can be reduced.

(2) In the present embodiment, in the first receiving coil 120 and the second receiving coil 130, the amplitude of the portion intersecting the virtual line K extending in the radial direction from the reference C has a value that is inversely proportional to the radius r. Therefore, compared to when the virtual first receiving coil and the virtual second receiving coil J130 are provided, it is possible to restrict degradation of detection accuracy. In the configuration as in the present embodiment, when the amplitude of the portion intersecting the virtual line K extending in the radial direction from the reference C is inversely proportional to the radius r, the above-described length R can be not only a constant but also any function. For example, when any function is referred to as f(θ), a relationship shown in FIG. 75B is established. Therefore, the printed circuit board 100 (that is, the position detection device S1) does not need to have the rectangular shape in a top view, and for example, may have a shape in which a substantially rectangular portion and a substantially arc-shaped portion are connected as shown in FIG. 75B. That is, according to the configuration of the present embodiment, the shape of the position detection device S1 (that is, the printed circuit board 100) can be freely changed to match a disposing space, and thus, a degree of freedom in disposition can be improved.

(Summary of Twenty-Fifth Embodiment)

The twenty-fifth embodiment is configured as described above. Therefore, in summary, the following aspects are provided.

(Aspect 1)

The position detection device includes the substrate (100) disposed to face the displaceable detection object (30), the transmitting coil (110) provided in the substrate, and the first receiving coil (120) and the second receiving coil (130) which are disposed inside the transmitting coil in the normal direction with respect to the surface direction of the substrate. The detection object is the disk, and the depression portion (31) recessed in the radial direction is periodically provided along the circumferential direction at the position facing the substrate, and the detection object is disposed to be rotatable about the central axis of the disk as the axis. In the first receiving coil and the second receiving coil, the amplitude of the portion intersecting the virtual line (K) extending in the radial direction from the reference (C) has a value that is inversely proportional to the radius to have the area the same as the area surrounded by the virtual first receiving coil and the virtual second receiving coil (J130) provided along the arc of the virtual circle having the radius(r) using the central axis of the disk as the reference.

(Twenty-Sixth Embodiment)

A twenty-sixth embodiment will be described. In the present embodiment, the shape of the printed circuit board 100 is specified, compared to the sixteenth embodiment. Other configurations are the same as those in the sixteenth embodiment, and thus, description thereof will be omitted here.

First, JP5226694B2 proposes an electronic device in which various electronic components are mounted on the substrate. In this electronic device, the substrate is usually sealed with the sealing member. The substrate including a base material, a wiring layer provided on the base material, and a solder resist disposed to cover the wiring layer is used. The solder resist made of a general material having a glass transition point of approximately 120°C is used.

However, in the electronic device described above, there is a possibility that the substrate is bent when the substrate is sealed with the sealing member. Therefore, it is conceivable that the substrate is sealed with the sealing member while the substrate is pinched by force pins. For example, it is conceivable to provide the sealing member as in the sixteenth embodiment.

In this case, the portion pinched by the force pins in the substrate is in a state of being in contact with the force pins. Therefore, the portion is exposed from the sealing member when the sealing member is provided. When the solder resist covering the wiring layer provided in the substrate is exposed from the sealing member, stress increases due to a difference in linear expansion coefficients between the sealing member and the solder resist, depending on a usage environment. In this case, there is a possibility that cracks occur in the solder resist, and since the cracks reach the wiring layer, there is a possibility that the wiring layer is exposed. In this case, for example, when an electronic device is disposed in a portion filled with oil such as an automatic transmission fluid, since the oil reaches the wiring layer, the wiring layer corrodes.

Therefore, in the present embodiment, it is possible to provide the electronic device which can restrict the exposure of the wiring layer.

Specifically, the electronic device of the present embodiment constitutes the position detection device S1, and a basic configuration thereof is the same as that in the sixteenth embodiment. As shown in FIG. 76, the printed circuit board 100 of the present embodiment includes a base material 1100, a wiring layer 1200 provided on the base material 1100, and a solder resist 1300 covering the wiring layer 1200 provided on an outermost surface.

The base material 1100 is provided by impregnating glass fibers with an epoxy resin, and has a higher glass transition point than the solder resist 1300. For example, the base material 1100 has the glass transition point equal to or higher than the temperature in the usage environment. FIG. 76 shows the printed circuit board 100 having two layers of the base material 1100 and the wiring layer 1200. In this case, the base material 1100 on the solder resist 1300 side is called a prepreg, and the base material 1100 located on the side opposite to the solder resist 1300 across the prepreg is called a core material. Here, the printed circuit board 100 having the two layers of the base material 1100 and the wiring layer 1200 is shown. However, for example, when four wiring layers are provided as in the first embodiment described above, at least four wiring layers 1200 are provided.

The position detection device S1 is manufactured as in the sixteenth embodiment described above, and the sealing member 500 has the depression portion 560 through which the printed circuit board 100 is exposed. In the present embodiment, the portion exposed from the sealing member 500 in the printed circuit board 100 is made of the base material 1100 having the higher glass transition point than the solder resist 1300. That is, the solder resist 1300 is patterned not to be exposed from the depression portion 560. This solder resist 1300 can be easily provided through patterning using a mask.

According to the present embodiment described above, the transmitting coil 110, the first receiving coil 120, and the second receiving coil 130 are used to perform correction based on the gap comparison term $\delta$, and the rotation angle $\theta$ and the correction rotation angle $\theta a$ are calculated. Therefore, the same advantageous effects as those in the first embodiment can be obtained.

(1) In the present embodiment, the portion is exposed from the sealing member 500 in the printed circuit board 100 is made of the base material 1100 having the higher glass transition point than the solder resist 1300. Therefore, the printed circuit board 100 can be used at the temperature higher than the glass transition point of the solder resist 1300, and it is possible to restrict occurrence of cracks caused by a difference in thermal expansion coefficients between the sealing member 500 and the solder resist 1300 due to a thermal cycle. Therefore, the exposure of the wiring layer 1200 from the sealing member 500 can be restricted, and the corrosion of the wiring layer 1200 can be restricted. For example, even when the position detection device S1 is disposed in a portion filled with the oil 41 such as an automatic transmission fluid as in the fifteenth embodiment, corrosion of the wiring layer 1200 can be restricted. Therefore, according to the electronic device of the present embodiment, it is possible to improve a degree of freedom in disposition.

(Modification Example of Twenty-Sixth Embodiment)

A modification example of the twenty-sixth embodiment will be described. In the twenty-sixth embodiment, an example has been described in which the printed circuit board 100 includes the multi-layer board having the multiple wiring layers 1200. Meanwhile, the printed circuit board 100 may include a single-layer board having the single wiring layer 1200.

(Summary of Twenty-Sixth Embodiment)

The twenty-sixth embodiment is configured as described above. The electronic device as in the twenty-sixth embodiment described above has a useful configuration when the printed circuit board 100 on which the transmitting coil 110, the first receiving coil 120, and the second receiving coil 130 are not disposed is sealed with the sealing member 500. Therefore, in summary, the following aspects are provided in the twenty-sixth embodiment.

(Aspect 1)

The electronic device includes the substrate (100), and the sealing member (50) that seals the substrate. The sealing member has the depression portion (560) through which a portion of the substrate is exposed. The substrate includes the base material (1100), the wiring layer (1200) disposed on the base material, and the solder resist (1300) covering the wiring layer and sealed with the sealing member. The base material has the higher glass transition point than the solder resist. The portion exposed from the depression portion in the substrate is the base material.

(Twenty-Seventh Embodiment)

A twenty-seventh embodiment will be described. In the present embodiment, the configurations of the transmitting coil 110 and the receiving coil 120 are changed, and the shapes of the printed circuit board 100 and the sealing member 500 are changed to match the changed configurations, compared to the first embodiment. Other configurations are the same as those in the first embodiment, and thus, description thereof will be omitted here.

First, DE102008012922A1 discloses a position detection device including a transmitting coil and multiple receiving coils, and disposed to face a rotor which is a detection object made of an electrically conductive material.

In recent years, a demand for reducing the size of this type position detection device exists, and it is necessary to achieve both size reduction and ensured position detection accuracy. However, when the size of the position detection device is reduced as a whole, the sizes of the transmitting coil and receiving coil are reduced. Consequently, the magnetic field generated between the detection object and the position detection device and detection signals on the position detection device side are reduced, and it is difficult to ensure position detection accuracy.

Therefore, in the present embodiment, it is possible to provide the position detection device which can achieve both size reduction and ensured position detection accuracy.

In the present embodiment, for example, as shown in FIG. 77, the transmitting coil 110 includes two coils 111 and 112 having different outer diameters in the normal direction, and the two coils 111 and 112 are unicursal not to overlap each other. The transmitting coil 110 includes an outer coil 111 having a large outer diameter, and an inner coil 112 disposed inside the outer coil 111 and having a smaller outer diameter than the outer coil 111. The outer coil 111 and the inner coil 112 are each wound in a substantially annular shape, and are disposed at a distance from each other except for the connection portion. Hereinafter, for convenience of description, a region located in a gap between the outer coil 111 and the inner coil 112 will be referred to as a "gap region R2". Winding directions of the outer coil 111 and the inner coil 112 are mutually opposite directions to increase strength of the magnetic field by aligning the direction in the gap region R2 in the magnetic field generated when an AC voltage is applied. For example, as shown by an arrow in FIG. 77, when the outer coil 111 is wound in a clockwise direction, the inner coil 112 is wound in a counterclockwise direction opposite thereto. The winding directions of the outer coil 111 and the inner coil 112 may be opposite to the above-described directions. In this way, the number of winding times and the winding directions of the outer coil 111 and the inner coil 112 are not limited to an example shown in FIG. 77, and can be changed as appropriate.

In the present embodiment, the receiving coils 120 and 130 are disposed inside the gap region R2 surrounded by the transmitting coil 110 in the normal direction. In the present embodiment, the receiving coils 120 and 130 have a pattern shape that draws a sine wave curve of a closed-loop, and have a substantially annular shape along the transmitting coil 110.

In FIG. 77, a portion connected to the transmitting coil 110 of the connection wire 150 is indicated by a solid line, the first receiving coil 120 is indicated by a one-dot chain line, the second receiving coil 130 is indicated by a two-dot chain line, and a portion connected to the receiving coils 120 and 130 in the connection wire 150 is indicated by a dashed line. In FIG. 77, for convenience of viewing the drawing, the above-described via 140 constituting a portion of the receiving coils 120 and 130 is omitted.

For example, as shown in FIG. 78, the printed circuit board 100 of the present embodiment has a substantially annular shape having an annular portion having an annular shape and a protrusion portion protruding from the annular portion. The printed circuit board 100 is configured so that an outer periphery of the annular portion coincides with a circumference of a virtual circle formed around the axial direction Da as the center. As shown in FIG. 79, the transmitting coil 110, the first receiving coil 120, and the second receiving coil 130 are provided in the printed circuit board 100. For convenience of viewing the drawing, FIG. 79 shows a simplified configuration of the transmitting coil 110, the first receiving coil 120, and the second receiving coil 130 in the position detection device S1. In the present embodiment, for example, as shown in FIGS. 79 and 80, the position detection device S1 is disposed to face an entire region of the outer peripheral portion in the rotating flat plate 30 with the gap d therebetween.

In the present embodiment, as shown in FIG. 81, the circuit board 200 is disposed in a portion (for example, the protrusion portion) different from the portion where the respective coils 110 to 130 are provided in the printed circuit board 100.

In the present embodiment, for example, in the sealing member 500, the main portion 510 is a portion covering the annular portion in the printed circuit board 100, and the connector portion 520 is provided in the portion covering the protrusion portion. In FIG. 78, a fixing structure for fixing the position detection device S1 to the fixing base 40 is omitted, but for example, a fixing structure (not shown) is provided in the vicinity of the protrusion portion.

In the present embodiment, for example, as shown in FIG. 82, the signal processing unit 210 in the circuit board 200 may include the oscillation unit 220, the demodulation unit 230, the AD conversion unit 240, the angle calculation unit 270, the output unit 290, and the power supply unit 310.

For example, in the present embodiment, the angle calculation unit 270 directly inputs the first conversion signal S and the second conversion signal C from the AD conversion unit 240, and calculates the rotation angle of the rotating flat plate 30 by calculating an arctangent function using these signals. For example, a relationship between an electrical angle of electrical signals of the receiving coils 120 and 130 and the rotation angle $\theta$ (mechanical angle) of the rotating flat plate 30 is determined, in accordance with the rotation angle required for one of the uneven structures 33 of the rotating flat plate 30 to pass over each of the receiving coils 120 and 130. Therefore, the rotation angle $\theta$ of the rotating flat plate 30 can be calculated, based on the electrical angle. The output unit 290 outputs the rotation angle of the rotating flat plate 30 which is calculated by the angle calculation unit 270 to the output terminal 400.

Hitherto, the configuration of the position detection device S1 of the present embodiment has been described.

[Advantageous Effect of Transmitting Coil]

Next, advantageous effects obtained in such a manner that the outer coil 111 and the inner coil 112 constitute the transmitting coil 110 will be described.

First, in a case of the comparative example in which a transmitting coil 700 is disposed only outside the receiving coils 120 and 130 as shown in FIG. 83, only the magnetic field caused by the alternating current in the transmitting coil 700 is generated in the receiving coils 120 and 130. The magnetic field generated in the receiving coils 120 and 130 attenuates as the magnetic field is separated from the transmitting coil 700 toward the center side in the radial direction by a predetermined distance or longer. The center side in the radial direction here indicates a side toward the center along the radial direction in which the center of the virtual circle formed by the transmitting coil 700 is the axis. In the case of the comparative example, the amplitude of the detection signal generated from the receiving coils 120 and 130 when the rotating flat plate 30 is rotated is as shown in FIG. 84, for example.

The gap (unit: mm) on the horizontal axis in FIG. 84 indicates the gap d between the position detection device and the detection object which are shown in FIG. 80. The amplitude (unit: mV) on the horizontal axis in FIG. 84 indicates the amplitude in the detection signal having the sine wave or the cosine wave output from the first receiving coil 120 or the second receiving coil 130. FIG. 84 shows calculation results obtained based on a simulation in which dimensions and disposition relationships of the common component portions in the respective coils in the comparative example and the example are set to be the same.

The amplitude of the detection signal in the comparative example is approximately 33.7 mV when the gap is 1.5 mm, approximately 22.5 mV when the gap is 2.0 mm, approximately 11.2 mV when the gap is 3.0 mm, and approximately 3.2 mV when the gap is 5.0 mm.

In contrast, in the twenty-seventh embodiment (example) in which the outer coil 111 and the inner coil 112 constitute the transmitting coil 110, the amplitude of the detection signals generated by the receiving coils 120 and 130 is larger than that in the comparative example, as shown in FIG. 84. Specifically, the amplitude of the detection signal in the example is approximately 40.5 mV when the gap is 1.5 mm, approximately 26.1 mV when the gap is 2.0 mm, approximately 12.6 mV when the gap is 3.0 mm, and approximately 3.4 mV when the gap is 5.0 mm. The reason is as follows. In the example, two magnetic fields of the magnetic field generated by the outer coil 111 and the magnetic field generated by the inner coil 112 are added to the region surrounded by the receiving coils 120 and 130, and the change in the magnetic field associated with the rotation of the rotating flat plate 30 is greater than that in the comparative example. The winding directions of the outer coil 111 and the inner coil 112 are opposite to each other, and the directions of the currents are opposite to each other. Therefore, in the gap region R2 located inside the outer coil 111 and outside the inner coil 112, the directions of the magnetic fields generated by the outer coil 111 and the inner coil 112 are aligned. In this manner, the magnetic field is strengthened, and the detection signal of the receiving coils 120 and 130 increases. In this manner, even when the sizes of the transmitting coil 110, the first receiving coil 120, and the second receiving coil 130 are reduced, the strength of the magnetic field in the gap region R2 can be ensured, and a decrease in the detection signal is restricted.

According to the present embodiment, there are provided the transmitting coil 110 including the outer coil 111 and the inner coil 112, and the first receiving coil 120 and the second receiving coil 130 which are disposed in the gap region R2 pinched between the outer coil 111 and the inner coil 112. The position of the detection object is calculated, based on the detection signal from the receiving coils 120 and 130. The transmitting coil 110 is configured so that the directions of the magnetic fields generated from the outer coil 111 and the inner coil 112 are aligned in the gap region R2 when the alternating current is applied. Therefore, the strength of the magnetic field generated in the gap region R2 when the alternating current is applied to the transmitting coil 110 can be improved and the amplitude of the detection signal from the receiving coils 120 and 130 can be ensured to have a predetermined value or greater. Therefore, even when the sizes of the coils 110 to 130 are all reduced, a decrease in the strength of the detection signal from the receiving coils 120 and 130 is restricted, and there is provided the position detection device S1 which can ensure the position detection accuracy.

(1) The outer coil 111 and the inner coil 112 are configured as a single continuous coil, that is, to be unicursal, and the winding directions are opposite to each other. In this manner, the directions of the currents in the outer coil 111 and the inner coil 112 are opposite, and the directions of the magnetic fields generated by the outer coil 111 and the inner coil 112 are aligned in the gap region R2 located therebetween. Therefore, a change in the magnetic field in the region surrounded by the receiving coils 120 and 130 is great, and the strength of the detection signal from the receiving coils 120 and 130 can be ensured.
(2) The receiving coils 120 and 130 have a pattern of the closed-loop in which one has the sine wave shape and the other has the cosine wave shape, and output electrical signals of the sine wave and the cosine wave.

(Modification Example of Twenty-Seventh Embodiment)

In the position detection device S1 of the twenty-seventh embodiment, a pattern shape of the first receiving coil 120 and the second receiving coil 130 may be a spiral shape.
For example, the receiving coils 120 and 130 each have a pattern shape in which a spiral shape is drawn as shown in FIG. 85. Specifically, for example, the receiving coils 120 and 130 have a wiring pattern having the spiral shape formed to draw a rectangular shape while the radius is changed. The spiral shape is not limited to the rectangular shape, and may be other patterns such as a circular shape and a fan shape. For example, the first receiving coil 120 includes spiral coils 122 and 123 disposed to be separated from each other in the gap region R2. The second receiving coil 130 includes spiral coils 133 and 134 disposed to be separated from each other in the gap region R2.
The present modification example also provides the position detection device S1 which can obtain the same advantageous effects as the twenty-seventh embodiment described above.
(1) In the present embodiment, the receiving coils 120 and 130 have the spiral shape. In this manner, the number of the wiring layers provided in the printed circuit board 100 is reduced, compared to the pattern shape in which one of the receiving coils 120 and 130 has the sine wave curve and the other has the cosine wave curve, and the printed circuit board 100 can be more easily manufactured.

(Summary of Twenty-Seventh Embodiment)

Since the twenty-seventh embodiment and modification example thereof are configured as described above, even when the sizes of the respective coils 110 to 130 are all reduced, the strength of the detection signal from the receiving coils 120 and 130 can be ensured to have a predetermined value or greater, and position detection accuracy can be ensured. Therefore, in summary, the following aspects are provided in the twenty-seventh embodiment.

(Aspect 1)

The position detection device includes the substrate (100) disposed to face a detection object (30) which is a rotating body, the transmitting coil (110) provided in the substrate and including the outer coil (111) and the inner coil (112) disposed inside the outer coil, the first receiving coil (120) and the second receiving coil (130) which are disposed in the gap region (R2) pinched between the outer coil and the inner coil in the normal direction with respect to the surface direction of the substrate, and the signal processing unit (210) that derives the position of the detection object, based on the detection signal output by the first receiving coil and the detection signal output by the second receiving coil. In the outer coil and the inner coil, the directions of the magnetic fields generated when the alternating current is applied to the transmitting coil are aligned in the gap region.

(Aspect 2)

In the position detection device according to Aspect 1, the outer coil and the inner coil constitute the single continuous coil, and the winding directions are opposite to each other.

(Aspect 3)

In the position detection device according to Aspect 1 or 2, the first receiving coil and the second receiving coil have the pattern shape in which one has the sine wave shape and the other has the cosine wave shape.

(Aspect 4)

In the position detection device according to Aspect 1 or 2, the first receiving coil and the second receiving coil have the spiral shape.

(Other Embodiments)

Although the present disclosure has been described in accordance with the embodiments, it is understood that the present disclosure is not limited to the embodiments or the structures. The present disclosure includes various modification examples and modifications within the equivalent scope. Various combinations or forms as well as other combinations or forms including only one element, one or more elements, or fewer elements fall within the scope or the concept of the present disclosure.

For example, the position detection device S1 in the above-described respective embodiments may be used by being mounted on any structure other than the vehicle.

The position detection devices S1 in the above-described respective embodiments can be appropriately combined.

In the above-described respective embodiments, an example has been described in which the signal processing unit 210 is provided in the circuit board 200. Meanwhile, the signal processing unit 210 may be provided in the ECU 4. That is, the first voltage value V1, the second voltage value V2, and the like may be output from the printed circuit board 100, and various calculations may be performed in the signal processing unit 210 provided in the ECU 4.

In the above-described respective embodiments, an example has been described in which the voltage value is used as the characteristic value of each of the receiving coils. Meanwhile, the characteristic value of each of the receiving coils may be a current value or an inductance value. According to the position detection device S1 configured in this way, the characteristic value is also changed by the gap d between the position detection device S1 and the rotating flat plate 30. Therefore, the same advantageous effects as those in the above-described respective embodiments can be obtained.

The control unit (for example, signal processing unit 210) and the method which are described in the present disclosure may be realized by a dedicated computer provided by configuring a processor and a memory which are programmed to fulfil one or more functions embodied in a computer program. Alternatively, the control unit and the method which are described in the present disclosure may be realized by a dedicated computer provided by configuring a processor to include one or more dedicated hardware logic circuits. Alternatively, the control unit and the method which are described in the present disclosure may be realized by one or more dedicated computers configured to include a combination of a processor and a memory which are programmed to fulfil one or more functions and a processor configured to include one or more hardware logic circuits. The computer program may be stored in a computer-readable non-transient tangible storage medium, as an instruction executed by a computer.

(Disclosure of Present Invention)

The present disclosure described hereinabove can be grasped, for example, as the following aspects.

[First Aspect]

A position detection device includes:

a substrate (100) disposed to face a displaceable detection object (30, 37);
a transmitting coil (110) provided in the substrate;
a first receiving coil (120) and a second receiving coil (130) which are disposed inside the transmitting coil in a normal direction with respect to a surface direction of the substrate; and
a signal processing unit (210) that derives a displacement amount of the detection object in view of a gap between the detection object and the substrate, based on a first characteristic value of the first receiving coil and a second characteristic value of the second receiving coil.

[Second Aspect]

In the position detection device as in the first aspect, the signal processing unit derives a gap comparison term ($\delta$) for the gap by using a sum of squares based on a voltage value of the first receiving coil as the first characteristic value and a voltage value of the second receiving coil as the second characteristic value, and derives the displacement amount of the detection object by using the gap comparison term.

[Third Aspect]

In the position detection device as in the first aspect, the signal processing unit derives a gap comparison term (δ1) for the gap based on a minimum peak value and a maximum peak value for a voltage value of the first receiving coil as the first characteristic value, derives a gap comparison term (δ2) for the gap based on a minimum peak value and a maximum peak value for a voltage value of the second receiving coil as the second characteristic value, and detects the displacement amount of the detection object by using each of the gap comparison terms.

[Fourth Aspect]

In the position detection device as in the first aspect, the substrate includes a third receiving coil (170) in addition to the first receiving coil and the second receiving coil, and
the signal processing unit derives a gap comparison term (δ) for the gap by using a sum of squares based on a voltage value of the third receiving coil as a third characteristic value in addition to a voltage value of the first receiving coil as the first characteristic value and a voltage value of the second receiving coil as the second characteristic value, and detects the displacement amount of the detection object by using the gap comparison term.

[Fifth Aspect]

A position detection device includes:

a substrate (100) disposed to face a displaceable detection object (30, 37);
a transmitting coil (110) provided in the substrate;
a first receiving coil (120) and a second receiving coil (130) which are disposed inside the transmitting coil in a normal direction with respect to a surface direction of the substrate; and
a signal processing unit (210) that derives a displacement amount of the detection object in view of a gap between the detection object and the substrate, based on a characteristic value of the transmitting coil.

[Sixth Aspect]

In the position detection device as in the fifth aspect, the signal processing unit derives a gap comparison term (δ) for a frequency of the transmitting coil as the characteristic value, and detects the displacement amount of the detection object by using the gap comparison term (δ).

[Seventh Aspect]

In the position detection device as in any one of the second to fourth aspect and the sixth aspect,

the first receiving coil and the second receiving coil are disposed to output voltage values of different phases,
the signal processing unit includes an angle calculation unit (270) that generates an arctangent signal by calculating an arctangent function based on the voltage value of the first receiving coil and the voltage value of the second receiving coil, and
the angle calculation unit generates the arctangent signal by using a correction term based on the gap comparison term.

[Eighth Aspect]

In the position detection device as in the seventh aspect,

the signal processing unit includes a gain-offset-phase correction unit (260) that derives the correction term by comparing the gap comparison term with correction term data for a relationship with the correction term derived in advance and used in the angle calculation unit, and
the angle calculation unit generates the arctangent signal by using the correction term derived by the gain-offset-phase correction unit.

[Ninth Aspect]

In the position detection device as in any one of the second to fourth aspects, the sixth aspect, and the seventh aspect,

the first receiving coil and the second receiving coil are disposed to output voltage values of different phases,
the signal processing unit includes an angle calculation unit (270) that generates an arctangent signal by calculating an arctangent function based on the voltage value of the first receiving coil and the voltage value of the second receiving coil, and a section correction unit (280) that generates and outputs a correction arctangent signal in which the arctangent signal is corrected, and
the section correction unit generates the correction arctangent signal by using a correction value based on the gap comparison term.

[Tenth Aspect]

In the position detection device as in the ninth aspect, the section correction unit derives the correction value by comparing the gap comparison term with section correction data for a relationship with the correction value derived in advance and used in the section correction unit.

[Eleventh Aspect]

In the position detection device as in any one of the first to tenth aspects,

the detection object is a disk, is formed with depression portions (31) that are recessed in a radial direction and periodically disposed along a circumferential direction at a position facing the substrate, and is disposed to be rotatable about a central axis of the disk,
an alternating current is applied to the transmitting coil, and
the first receiving coil and the second receiving coil output a voltage value that is periodically changed in conjunction with rotation of the detection object due to an eddy current generated by the detection object.

[Twelfth Aspect]

In the position detection device as in any one of the first to tenth aspects,

the detection object is a disk, is formed with depression portions (36) that are recessed in a thickness direction and periodically disposed along a circumferential direction at a position facing the substrate, and is disposed to be rotatable about a central axis of the disk,
an alternating current is applied to the transmitting coil, and
the first receiving coil and the second receiving coil output a voltage value that is periodically changed in conjunction with rotation of the detection object due to an eddy current generated by the detection object.

[Thirteenth Aspect]

In the position detection device as in any one of the first to tenth aspects,

the detection object has a plate shape, and is displaceable along one direction,
an alternating current is applied to the transmitting coil, and
the first receiving coil and the second receiving coil output a voltage value that is periodically changed in conjunction with a displacement of the detection object due to an eddy current generated by the detection object.

## Claims

**1.** A position detection device comprising:

a substrate (100) disposed to face a displaceable detection object (30, 37);
a transmitting coil (110) provided in the substrate;
a first receiving coil (120) and a second receiving coil (130) which are disposed inside the transmitting coil in a normal direction with respect to a surface direction of the substrate; and
a signal processing unit (210) that derives a displacement amount of the detection object in view of a gap between the detection object and the substrate, based on a first characteristic value of the first receiving coil and a second characteristic value of the second receiving coil.

2. The position detection device according to claim 1, wherein
the signal processing unit derives a gap comparison term (δ) for the gap by using a sum of squares based on a voltage value of the first receiving coil as the first characteristic value and a voltage value of the second receiving coil as the second characteristic value, and derives the displacement amount of the detection object by using the gap comparison term.

3. The position detection device according to claim 1, wherein
the signal processing unit derives a gap comparison term (δ1) for the gap based on a minimum peak value and a maximum peak value for a voltage value of the first receiving coil as the first characteristic value, derives a gap comparison term (δ2) for the gap based on a minimum peak value and a maximum peak value for a voltage value of the second receiving coil as the second characteristic value, and detects the displacement amount of the detection object by using each of the gap comparison terms.

4. The position detection device according to claim 1, wherein

the substrate includes a third receiving coil (170) in addition to the first receiving coil and the second receiving coil, and
the signal processing unit derives a gap comparison term (δ) for the gap by using a sum of squares based on a voltage value of the third receiving coil as a third characteristic value in addition to a voltage value of the first receiving coil as the first characteristic value and a voltage value of the second receiving coil as the second characteristic value, and detects the displacement amount of the detection object by using the gap comparison term.

5. A position detection device comprising:

a substrate (100) disposed to face a displaceable detection object (30, 37);
a transmitting coil (110) provided in the substrate;
a first receiving coil (120) and a second receiving coil (130) which are disposed inside the transmitting coil in a normal direction with respect to a surface direction of the substrate; and
a signal processing unit (210) that derives a displacement amount of the detection object in view of a gap between the detection object and the substrate, based on a characteristic value of the transmitting coil.

6. The position detection device according to claim 5, wherein
the signal processing unit derives a gap comparison term (δ) for a frequency of the transmitting coil as the characteristic value, and detects the displacement amount of the detection object by using the gap comparison term (δ).

7. The position detection device according to any one of claims 2 to 4 and 6, wherein

the first receiving coil and the second receiving coil are disposed to output voltage values of different phases,
the signal processing unit includes an angle calculation unit (270) that generates an arctangent signal by calculating an arctangent function based on the voltage value of the first receiving coil and the voltage value of the second receiving coil, and
the angle calculation unit generates the arctangent signal by using a correction term based on the gap comparison term.

8. The position detection device according to claim 7, wherein

the signal processing unit includes a gain-offset-phase correction unit (260) that derives the correction term by comparing the gap comparison term with correction term data for a relationship with the correction term derived in advance and used in the angle calculation unit, and
the angle calculation unit generates the arctangent signal by using the correction term derived by the gain-offset-phase correction unit.

9. The position detection device according to any one of claims 2 to 4 and 6, wherein

the first receiving coil and the second receiving coil are disposed to output voltage values of different phases, the signal processing unit includes an angle calculation unit (270) that generates an arctangent signal by calculating an arctangent function based on the voltage value of the first receiving coil and the voltage value of the second receiving coil, and a section correction unit (280) that generates and outputs a correction arctangent signal in which the arctangent signal is corrected, and
the section correction unit generates the correction arctangent signal by using a correction value based on the gap comparison term.

**10.** The position detection device according to claim 9, wherein
the section correction unit derives the correction value by comparing the gap comparison term with section correction data for a relationship with the correction value derived in advance and used in the section correction unit.

**11.** The position detection device according to claim 1, wherein

the detection object is a disk,
the detection object is formed with depression portions (31) that are recessed in a radial direction and periodically disposed along a circumferential direction at a position facing the substrate, and is disposed to be rotatable about a central axis of the disk,
an alternating current is applied to the transmitting coil, and
the first receiving coil and the second receiving coil output a voltage value that is periodically changed in conjunction with rotation of the detection object due to an eddy current generated by the detection object.

**12.** The position detection device according to claim 1, wherein

the detection object is a disk,
the detection object is formed with depression portions (36) that are recessed in a thickness direction and periodically disposed along a circumferential direction at a position facing the substrate, and is disposed to be rotatable about a central axis of the disk,
an alternating current is applied to the transmitting coil, and
the first receiving coil and the second receiving coil output a voltage value that is periodically changed in conjunction with rotation of the detection object due to an eddy current generated by the detection object.

**13.** The position detection device according to claim 1, wherein

the detection object has a plate shape, and is displaceable along one direction,
an alternating current is applied to the transmitting coil, and
the first receiving coil and the second receiving coil output a voltage value that is periodically changed in conjunction with a displacement of the detection object due to an eddy current generated by the detection object.

FIG. 1

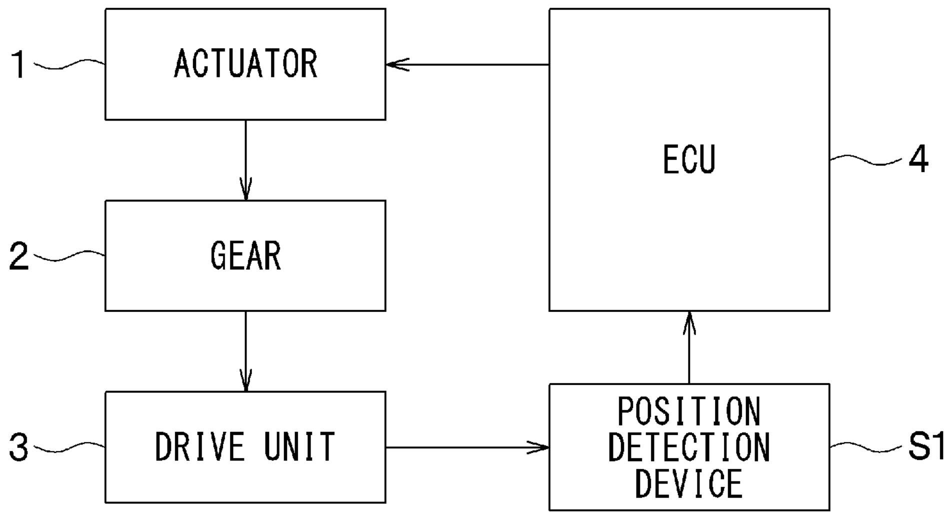
ACTUATOR
GEAR
DRIVE UNIT
ECU
POSITION DETECTION DEVICE
1
2
3
4
S1

FIG. 2

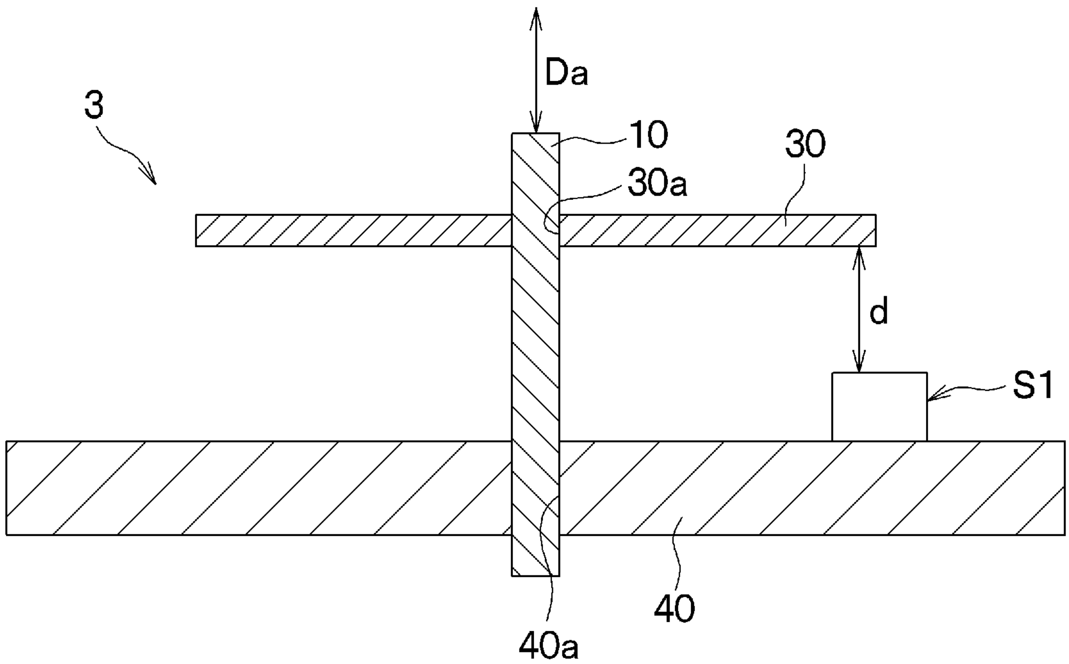
3
Da
10
30a
30
d
S1
40
40a

FIG. 3

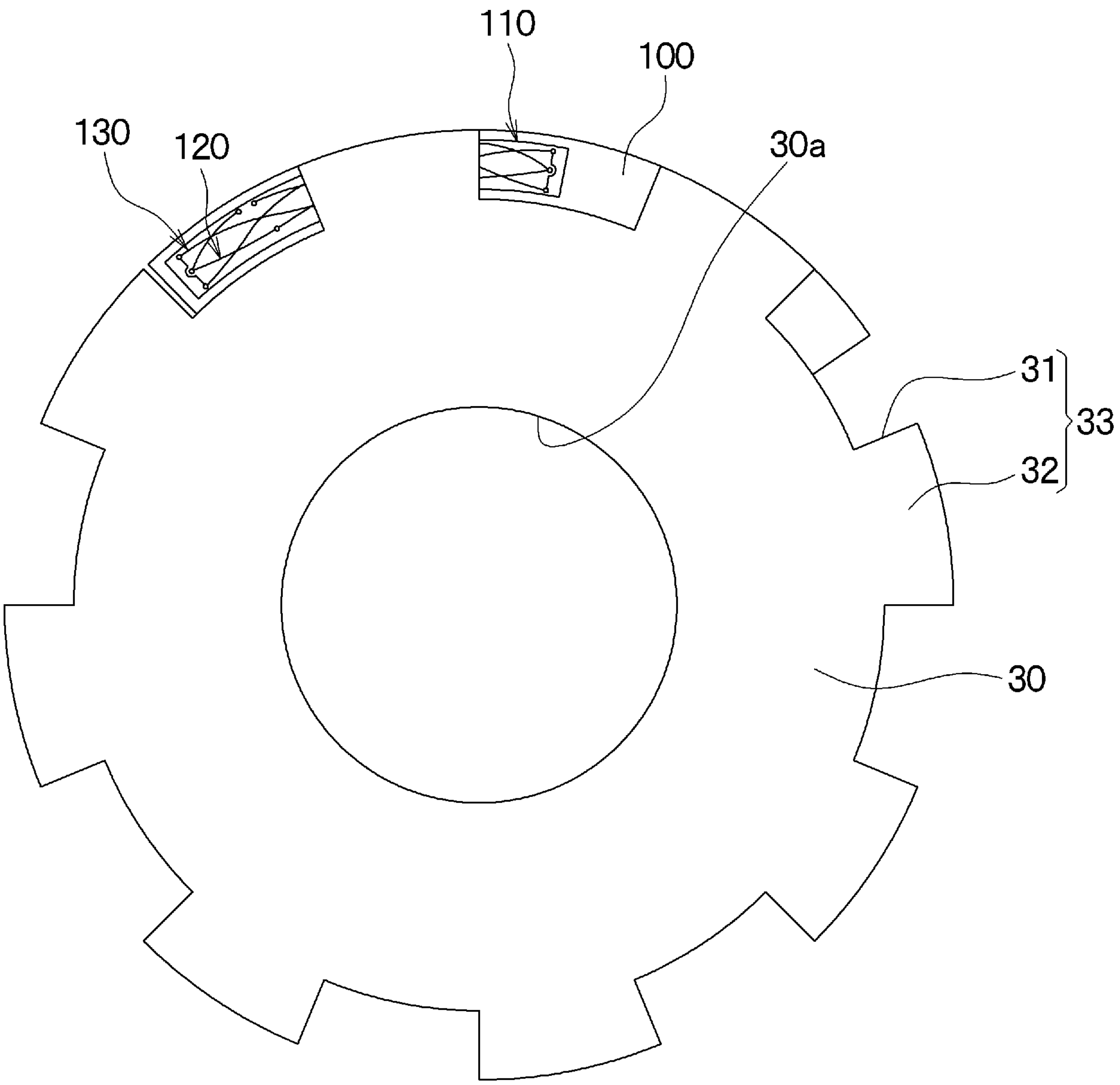

# FIG. 4

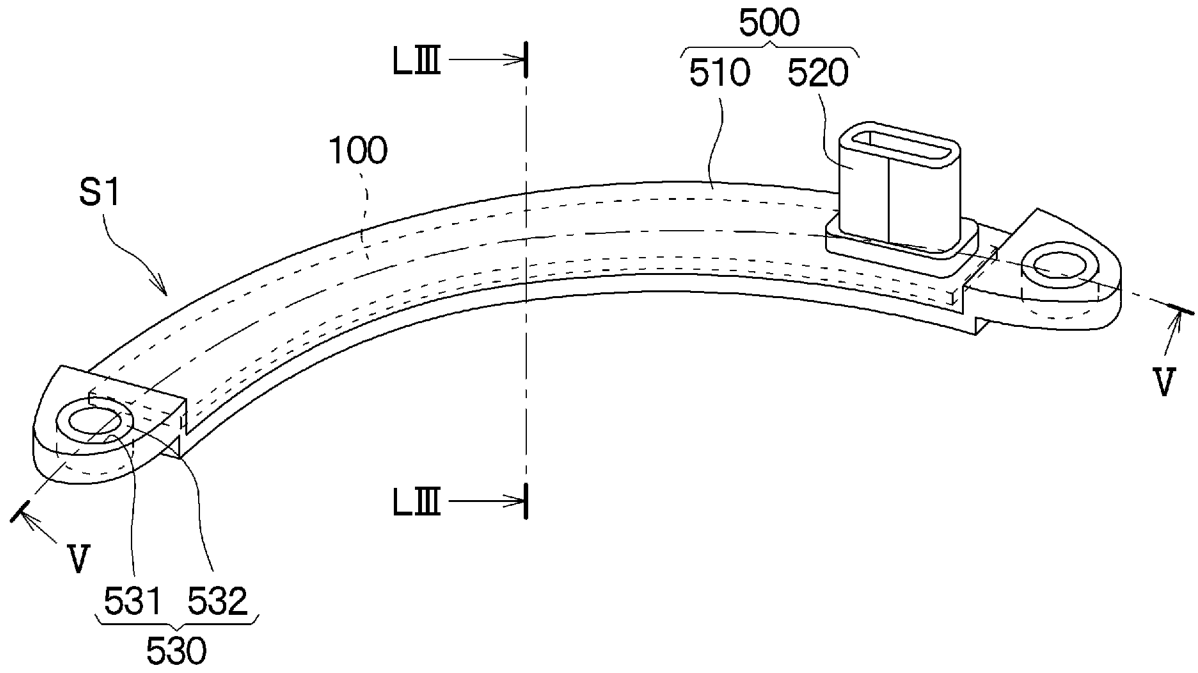
500
510
520
LⅢ
100
S1
V
LⅢ
V
531
532
530

# FIG. 5

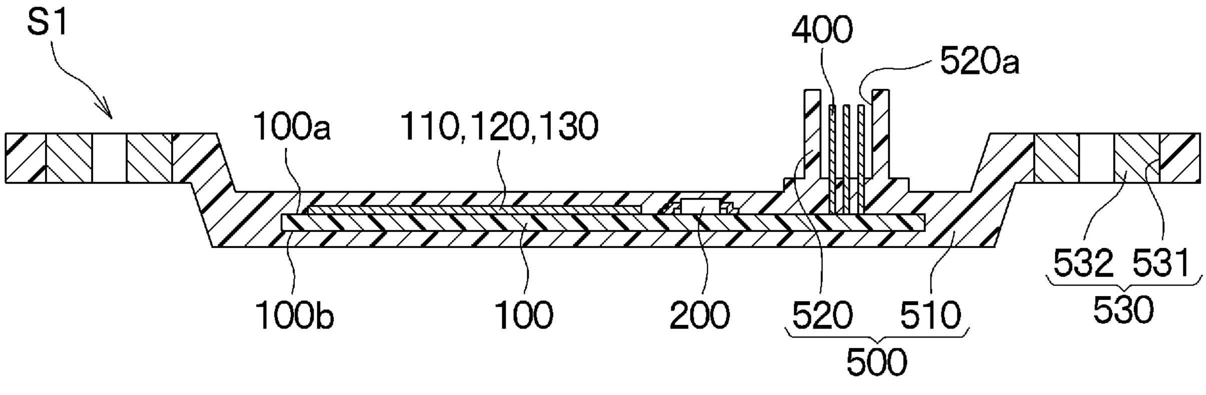
S1
400
520a
100a
110,120,130
100b
100
200
520
510
500
532
531
530

FIG. 6

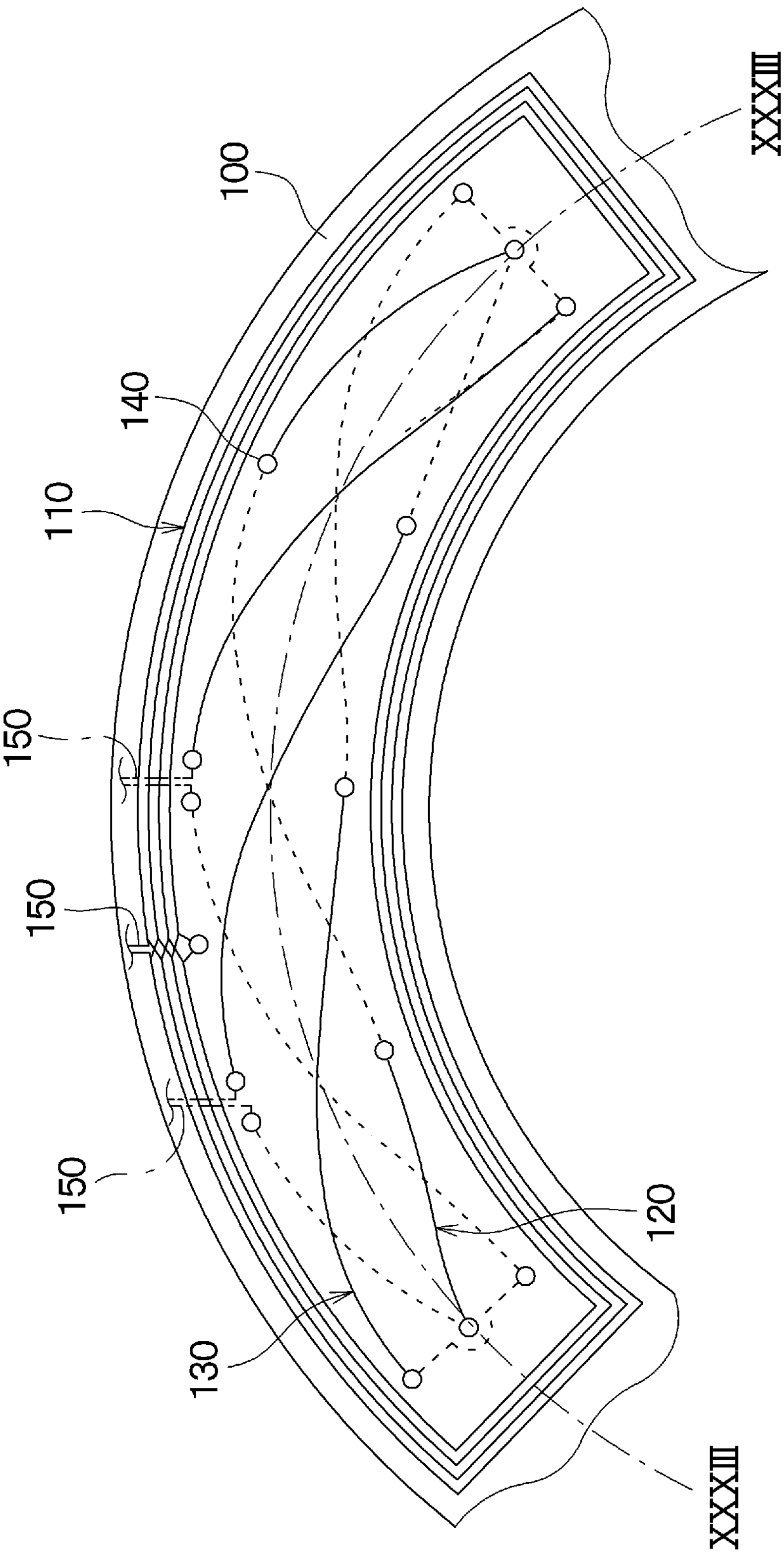

FIG. 7

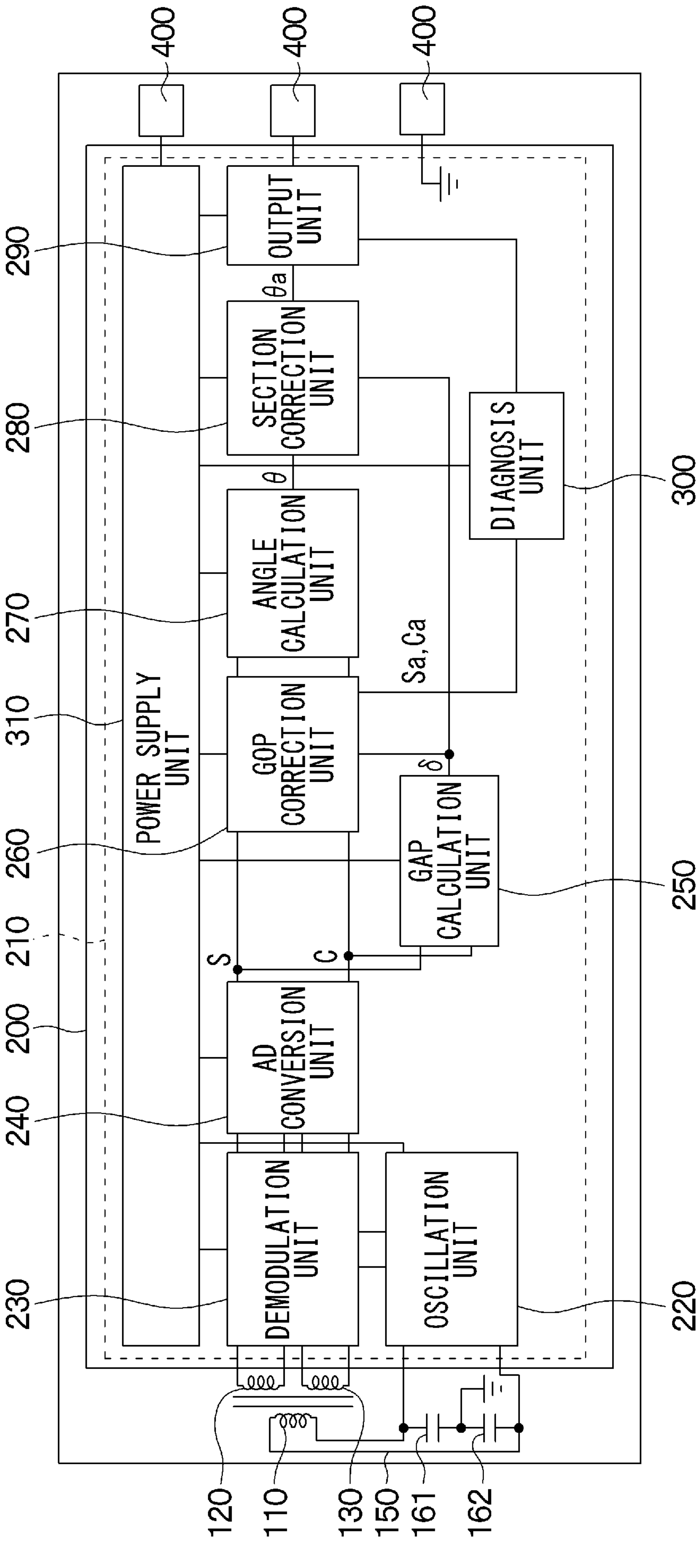
400
400
400
OUTPUT UNIT
SECTION CORRECTION UNIT
DIAGNOSIS UNIT
ANGLE CALCULATION UNIT
GOP CORRECTION UNIT
GAP CALCULATION UNIT
POWER SUPPLY UNIT
AD CONVERSION UNIT
DEMODULATION UNIT
OSCILLATION UNIT
θa
θ
Sa,Ca
δ
S
C
290
280
270
310
260
210
200
240
230
300
250
220
120
110
130
150
161
162

FIG. 8A

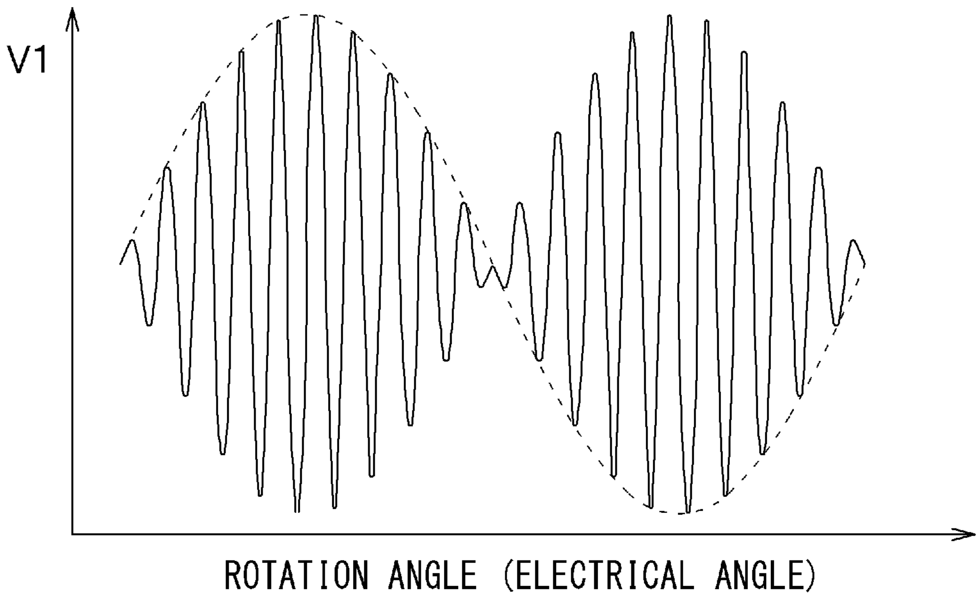
V1
ROTATION ANGLE (ELECTRICAL ANGLE)

FIG. 8B

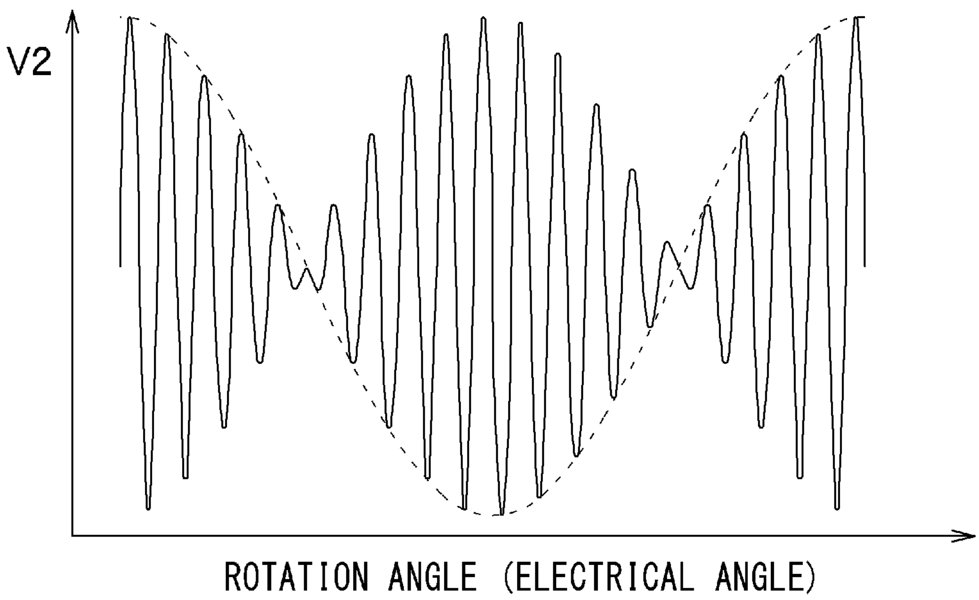
V2
ROTATION ANGLE (ELECTRICAL ANGLE)

# FIG. 9

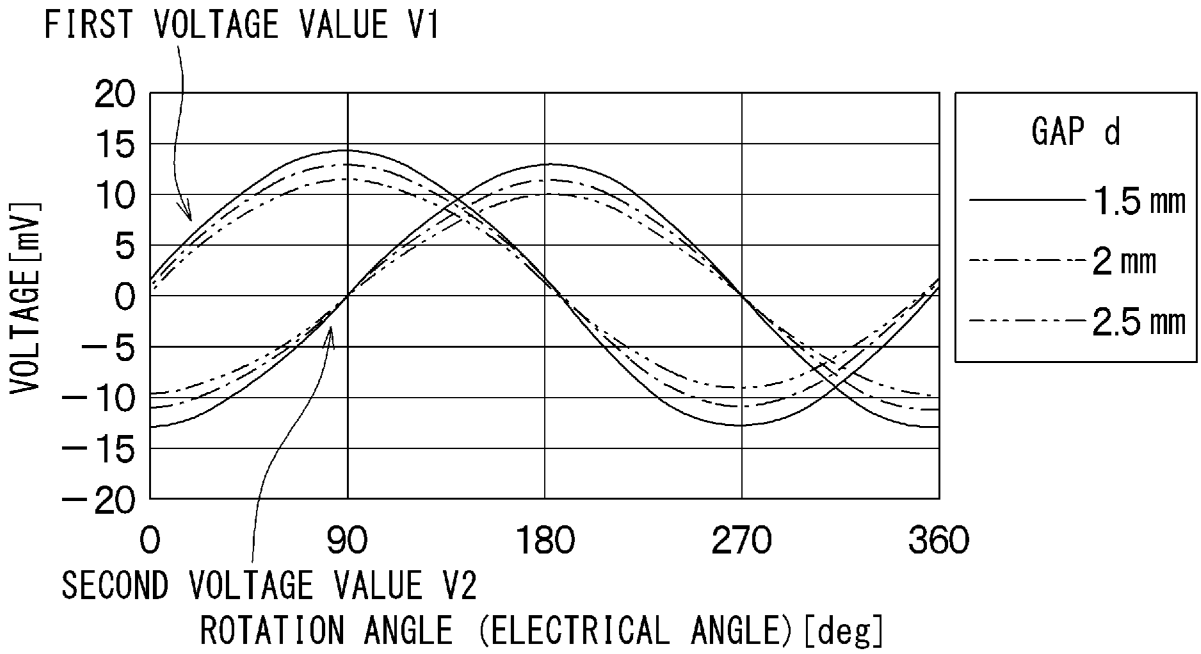
FIRST VOLTAGE VALUE V1
VOLTAGE [mV]
20
15
10
5
0
−5
−10
−15
−20
0
90
180
270
360
GAP d
1.5 mm
2 mm
2.5 mm
SECOND VOLTAGE VALUE V2
ROTATION ANGLE (ELECTRICAL ANGLE) [deg]

# FIG. 10

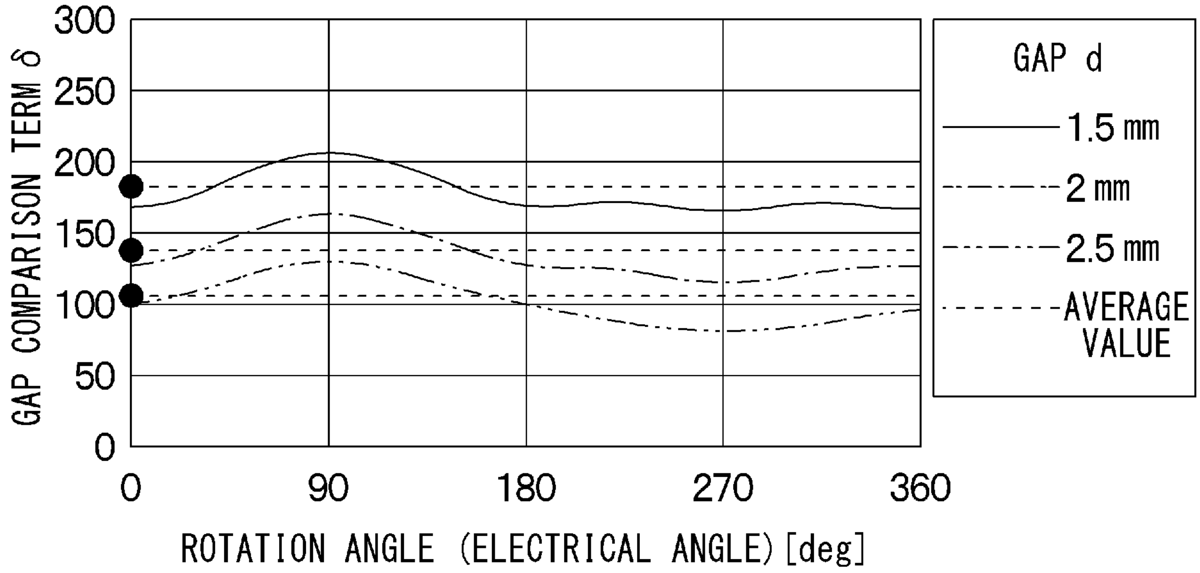
GAP COMPARISON TERM δ
300
250
200
150
100
50
0
0
90
180
270
360
GAP d
1.5 mm
2 mm
2.5 mm
AVERAGE VALUE
ROTATION ANGLE (ELECTRICAL ANGLE) [deg]

# FIG. 11

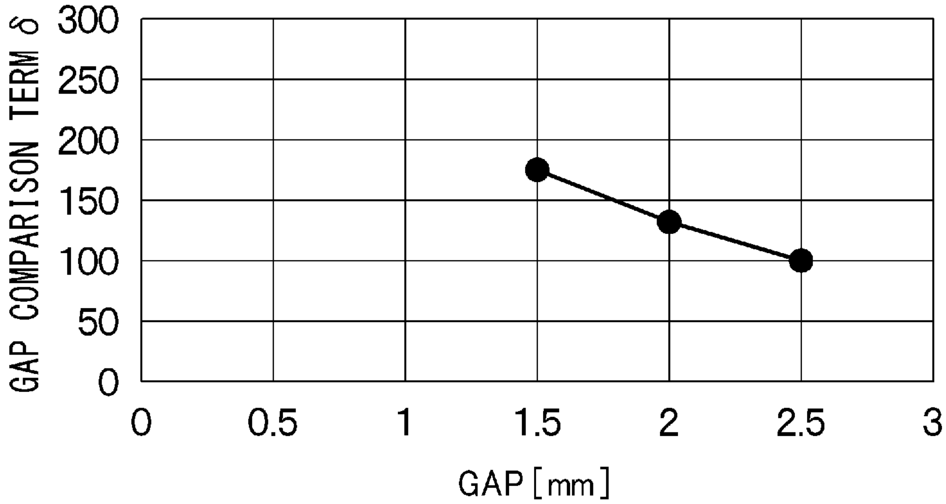
GAP COMPARISON TERM δ
300
250
200
150
100
50
0
0
0.5
1
1.5
2
2.5
3
GAP [mm]

# FIG. 12

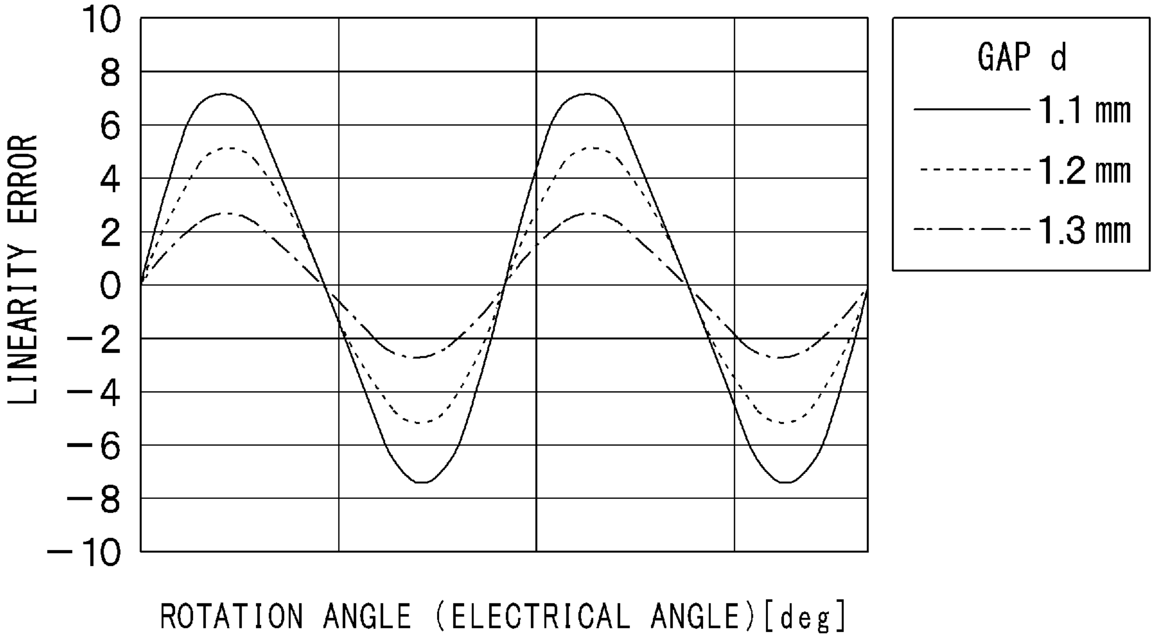
LINEARITY ERROR
10
8
6
4
2
0
−2
−4
−6
−8
−10
ROTATION ANGLE (ELECTRICAL ANGLE)[deg]
GAP d
1.1 mm
1.2 mm
1.3 mm

# FIG. 13

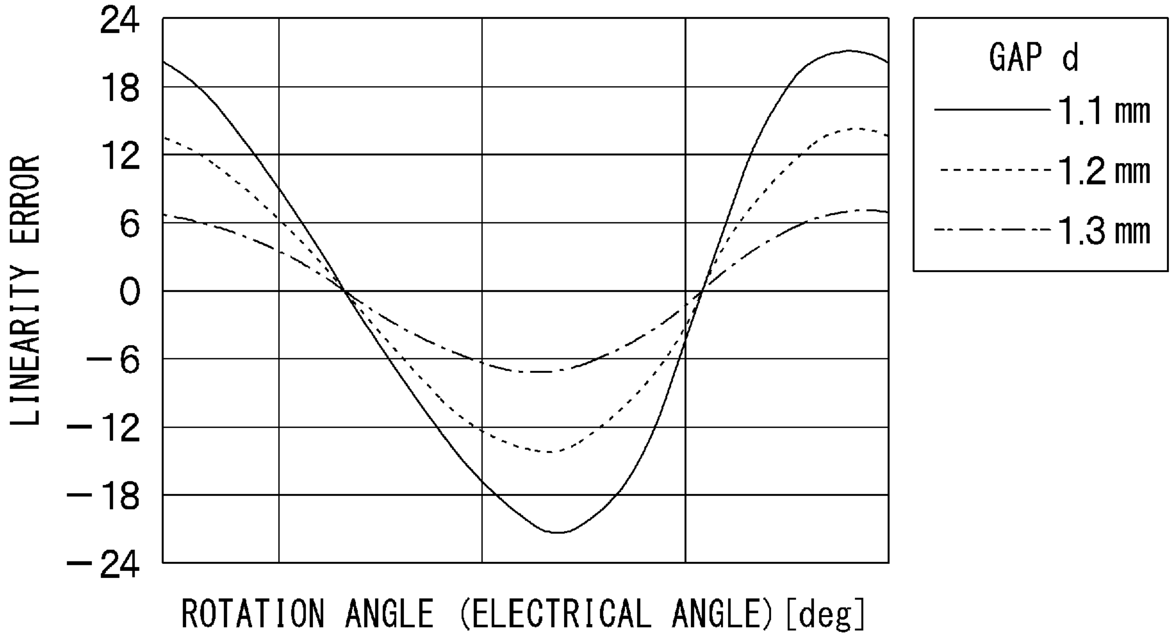
24
18
12
6
0
−6
−12
−18
−24
LINEARITY ERROR
ROTATION ANGLE (ELECTRICAL ANGLE)[deg]
GAP d
1.1 mm
1.2 mm
1.3 mm

# FIG. 14

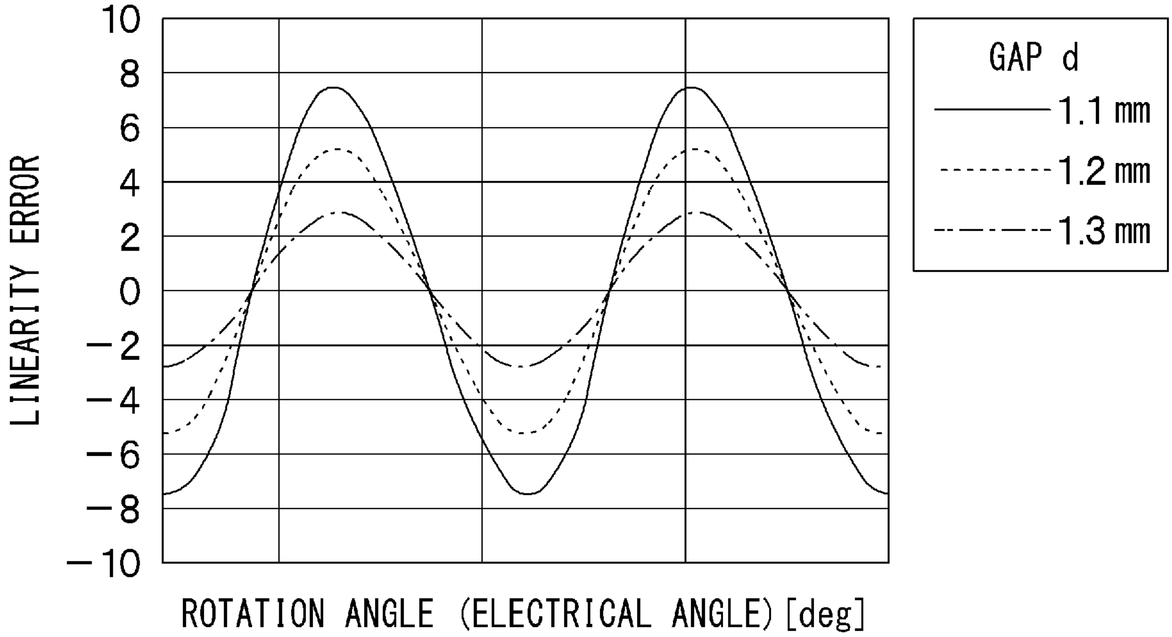
10
8
6
4
2
0
−2
−4
−6
−8
−10
LINEARITY ERROR
ROTATION ANGLE (ELECTRICAL ANGLE)[deg]
GAP d
1.1 mm
1.2 mm
1.3 mm

# FIG. 15

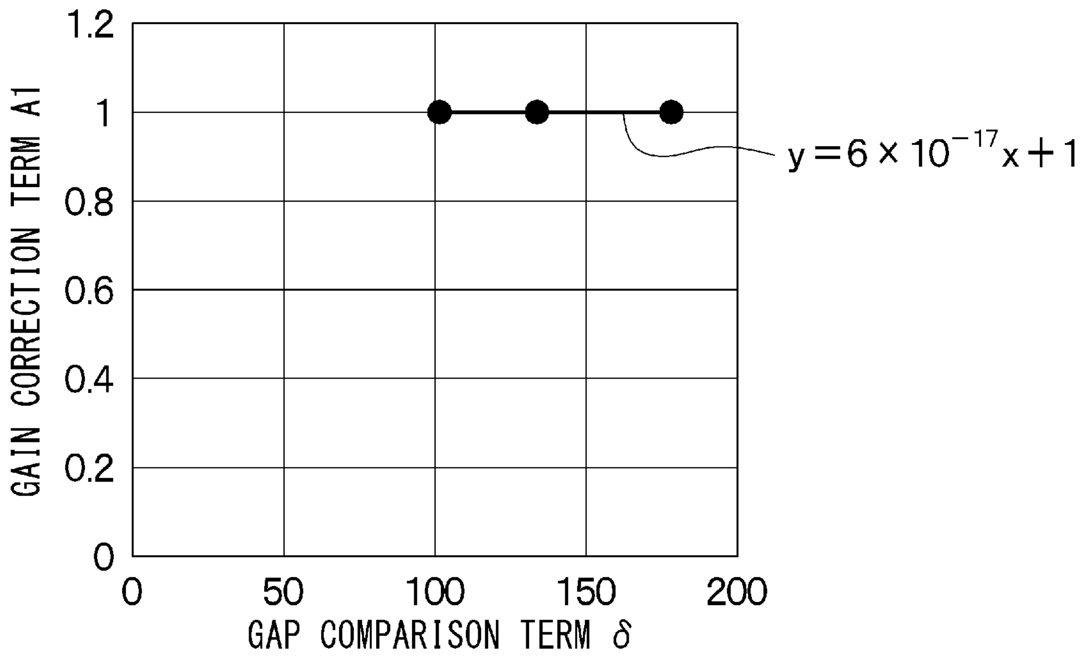
GAIN CORRECTION TERM A1
1.2
1
0.8
0.6
0.4
0.2
0
0
50
100
150
200
GAP COMPARISON TERM δ
y=6×10^−17x+1

# FIG. 16

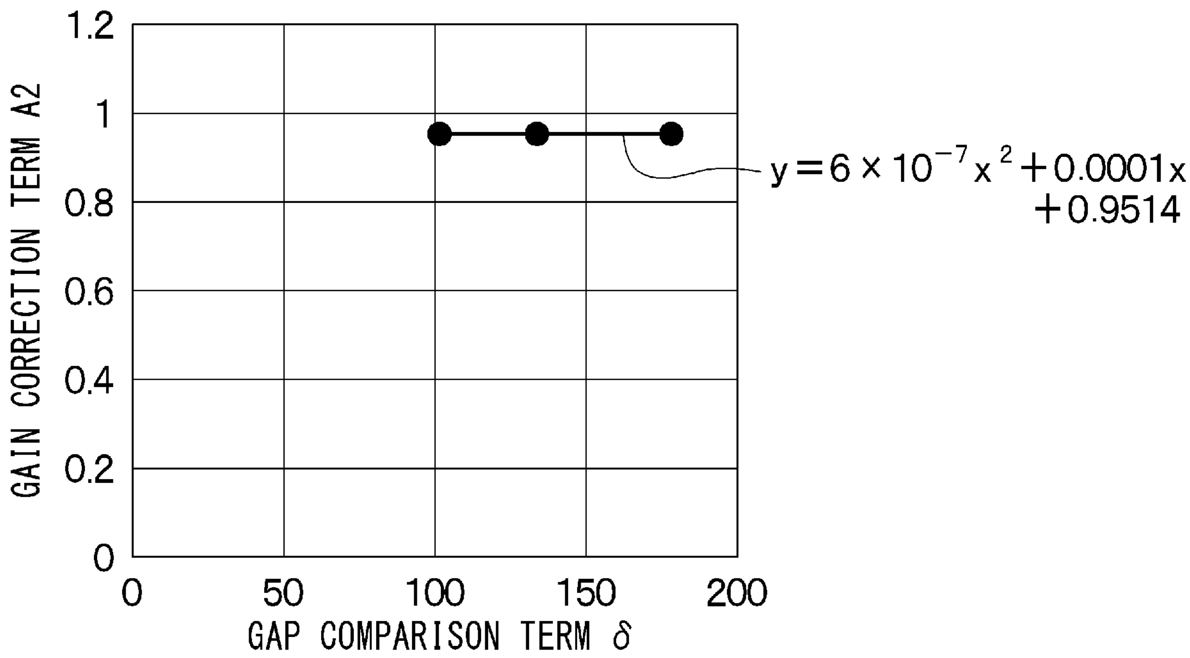
GAIN CORRECTION TERM A2
1.2
1
0.8
0.6
0.4
0.2
0
0
50
100
150
200
GAP COMPARISON TERM δ
y=6×10^−7x^2+0.0001x
+0.9514

# FIG. 17

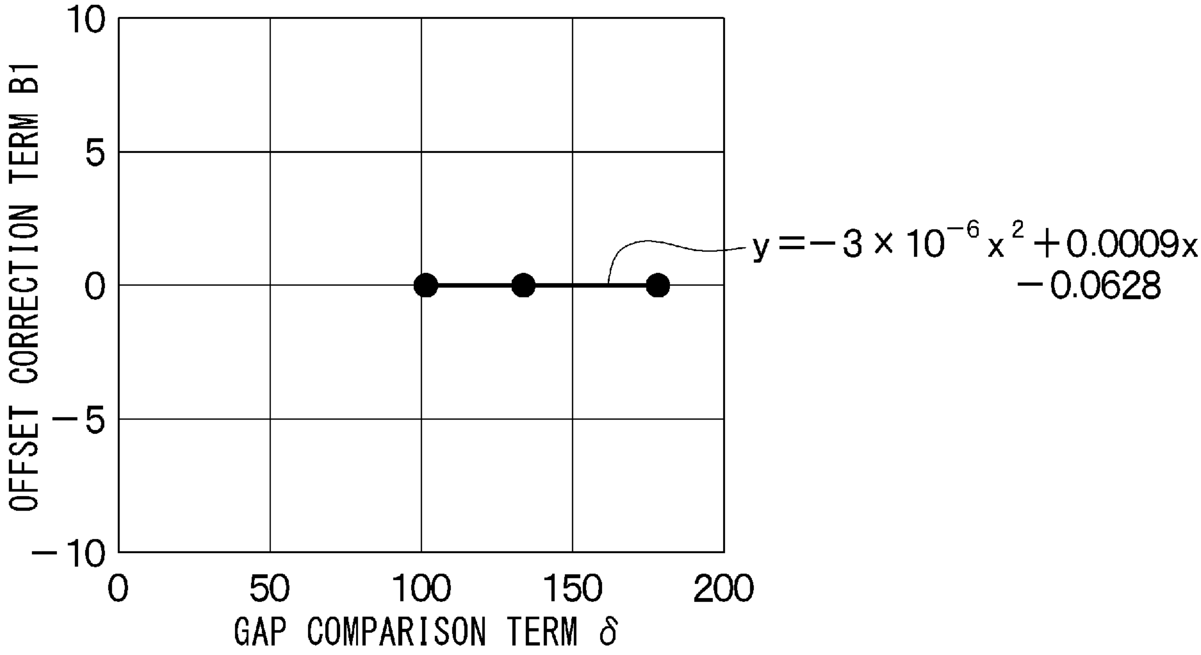
10
5
0
−5
−10
0
50
100
150
200
OFFSET CORRECTION TERM B1
GAP COMPARISON TERM δ
y = −3 × 10^−6 x^2 + 0.0009x − 0.0628

# FIG. 18

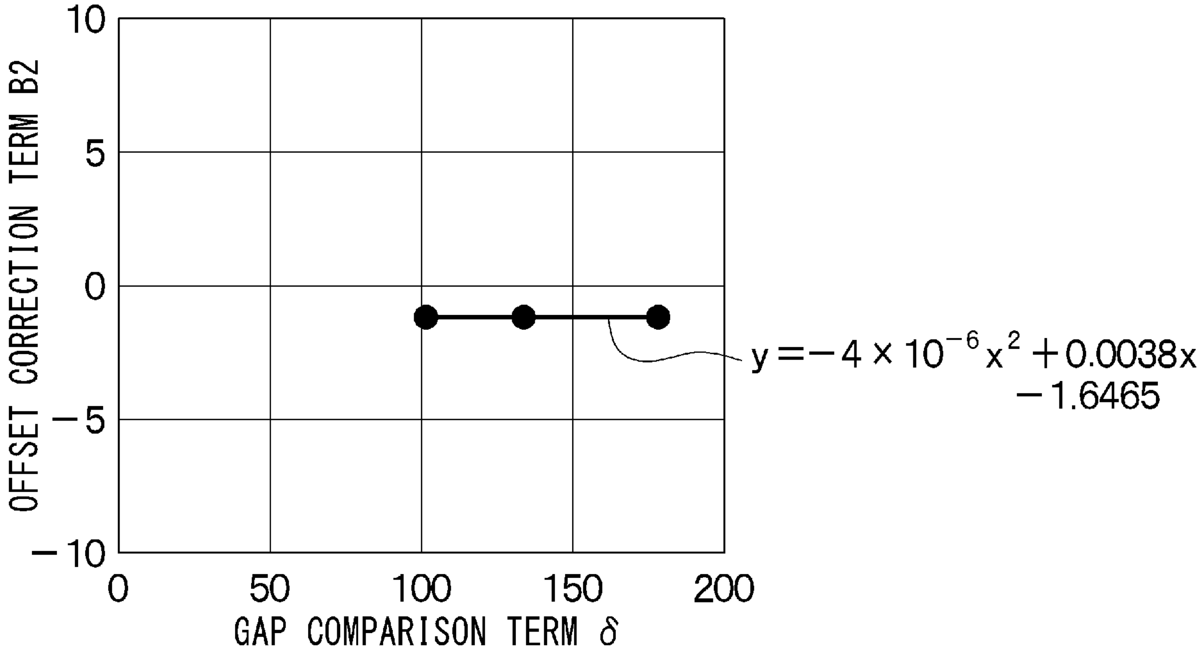
10
5
0
−5
−10
0
50
100
150
200
OFFSET CORRECTION TERM B2
GAP COMPARISON TERM δ
y = −4 × 10^−6 x^2 + 0.0038x − 1.6465

FIG. 19

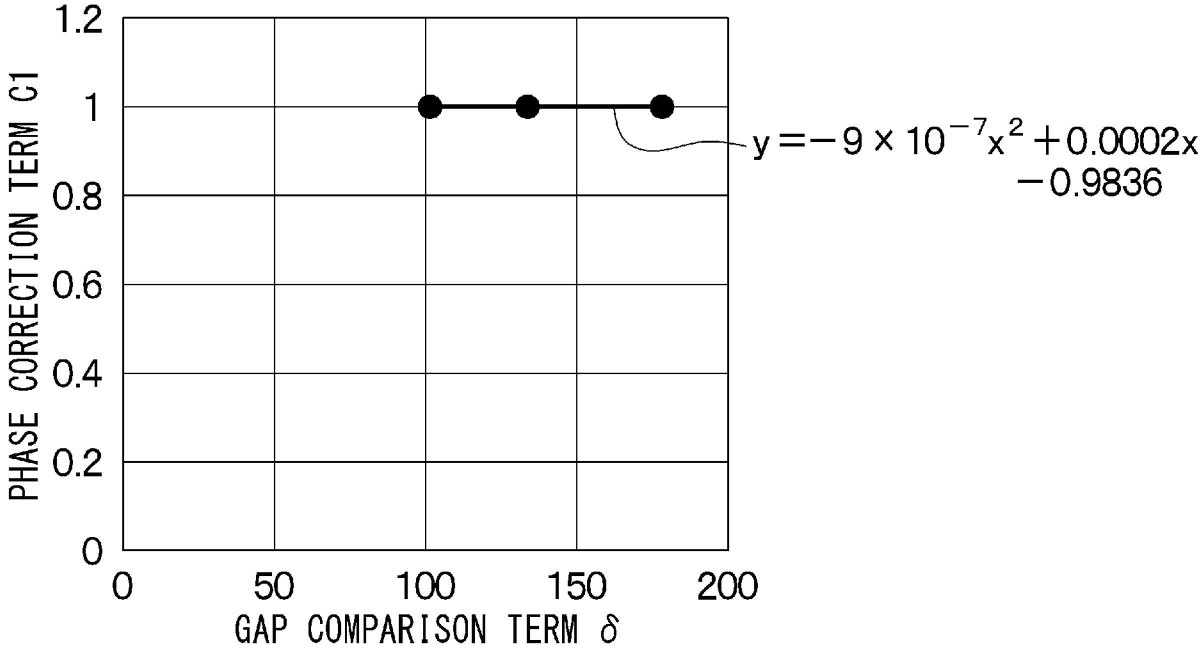
1.2
1
0.8
0.6
0.4
0.2
0
0
50
100
150
200
PHASE CORRECTION TERM C1
GAP COMPARISON TERM δ
y=−9×10⁻⁷x²+0.0002x −0.9836

FIG. 20

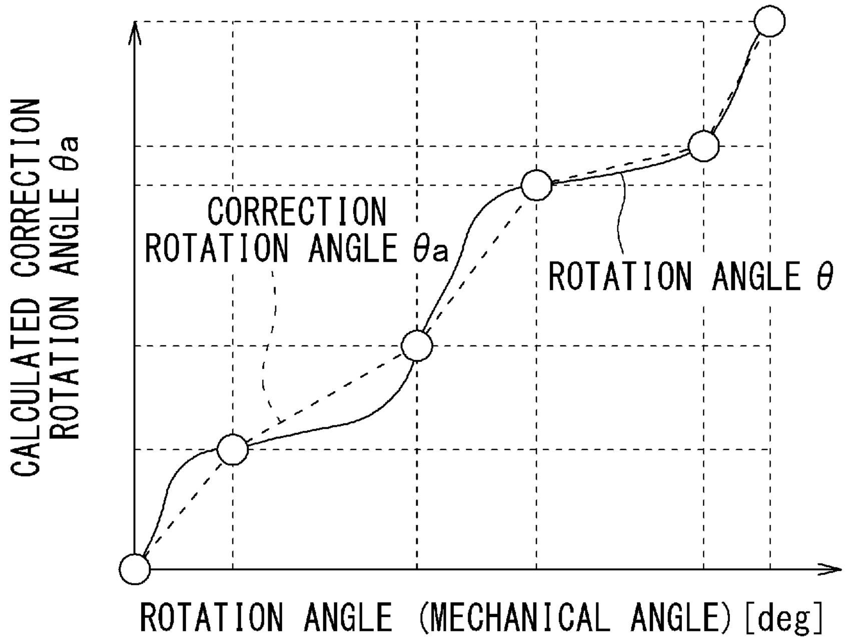
CALCULATED CORRECTION ROTATION ANGLE θa
CORRECTION ROTATION ANGLE θa
ROTATION ANGLE θ
ROTATION ANGLE (MECHANICAL ANGLE) [deg]

FIG. 21

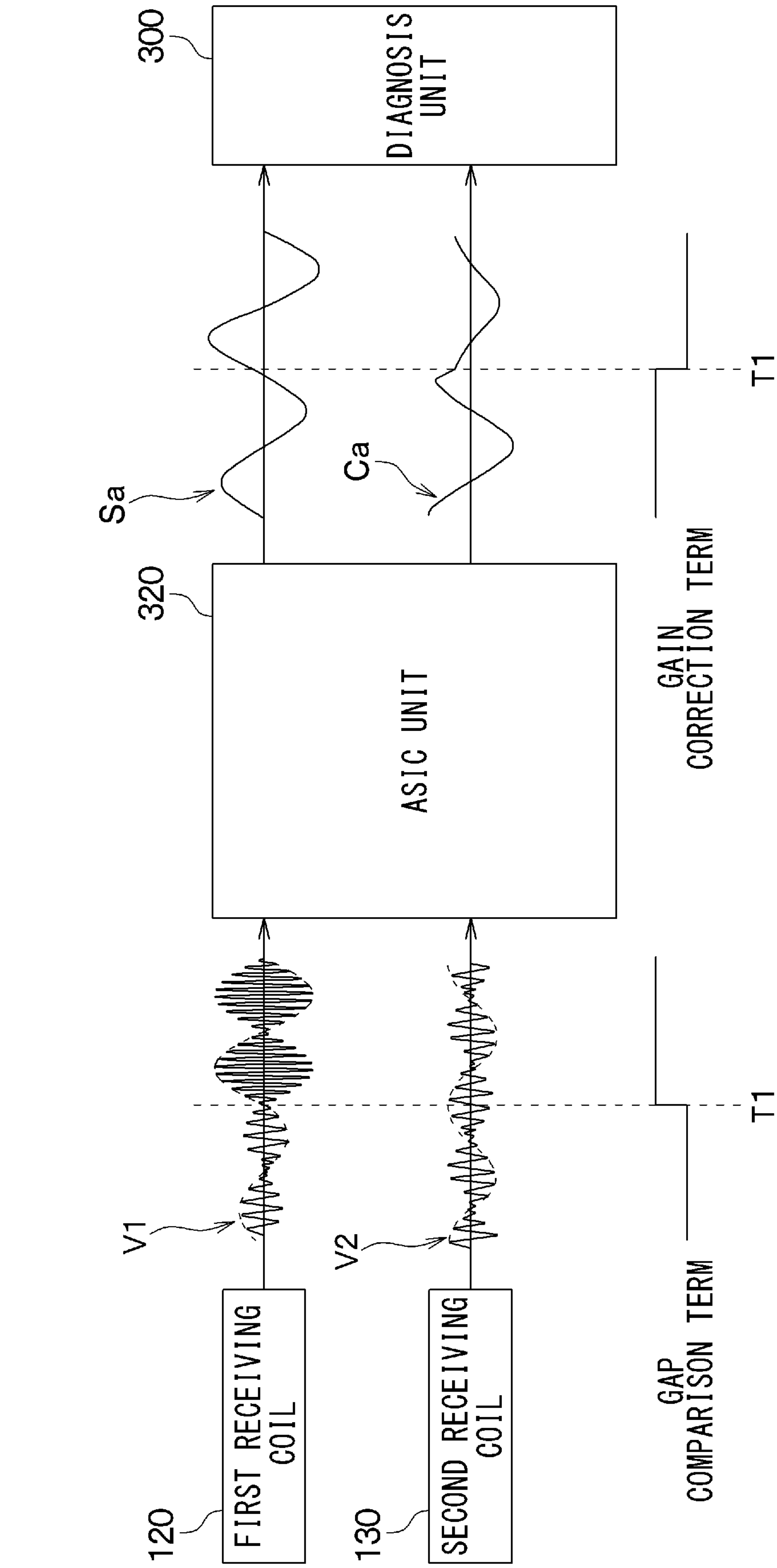
120
FIRST RECEIVING COIL
130
SECOND RECEIVING COIL
V1
V2
320
ASIC UNIT
Sa
Ca
300
DIAGNOSIS UNIT
T1
T1
GAP COMPARISON TERM
GAIN CORRECTION TERM

# FIG. 22

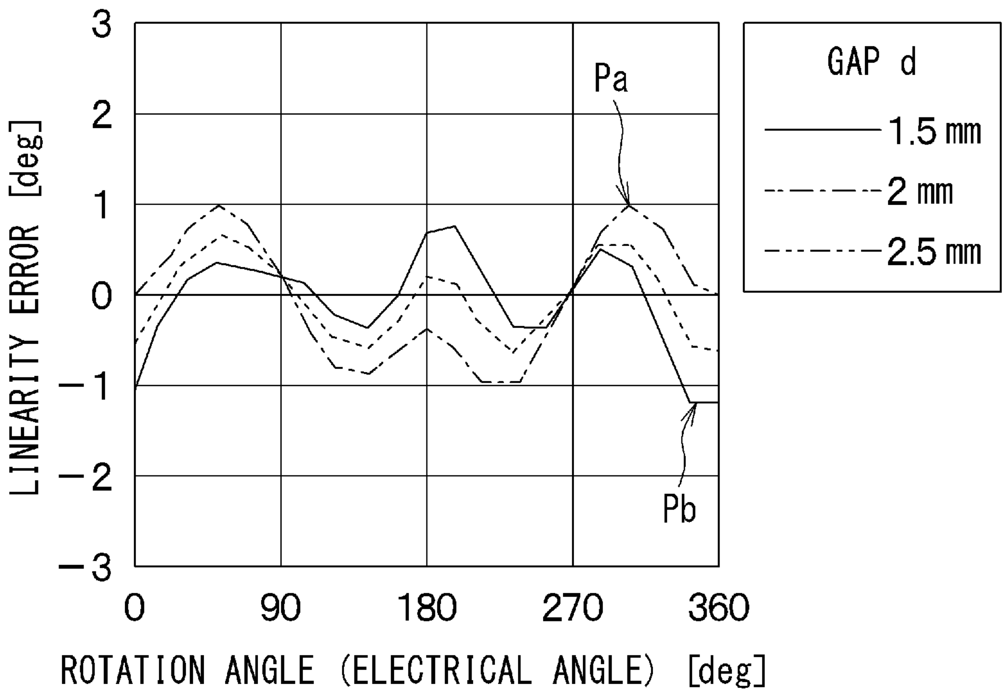

3
2
1
0
−1
−2
−3
LINEARITY ERROR [deg]
0
90
180
270
360
ROTATION ANGLE (ELECTRICAL ANGLE) [deg]
Pa
Pb
GAP d
1.5 mm
2 mm
2.5 mm


# FIG. 23

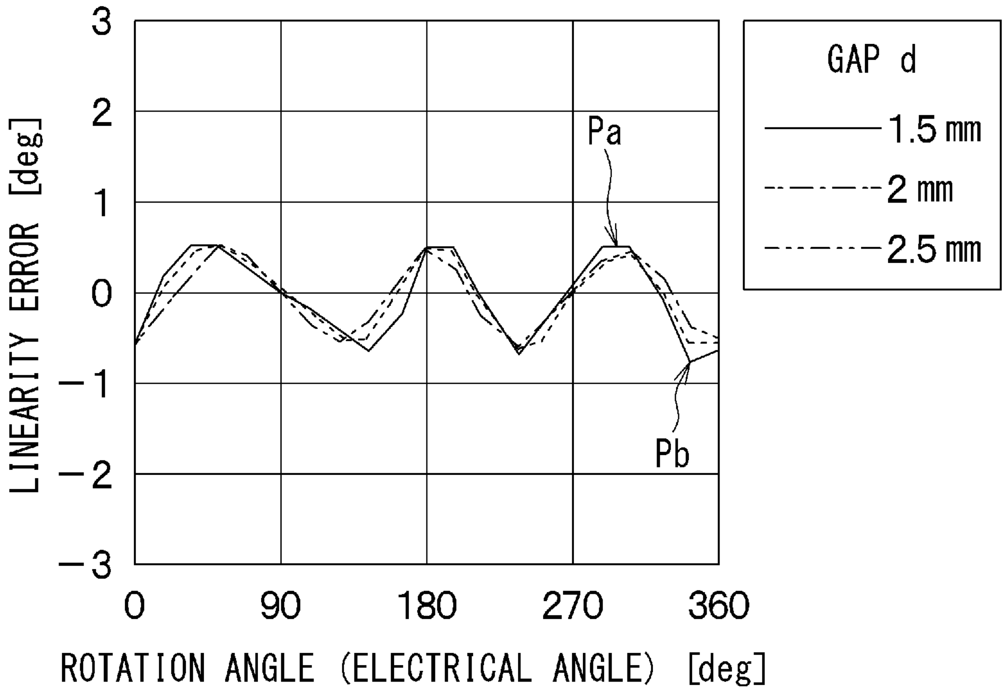

3
2
1
0
−1
−2
−3
LINEARITY ERROR [deg]
0
90
180
270
360
ROTATION ANGLE (ELECTRICAL ANGLE) [deg]
Pa
Pb
GAP d
1.5 mm
2 mm
2.5 mm

# FIG. 24

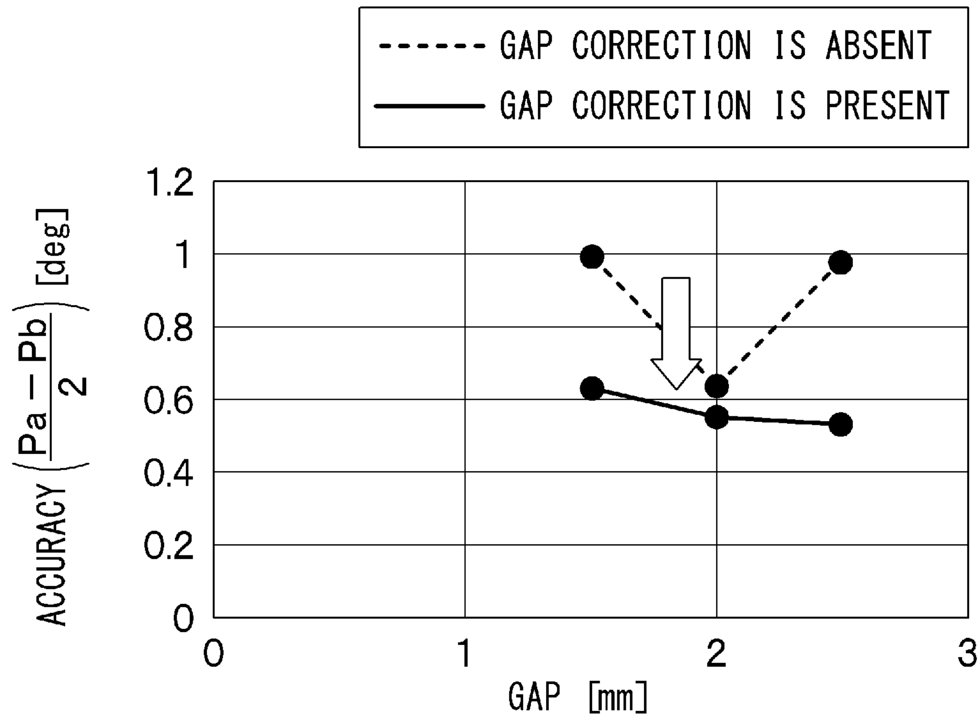
GAP CORRECTION IS ABSENT
GAP CORRECTION IS PRESENT
1.2
1
0.8
0.6
0.4
0.2
0
ACCURACY $\left(\frac{Pa - Pb}{2}\right)$ [deg]
0
1
2
3
GAP [mm]

# FIG. 25

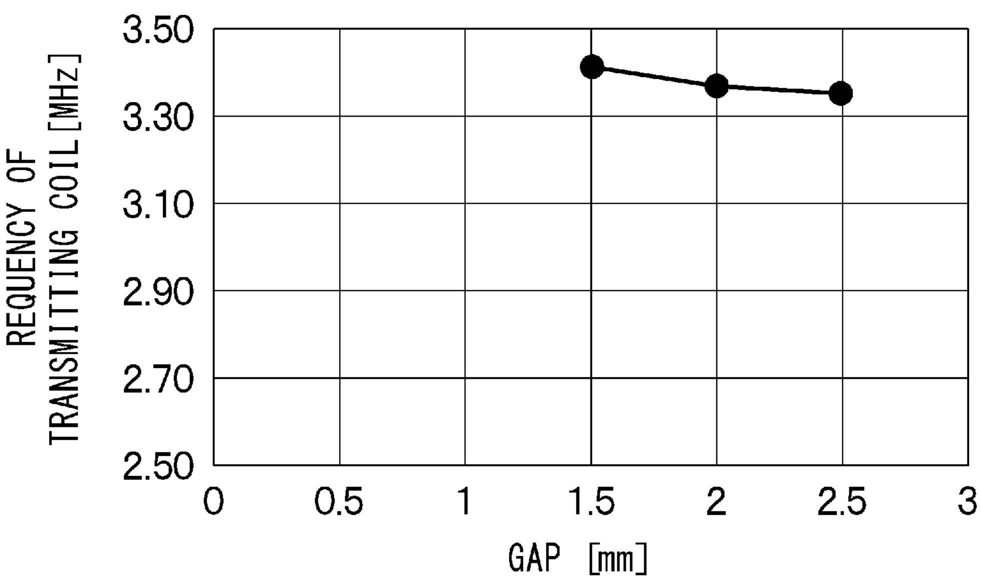
3.50
3.30
3.10
2.90
2.70
2.50
REQUENCY OF TRANSMITTING COIL [MHz]
0
0.5
1
1.5
2
2.5
3
GAP [mm]

FIG. 26

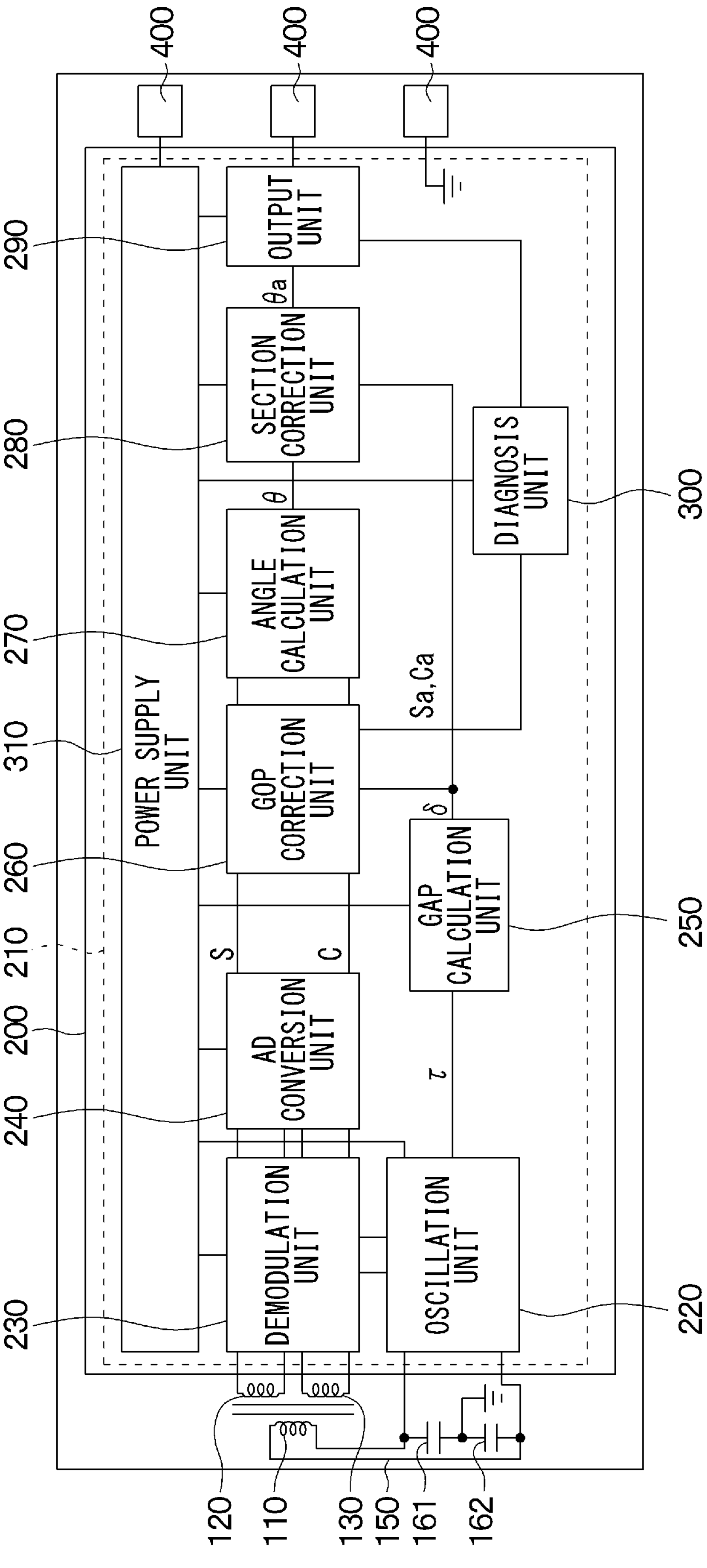

400
400
400
OUTPUT UNIT
SECTION CORRECTION UNIT
ANGLE CALCULATION UNIT
GOP CORRECTION UNIT
AD CONVERSION UNIT
DEMODULATION UNIT
OSCILLATION UNIT
GAP CALCULATION UNIT
DIAGNOSIS UNIT
POWER SUPPLY UNIT
θa
θ
Sa,Ca
δ
S
C
τ
290
280
270
310
260
210
200
240
230
300
250
220
120
110
130
150
161
162

FIG. 27

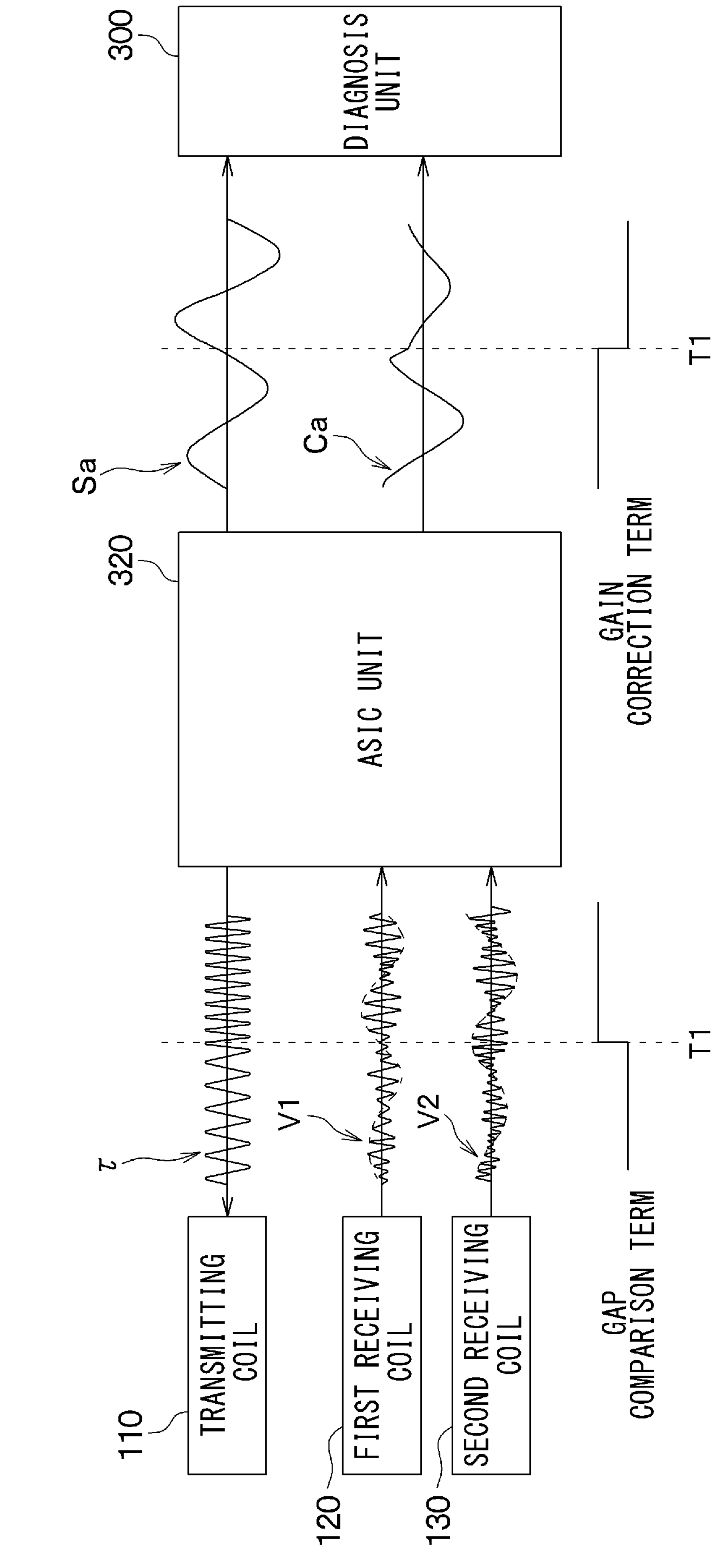
300
DIAGNOSIS UNIT
Sa
Ca
T1
320
ASIC UNIT
GAIN CORRECTION TERM
τ
V1
V2
T1
110
TRANSMITTING COIL
120
FIRST RECEIVING COIL
130
SECOND RECEIVING COIL
GAP COMPARISON TERM

FIG. 28

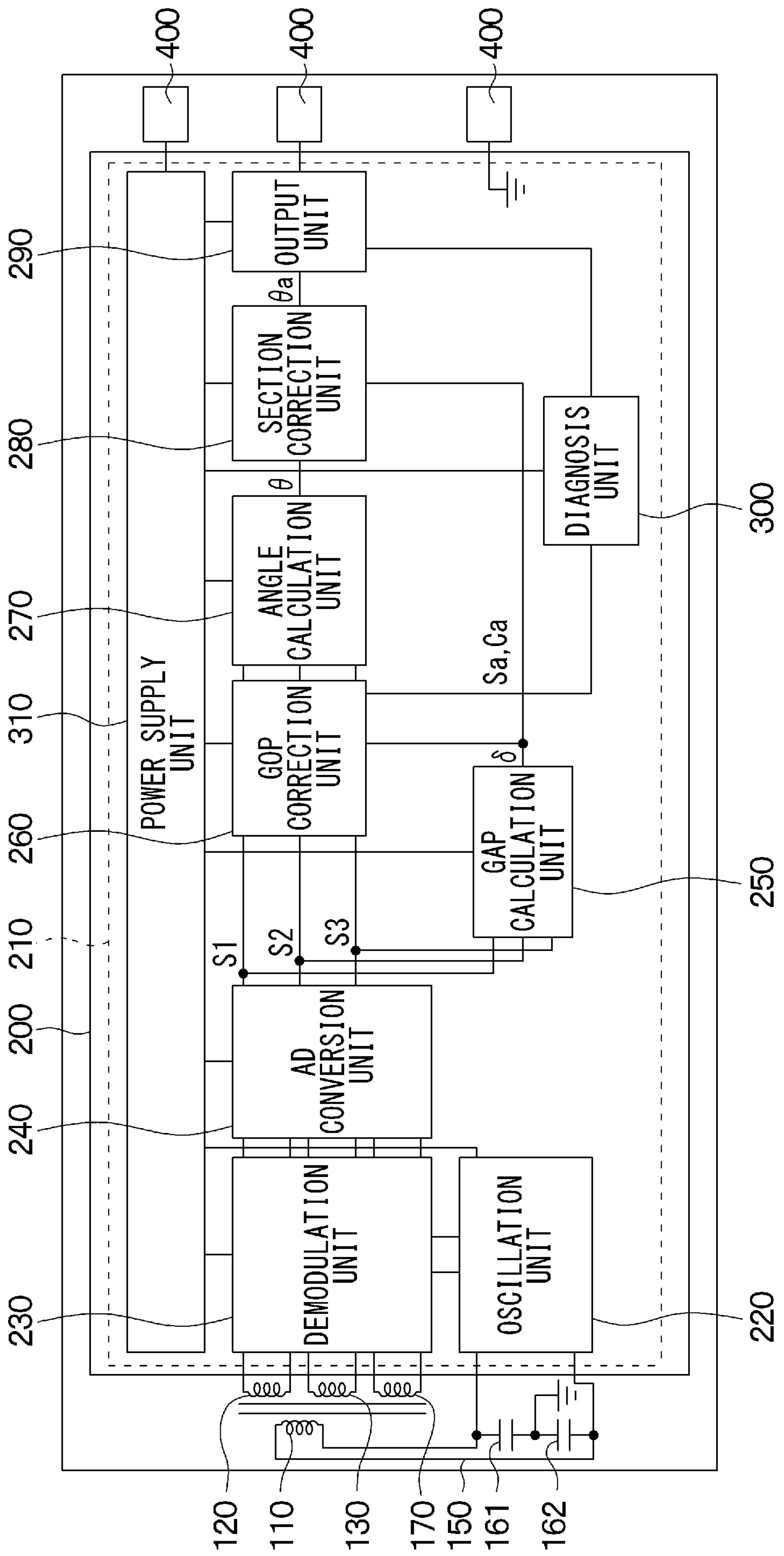
400
400
400
290
280
270
310
260
210
200
240
230
OUTPUT UNIT
θa
SECTION CORRECTION UNIT
θ
ANGLE CALCULATION UNIT
DIAGNOSIS UNIT
300
Sa,Ca
POWER SUPPLY UNIT
GOP CORRECTION UNIT
δ
GAP CALCULATION UNIT
250
S1
S2
S3
AD CONVERSION UNIT
DEMODULATION UNIT
OSCILLATION UNIT
220
120
110
130
170
150
161
162

FIG. 29

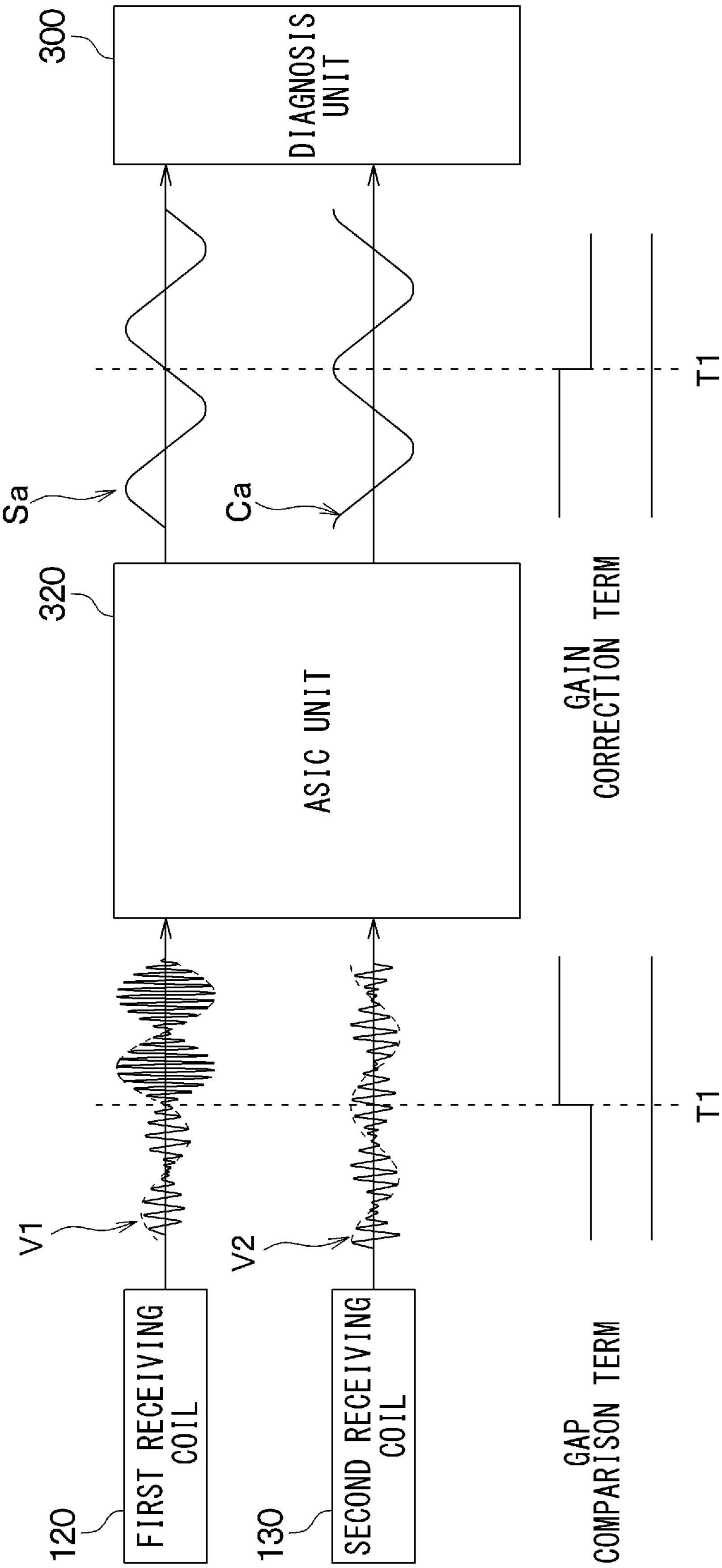
300
DIAGNOSIS UNIT
Sa
Ca
320
ASIC UNIT
V1
V2
120
FIRST RECEIVING COIL
130
SECOND RECEIVING COIL
T1
T1
GAP COMPARISON TERM
GAIN CORRECTION TERM

FIG. 30

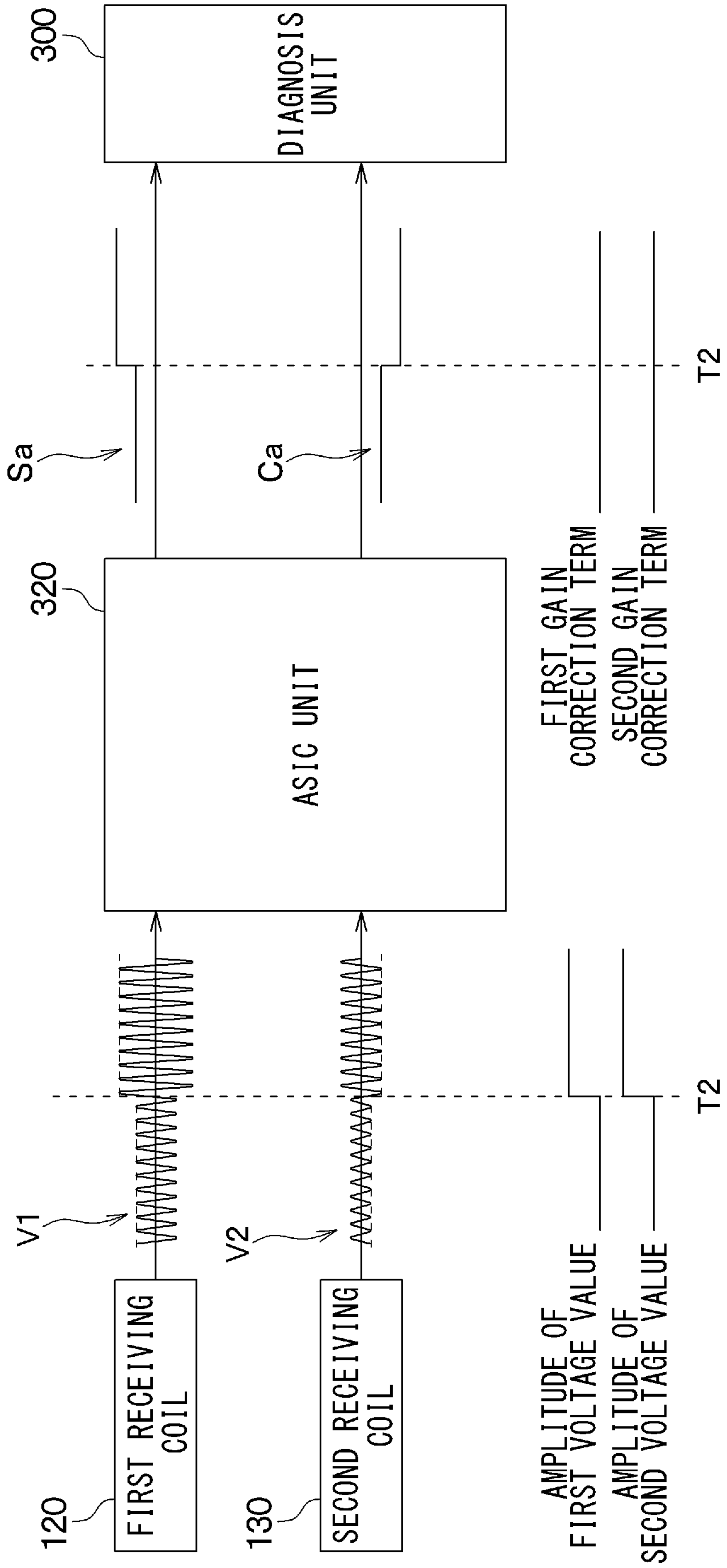
120
FIRST RECEIVING COIL
130
SECOND RECEIVING COIL
V1
V2
T2
320
ASIC UNIT
Sa
Ca
T2
300
DIAGNOSIS UNIT
AMPLITUDE OF FIRST VOLTAGE VALUE
AMPLITUDE OF SECOND VOLTAGE VALUE
FIRST GAIN CORRECTION TERM
SECOND GAIN CORRECTION TERM

FIG. 31

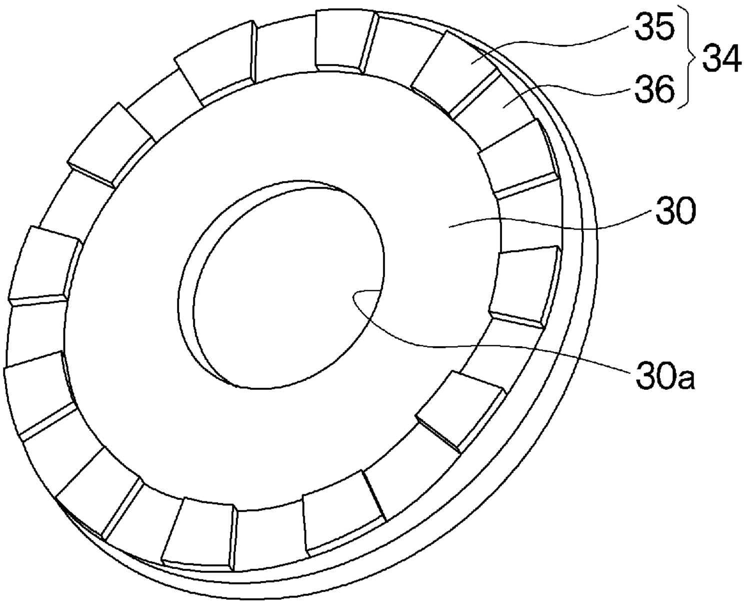

FIG. 32

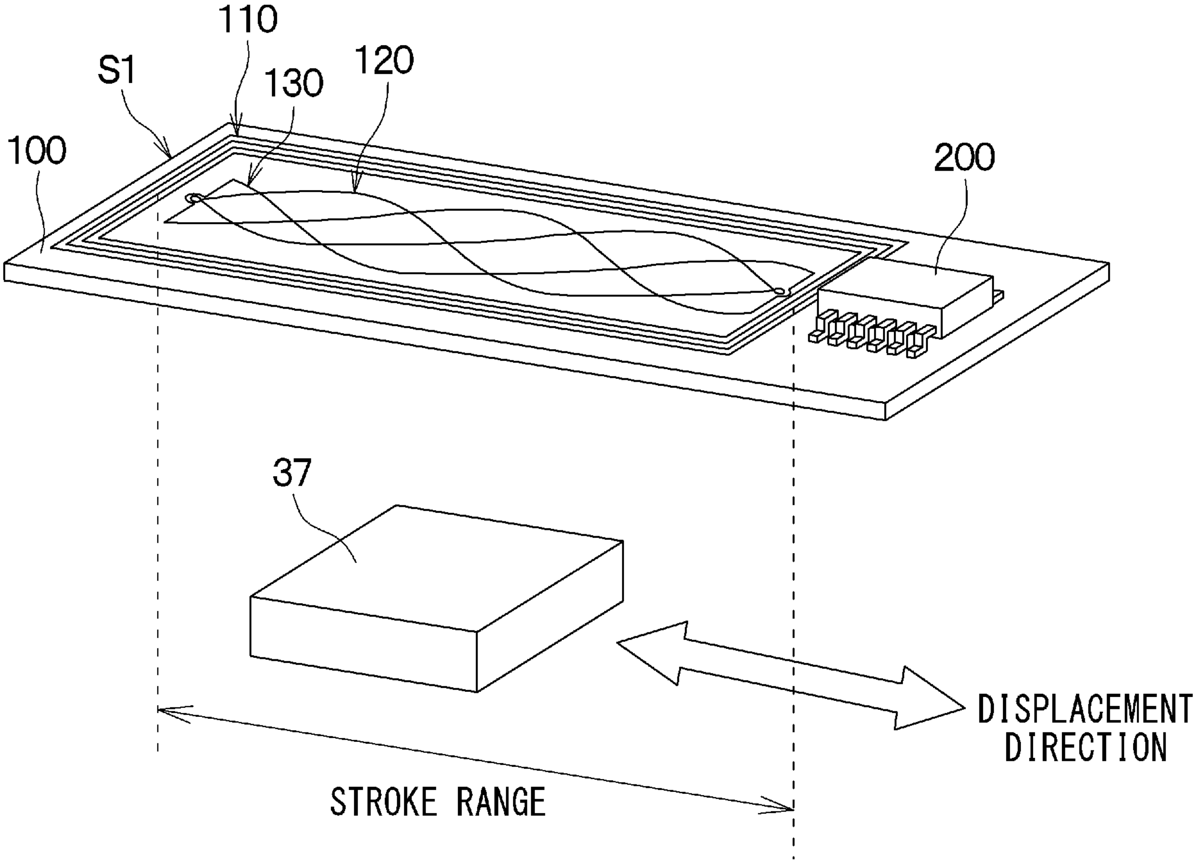
110
S1
130
120
100
200
37
DISPLACEMENT
DIRECTION
STROKE RANGE

FIG. 33

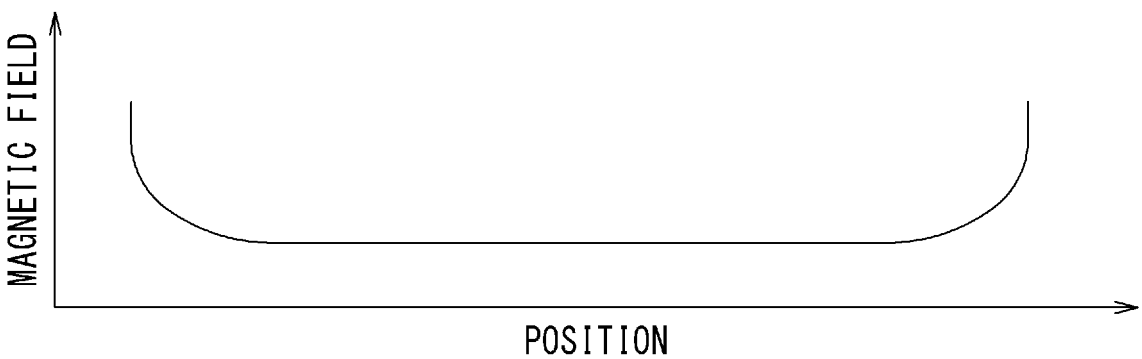
MAGNETIC FIELD
POSITION

FIG. 34

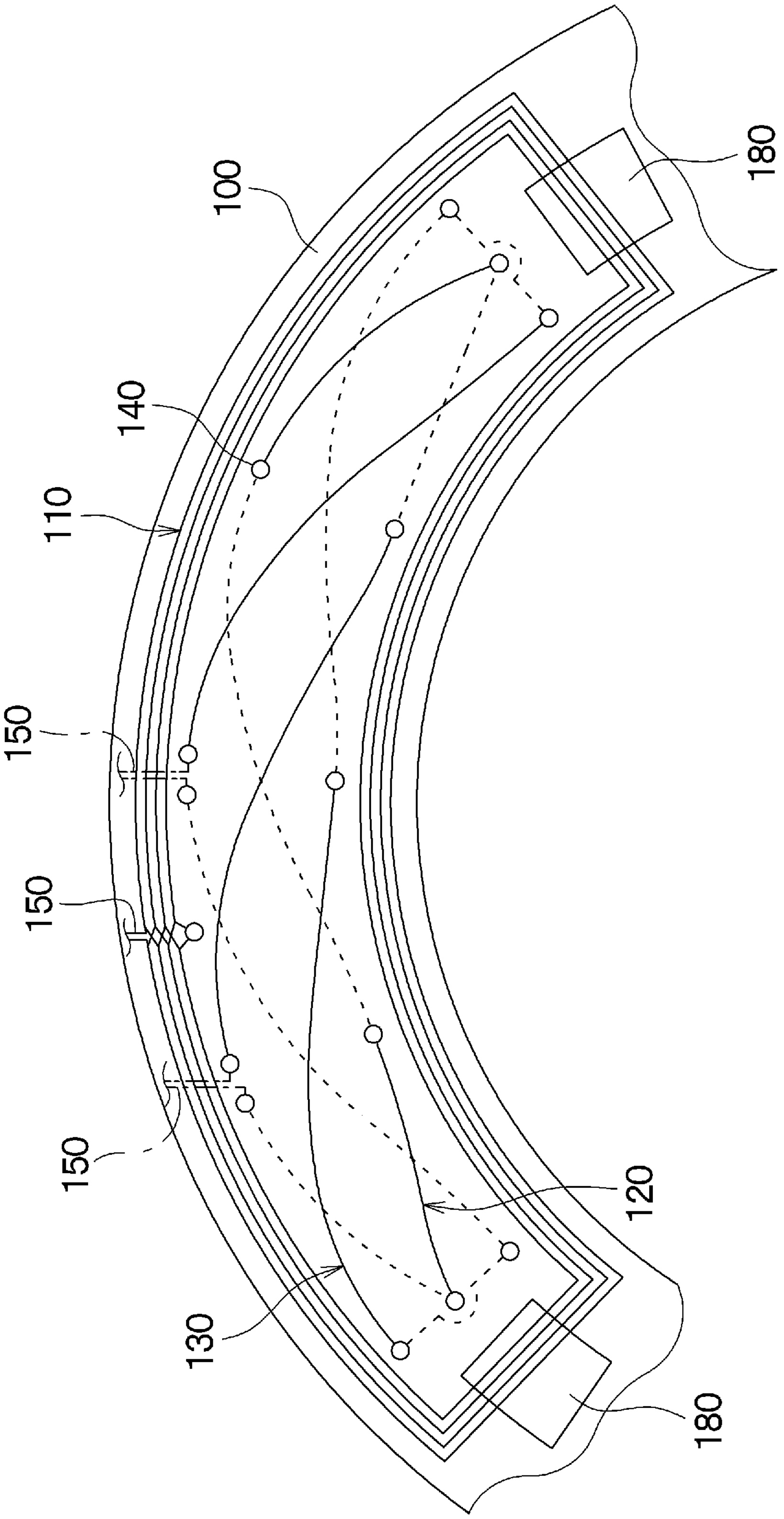

FIG. 35

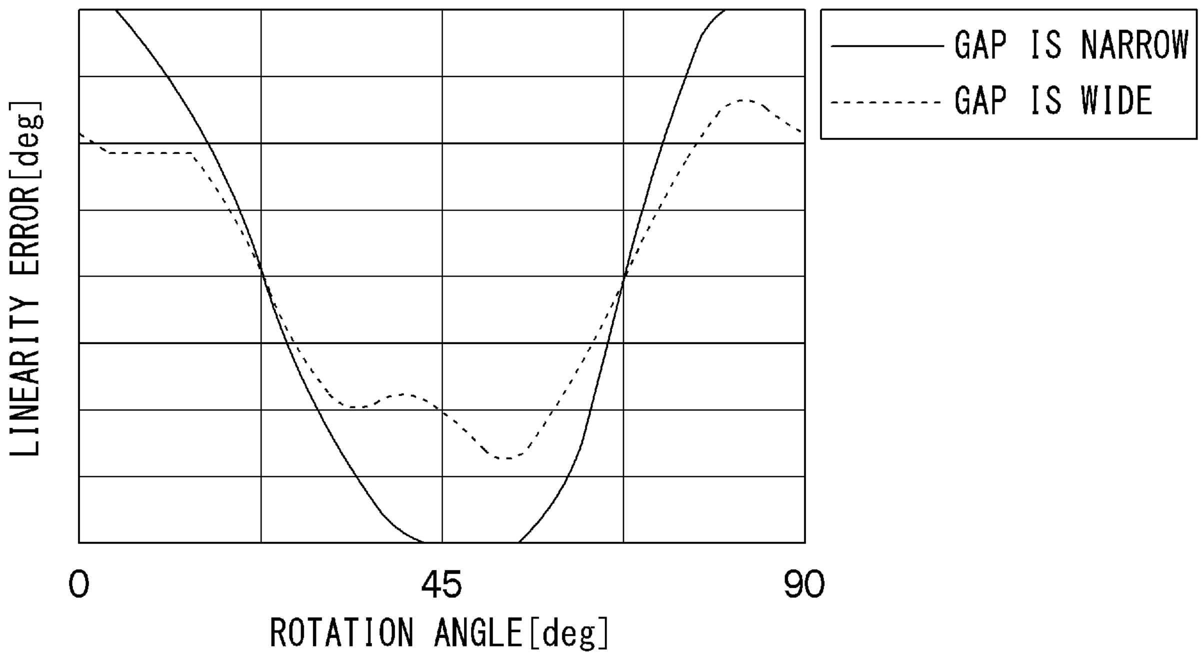
GAP IS NARROW
GAP IS WIDE
LINEARITY ERROR[deg]
0
45
90
ROTATION ANGLE[deg]

FIG. 36

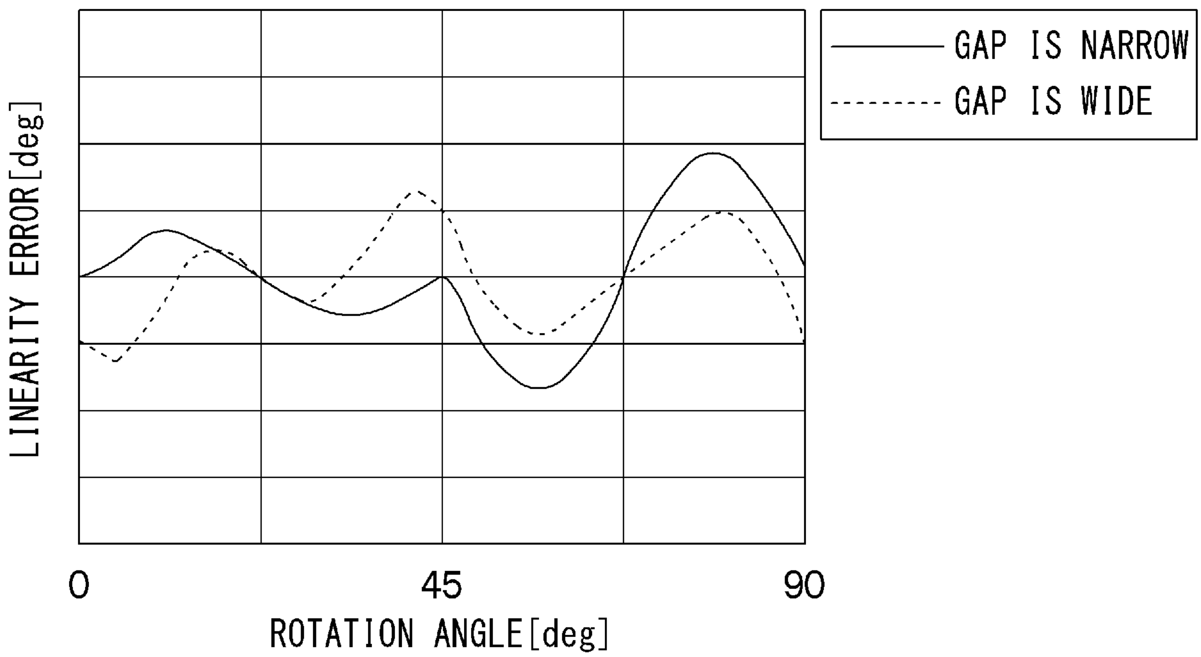
GAP IS NARROW
GAP IS WIDE
LINEARITY ERROR[deg]
0
45
90
ROTATION ANGLE[deg]

FIG. 37

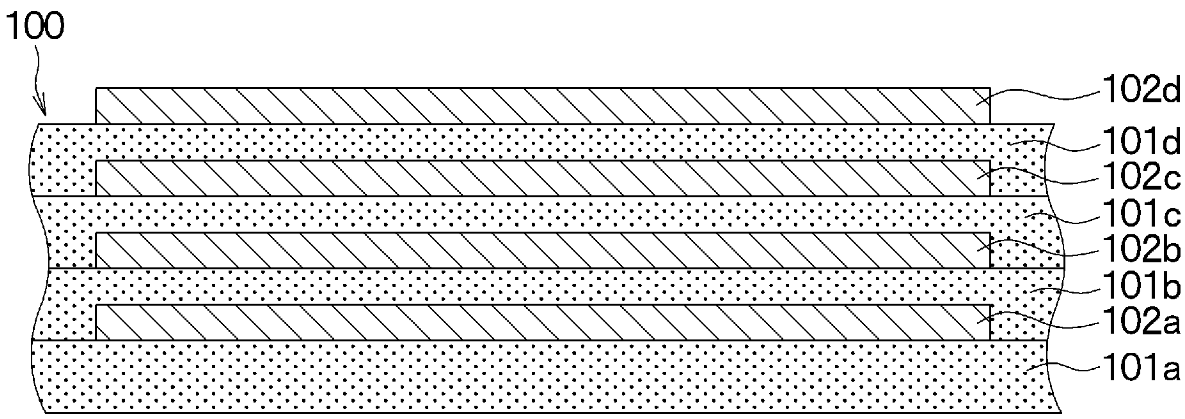

FIG. 38

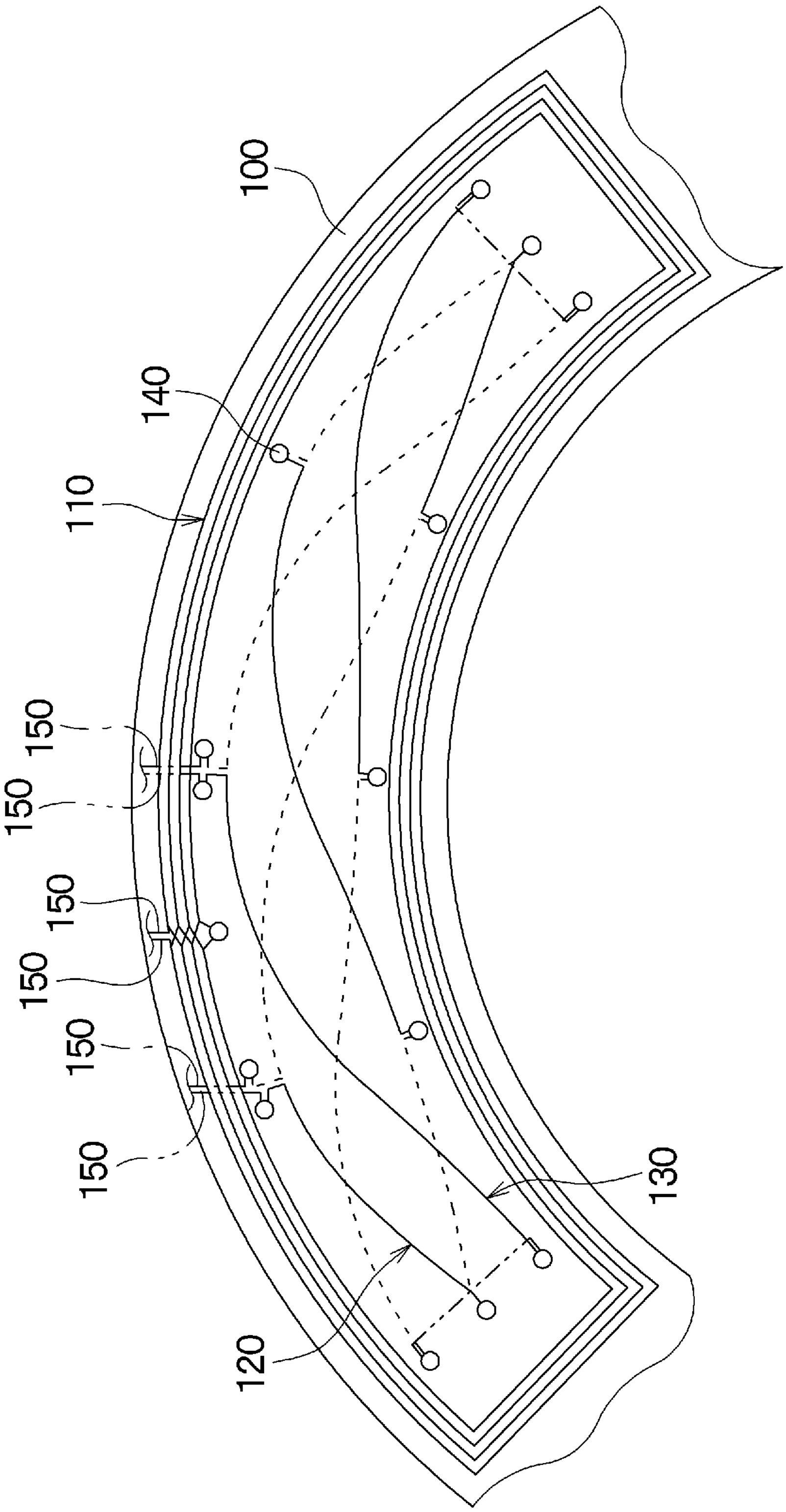

FIG. 39A

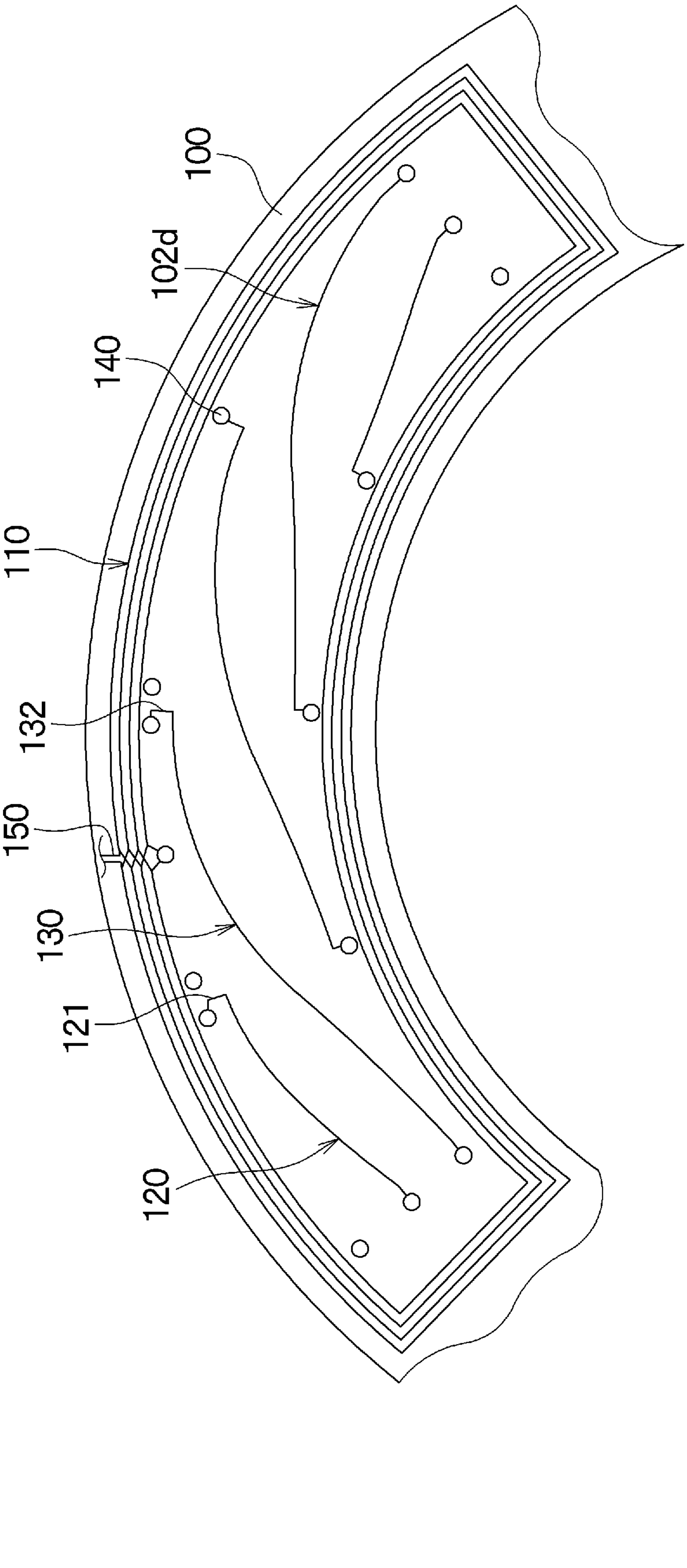

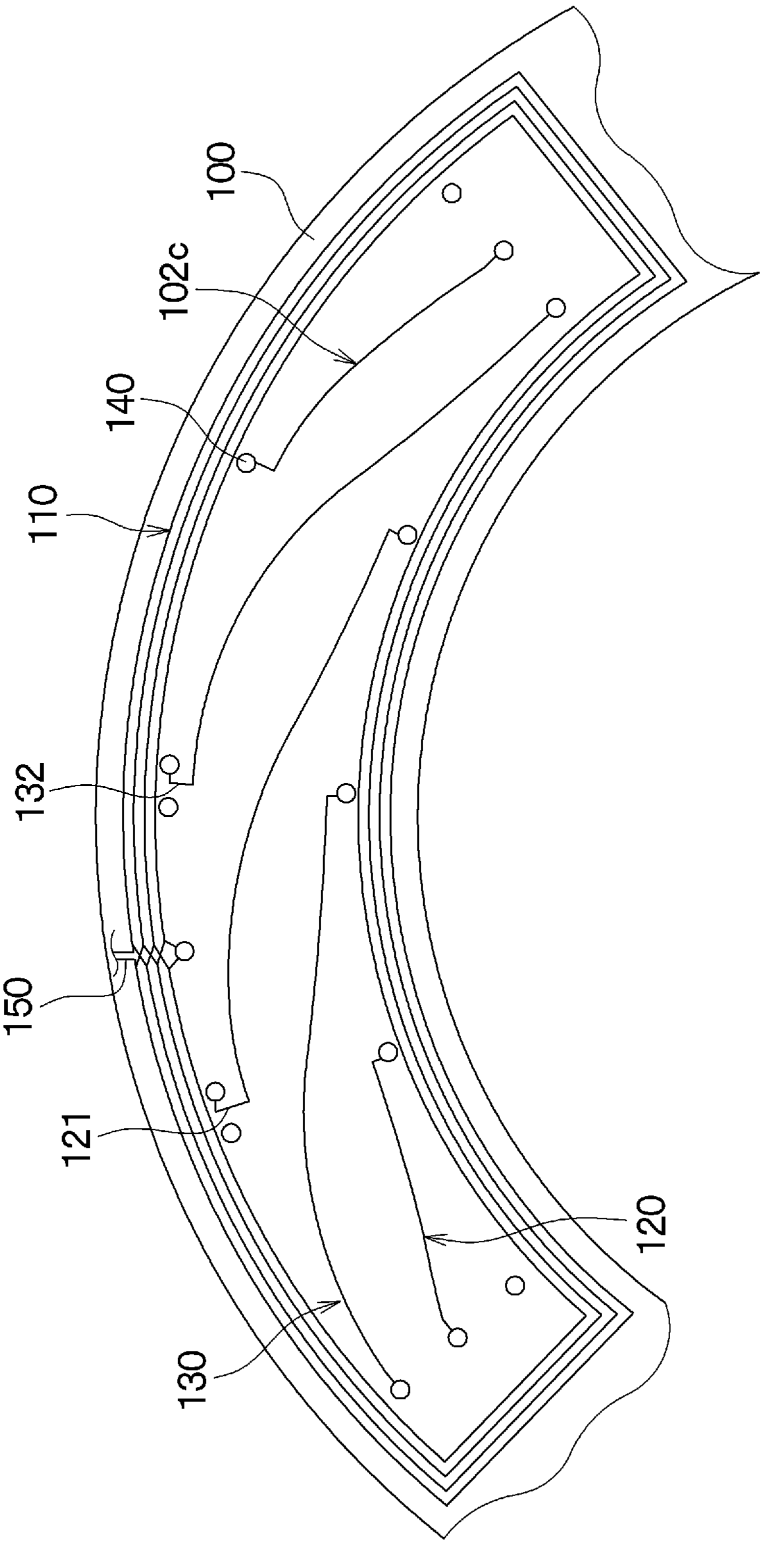


FIG. 39B

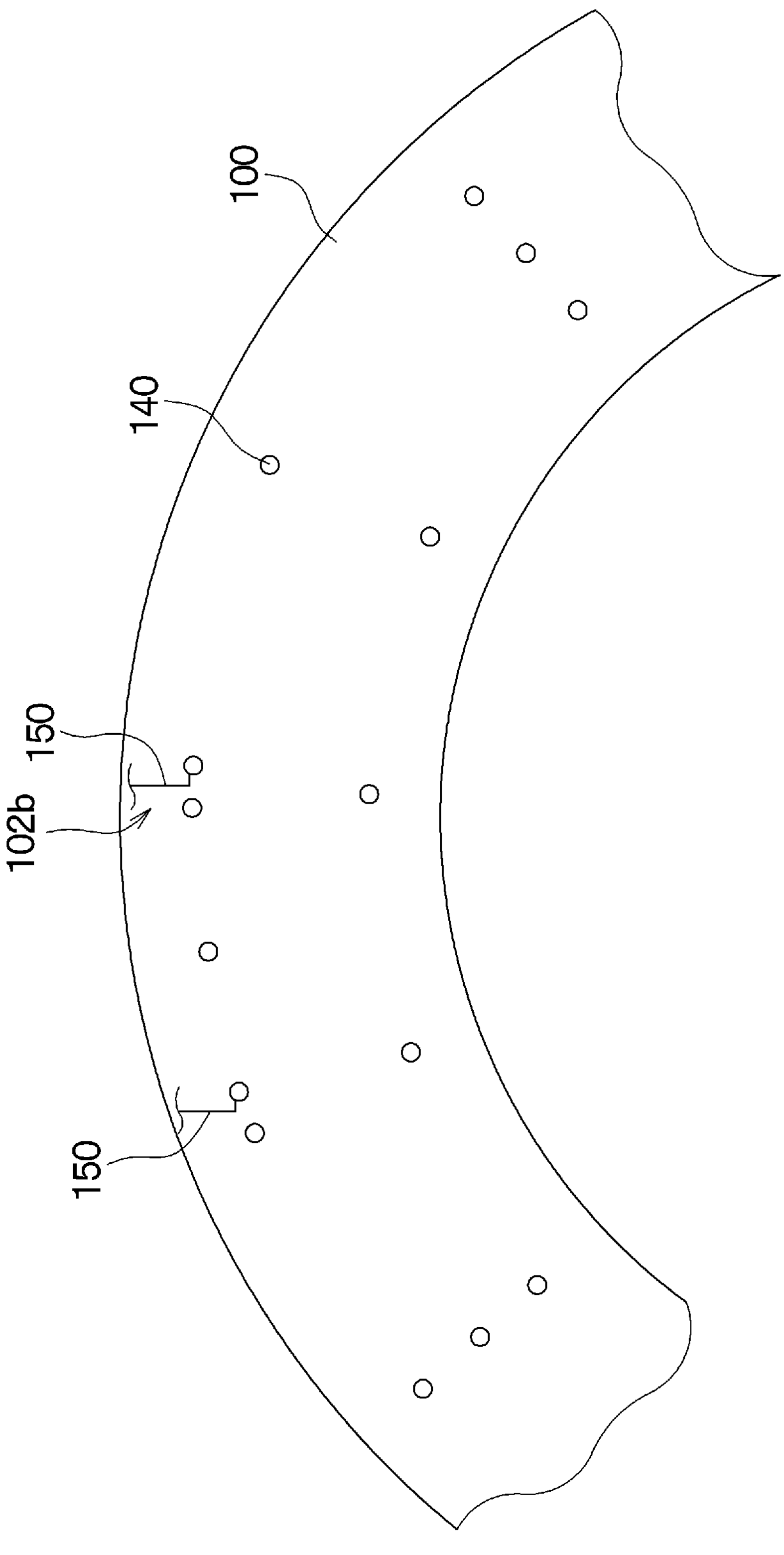


FIG. 39C

FIG. 39D

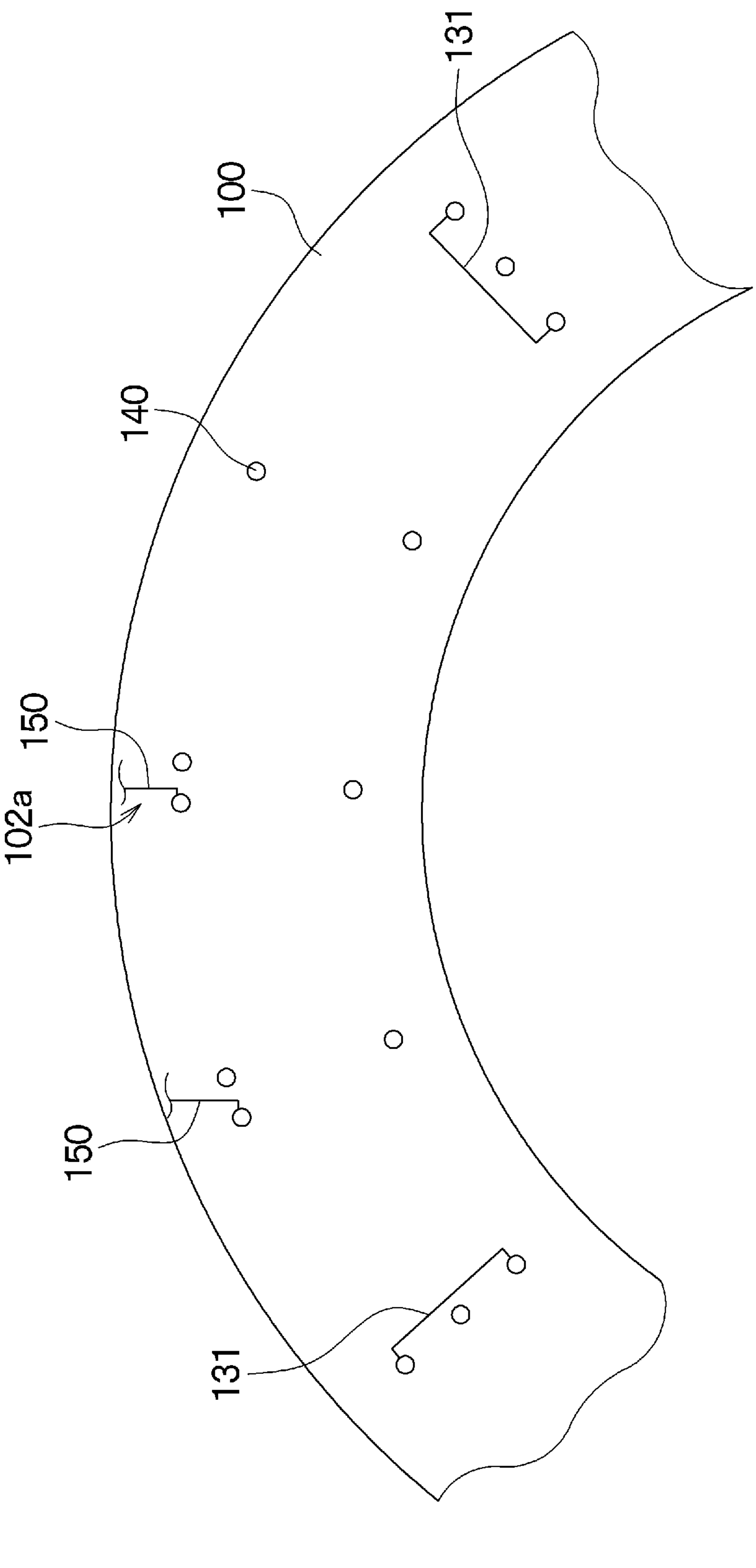

FIG. 40

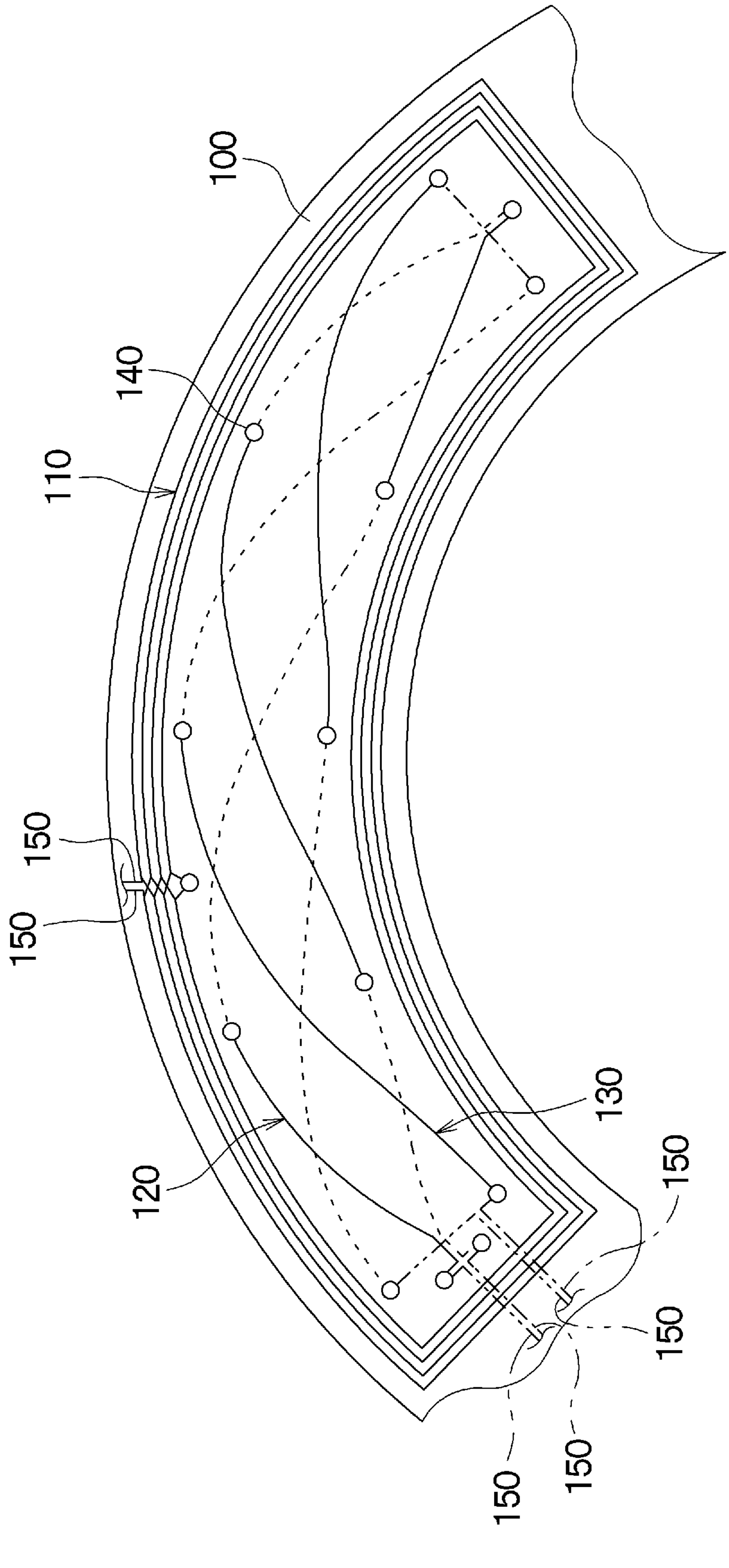

FIG. 41A

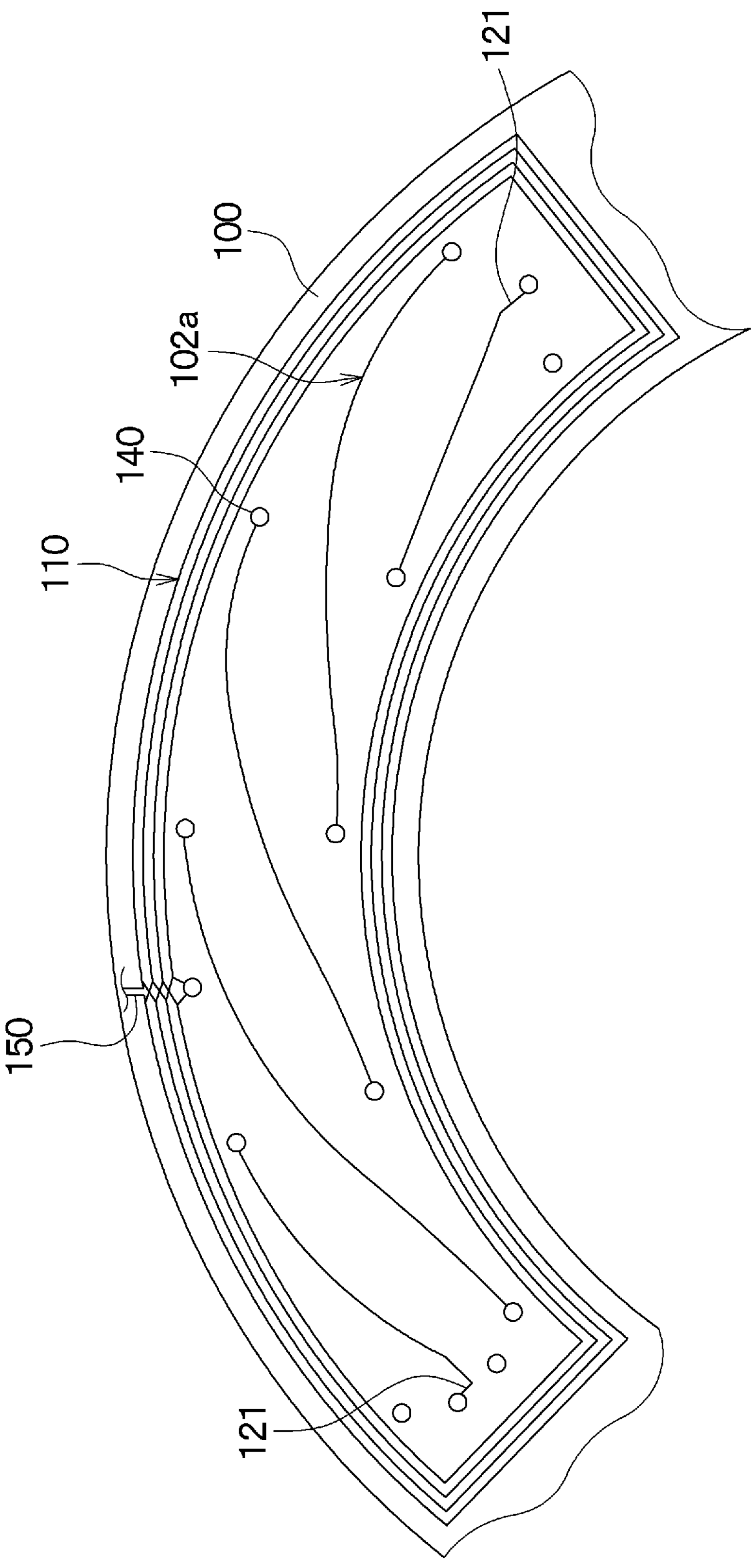

FIG. 41B

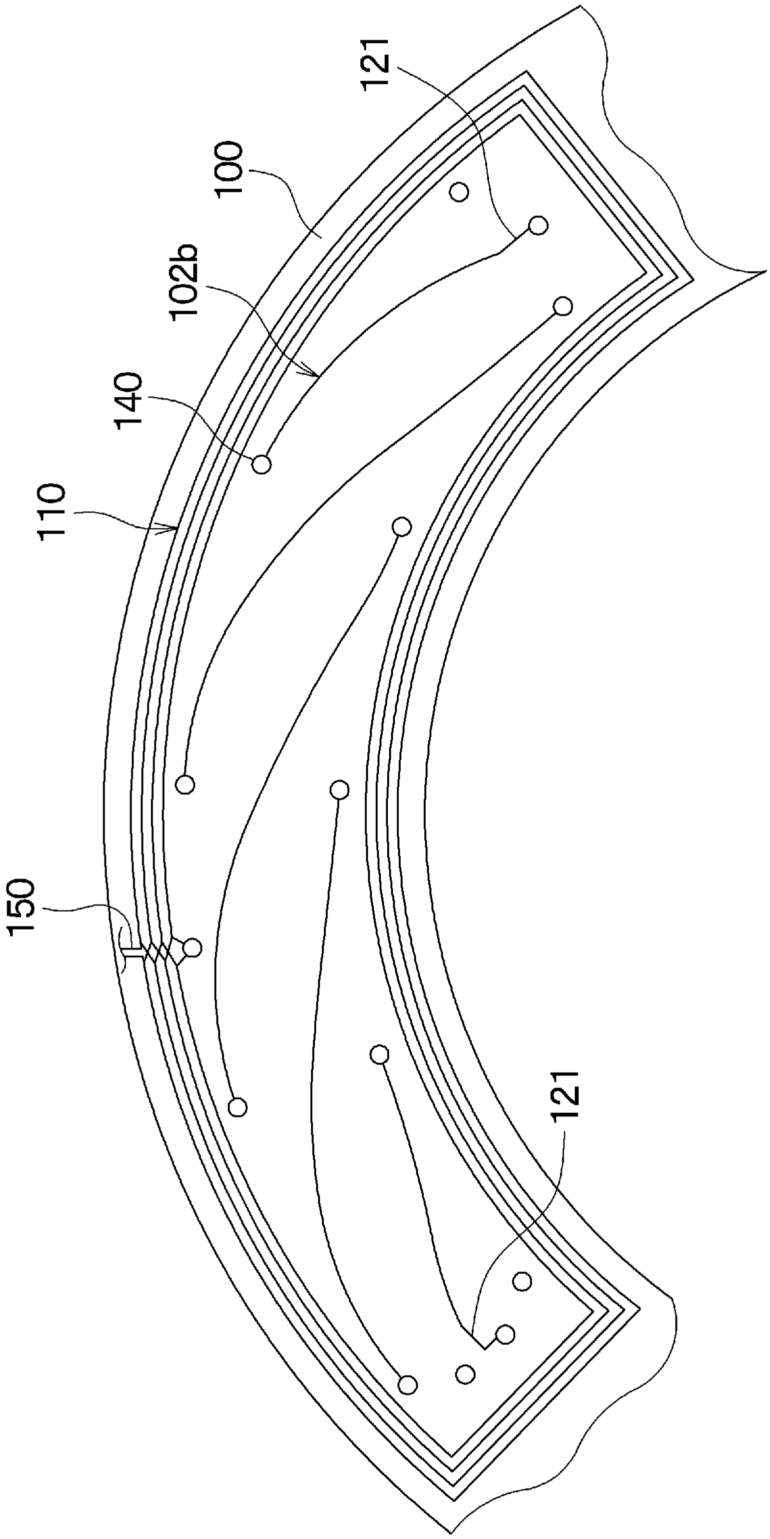

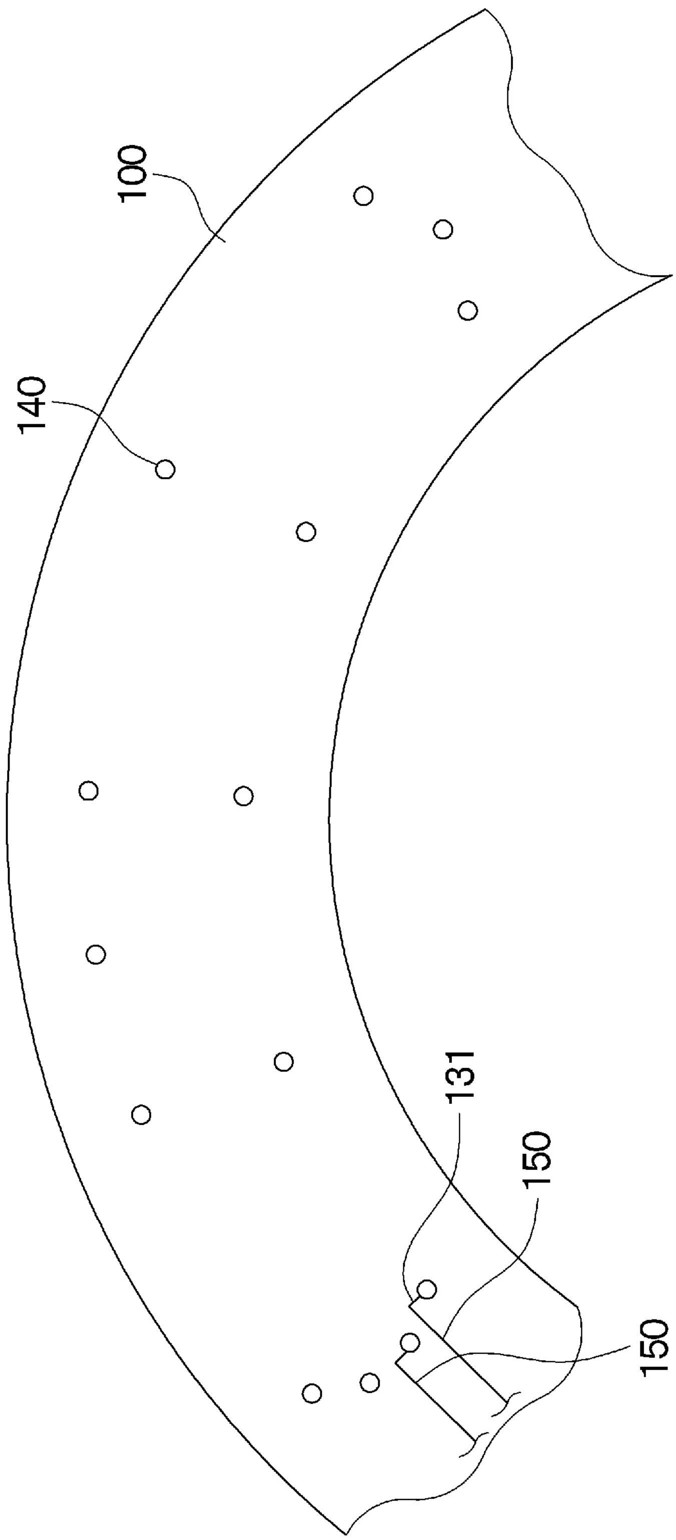


FIG. 41C

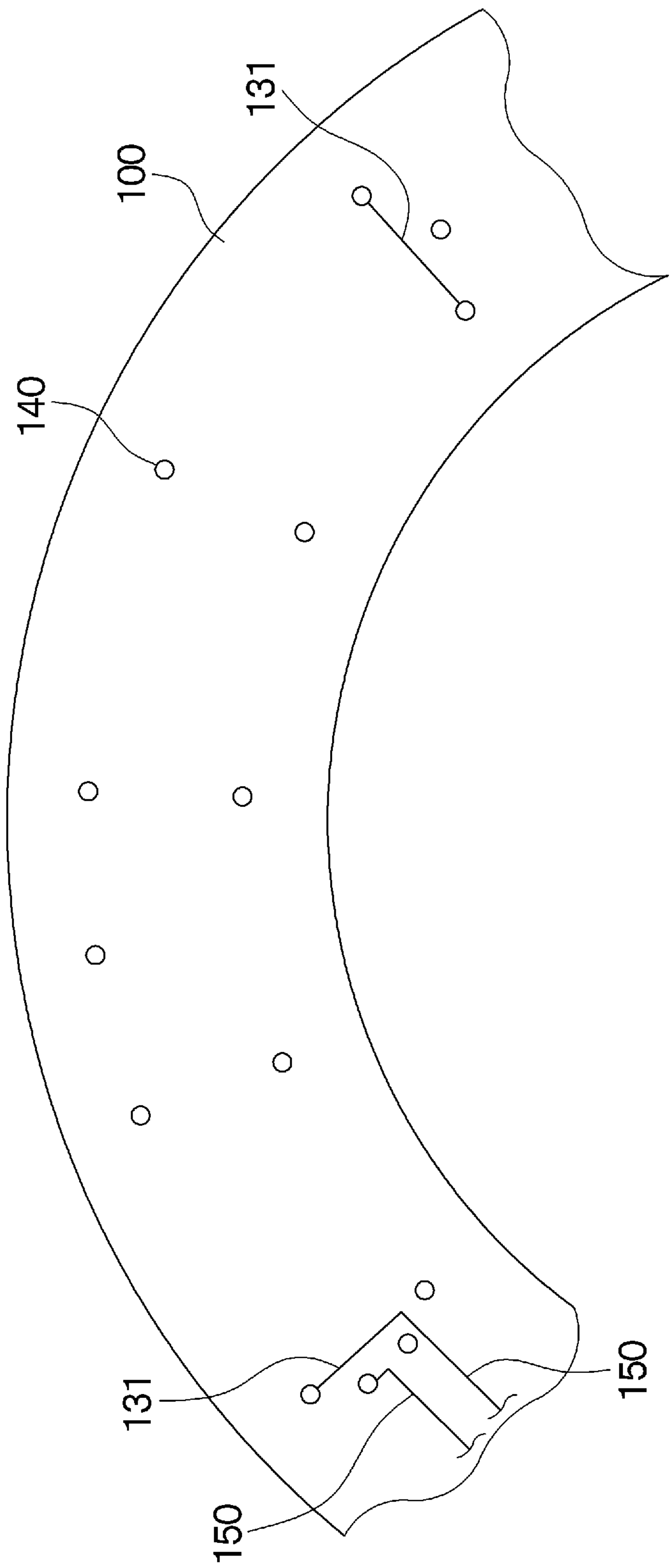


FIG. 41D

FIG. 42

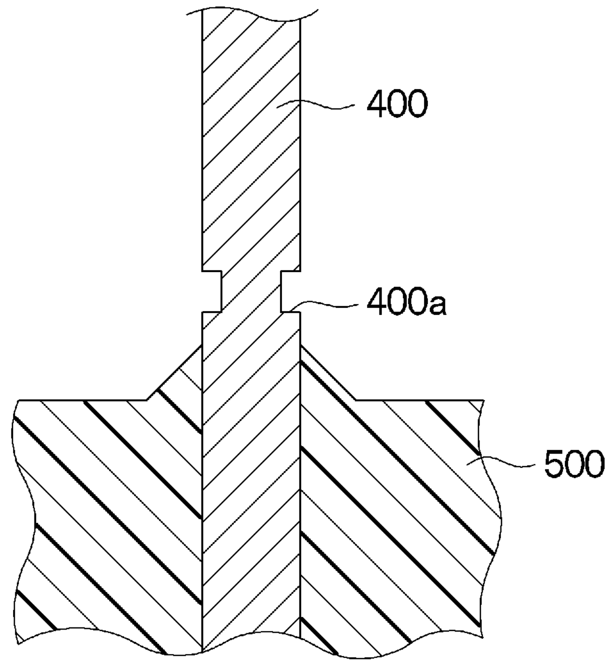
400
400a
500

FIG. 43

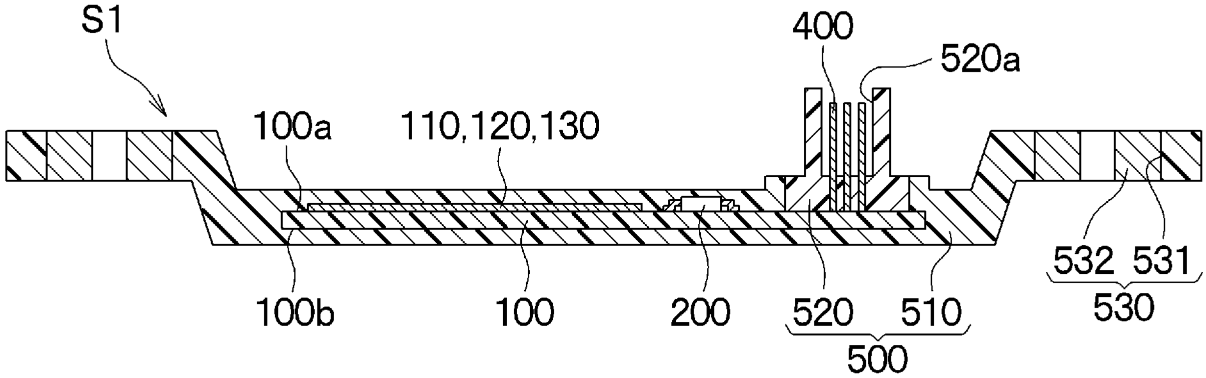
S1
400
520a
100a
110,120,130
100b
100
200
520
510
500
532
531
530

FIG. 44A

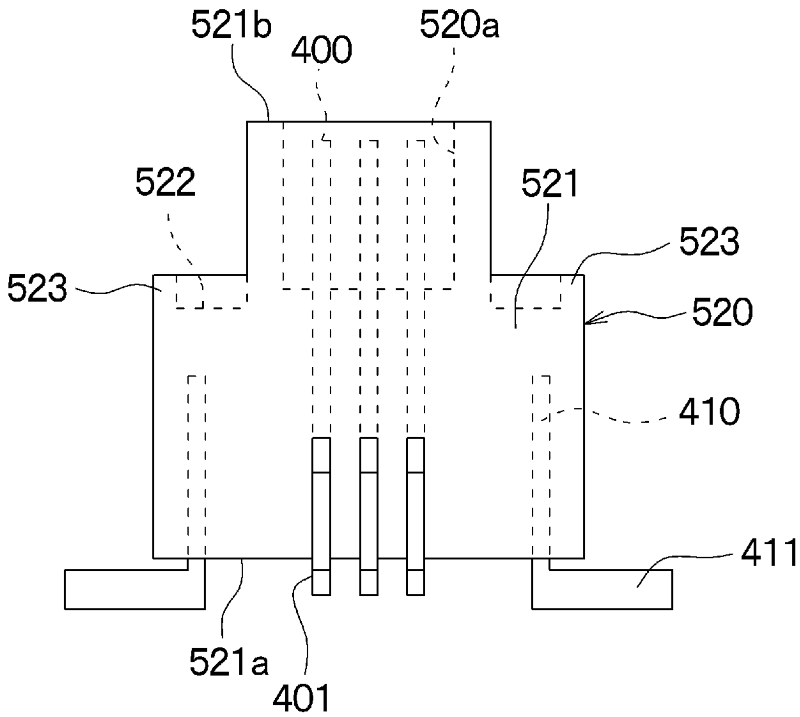


FIG. 44B

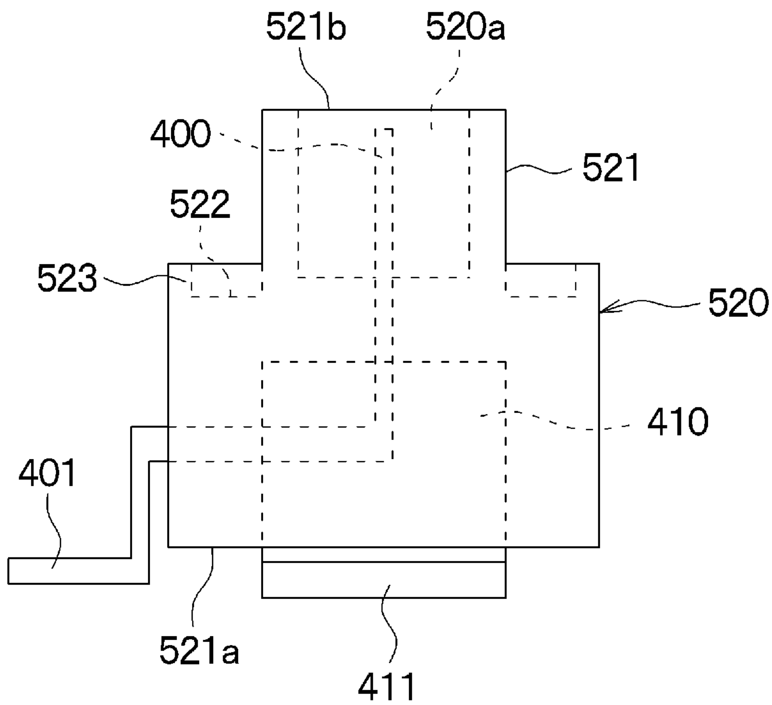

FIG. 45 A

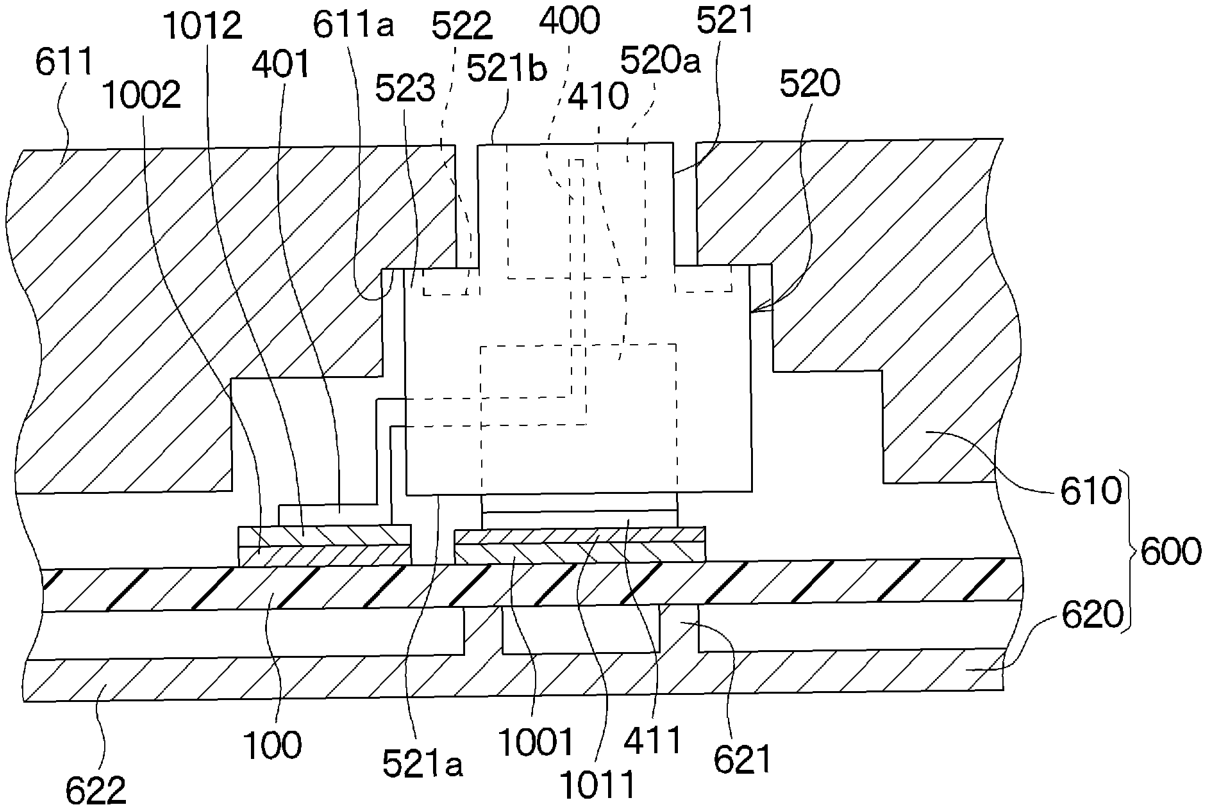


FIG. 45 B

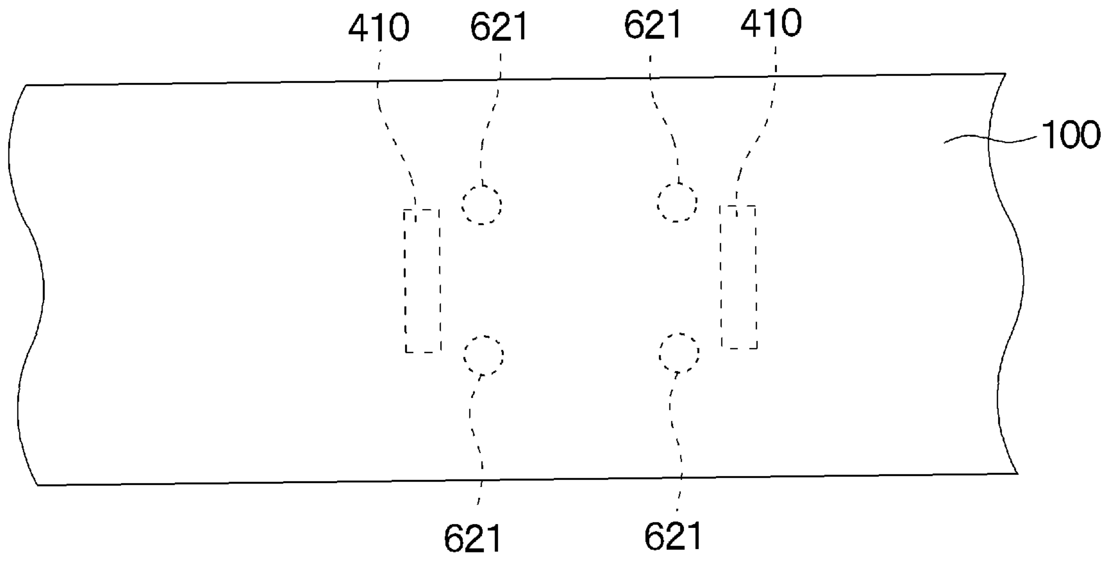

FIG. 45 C

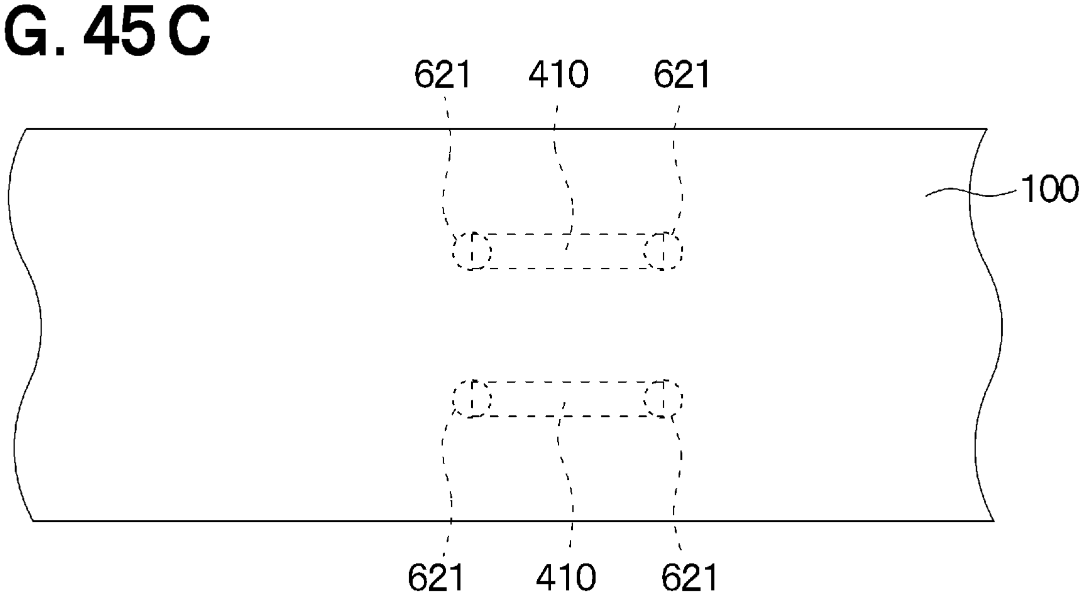


FIG. 46 A

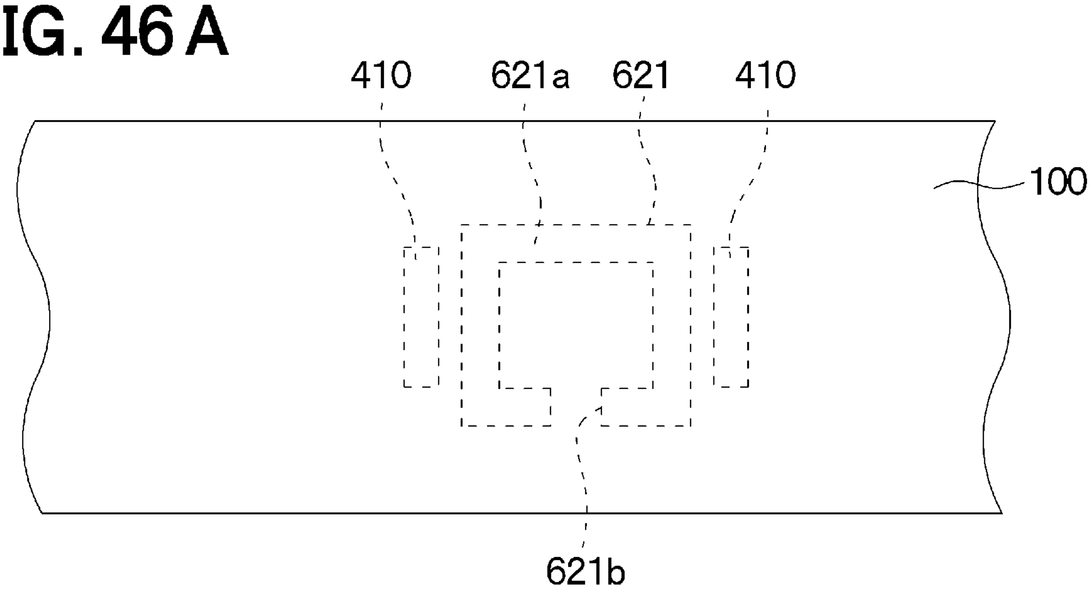


FIG. 46 B

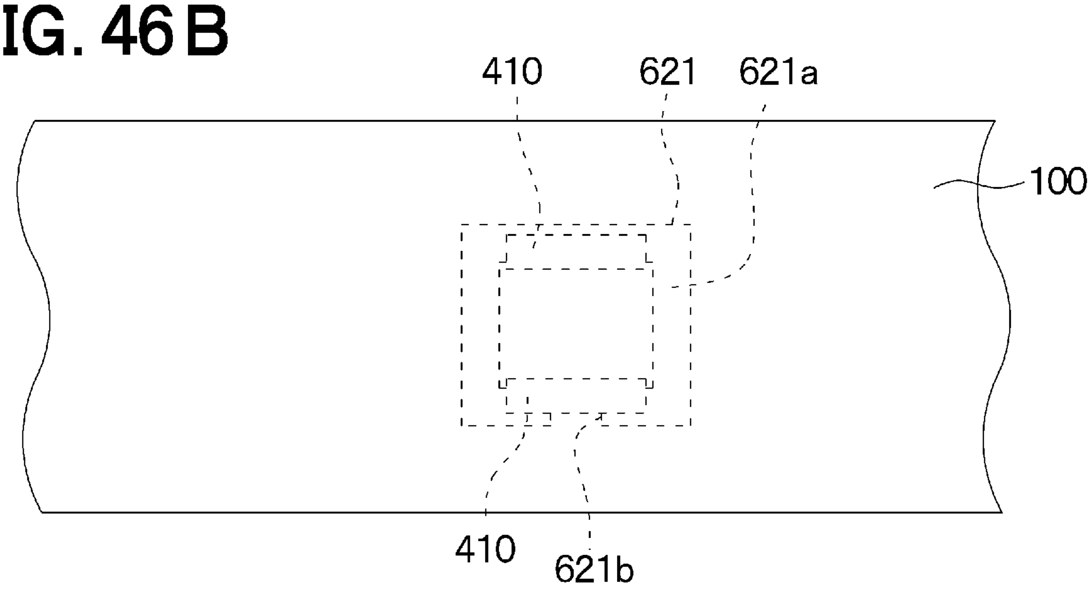

FIG. 47

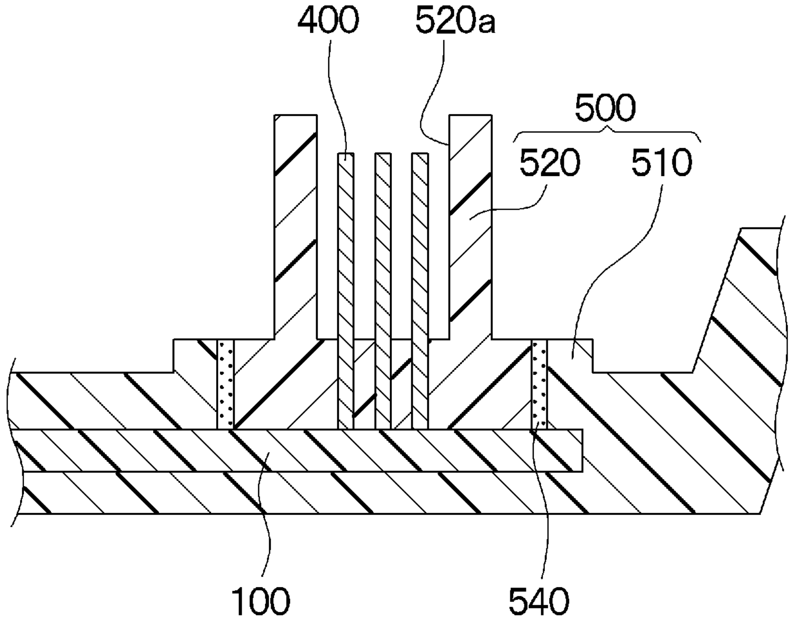


FIG. 48

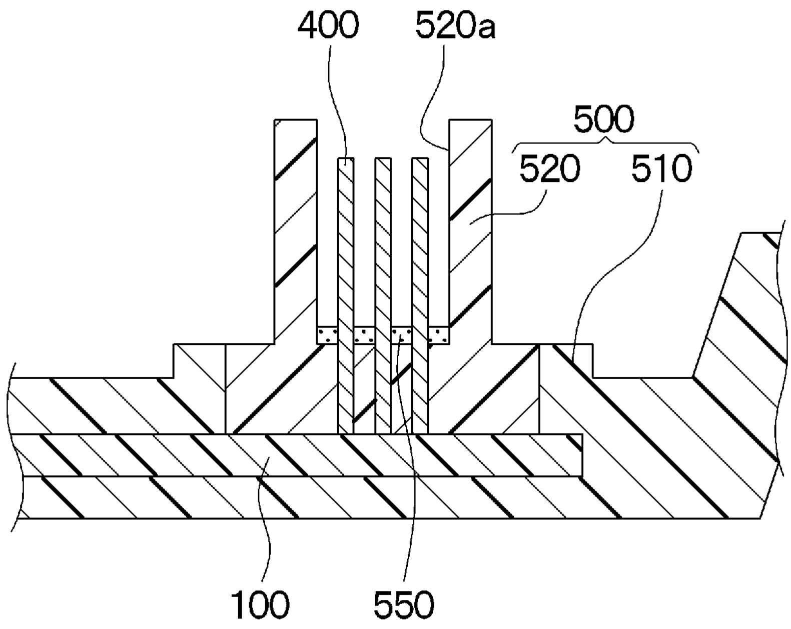

FIG. 49 A

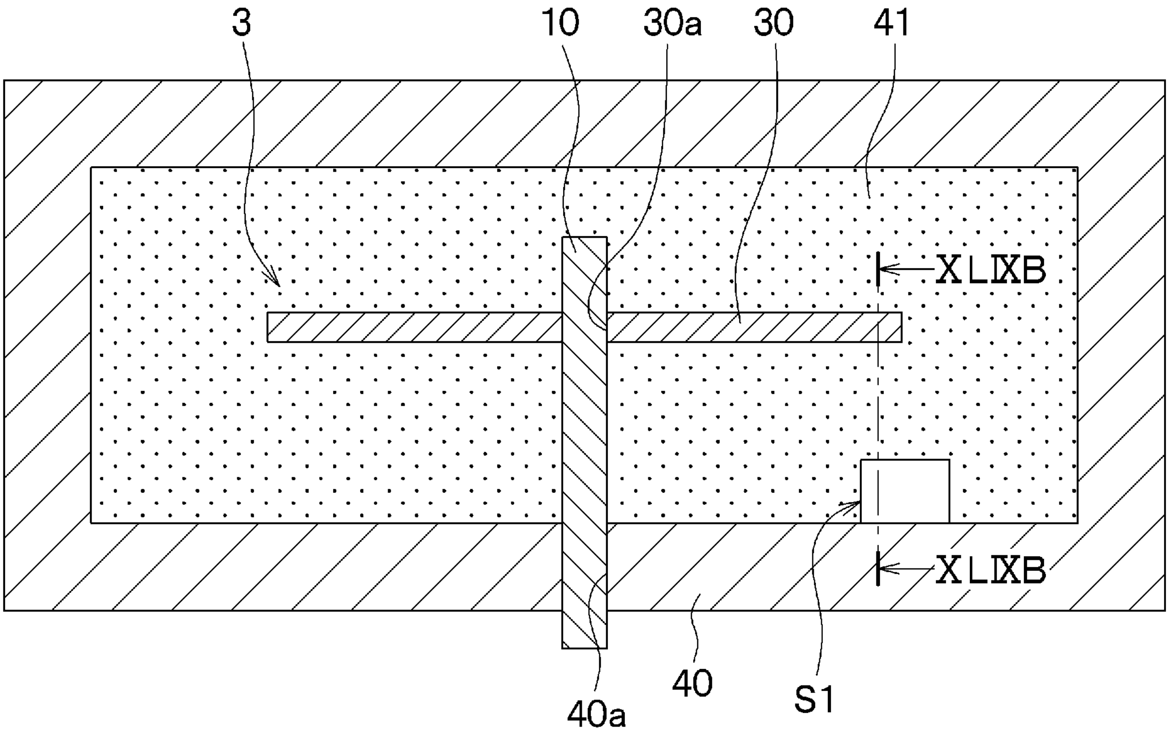


FIG. 49 B

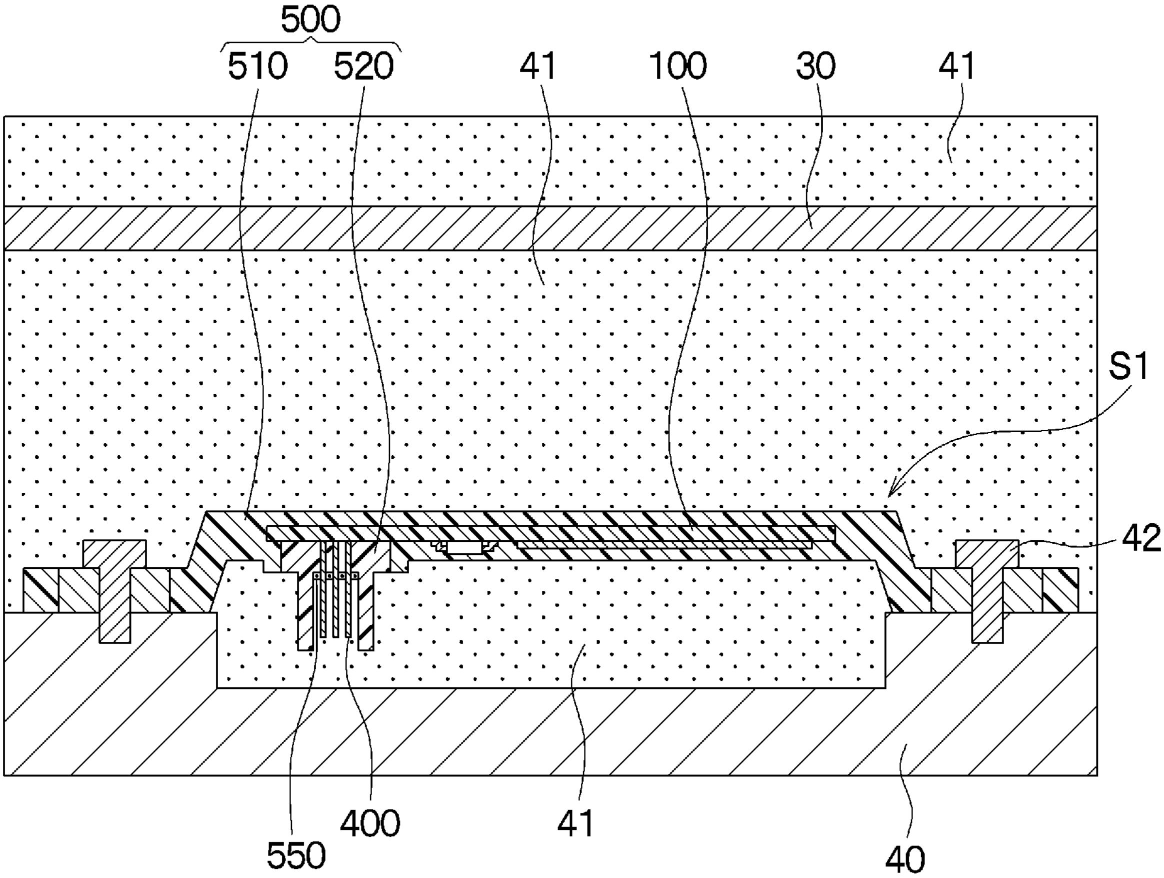

# FIG. 50

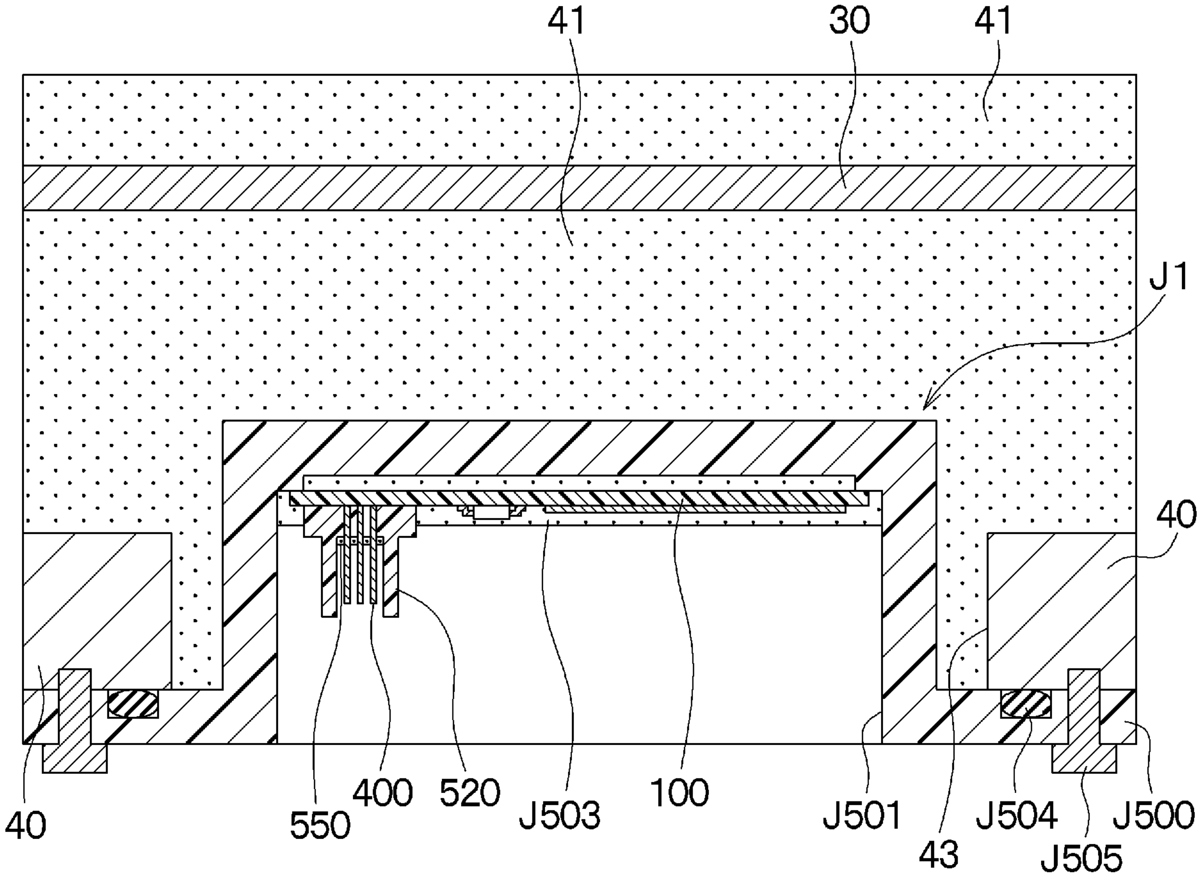


# FIG. 51A

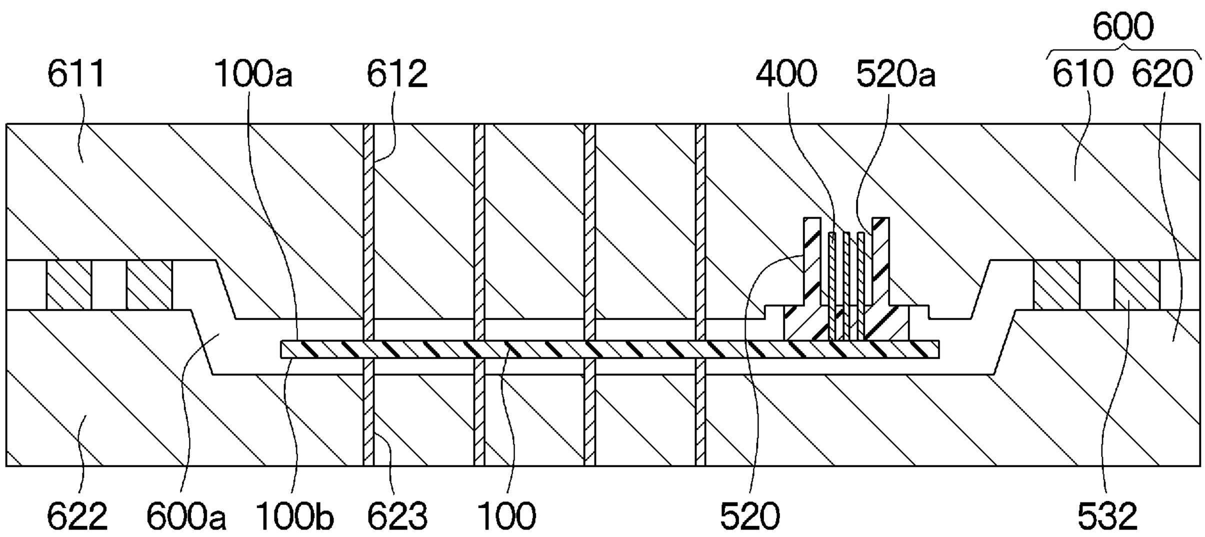

FIG. 51B

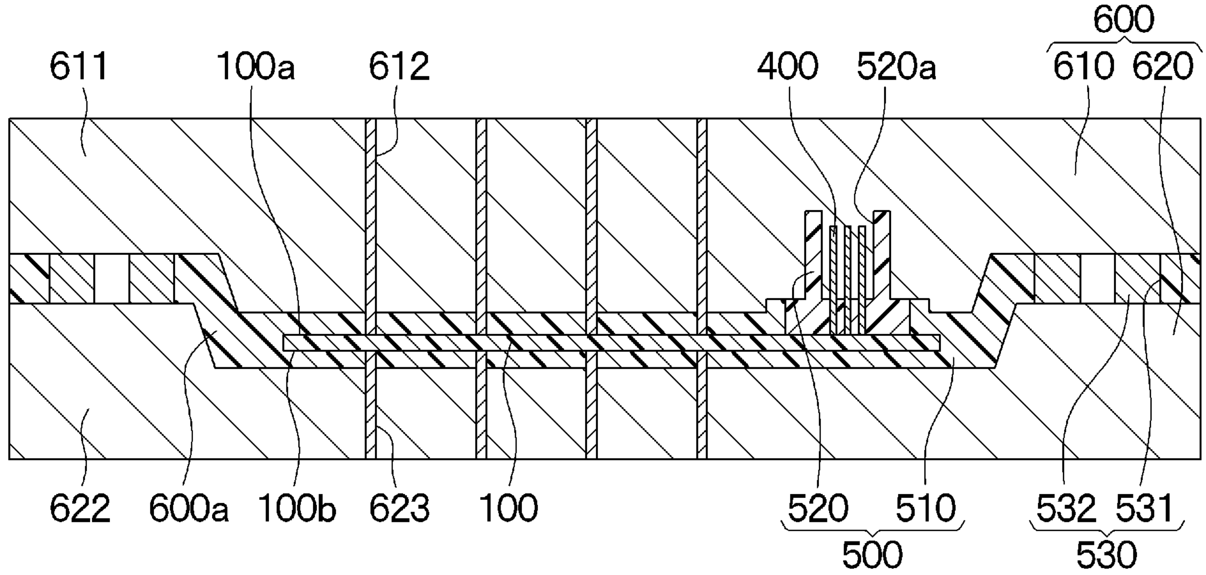


FIG. 51C

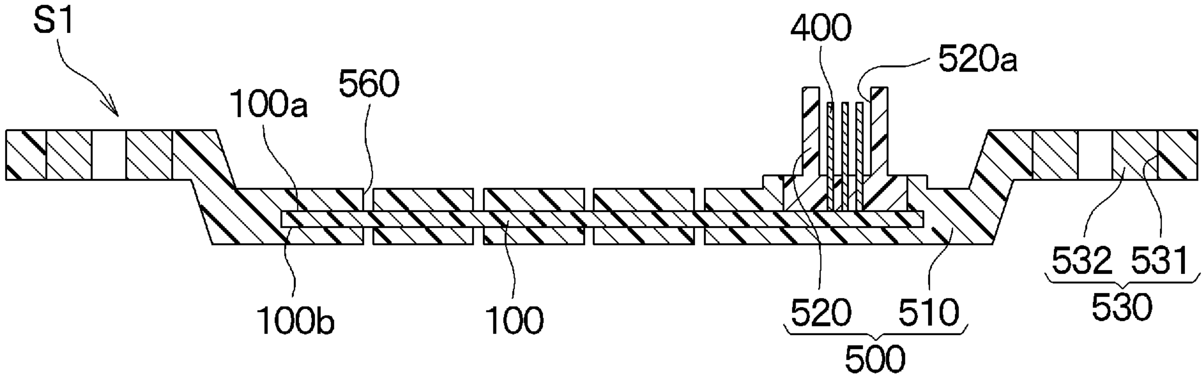


FIG. 52

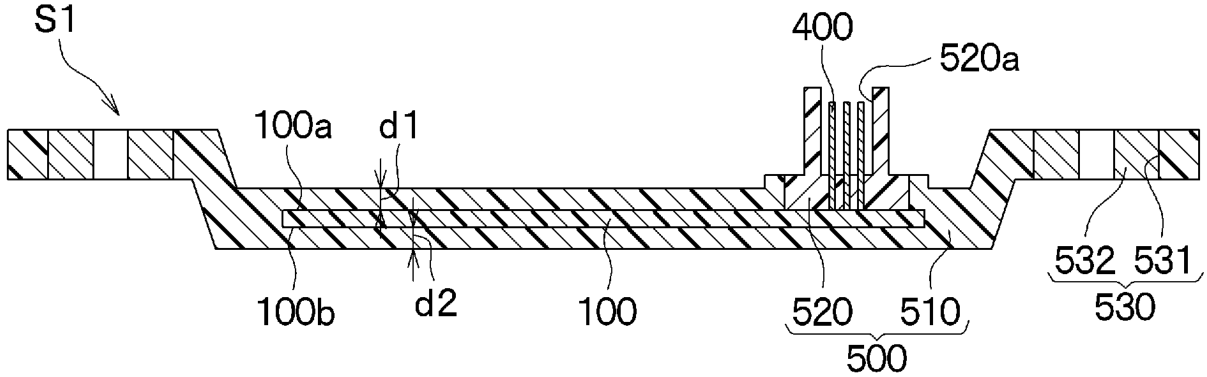

FIG. 53

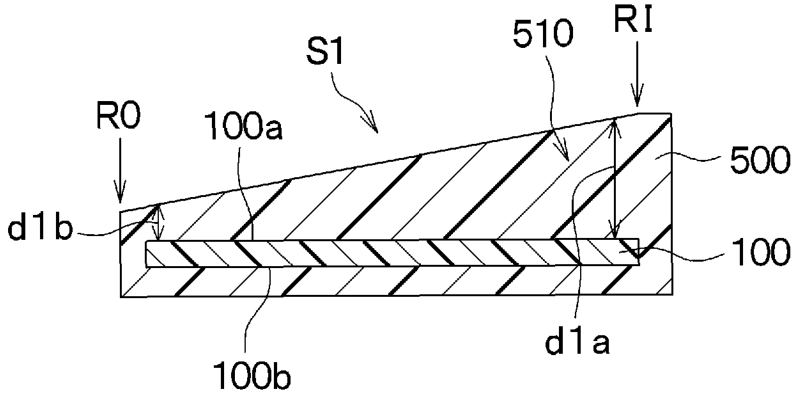


FIG. 54

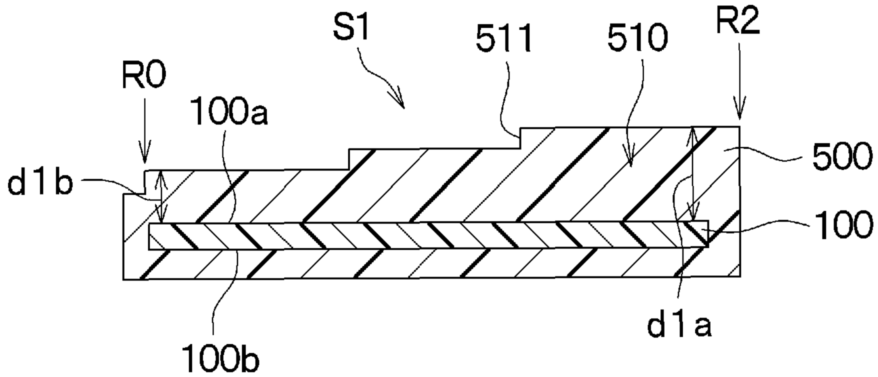


FIG. 55

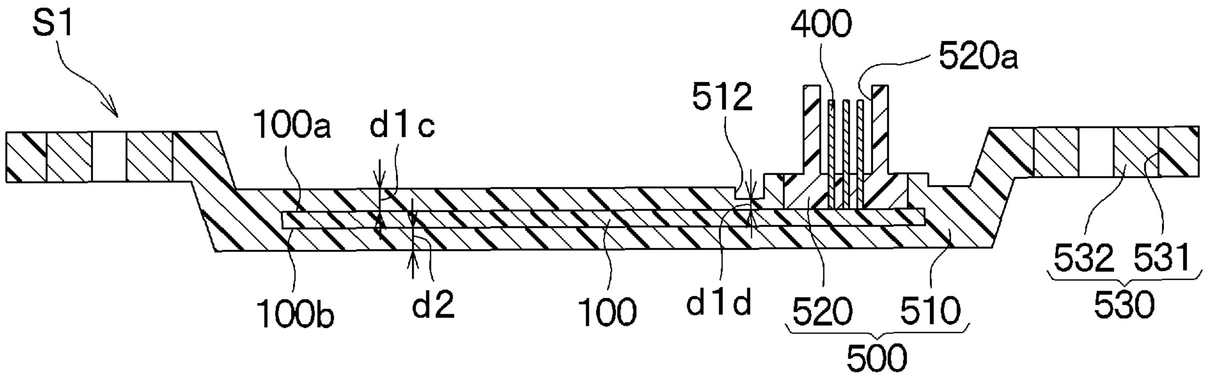

FIG. 56

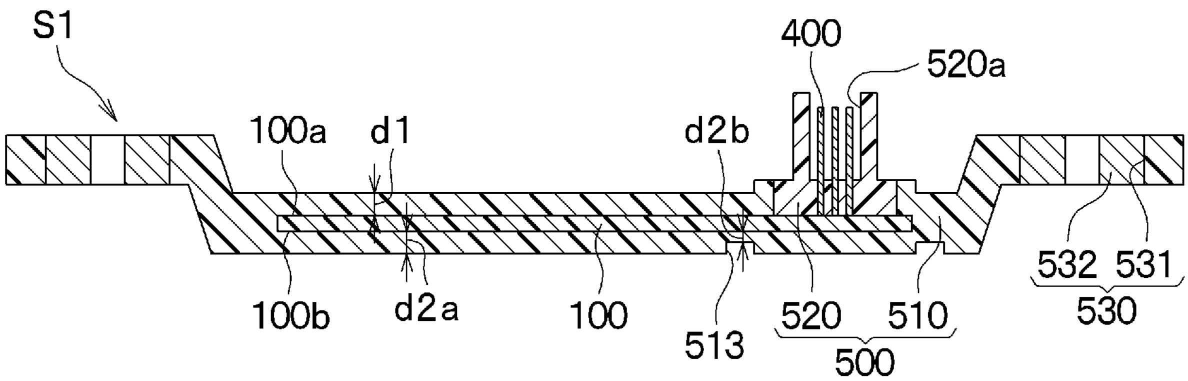


FIG. 57

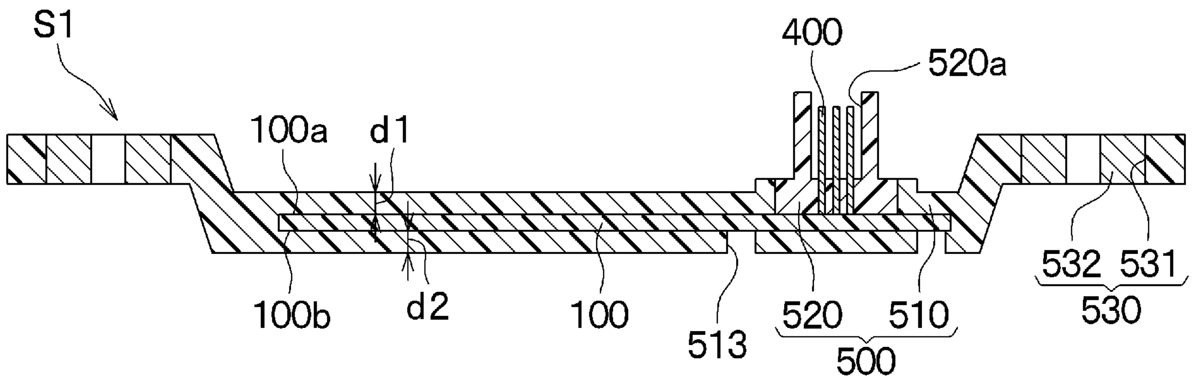


FIG. 58

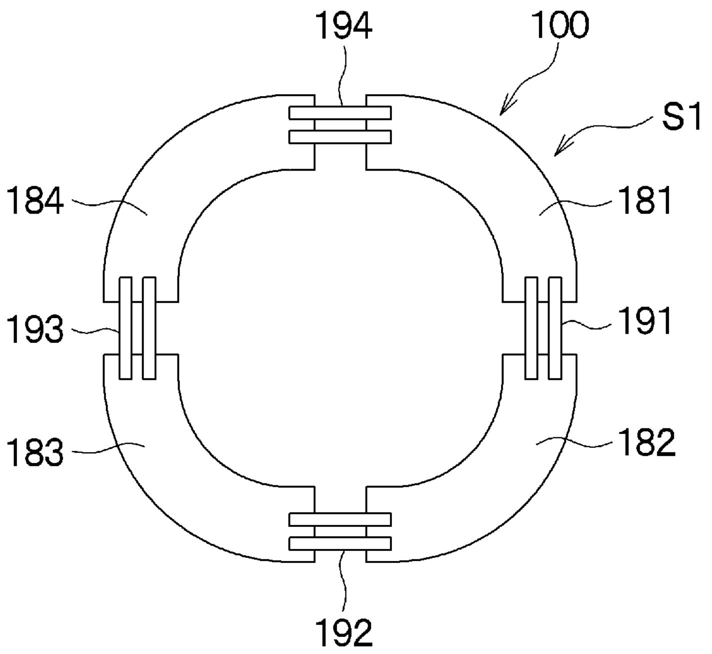

FIG. 59

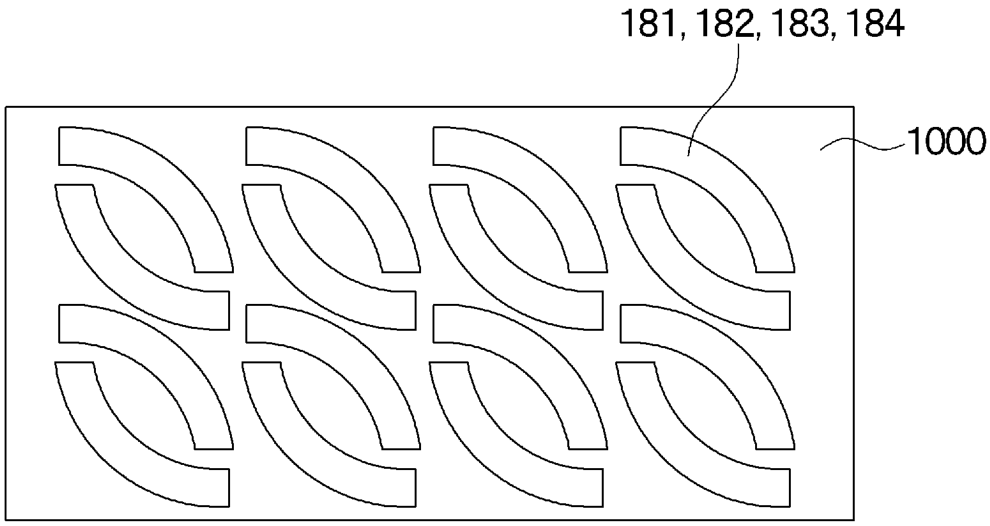


FIG. 60

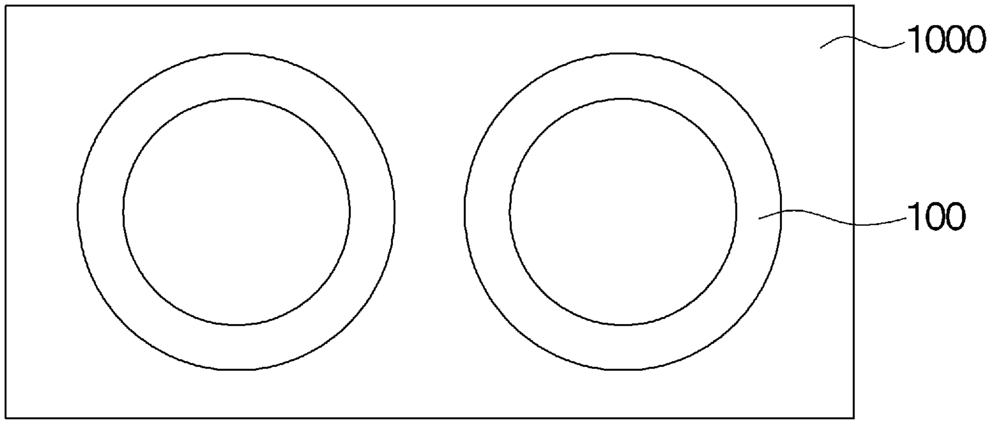

FIG. 61

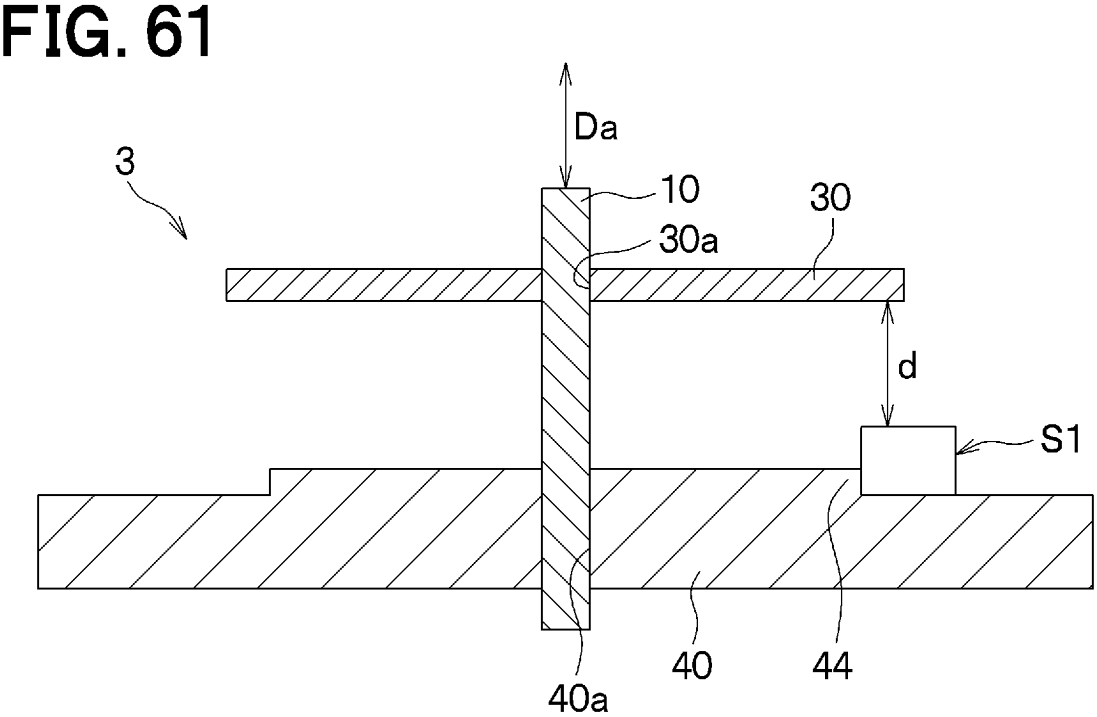


FIG. 62

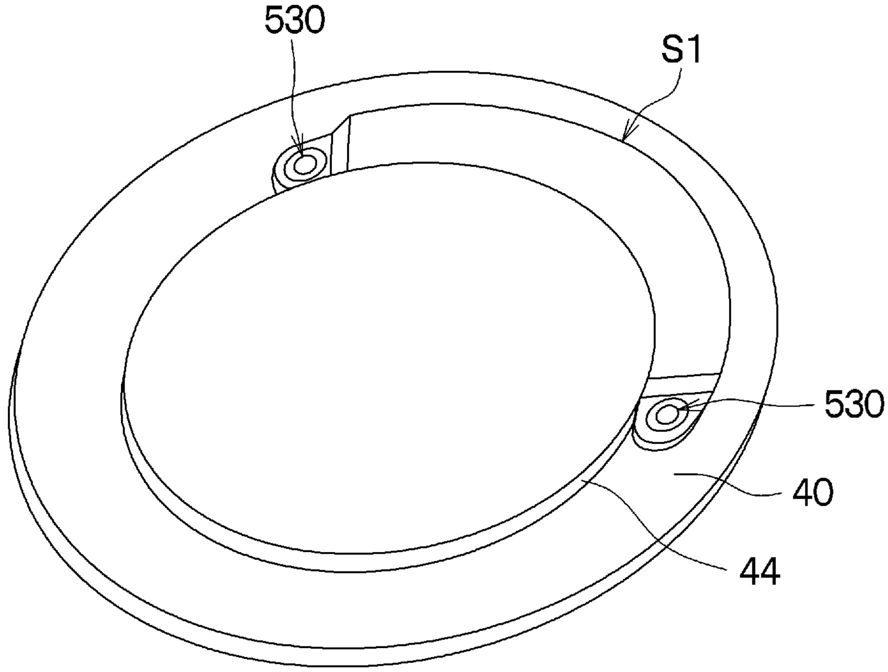

FIG. 63

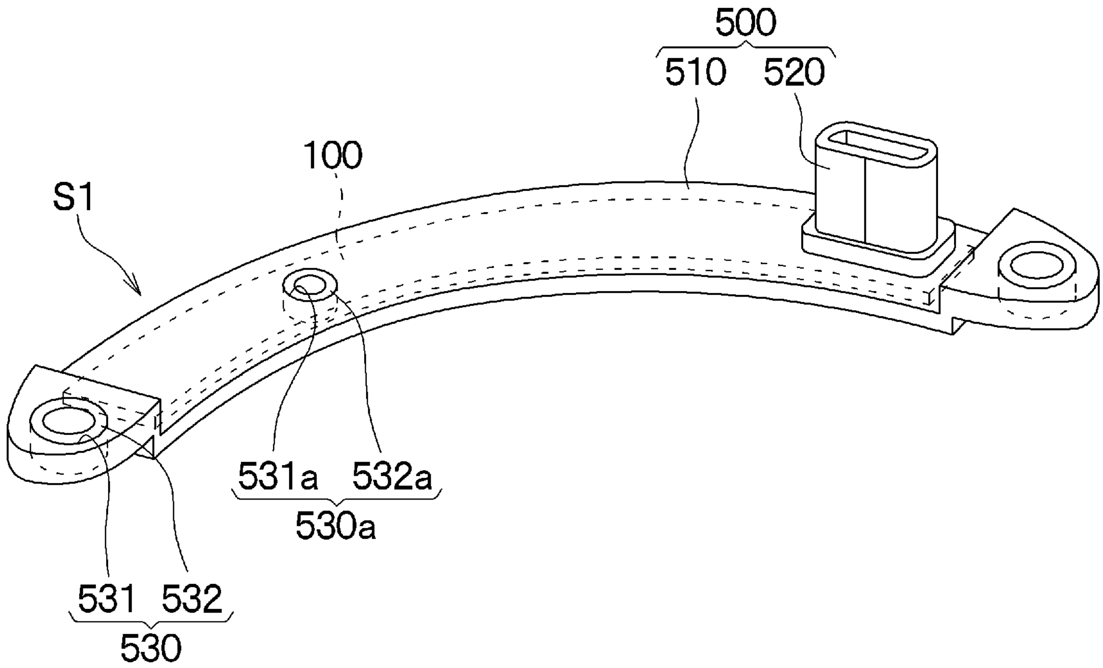

FIG. 64

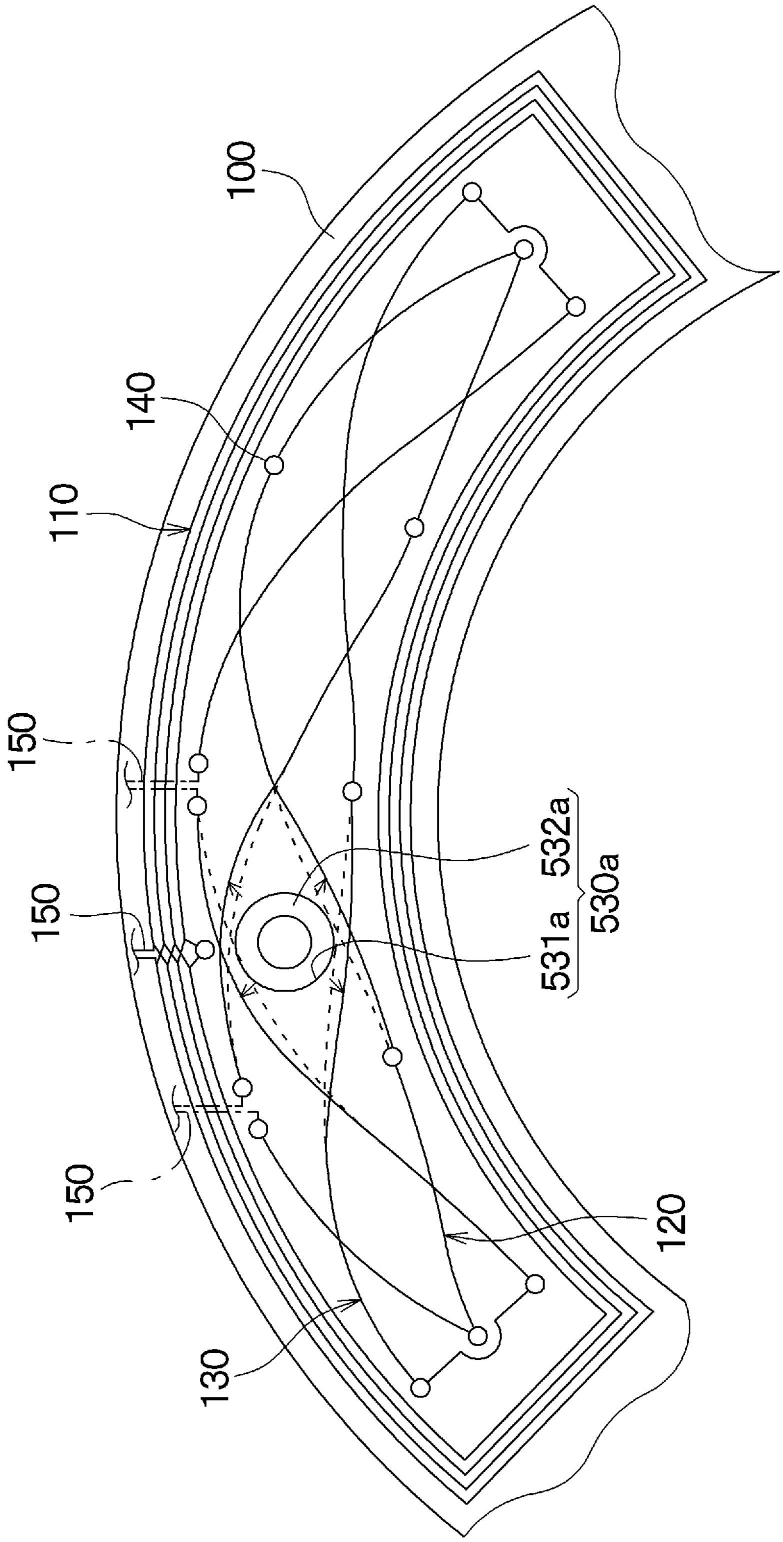

FIG. 65

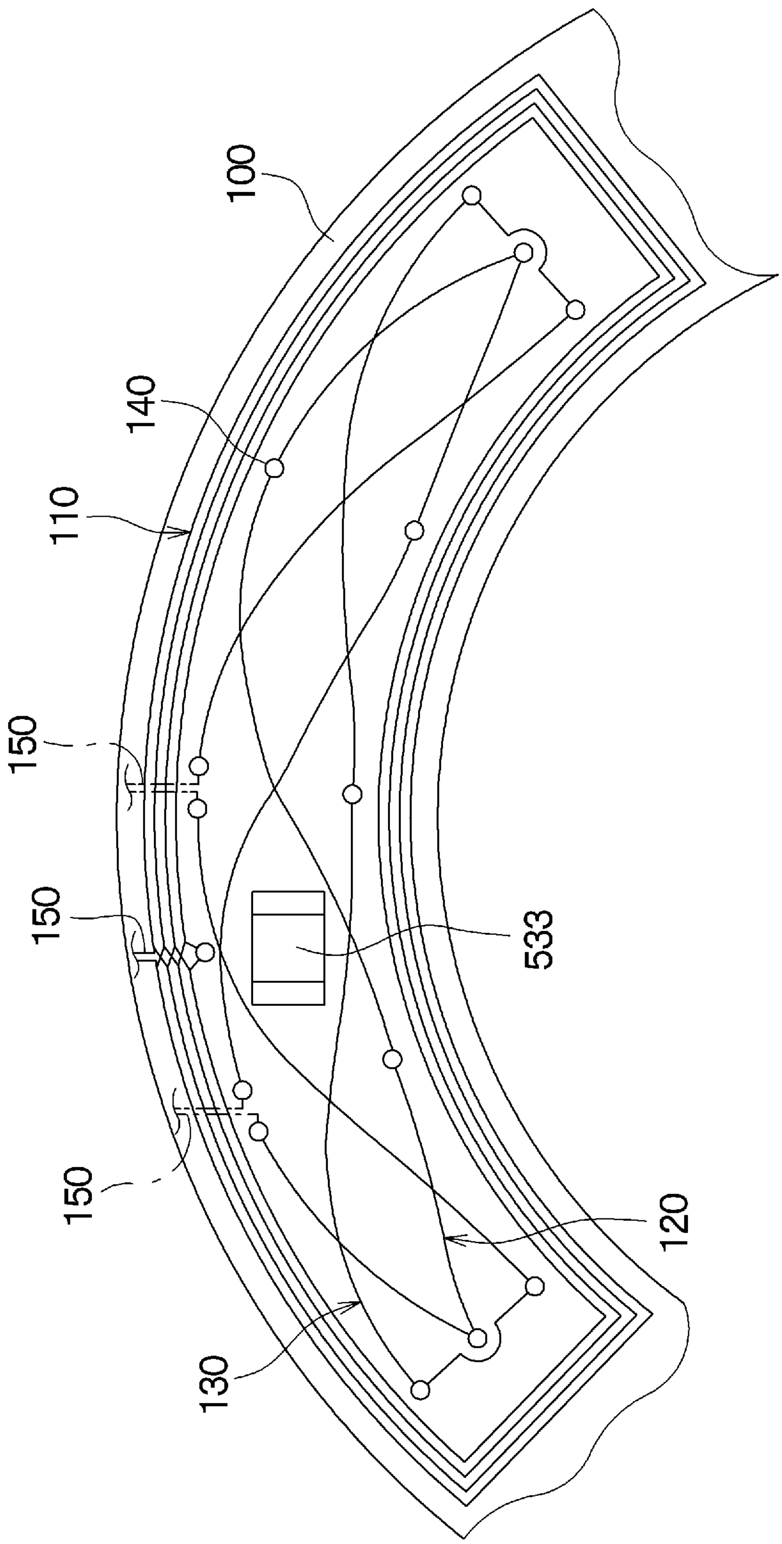

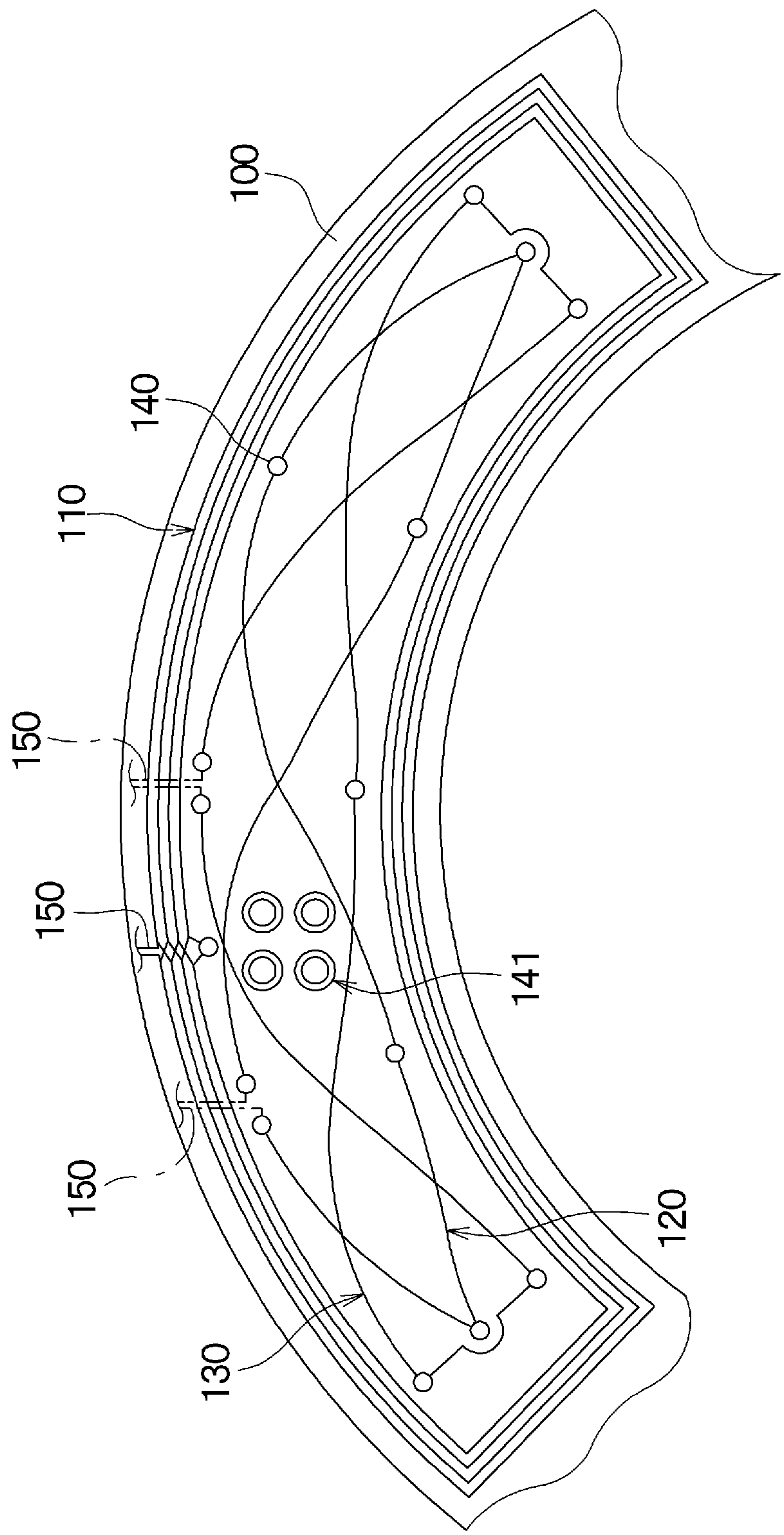


FIG. 66

FIG. 67

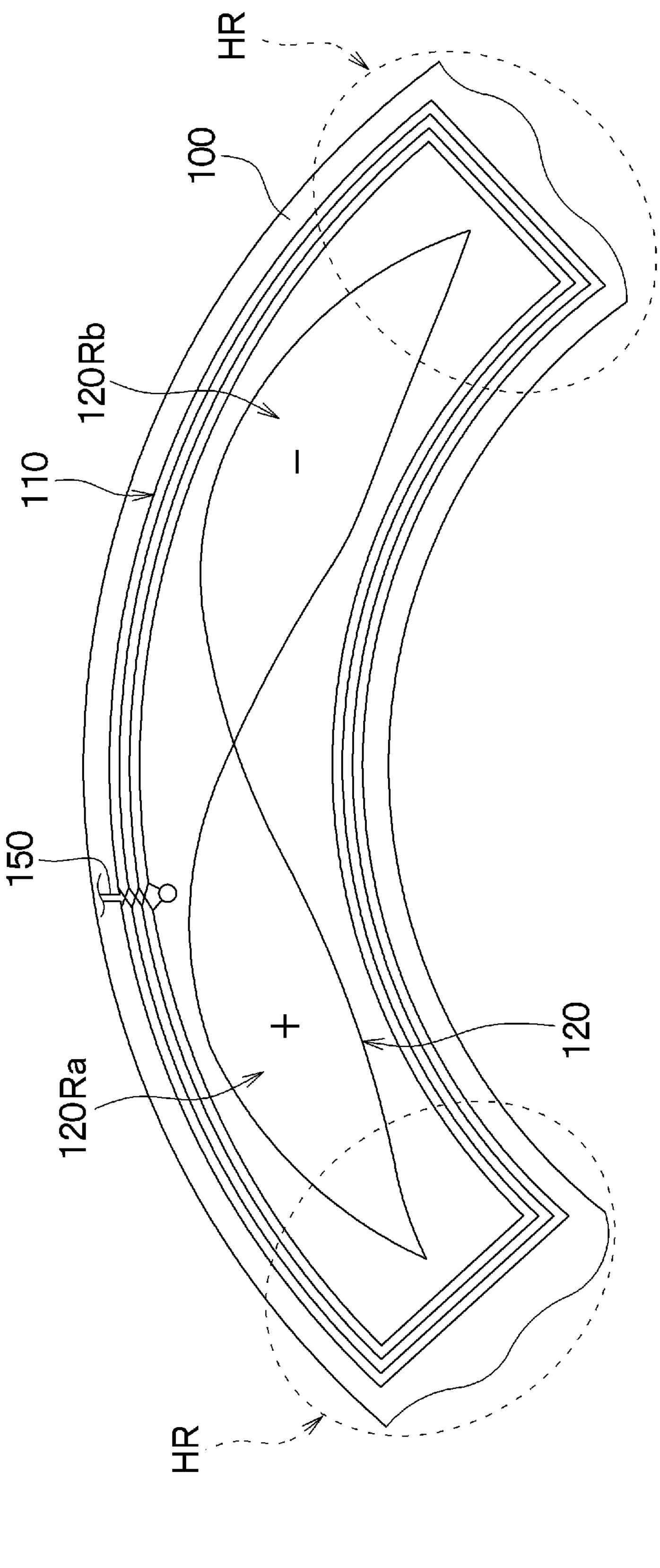

FIG. 68

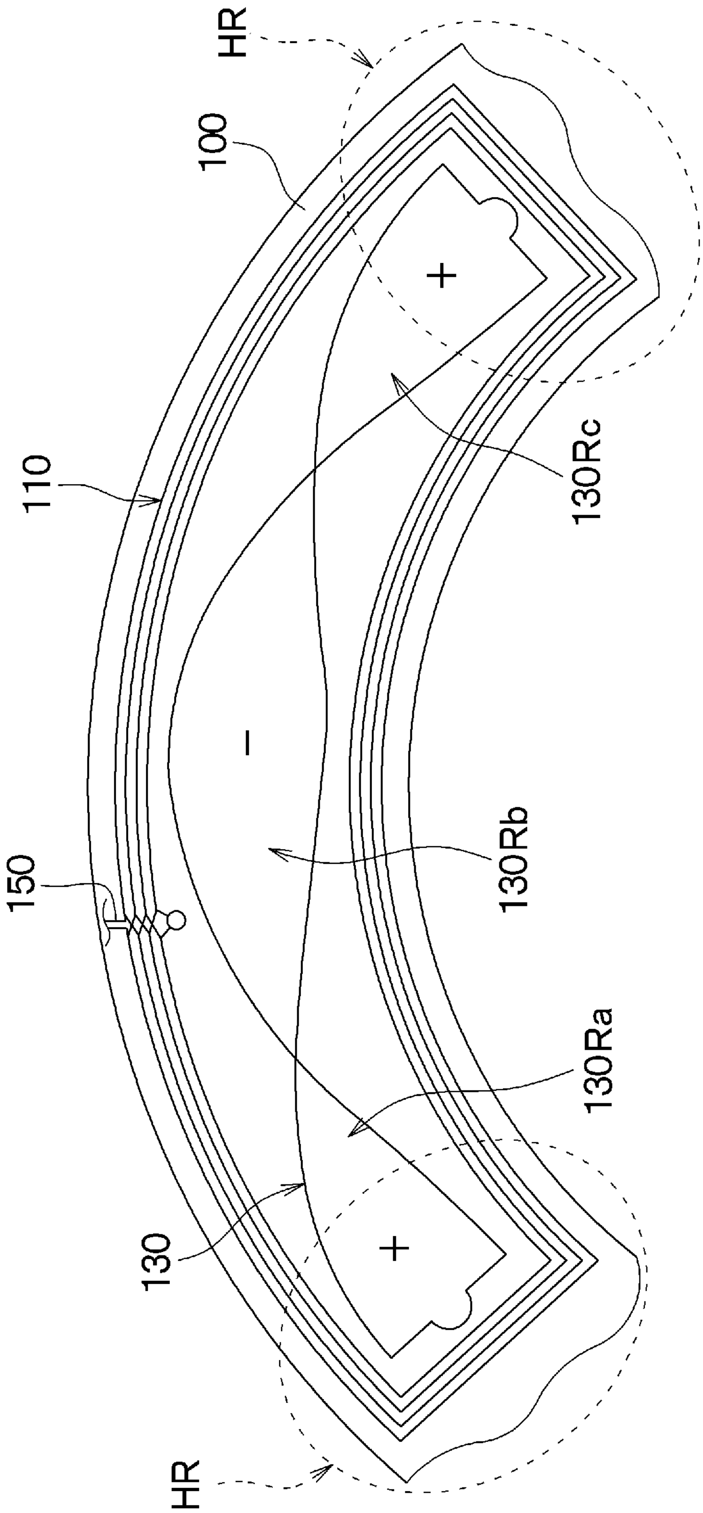

FIG. 69

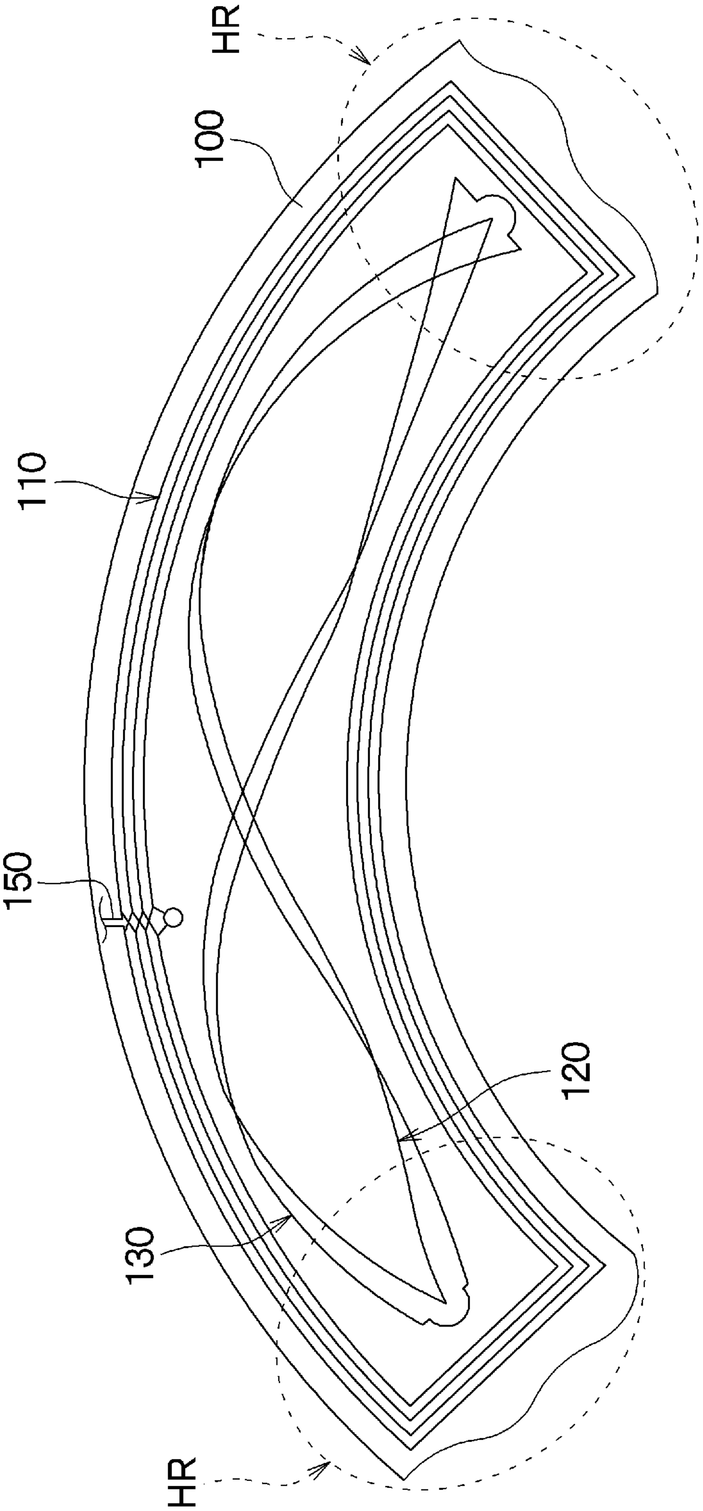

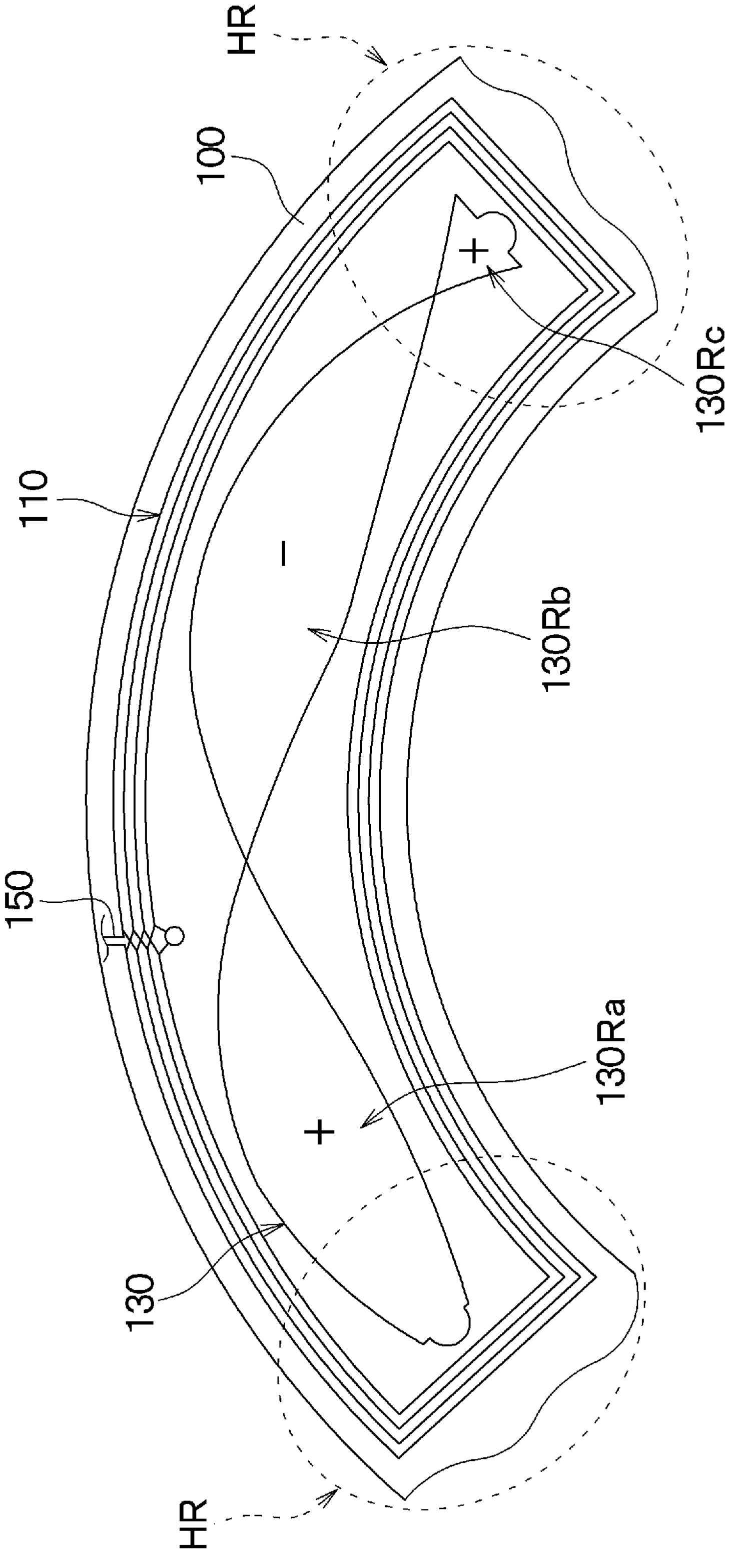


FIG. 70

FIG. 71

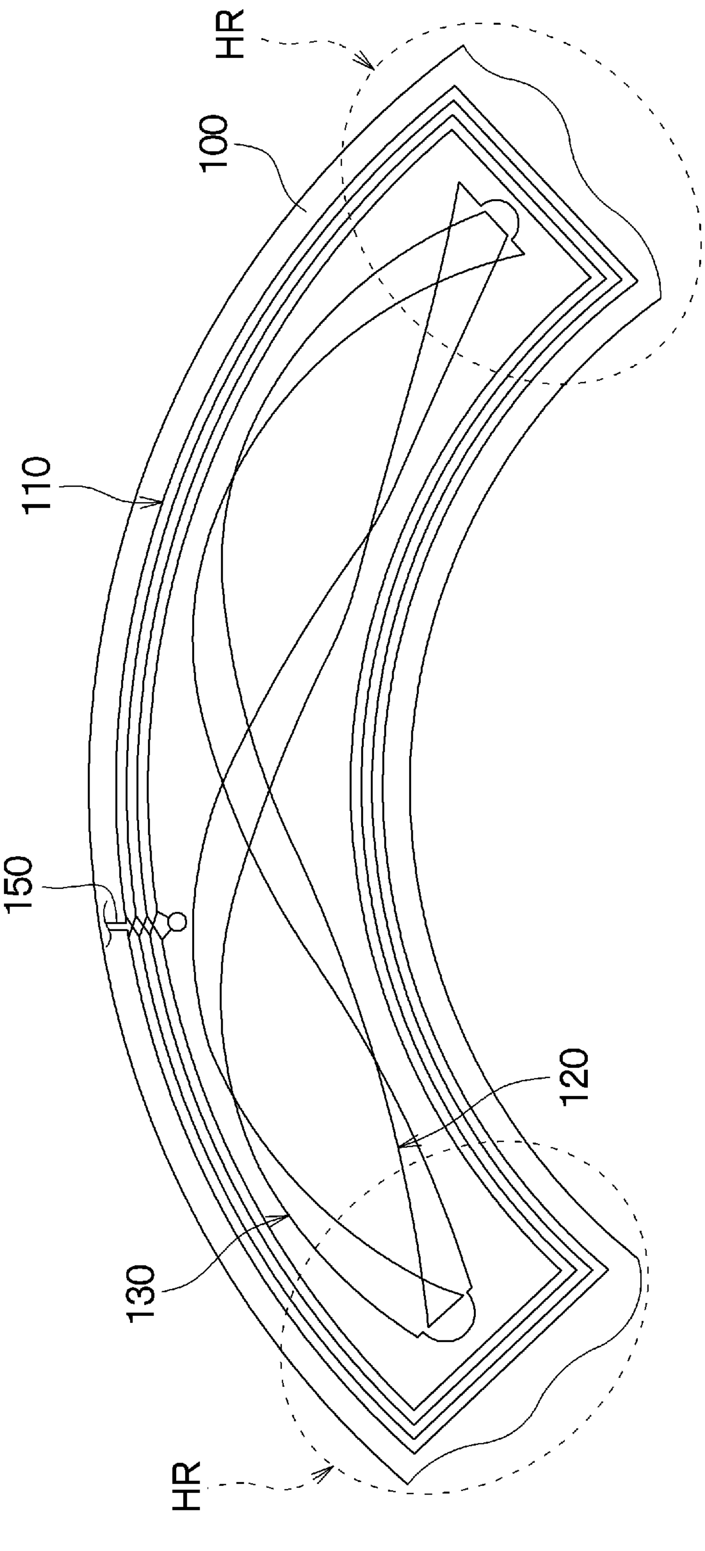

FIG. 72

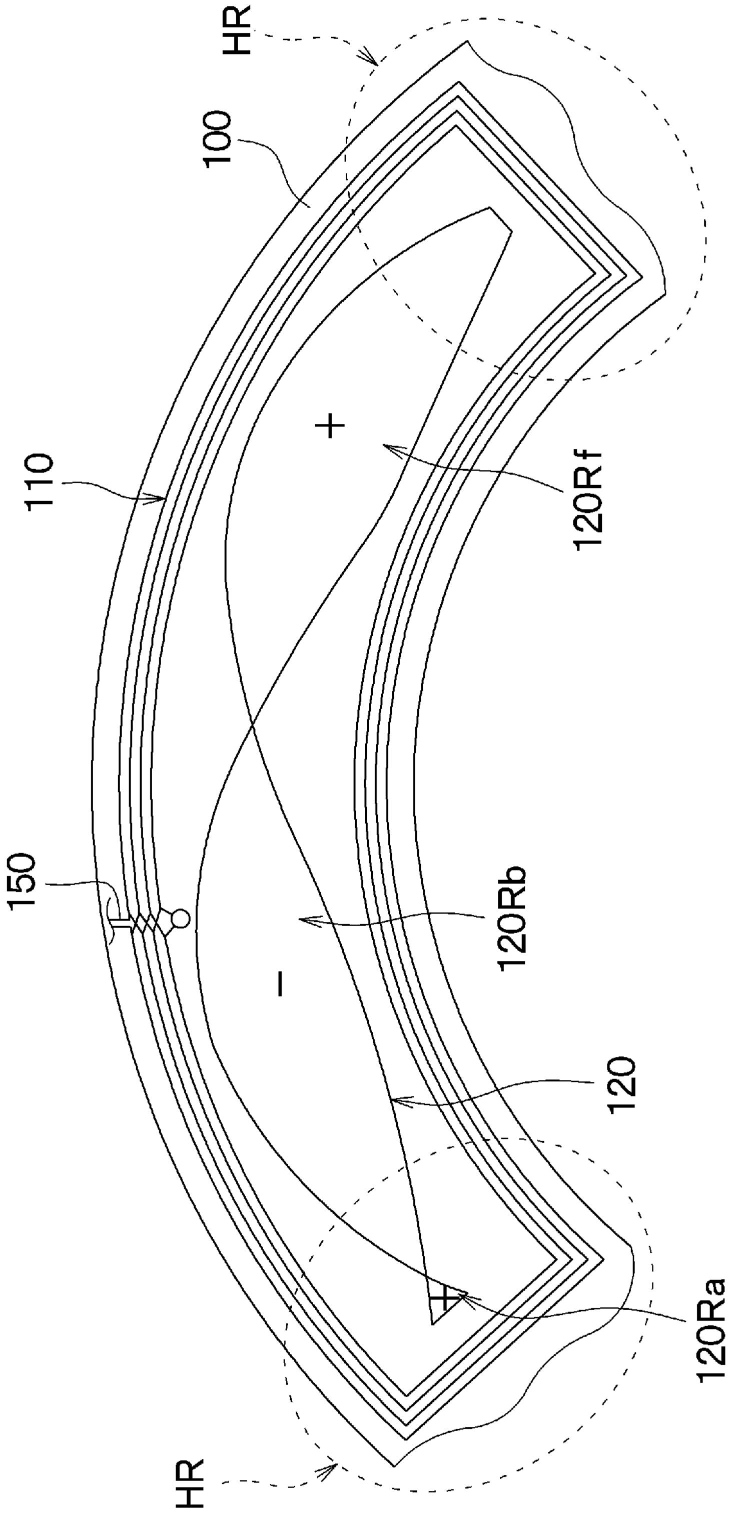

FIG. 73

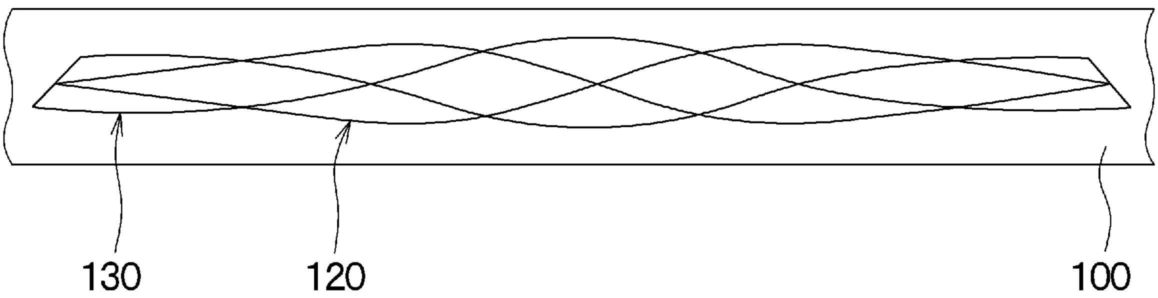


FIG. 74

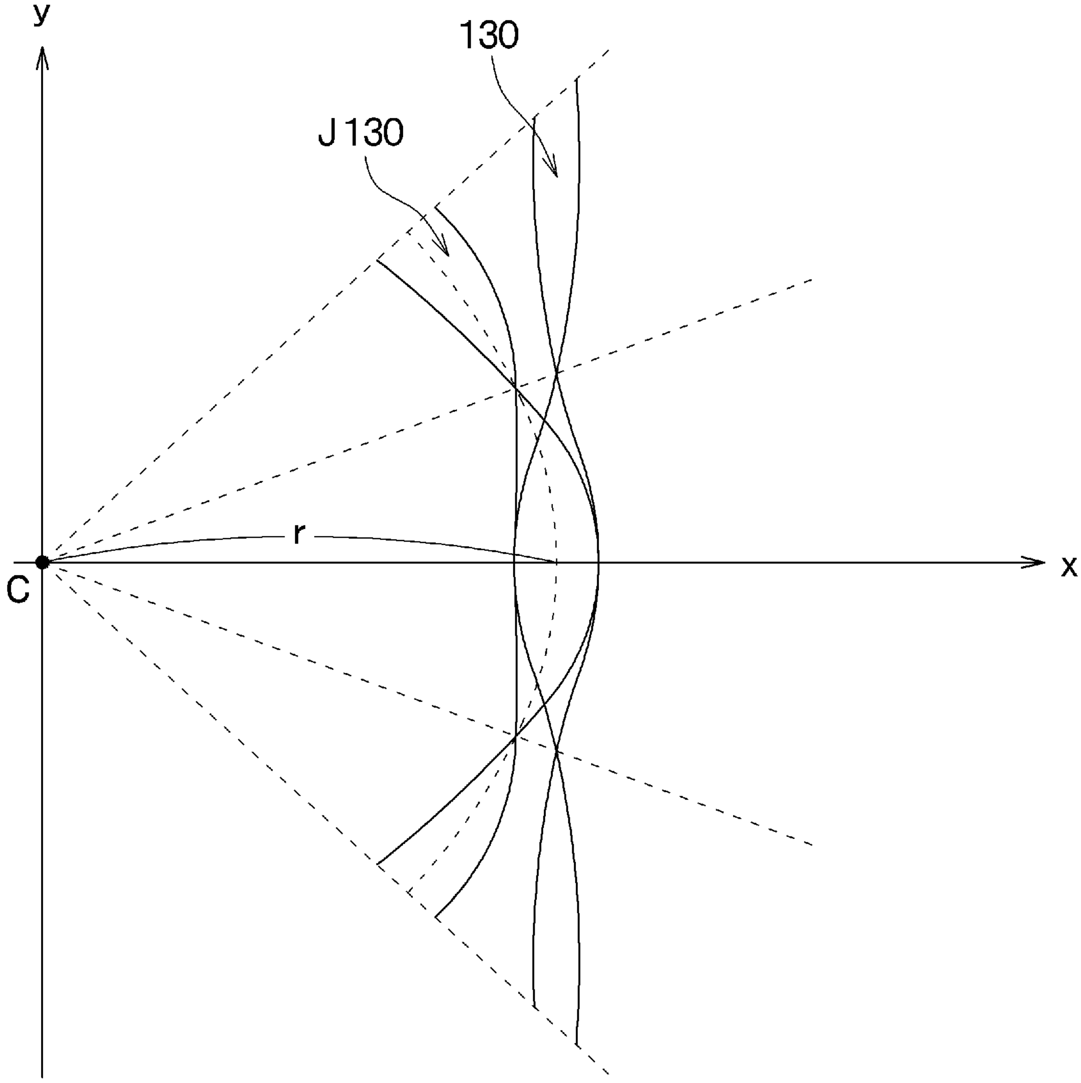

# FIG. 75A

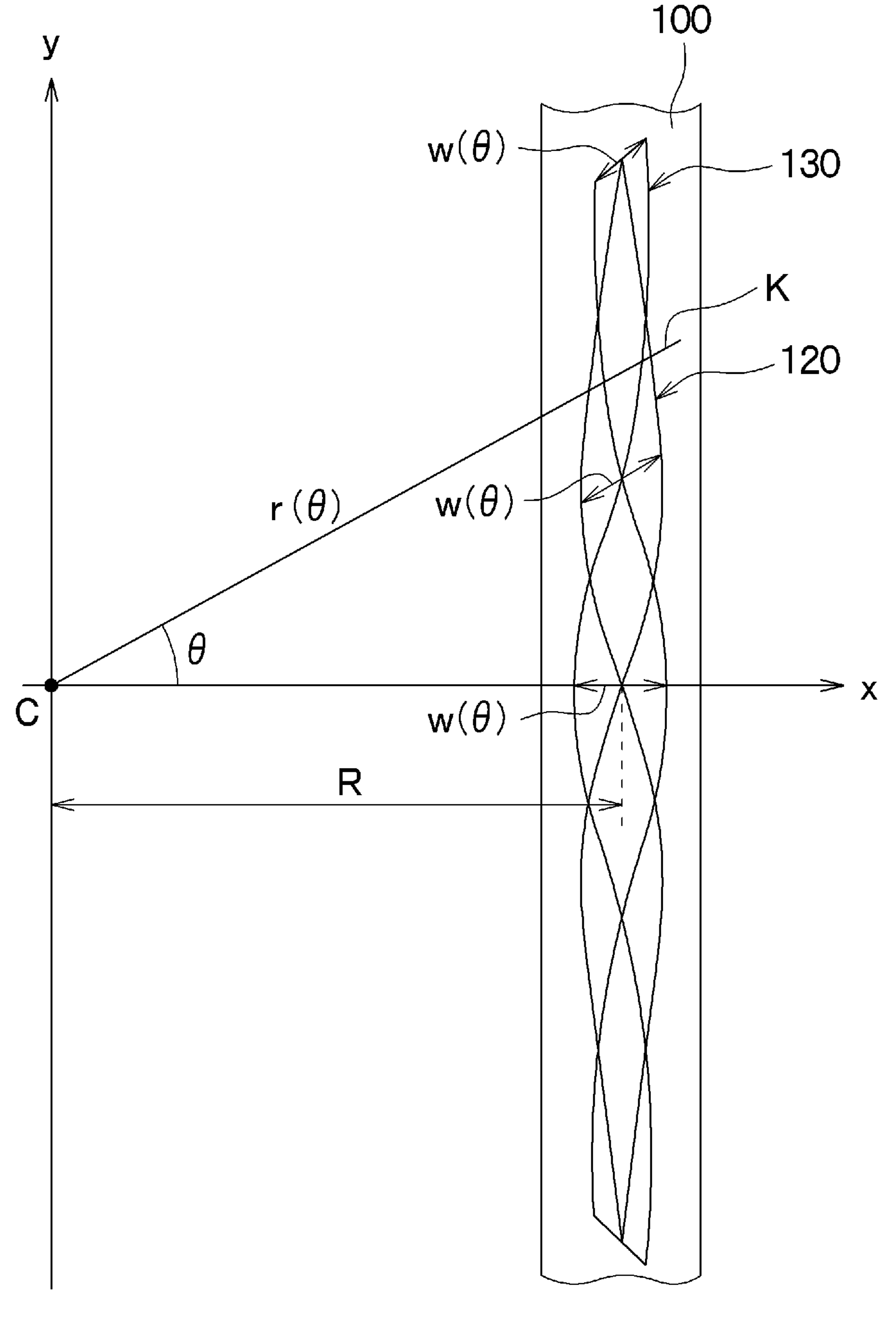

FIG. 75B

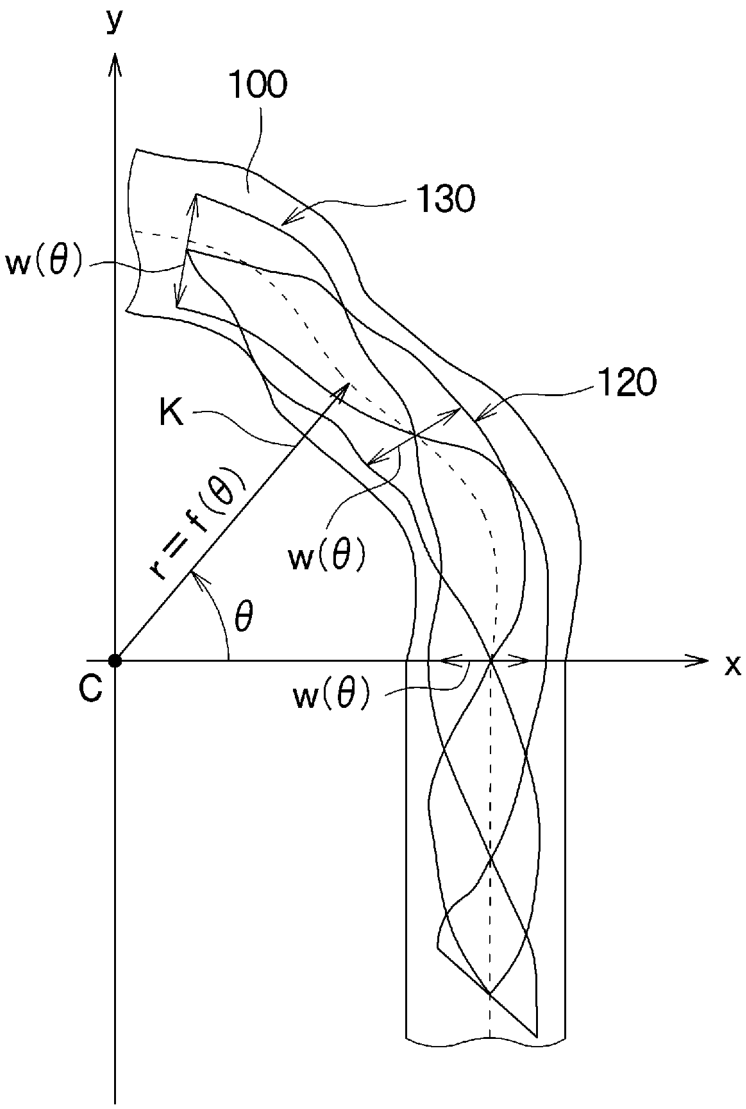

FIG. 76

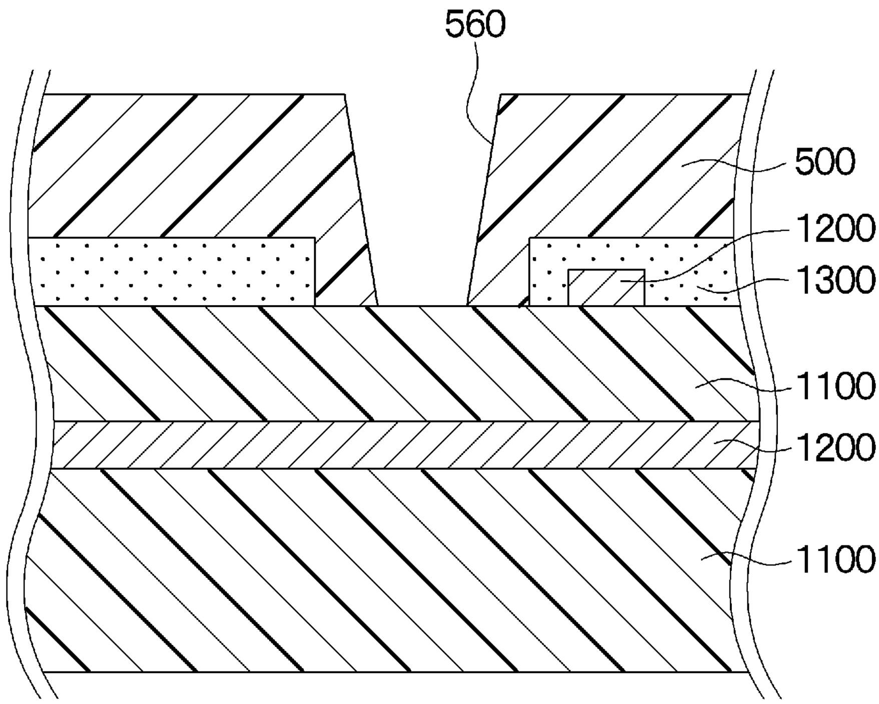

FIG. 77

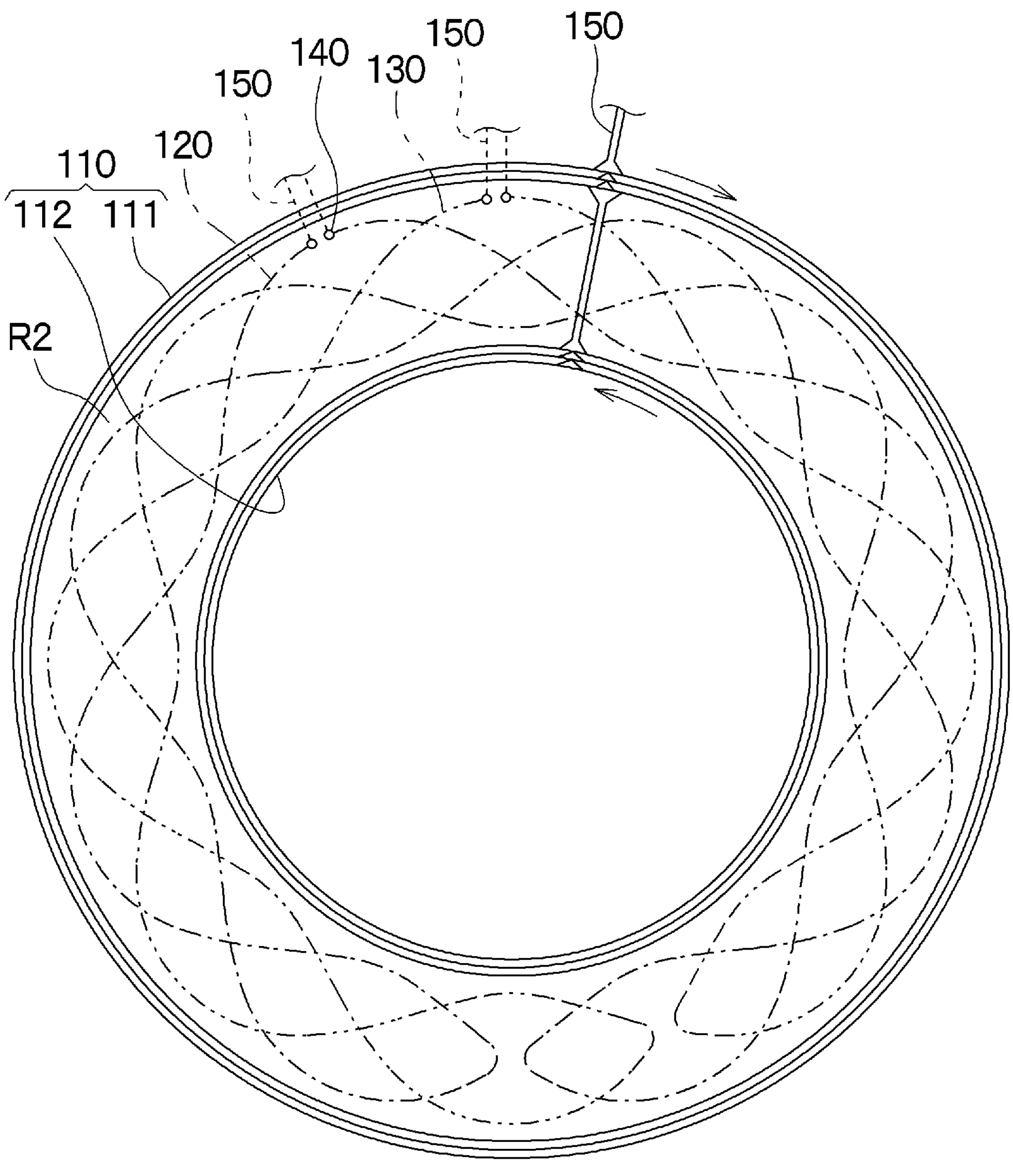

FIG. 78

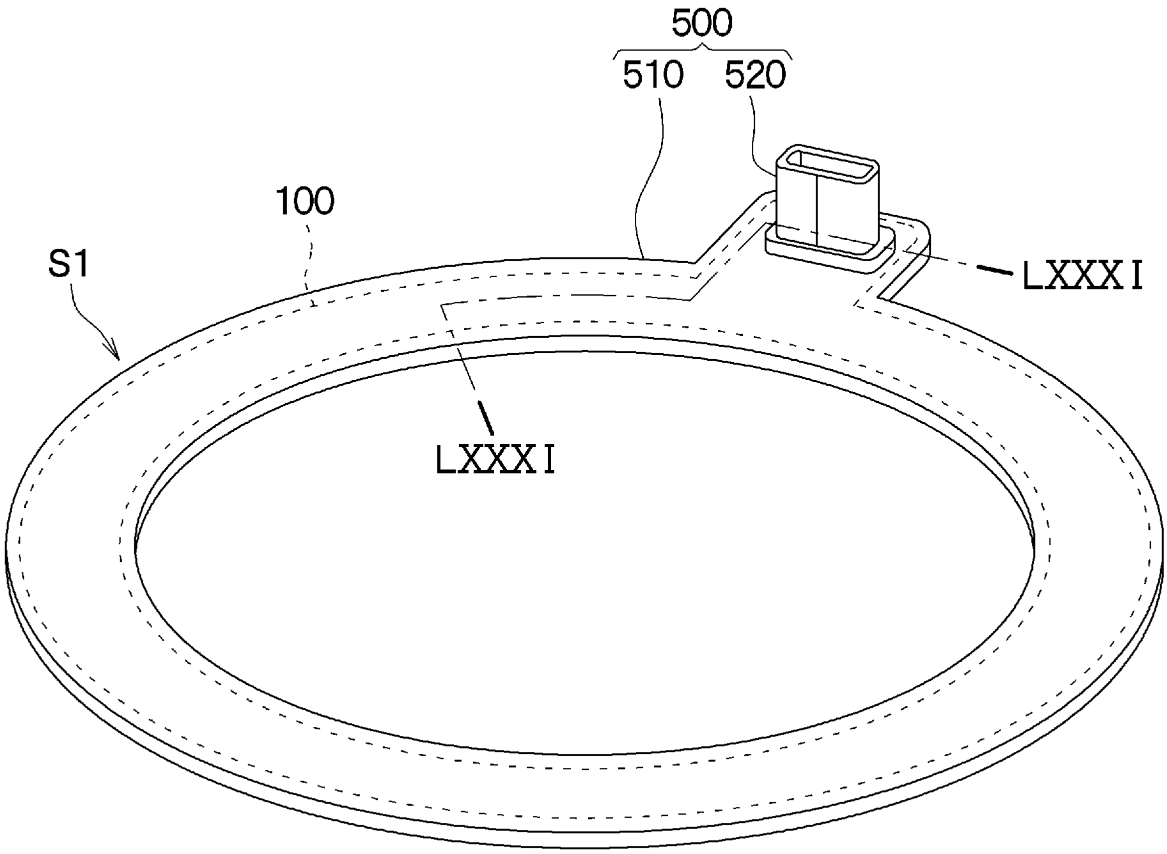

FIG. 79

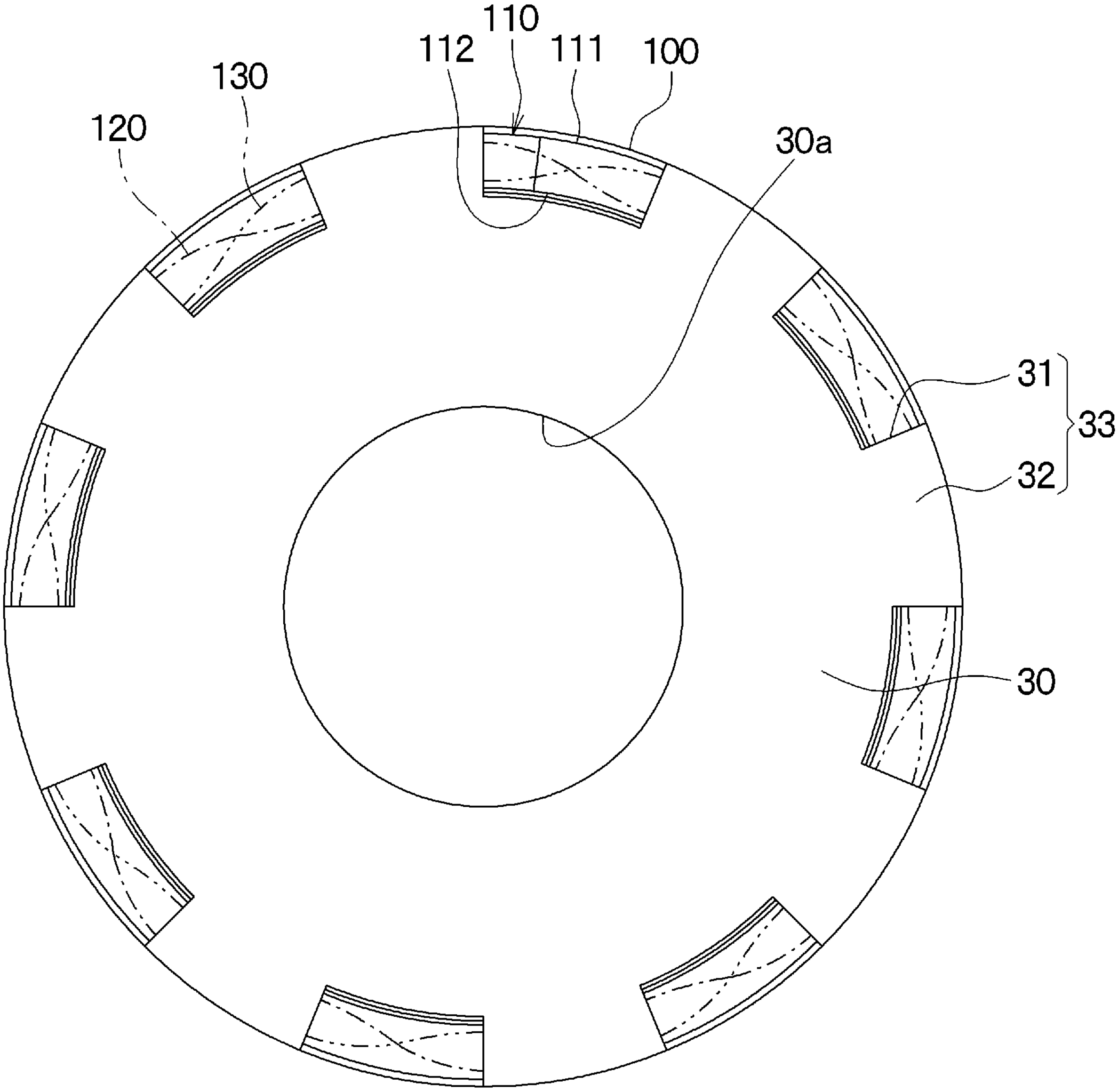

FIG. 80

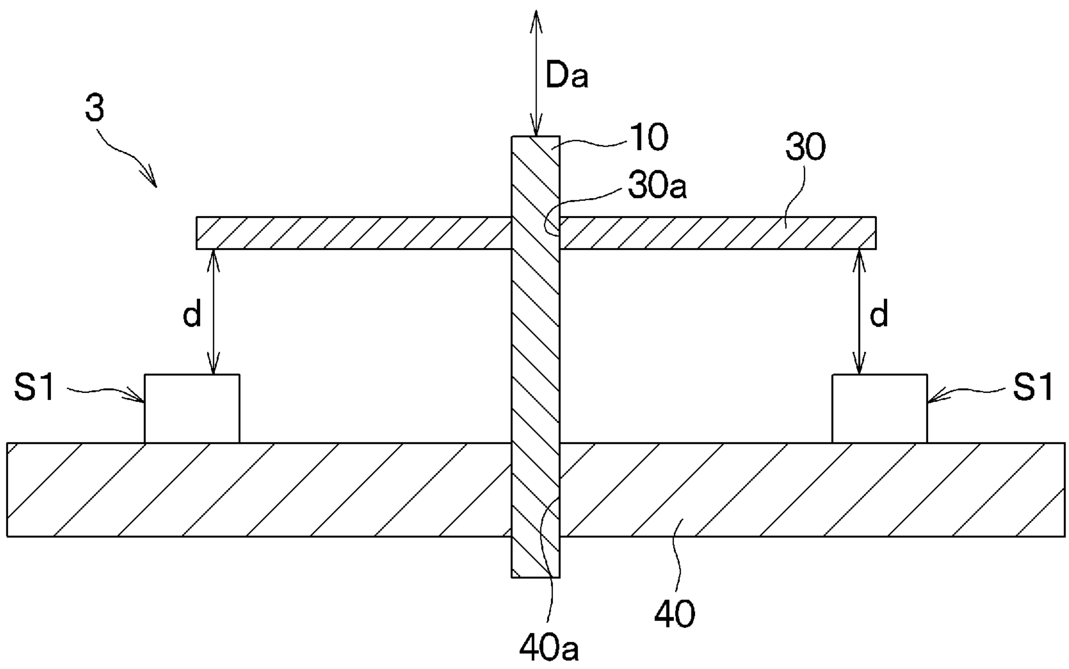
Da
3
10
30
30a
d
d
S1
S1
40
40a

FIG. 81

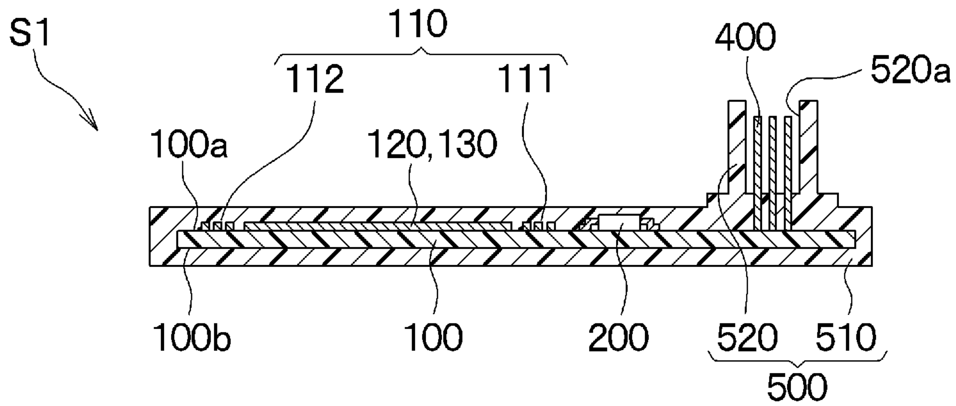
S1
110
112
111
400
520a
100a
120,130
100b
100
200
520
510
500

FIG. 82

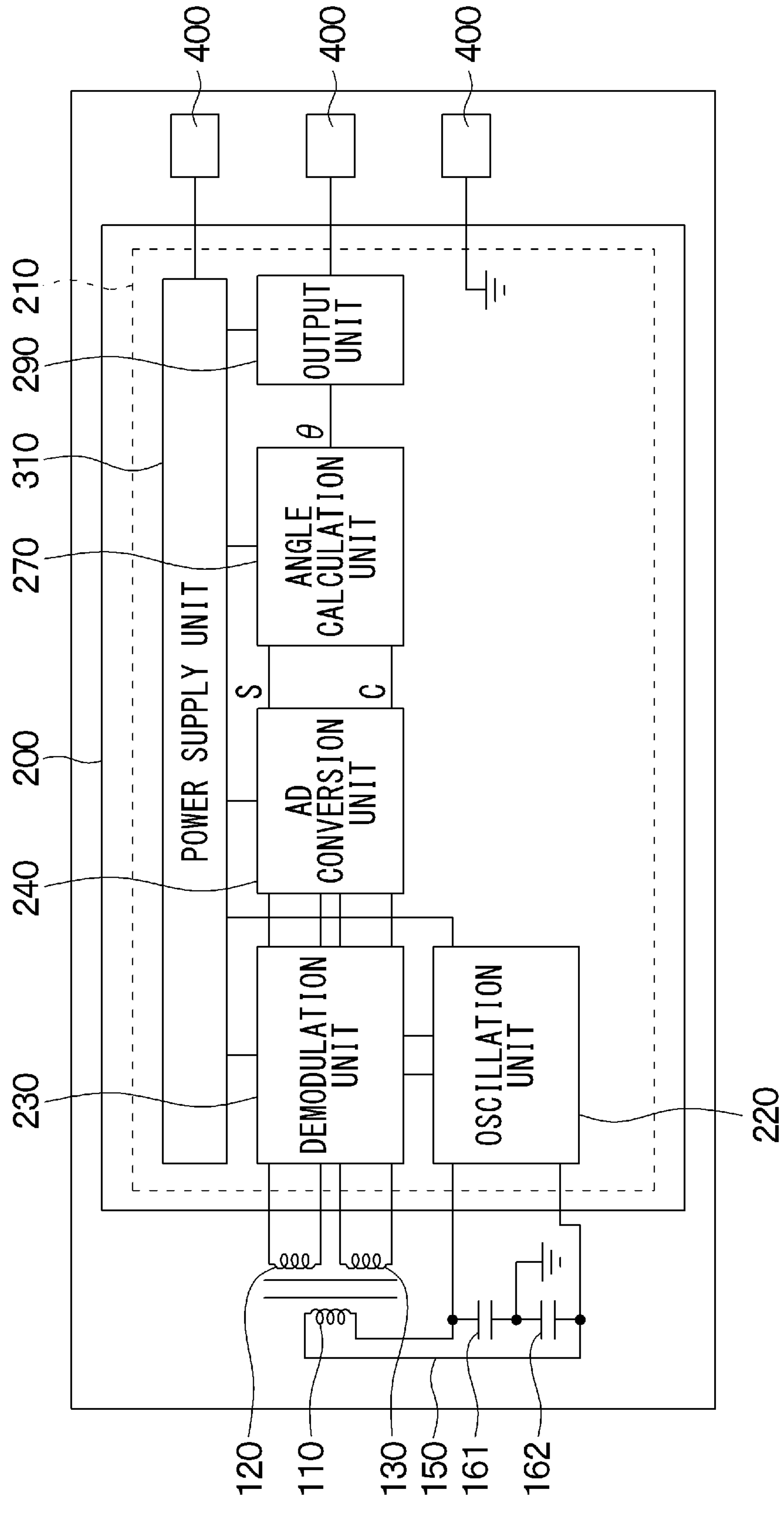
400
400
400
210
290
310
270
200
240
230
220
OUTPUT UNIT
θ
ANGLE CALCULATION UNIT
S
C
POWER SUPPLY UNIT
AD CONVERSION UNIT
DEMODULATION UNIT
OSCILLATION UNIT
120
110
130
150
161
162

FIG. 83

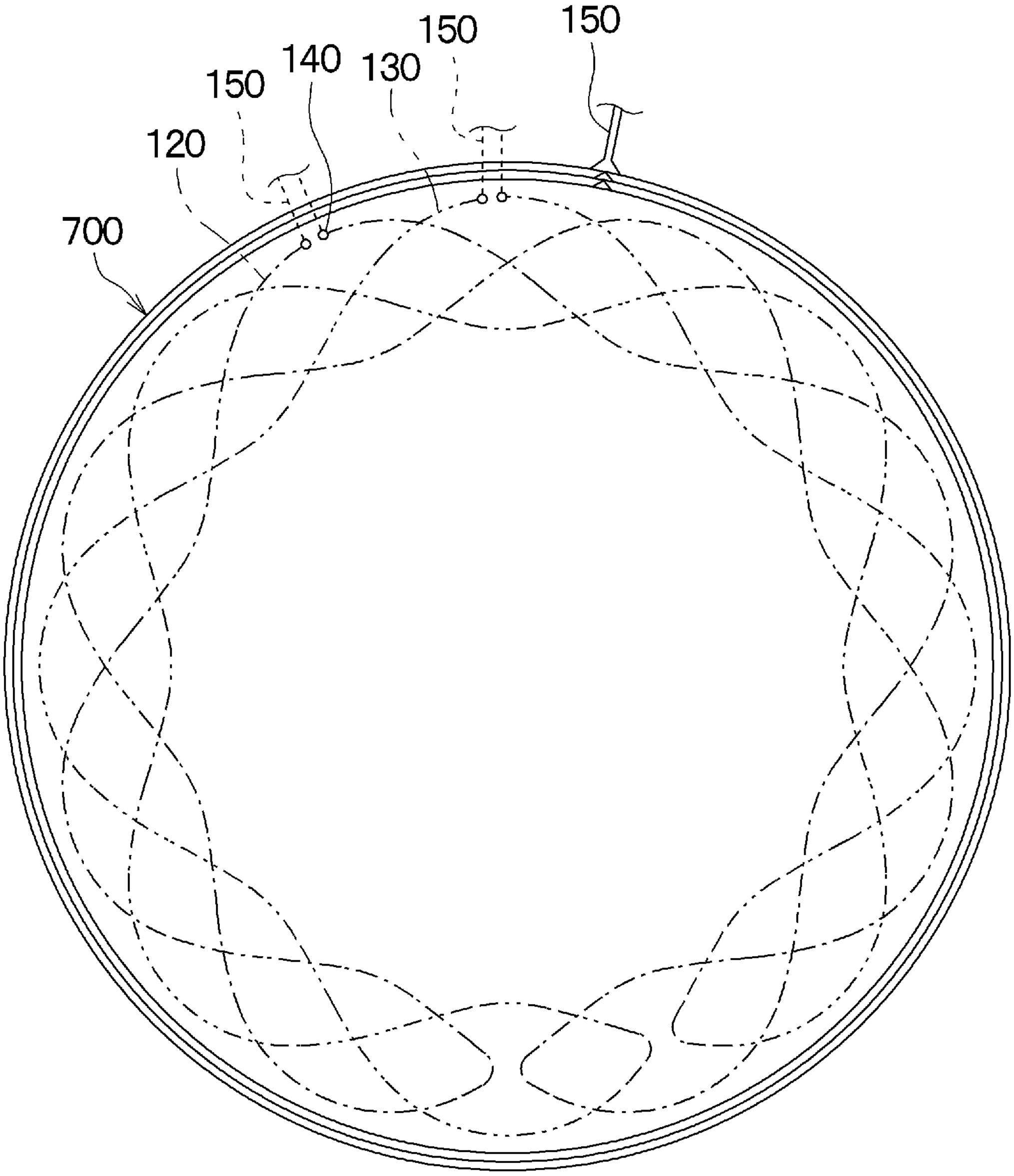

# FIG. 84

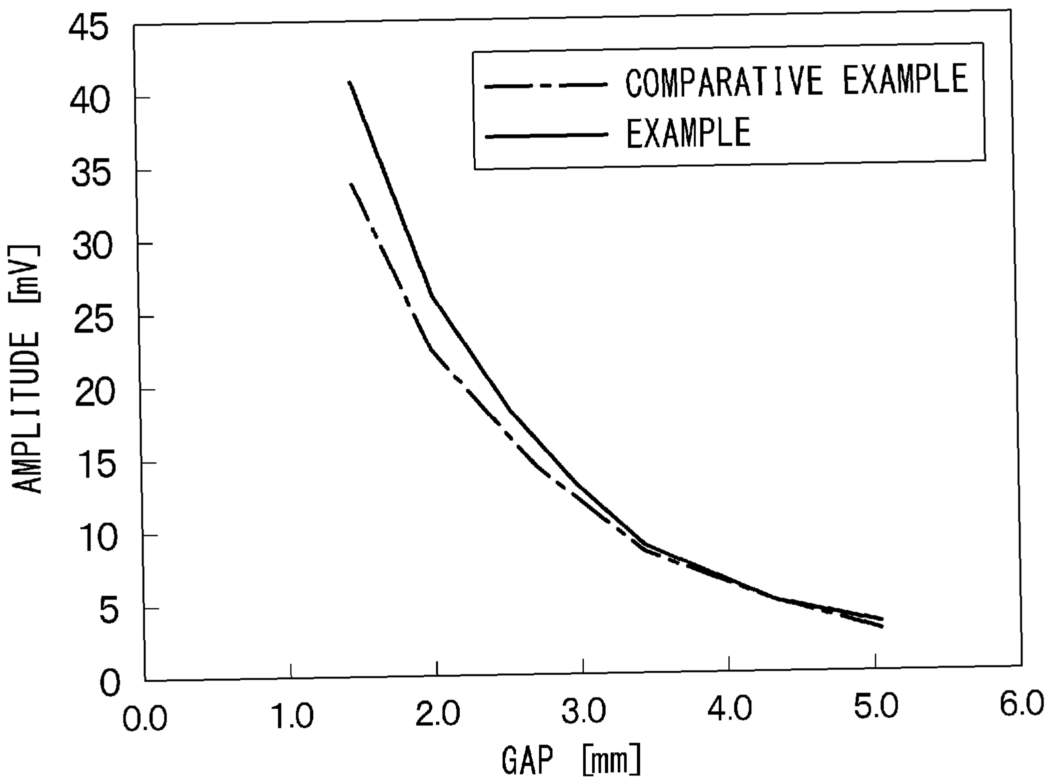
COMPARATIVE EXAMPLE
EXAMPLE
AMPLITUDE [mV]
45
40
35
30
25
20
15
10
5
0
0.0
1.0
2.0
3.0
4.0
5.0
6.0
GAP [mm]

FIG. 85

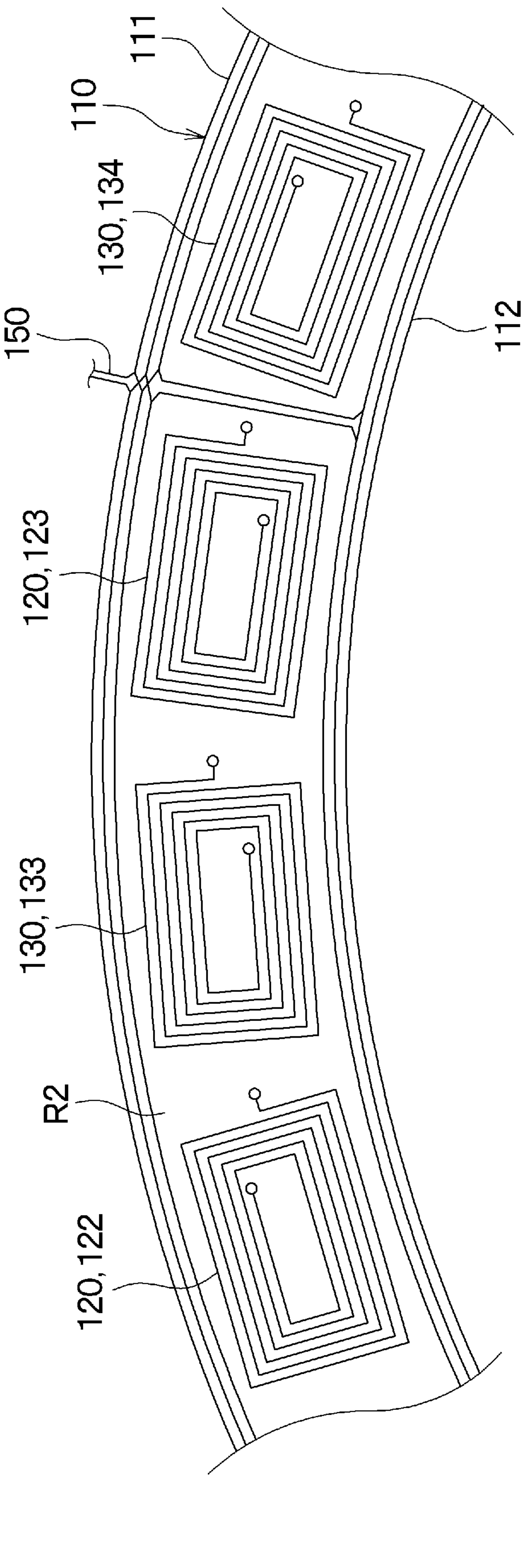

**INTERNATIONAL SEARCH REPORT**

International application No.
**PCT/JP2023/026265**

**A. CLASSIFICATION OF SUBJECT MATTER**

***G01D 5/20***(2006.01)i; ***G01B 7/30***(2006.01)i
FI: G01D5/20 110F; G01D5/20 110Q; G01B7/30 B

According to International Patent Classification (IPC) or to both national classification and IPC

**B. FIELDS SEARCHED**

Minimum documentation searched (classification system followed by classification symbols)

G01D5/20; G01B7/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2019/0063954 A1 (KSR IP HOLDINGS, LLC) 28 February 2019 (2019-02-28) paragraphs [0004]-[0049], fig. 1-4B | 1-13 |
| Y | US 2021/0302207 A1 (MELEXIS TECHNOLOGIES SA) 30 September 2021 (2021-09-30) paragraphs [0096], [0097], fig. 10-12 | 1-13 |
| Y | JP 2019-101041 A (DR. JOHANNES HEIDENHAIN GMBH) 24 June 2019 (2019-06-24) paragraph [0049], fig. 1-3, 6 | 2-10 |
| Y | JP 2015-227826 A (TOKAI RIKA CO., LTD.) 17 December 2015 (2015-12-17) paragraphs [0019]-[0021], fig. 1-3 | 4-10 |
| Y | JP 2018-503822 A (HUTCHINSON) 08 February 2018 (2018-02-08) paragraphs [0216]-[0218], fig. 28 | 12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026265**

| Patent document cited in search report | Publication date (day/month/year) | Patent family member(s) | Publication date (day/month/year) |
|---|---|---|---|
| US 2019/0063954 A1 | 28 February 2019 | WO 2019/046447 A1<br>KR 10-2020-0037329 A<br>CN 111033183 A | |
| US 2021/0302207 A1 | 30 September 2021 | EP 3885711 A1<br>CN 113446929 A | |
| JP 2019-101041 A | 24 June 2019 | US 2019/0170494 A1<br>paragraph [0052], fig. 1-3, 6<br>EP 3495781 A1<br>DE 102017222063 A1<br>CN 109883305 A | |
| JP 2015-227826 A | 17 December 2015 | (Family: none) | |
| JP 2018-503822 A | 08 February 2018 | US 2018/0274948 A1<br>paragraphs [0280]-[0282], fig. 28<br>WO 2016/113500 A1<br>FR 3031588 A1<br>CA 2973052 A1<br>KR 10-2017-0118724 A<br>CN 107532924 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022115865 A
- JP 2022135104 A
- JP 2022188429 A
- JP 2011126476 A
- JP 5226694 B
- JP 2019507348 A
- DE 102008012922 A1